(19) Europäisches Patentamt
European Patent Office
Office européen des brevets

(11) **EP 4 614 835 A2**

(12) **EUROPEAN PATENT APPLICATION**

(43) Date of publication:
**10.09.2025   Bulletin 2025/37**

(51) International Patent Classification (IPC):
**H04B 7/08** (2006.01)

(21) Application number: **25192624.2**

(22) Date of filing: **16.12.2022**

(52) Cooperative Patent Classification (CPC):
**H04L 5/0091; H04B 7/06952; H04B 7/088;
H04L 5/0023; H04L 5/0053; H04L 5/0094**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:
| | | |
|---|---|---|
| 17.12.2021 | US | 202163291158 P |
| 20.12.2021 | US | 202163291825 P |
| 23.12.2021 | US | 202163293618 P |
| 30.12.2021 | US | 202163295238 P |
| 12.08.2022 | US | 202263397723 P |
| 17.08.2022 | US | 202263398760 P |
| 07.10.2022 | US | 202263414331 P |
| 13.10.2022 | US | 202263415845 P |
| 14.10.2022 | US | 202263416321 P |
| 17.10.2022 | US | 202263416803 P |
| 04.11.2022 | US | 202263422866 P |
| 04.11.2022 | US | 202263422869 P |
| 02.12.2022 | US | 202263429857 P |
| 13.12.2022 | US | 202218065535 |

(62) Document number(s) of the earlier application(s) in accordance with Art. 76 EPC:
**22908022.1 / 4 434 284**

(71) Applicant: **Samsung Electronics Co., Ltd.
Suwon-si, Gyeonggi-do 16677 (KR)**

(72) Inventors:
- **ZHU, Dalin
  16677 Suwon-si (KR)**
- **FARAG, Emad Nader
  16677 Suwon-si (KR)**
- **ONGGOSANUSI, Eko Nugroho
  16677 Suwon-si (KR)**

(74) Representative: **Nederlandsch Octrooibureau
P.O. Box 29720
2502 LS The Hague (NL)**

Remarks:
This application was filed on 29-07-2025 as a divisional application to the application mentioned under INID code 62.

(54) **METHOD AND APPARATUS FOR BEAM MANAGEMENT UNDER A UNIFIED TCI FRAMEWORK**

(57)   The disclosure relates to a 5G or 6G communication system for supporting a higher data transmission rate.

Methods and apparatuses for beam management under a unified transmission configuration indication (TCI) framework. A method for operating a user equipment (UE) receiving, in downlink control information (DCI), first information indicating a plurality of TCI states, wherein at least one of the TCI states is for at least one of a plurality of physical downlink control channels (PDCCHs); and receiving second information in a configuration for a control resource set (CORESET) indicating one or more of the plurality of TCI states for receiving one or more of the plurality of PDCCHs in the CORESET. The method further includes determining, based on the second information, the one or more of the plurality of TCI states for receiving the one or more of the plurality of PDCCHs in the CORESET, and receiving the one or more PDCCHs using the one or more TCI states.

FIG. 9

EP 4 614 835 A2

**Description**

**[Technical Field]**

The present disclosure relates generally to wireless communication systems and, more specifically, the present disclosure relates to a beam management under a unified transmission configuration indication (TCI) framework in a wireless communication system.

**[Background Art]**

5th generation (5G) or new radio (NR) mobile communications is recently gathering increased momentum with all the worldwide technical activities on the various candidate technologies from industry and academia. The candidate enablers for the 5G/NR mobile communications include massive antenna technologies, from legacy cellular frequency bands up to high frequencies, to provide beamforming gain and support increased capacity, new waveform (e.g., a new radio access technology (RAT)) to flexibly accommodate various services/applications with different requirements, new multiple access schemes to support massive connections, and so on.

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

**[Disclosure of Invention]**

**[Technical Problem]**

The purpose of this application is to be able to solve at least one of the drawbacks of the prior art.
There is a need to define methods and apparatuses for beam management under a unified transmission configuration indication framework.

**[Solution to Problem]**

The present disclosure relates to beam management under a unified TCI framework.
In one embodiment, a user equipment (UE) is provided. The UE includes a processor operably coupled with a transceiver and configured to receive, in downlink control information (DCI), first information indicating a plurality of TCI states, wherein at least one of the TCI states is for at least one of a plurality of physical downlink control channels (PDCCHs); and second information in a configuration for a control resource set (CORESET) indicating one or more of the plurality of TCI states for receiving one or more of the plurality of PDCCHs in the CORESET. The plurality of TCI states includes joint or downlink TCI states. The processor is further configured to determine, based on the second information, the one or more of the plurality of TCI states for receiving the one or more of the plurality of PDCCHs in the CORESET. The processor is further configured to receive the one or more PDCCHs using the one or more TCI states.
In another embodiment, a base station (BS) is provided. The BS includes a processor and a transceiver operably coupled to the processor. The processor is configured to transmit, in DCI, first information indicating a plurality of TCI states, wherein at least one of the TCI states is for at least one of a plurality of PDCCHs; and second information in a configuration for a CORESET indicating one or more of the plurality of TCI states for reception of one or more of the plurality of PDCCHs in the CORESET; and the one or more PDCCHs for reception based on the one or more TCI states. The plurality of TCI states includes joint or downlink TCI states.
In yet another embodiment, a method for operating a UE is provided. The method includes receiving, in DCI, first information indicating a plurality of TCI states, wherein at least one of the TCI states is for at least one of a plurality of PDCCHs; and receiving second information in a configuration for a CORESET indicating one or more of the plurality of TCI states for receiving one or more of the plurality of PDCCHs in the CORESET. The plurality of TCI states includes joint or downlink TCI states. The method further includes determining, based on the second information, the one or more of the plurality of TCI states for receiving the one or more of the plurality of PDCCHs in the CORESET, and receiving the one or more PDCCHs using the one or more TCI states.
Other technical features may be readily apparent to one skilled in the art from the following figures, descriptions, and claims.

**[Advantageous Effects of Invention]**

Embodiments of the present disclosure provides methods and apparatus for beam management under a unified TCI framework.
Embodiments of the present disclosure provides a method for performing an indication for TCI state and beam using MAC CE or DCI in a multiple TRP system.

**[Brief Description of Drawings]**

For a more complete understanding of the present disclosure and its advantages, reference is now made to the following description taken in conjunction with the accompanying drawings, in which like reference numerals represent like parts:

FIGURE 1 illustrates an example of wireless network according to embodiments of the present disclosure;

FIGURE 2 illustrates an example of gNB according to embodiments of the present disclosure;

FIGURE 3 illustrates an example of UE according to embodiments of the present disclosure;

FIGURES 4 and 5 illustrate example of wireless transmit and receive paths according to this disclosure;

FIGURE 6A illustrates an example of wireless system beam according to embodiments of the present disclosure;

FIGURE 6B illustrates an example of multi-beam operation according to embodiments of the present disclosure;

FIGURE 7 illustrates an example of antenna structure according to embodiments of the present disclosure;

FIGURE 8 illustrates an example of multiple TRP system according to embodiments of the present disclosure;

FIGURE 9 illustrates an example of MAC CE based unified TCI state/beam indication for a multiple TRP operation according to embodiments of the present disclosure;

FIGURE 10 illustrates an example of DCI based unified TCI state/beam indication for a multiple TRP operation according to embodiments of the present disclosure; and

FIGURE 11 illustrates an example of DCI based TCI state/beam indication (with MAC CE activated TCI states/codepoints) for a multiple TRP operation according to embodiments of the present disclosure;

FIGURE 12 illustrates an example of two-part CSI/UCI design for inter-cell beam reporting according to embodiments of the present disclosure; and

FIGURE 13 illustrates an example of MAC CE command for TCI state(s)/beam(s) indication/activation according to embodiments of the present disclosure.

**[Mode for the Invention]**

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system, or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

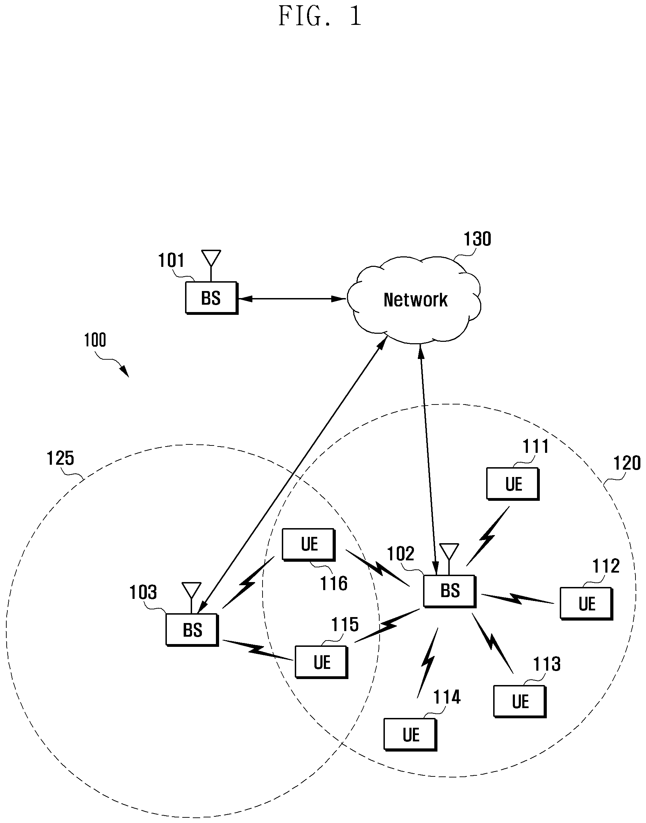

FIGURE 1 through FIGURE 13, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

The following documents are hereby incorporated by reference into the present disclosure as if fully set forth herein: 3GPP TS 38.211 v16.1.0, "NR; Physical channels and modulation"; 3GPP TS 38.212 v16.1.0, "NR; Multiplexing and Channel coding"; 3GPP TS 38.213 v16.1.0, "NR; Physical Layer Procedures for Control"; 3GPP TS 38.214 v16.1.0, "NR; Physical Layer Procedures for Data"; 3GPP TS 38.321 v16.1.0, "NR; Medium Access Control (MAC) protocol specification"; and 3GPP TS 38.331 v16.1.0, "NR; Radio Resource Control (RRC) Protocol Specification."

To meet the demand for wireless data traffic having increased since deployment of 4G communication systems and to enable various vertical applications, 5G/NR communication systems have been developed and are currently being deployed. The 5G/NR communication system is considered to be implemented in higher frequency (mmWave) bands, e.g., 28 GHz or 60GHz bands, so as to accomplish higher data rates or in lower frequency bands, such as 6 GHz, to enable robust coverage and mobility support. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G/NR communication systems.

In addition, in 5G/NR communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancelation and the like.

The discussion of 5G systems and frequency bands associated therewith is for reference as certain embodiments of the present disclosure may be implemented in 5G systems. However, the present disclosure is not limited to 5G systems or the frequency bands associated therewith, and embodiments of the present disclosure may be utilized in connection with any frequency band. For example, aspects of the present disclosure may also be applied to deployment of 5G communication systems, 6G or even later releases which may use terahertz (THz) bands.

FIGURES 1-3 below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably arranged communications system.

FIGURE 1 illustrates an example wireless network according to embodiments of the present disclosure. The embodiment of the wireless network shown in FIGURE 1 is for illustration only. Other embodiments of the wireless network 100 could be used without departing from the scope of this disclosure.

As shown in FIGURE 1, the wireless network includes a gNB 101 (e.g., base station, BS), a gNB 102, and a gNB 103. The gNB 101 communicates with the gNB 102 and the gNB 103. The gNB 101 also communicates with at least one network 130, such as the Internet, a proprietary Internet Protocol (IP) network, or other data network.

The gNB 102 provides wireless broadband access to the network 130 for a first plurality of user equipments (UEs) within a coverage area 120 of the gNB 102. The first plurality of UEs includes a UE 111, which may be located in a small business; a UE 112, which may be located in an enterprise; a UE 113, which may be a WiFi hotspot; a UE 114, which may be located in a first residence; a UE 115, which may be located in a second residence; and a UE 116, which may be a mobile device, such as a cell phone, a wireless laptop, a wireless PDA, or the like. The gNB 103 provides wireless broadband access to the network 130 for a second plurality of UEs within a coverage area 125 of the gNB 103. The second plurality of UEs includes the UE 115 and the UE 116. In some embodiments, one or more of the gNBs 101-103 may communicate with each other and with the UEs 111-116 using 5G/NR, long term evolution (LTE), long term evolution-advanced (LTE-A), WiMAX, WiFi, or other wireless communication techniques.

Depending on the network type, the term "base station" or "BS" can refer to any component (or collection of components) configured to provide wireless access to a network, such as transmit point (TP), transmit-receive point (TRP), an enhanced base station (eNodeB or eNB), a 5G/NR base station (gNB), a macrocell, a femtocell, a WiFi access point (AP), or other wirelessly enabled devices. Base stations may provide wireless access in accordance with one or more wireless communication protocols, e.g., 5G/NR 3rd generation partnership project (3GPP) NR, long term evolution (LTE), LTE advanced (LTE-A), high speed packet access (HSPA), Wi-Fi 802.11a/b/g/n/ac, etc. For the sake of convenience, the terms "BS" and "TRP" are used interchangeably in this patent document to refer to network infrastructure components that provide wireless access to remote terminals. Also, depending on the network type, the term "user equipment" or "UE" can refer to any component such as "mobile station," "subscriber station," "remote terminal," "wireless terminal," "receive point," or "user device." For the sake of convenience, the terms "user equipment" and "UE" are used in this patent document to refer to remote wireless equipment that wirelessly accesses a BS, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with gNBs, such as the coverage areas 120 and 125, may have other shapes, including irregular shapes, depending upon the configuration of the gNBs and variations in the radio environment associated with natural and man-made obstructions.

As described in more detail below, one or more of the UEs 111-116 include circuitry, programing, or a combination thereof, for a beam measurement and reporting under unified transmission configuration indicator (TCI) in a wireless communication system. In certain embodiments, and one or more of the gNBs 101-103 includes circuitry, programing, or a combination thereof, for a beam measurement and reporting under unified transmission configuration indicator (TCI) in a wireless communication system.

Although FIGURE 1 illustrates one example of a wireless network, various changes may be made to FIGURE 1. For example, the wireless network could include any number of gNBs and any number of UEs in any suitable arrangement. Also, the gNB 101 could communicate directly with any number of UEs and provide those UEs with wireless broadband access to the network 130. Similarly, each gNB 102-103 could communicate directly with the network 130 and provide UEs with direct wireless broadband access to the network 130. Further, the gNBs 101, 102, and/or 103 could provide access to other or additional external networks, such as external telephone networks or other types of data networks.

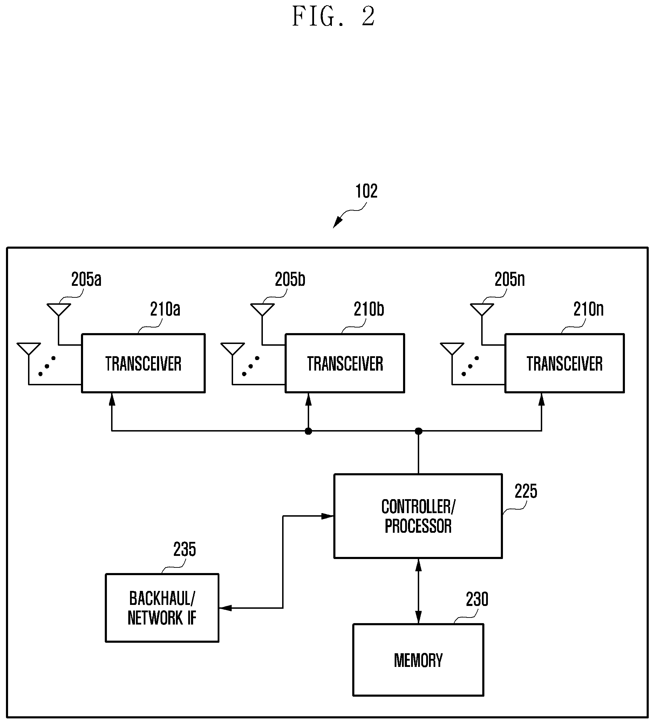

FIGURE 2 illustrates an example gNB 102 according to embodiments of the present disclosure. The embodiment of the gNB 102 illustrated in FIGURE 2 is for illustration only, and the gNBs 101 and 103 of FIGURE 1 could have the same or similar configuration. However, gNBs come in a wide variety of configurations, and FIGURE 2 does not limit the scope of this disclosure to any particular implementation of a gNB.

As shown in FIGURE 2, the gNB 102 includes multiple antennas 205a-205n, multiple transceivers 210a-210n, a controller/processor 225, a memory 230, and a backhaul or network interface 235.

The transceivers 210a-210n receive, from the antennas 205a-205n, incoming RF signals, such as signals transmitted by UEs in the network 100. The transceivers 210a-210n down-convert the incoming RF signals to generate IF or baseband signals. The IF or baseband signals are processed by receive (RX) processing circuitry in the transceivers 210a-210n and/or controller/processor 225, which generates processed baseband signals by filtering, decoding, and/or digitizing the baseband or IF signals. The controller/processor 225 may further process the baseband signals.

Transmit (TX) processing circuitry in the transceivers 210a-210n and/or controller/processor 225 receives analog or digital data (such as voice data, web data, e-mail, or interactive video game data) from the controller/processor 225. The TX processing circuitry encodes, multiplexes, and/or digitizes the outgoing baseband data to generate processed baseband or IF signals. The transceivers 210a-210n up-converts the baseband or IF signals to RF signals that are transmitted via the antennas 205a-205n.

The controller/processor 225 can include one or more processors or other processing devices that control the overall operation of the gNB 102. For example, the controller/processor 225 could control the reception of UL channel signals and the transmission of DL channel signals by the transceivers 210a-210n in accordance with well-known principles. The controller/processor 225 could support additional functions as well, such as more advanced wireless communication functions. For instance, the controller/processor 225 could support beam forming or directional routing operations in which outgoing/incoming signals from/to multiple antennas 205a-205n are weighted differently to effectively steer the outgoing signals in a desired direction. Any of a wide variety of other functions could be supported in the gNB 102 by the controller/processor 225.

The controller/processor 225 is also capable of executing programs and other processes resident in the memory 230, such as processes for a beam measurement and reporting under unified transmission configuration indicator (TCI) in a wireless communication system. The controller/processor 225 can move data into or out of the memory 230 as required by an executing process.

The controller/processor 225 is also coupled to the backhaul or network interface 235. The backhaul or network interface 235 allows the gNB 102 to communicate with other devices or systems over a backhaul connection or over a network. The interface 235 could support communications over any suitable wired or wireless connection(s). For example, when the gNB 102 is implemented as part of a cellular communication system (such as one supporting 5G/NR, LTE, or LTE-A), the interface 235 could allow the gNB 102 to communicate with other gNBs over a wired or wireless backhaul connection. When the gNB 102 is implemented as an access point, the interface 235 could allow the gNB 102 to communicate over a wired or wireless local area network or over a wired or wireless connection to a larger network (such as the Internet). The interface 235 includes any suitable structure supporting communications over a wired or wireless connection, such as an Ethernet or transceiver.

The memory 230 is coupled to the controller/processor 225. Part of the memory 230 could include a RAM, and another part of the memory 230 could include a Flash memory or other ROM.

Although FIGURE 2 illustrates one example of gNB 102, various changes may be made to FIGURE 2. For example, the gNB 102 could include any number of each component shown in FIGURE 2. Also, various components in FIGURE 2 could be combined, further subdivided, or omitted and additional components could be added according to particular needs.

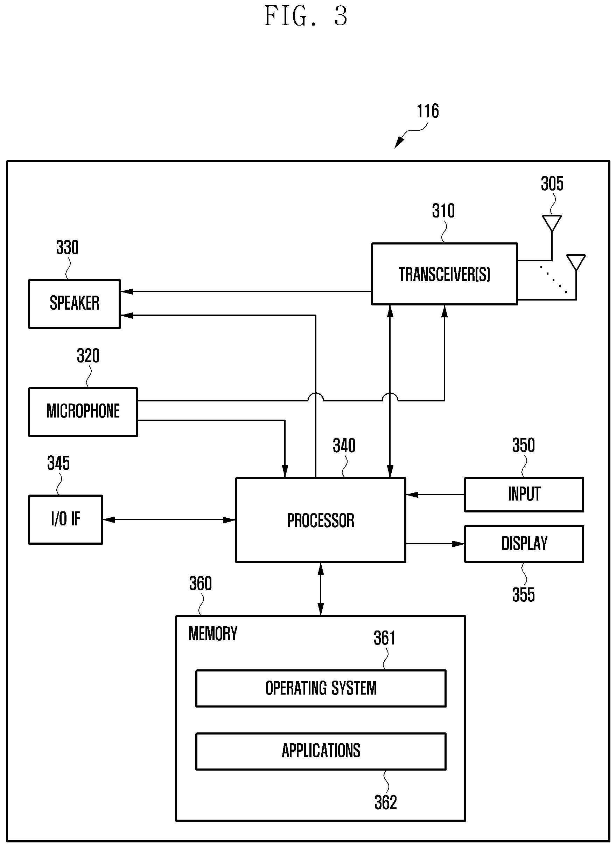

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes antenna(s) 305, a transceiver(s) 310, and a microphone 320. The UE 116 also includes a speaker 330, a processor 340, an input/output (I/O) interface (IF) 345, a touchscreen 350, a display 355, and a memory 360. The memory 360 includes an operating system (OS) 361 and one or more applications 362.

The transceiver(s) 310 receives, from the antenna 305, an incoming RF signal transmitted by a gNB of the network 100. The transceiver(s) 310 down-converts the incoming RF signal to generate an intermediate frequency (IF) or baseband signal. The IF or baseband signal is processed by RX processing circuitry in the transceiver(s) 310 and/or processor 340, which generates a processed baseband signal by filtering, decoding, and/or digitizing the baseband or IF signal. The RX processing circuitry sends the processed baseband signal to the speaker 330 (such as for voice data) or is processed by the processor 340 (such as for web browsing data).

TX processing circuitry in the transceiver(s) 310 and/or processor 340 receives analog or digital voice data from the microphone 320 or other outgoing baseband data (such as web data, e-mail, or interactive video game data) from the processor 340. The TX processing circuitry encodes, multiplexes, and/or digitizes the outgoing baseband data to generate a processed baseband or IF signal. The transceiver(s) 310 up-converts the baseband or IF signal to an RF signal that is transmitted via the antenna(s) 305.

The processor 340 can include one or more processors or other processing devices and execute the OS 361 stored in the memory 360 in order to control the overall operation of the UE 116. For example, the processor 340 could control the reception of DL channel signals and the transmission of UL channel signals by the transceiver(s) 310 in accordance with well-known principles. In some embodiments, the processor 340 includes at least one microprocessor or microcontroller.

The processor 340 is also capable of executing other processes and programs resident in the memory 360, such as processes for a beam measurement and reporting under unified transmission configuration indicator (TCI) in a wireless communication system.

The processor 340 can move data into or out of the memory 360 as required by an executing process. In some embodiments, the processor 340 is configured to execute the applications 362 based on the OS 361 or in response to signals received from gNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the touchscreen 350 and the display 355. The operator of the UE 116 can use the touchscreen 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random-access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). In another example, the transceiver(s) 310 may include any number of transceivers and signal processing chains and may be connected to any number of antennas. Also, while FIGURE 3 illustrates the UE 116 configured as a mobile telephone or smartphone, UEs could be configured to operate as other types of mobile or stationary devices.

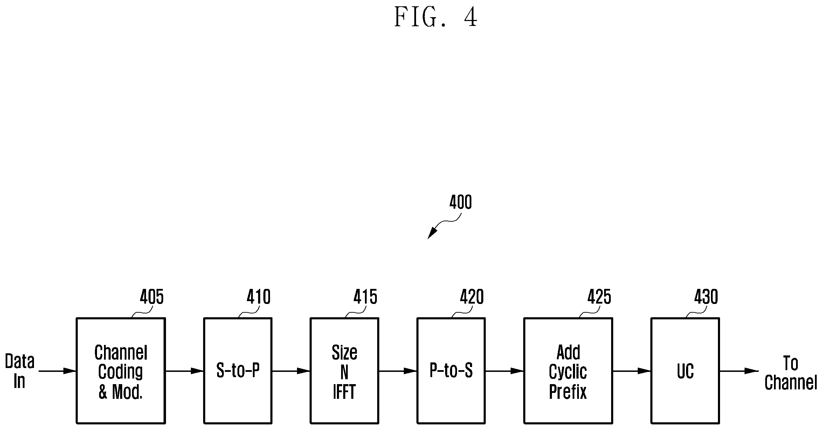

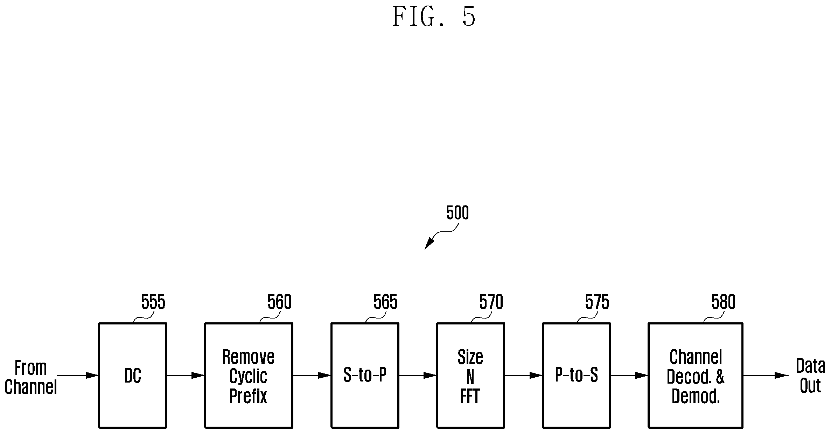

FIGURE 4 and FIGURE 5 illustrate example wireless transmit and receive paths according to this disclosure. In the following description, a transmit path 400 may be described as being implemented in a gNB (such as the gNB 102), while a receive path 500 may be described as being implemented in a UE (such as a UE 116). However, it may be understood that the receive path 500 can be implemented in a gNB and that the transmit path 400 can be implemented in a UE. In some embodiments, the receive path 500 is configured to support the codebook design and structure for systems having 2D antenna arrays as described in embodiments of the present disclosure.

The transmit path 400 as illustrated in FIGURE 4 includes a channel coding and modulation block 405, a serial-to-parallel (S-to-P) block 410, a size N inverse fast Fourier transform (IFFT) block 415, a parallel-to-serial (P-to-S) block 420, an add cyclic prefix block 425, and an up-converter (UC) 430. The receive path 500 as illustrated in FIGURE 5 includes a down-converter (DC) 555, a remove cyclic prefix block 560, a serial-to-parallel (S-to-P) block 565, a size N fast Fourier transform (FFT) block 570, a parallel-to-serial (P-to-S) block 575, and a channel decoding and demodulation block 580.

As illustrated in FIGURE 4, the channel coding and modulation block 405 receives a set of information bits, applies coding (such as a low-density parity check (LDPC) coding), and modulates the input bits (such as with quadrature phase shift keying (QPSK) or quadrature amplitude modulation (QAM)) to generate a sequence of frequency-domain modulation symbols.

The serial-to-parallel block 410 converts (such as de-multiplexes) the serial modulated symbols to parallel data in order to generate N parallel symbol streams, where N is the IFFT/FFT size used in the gNB 102 and the UE 116. The size N IFFT block 415 performs an IFFT operation on the N parallel symbol streams to generate time-domain output signals. The parallel-to-serial block 420 converts (such as multiplexes) the parallel time-domain output symbols from the size N IFFT block 415 in order to generate a serial time-domain signal. The add cyclic prefix block 425 inserts a cyclic prefix to the time-domain signal. The up-converter 430 modulates (such as up-converts) the output of the add cyclic prefix block 425 to an RF frequency for transmission via a wireless channel. The signal may also be filtered at baseband before conversion to the RF frequency.

A transmitted RF signal from the gNB 102 arrives at the UE 116 after passing through the wireless channel, and reverse operations to those at the gNB 102 are performed at the UE 116.

As illustrated in FIGURE 5, the downconverter 555 down-converts the received signal to a baseband frequency, and the remove cyclic prefix block 560 removes the cyclic prefix to generate a serial time-domain baseband signal. The serial-to-parallel block 565 converts the time-domain baseband signal to parallel time domain signals. The size N FFT block 570 performs an FFT algorithm to generate N parallel frequency-domain signals. The parallel-to-serial block 575 converts the parallel frequency-domain signals to a sequence of modulated data symbols. The channel decoding and demodulation block 580 demodulates and decodes the modulated symbols to recover the original input data stream.

Each of the gNBs 101-103 may implement a transmit path 400 as illustrated in FIGURE 4 that is analogous to transmitting in the downlink to UEs 111-116 and may implement a receive path 500 as illustrated in FIGURE 5 that is analogous to receiving in the uplink from UEs 111-116. Similarly, each of UEs 111-116 may implement the transmit path 400 for transmitting in the uplink to the gNBs 101-103 and may implement the receive path 500 for receiving in the downlink from the gNBs 101-103.

Each of the components in FIGURE 4 and FIGURE 5 can be implemented using only hardware or using a combination of hardware and software/firmware. As a particular example, at least some of the components in FIGURES 4 and FIGURE 5 may be implemented in software, while other components may be implemented by configurable hardware or a mixture of software and configurable hardware. For instance, the FFT block 570 and the IFFT block 515 may be implemented as configurable software algorithms, where the value of size N may be modified according to the implementation.

Furthermore, although described as using FFT and IFFT, this is by way of illustration only and may not be construed to limit the scope of this disclosure. Other types of transforms, such as discrete Fourier transform (DFT) and inverse discrete Fourier transform (IDFT) functions, can be used. It may be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURE 4 and FIGURE 5 illustrate examples of wireless transmit and receive paths, various changes may be made to FIGURE 4 and FIGURE 5. For example, various components in FIGURE 4 and FIGURE 5 can be combined, further subdivided, or omitted and additional components can be added according to particular needs. Also, FIGURE 4 and FIGURE 5 are meant to illustrate examples of the types of transmit and receive paths that can be used in a wireless network. Any other suitable architectures can be used to support wireless communications in a wireless network.

A unit for DL signaling or for UL signaling on a cell is referred to as a slot and can include one or more symbols. A bandwidth (BW) unit is referred to as a resource block (RB). One RB includes a number of sub-carriers (SCs). For example, a slot can have duration of one millisecond and an RB can have a bandwidth of 180 KHz and include 12 SCs with inter-SC spacing of 15 KHz. A slot can be either full DL slot, or full UL slot, or hybrid slot similar to a special subframe in time division duplex (TDD) systems.

DL signals include data signals conveying information content, control signals conveying DL control information (DCI), and reference signals (RS) that are also known as pilot signals. A gNB transmits data information or DCI through respective physical DL shared channels (PDSCHs) or physical DL control channels (PDCCHs). A PDSCH or a PDCCH can be transmitted over a variable number of slot symbols including one slot symbol. A UE can be indicated a spatial setting for a PDCCH reception based on a configuration of a value for a transmission configuration indication state (TCI state) of a control resource set (CORESET) where the UE receives the PDCCH. The UE can be indicated a spatial setting for a PDSCH reception based on a configuration by higher layers or based on an indication by a DCI format scheduling the PDSCH reception of a value for a TCI state. The gNB can configure the UE to receive signals on a cell within a DL bandwidth part (BWP) of the cell DL BW.

A gNB transmits one or more of multiple types of RS including channel state information RS (CSI-RS) and demodulation RS (DMRS). A CSI-RS is primarily intended for UEs to perform measurements and provide channel state information (CSI) to a gNB. For channel measurement, non-zero power CSI-RS (NZP CSI-RS) resources are used. For interference measurement reports (IMRs), CSI interference measurement (CSI-IM) resources associated with a zero power CSI-RS (ZP CSI-RS) configuration are used. A CSI process consists of NZP CSI-RS and CSI-IM resources. A UE can determine CSI-RS transmission parameters through DL control signaling or higher layer signaling, such as an RRC signaling from a gNB. Transmission instances of a CSI-RS can be indicated by DL control signaling or configured by higher layer signaling. A DMRS is transmitted only in the BW of a respective PDCCH or PDSCH and a UE can use the DMRS to demodulate data or control information.

UL signals also include data signals conveying information content, control signals conveying UL control information (UCI), DMRS associated with data or UCI demodulation, sounding RS (SRS) enabling a gNB to perform UL channel measurement, and a random access (RA) preamble enabling a UE to perform random access. A UE transmits data information or UCI through a respective physical UL shared channel (PUSCH) or a physical UL control channel (PUCCH). A PUSCH or a PUCCH can be transmitted over a variable number of slot symbols including one slot symbol. The gNB can configure the UE to transmit signals on a cell within an UL BWP of the cell UL BW.

UCI includes hybrid automatic repeat request acknowledgement (HARQ-ACK) information, indicating correct or incorrect detection of data transport blocks (TBs) in a PDSCH, scheduling request (SR) indicating whether a UE has data in the buffer of UE, and CSI reports enabling a gNB to select appropriate parameters for PDSCH or PDCCH transmissions to a UE. HARQ-ACK information can be configured to be with a smaller granularity than per TB and can be per data code block (CB) or per group of data CBs where a data TB includes a number of data CBs.

A CSI report from a UE can include a channel quality indicator (CQI) informing a gNB of a largest modulation and coding scheme (MCS) for the UE to detect a data TB with a predetermined block error rate (BLER), such as a 10% BLER, of a precoding matrix indicator (PMI) informing a gNB how to combine signals from multiple transmitter antennas in accordance with a multiple input multiple output (MIMO) transmission principle, and of a rank indicator (RI) indicating a transmission rank for a PDSCH. UL RS includes DMRS and SRS. DMRS is transmitted only in a BW of a respective PUSCH or PUCCH transmission. A gNB can use a DMRS to demodulate information in a respective PUSCH or PUCCH. SRS is transmitted by a UE to provide a gNB with an UL CSI and, for a TDD system, an SRS transmission can also provide a PMI for DL transmission. Additionally, in order to establish synchronization or an initial higher layer connection with a gNB, a UE can transmit a physical random-access channel.

In the present disclosure, a beam is determined by either of: (1) a TCI state, which establishes a quasi-colocation (QCL) relationship between a source reference signal (e.g., synchronization signal/physical broadcasting channel (PBCH) block (SSB) and/or CSI-RS) and a target reference signal; or (2) spatial relation information that establishes an association to a source reference signal, such as SSB or CSI-RS or SRS. In either case, the ID of the source reference signal identifies the beam.

The TCI state and/or the spatial relation reference RS can determine a spatial Rx filter for reception of downlink channels at the UE, or a spatial Tx filter for transmission of uplink channels from the UE.

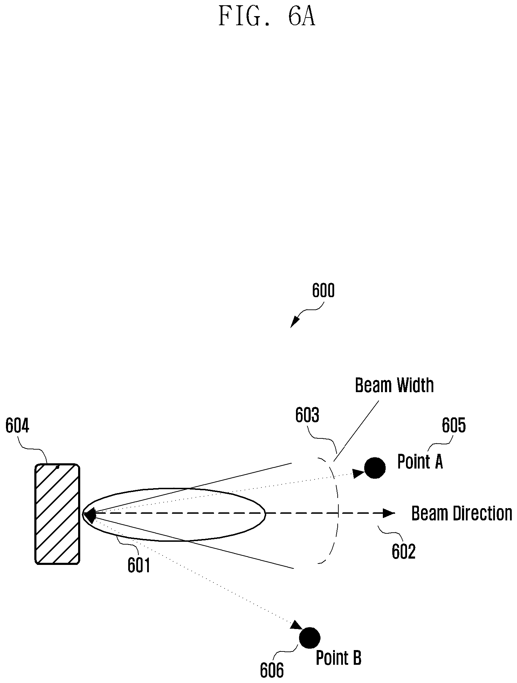

FIGURE 6A illustrates an example wireless system beam 600 according to embodiments of the present disclosure. An embodiment of the wireless system beam 600 shown in FIGURE 6A is for illustration only.

As illustrated in FIGURE 6A, in a wireless system a beam 601, for a device 604, can be characterized by a beam direction 602 and a beam width 603. For example, a device 604 with a transmitter transmits radio frequency (RF) energy in a beam direction and within a beam width. The device 604 with a receiver receives RF energy coming towards the device in a beam direction and within a beam width. As illustrated in FIGURE 6A, a device at point A 605 can receive from and transmit to the device 604 as point A is within a beam width of a beam traveling in a beam direction and coming from the device 604.

As illustrated in FIGURE 6A, a device at point B 606 cannot receive from and transmit to the device 604 as point B is outside a beam width of a beam traveling in a beam direction and coming from the device 604. While FIGURE 6A, for illustrative purposes, shows a beam in 2-dimensions (2D), it may be apparent to those skilled in the art, that a beam can be in 3-dimensions (3D), where the beam direction and beam width are defined in space.

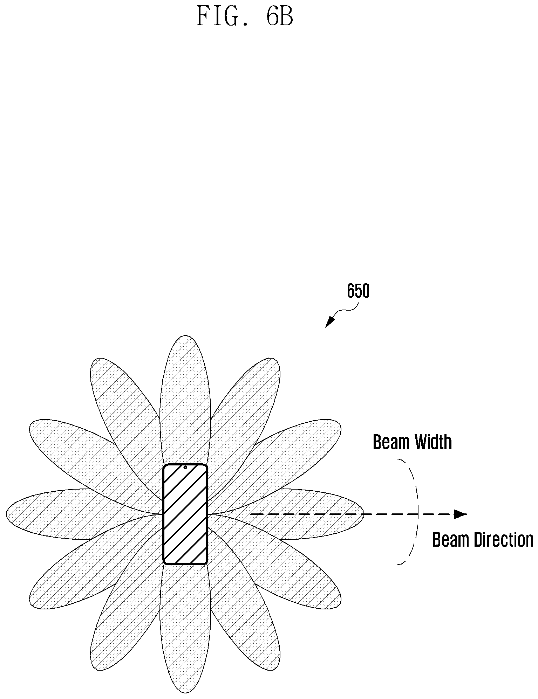

FIGURE 6B illustrates an example multi-beam operation 650 according to embodiments of the present disclosure. An embodiment of the multi-beam operation 650 shown in FIGURE 6B is for illustration only.

In a wireless system, a device can transmit and/or receive on multiple beams. This is known as "multi-beam operation" and is illustrated in FIGURE 6B. While FIGURE 6B, for illustrative purposes, is in 2D, it may be apparent to those skilled in the art, that a beam can be 3D, where a beam can be transmitted to or received from any direction in space.

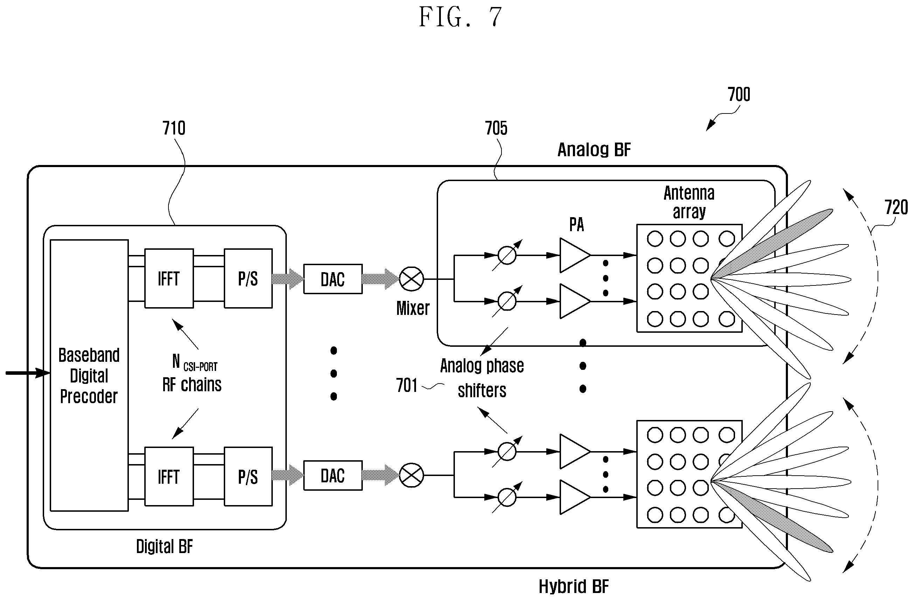

Rel. 14 LTE and Rel. 15 NR support up to 32 CSI-RS antenna ports which enable an eNB to be equipped with a large number of antenna elements (such as 64 or 128). In this case, a plurality of antenna elements is mapped onto one CSI-RS port. For mmWave bands, although the number of antenna elements can be larger for a given form factor, the number of CSI-RS ports -which can correspond to the number of digitally precoded ports - tends to be limited due to hardware constraints (such as the feasibility to install a large number of ADCs/DACs at mmWave frequencies) as illustrated in FIGURE 7.

FIGURE 7 illustrates an example antenna structure 700 according to embodiments of the present disclosure. An embodiment of the antenna structure 700 shown in FIGURE 7 is for illustration only.

In this case, one CSI-RS port is mapped onto a large number of antenna elements which can be controlled by a bank of analog phase shifters 701. One CSI-RS port can then correspond to one sub-array which produces a narrow analog beam through analog beamforming 705. This analog beam can be configured to sweep across a wider range of angles 720 by varying the phase shifter bank across symbols or subframes. The number of sub-arrays (equal to the number of RF chains) is the same as the number of CSI-RS ports $N_{CSI-PORT}$. A digital beamforming unit 710 performs a linear combination across $N_{CSI-PORT}$ analog beams to further increase precoding gain. While analog beams are wideband (hence not frequency-selective), digital precoding can be varied across frequency sub-bands or resource blocks. Receiver operation can be conceived analogously.

Since the aforementioned system utilizes multiple analog beams for transmission and reception (wherein one or a small number of analog beams are selected out of a large number, for instance, after a training duration - to be performed from time to time), the term "multi-beam operation" is used to refer to the overall system aspect. This includes, for the purpose of illustration, indicating the assigned DL or UL TX beam (also termed "beam indication"), measuring at least one reference signal for calculating and performing beam reporting (also termed "beam measurement" and "beam reporting," respectively), and receiving a DL or UL transmission via a selection of a corresponding RX beam.

The aforementioned system is also applicable to higher frequency bands such as >52.6GHz. In this case, the system can employ only analog beams. Due to the O2 absorption loss around 60GHz frequency (~10dB additional loss @100m distance), larger number of and sharper analog beams (hence larger number of radiators in the array) may be needed to compensate for the additional path loss.

In a wireless communications system, a radio link failure (RLF) could occur if a significant/sudden link quality drop is observed at the UE side. If a RLF occurs, fast RLF recovery mechanisms, therefore, become essential to promptly re-establish the communication link(s) and avoid severe service interruption. At higher frequencies, e.g., millimeter-wave (mmWave) frequencies or FR2 in the 3GPP NR, both the transmitter and receiver could use directional (analog) beams to transmit and receive various RSs/channels such as SSBs, CSI-RSs, PDCCHs or PDSCHs. Hence, prior to declaring a full RLF, the UE could first detect and recover a potential beam failure if the signal qualities/strengths of certain beam pair links (BPLs) are below a certain threshold for a certain period of time.

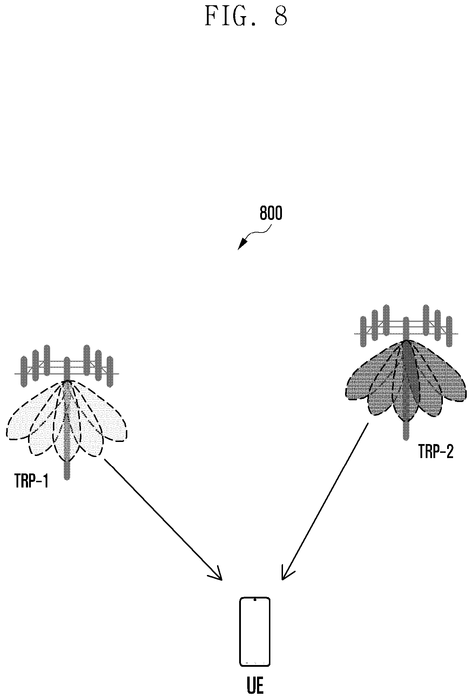

FIGURE 8 illustrates an example of multiple TRP system 8000 according to embodiments of the present disclosure. An embodiment of the multiple TRP system 8000 shown in FIGURE 8 is for illustration only.

In a multiple TRP system depicted in FIGURE 8, the UE could simultaneously receive from multiple physically non-co-located TRPs various channels/RSs such as PDCCHs and/or PDSCHs using either a single receive (RX) panel or multiple RX panels. In this disclosure, a RX panel could correspond to a set of RX antenna elements/ports at the UE, a set of measurement RS resources such as SRS resources, a spatial domain RX filter or etc. Further, a TRP in the multi-TRP system can represent a collection of measurement antenna ports, measurement RS resources and/or control resource sets (CORESETs).

For example, a TRP could be associated with one or more of: (1) a plurality of CSI-RS resources; (2) a plurality of CRIs (CSI-RS resource indices/indicators); (3) a measurement RS resource set, for example, a CSI-RS resource set along with its indicator; (4) a plurality of CORESETs associated with a CORESETPoolIndex; and (5) a plurality of CORESETs associated with a TRP-specific index/indicator/identity.

A cell/TRP could be a non-serving cell/TRP. In this disclosure, the non-serving cell(s) or the non-serving cell TRP(s) could have/broadcast different physical cell IDs (PCIs) and/or other higher layer signaling index values from that of the serving cell or the serving cell TRP (i.e., the serving cell PCI). In one example, the serving cell or the serving cell TRP could be associated with the serving cell ID (SCI) and/or the serving cell PCI. That is, for the inter-cell operation considered in the present disclosure, different cells/TRPs could broadcast different PCIs and/or one or more cells/TRPs (referred to/defined as non-serving cells/TRPs in the present disclosure) could broadcast different PCIs from that of the serving cell/TRP (i.e., the serving cell PCI) and/or one or more cells/TRPs are not associated with valid SCI (e.g., provided by the higher layer parameter ServCellIndex). In the present disclosure, a non-serving cell PCI can also be referred to as an additional PCI, another PCI or a different PCI (with respect to the serving cell PCI).

The UE could be configured by the network one or more TCI states, which indicate the QCL information/assumptions for one or more RSs/channels such as PDCCHs and/or PDSCHs. The TCI state update/indication for PDCCH and/or PDSCH can also be referred to as beam indication. For instance, for data transmissions on the shared channel (such as the physical downlink shared channel in NR, i.e., PDSCH), the corresponding beam indication procedure under the 3GPP Rel. 15/16 TCI framework can be summarized as follows: a UE can be first higher layer configured by the network (e.g., via high layer RRC signaling) a set/pool of TCI states; the UE could then receive from the network a MAC CE command activating one or more TCI states from the set/pool of RRC configured TCI states; the UE could be indicated by the network via dynamic DCI signaling that one or more of the MAC CE activated TCI states are active for the reception of the PDSCH(s).

Under the Rel. 17 unified TCI framework, wherein a UE could be provided by the network one or more separate/joint DL or UL TCI state for various DL or UL channels/signals, various design aspects related to beam measurement and reporting, especially in a multi-TRP system or an inter-cell system composed of at least a PCI different from the serving cell PCI, need to be specified.

The present disclosure considers various design aspects/enhancements for beam measurement and reporting in a multi-TRP system or an inter-cell system wherein at least a PCI different from the serving cell PCI is deployed under the Rel. 17 unified TCI framework. Furthermore, various event-drive beam reporting formats are specified in the present disclosure.

As described in the U.S. Patent Application 17/584,239 incorporated by reference in its entirety, a unified TCI framework could indicate/include $N \geq 1$ DL TCI states and/or $M \geq 1$ UL TCI states, wherein the indicated TCI state could be at least one of: (1) a DL TCI state and/or its corresponding/associated TCI state ID; (2) an UL TCI state and/or its corresponding/associated TCI state ID; (3) a joint DL and UL TCI state and/or its corresponding/associated TCI state ID; and (4) separate DL TCI state and UL TCI state and/or their corresponding/associated TCI state ID(s).

There could be various design options/channels to indicate to the UE a beam (i.e., a TCI state) for the transmission/reception of a PDCCH or a PDSCH. As described in the U.S. Patent Application 17/584,239 incorporated by reference in its entirety, following examples may be provided.

In one example, a MAC CE could be used to indicate to the UE a beam (i.e., a TCI state and/or a TCI state ID) for the transmission/reception of a PDCCH or a PDSCH.

In another example, a DCI could be used to indicate to the UE a beam (i.e., a TCI state and/or a TCI state ID) for the transmission/reception of a PDCCH or a PDSCH. In such example, for example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment. For another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant. Yet for another example, a custom/purpose designed DCI format could be used to indicate to the UE a beam (i.e., a TCI state and/or a TCI state ID) for the transmission/reception of a PDCCH or a PDSCH.

Rel-17 introduced the unified TCI framework, where a unified or master or main TCI state is signaled to the UE. The unified or master or main TCI state can be one of: (1) in case of joint TCI state indication, wherein a same beam is used for DL and UL channels, a joint TCI state that can be used at least for UE-dedicated DL channels and UE-dedicated UL channels; (2) in case of separate TCI state indication, wherein different beams are used for DL and UL channels, a DL TCI state can be used at least for UE-dedicated DL channels; and (3) in case of separate TCI state indication, wherein different beams are used for DL and UL channels, a UL TCI state can be used at least for UE-dedicated UL channels.

The unified (master or main) TCI state is TCI state of UE-dedicated reception on PDSCH/PDCCH or dynamic-grant/configured-grant based PUSCH and all of dedicated PUCCH resources.

Throughout the present disclosure, the term "configuration" or "higher layer configuration" and variations thereof (such as "configured" and so on) could be used to refer to one or more of: a system information signaling such as by a MIB or a SIB (such as SIB1), a common or cell-specific higher layer / RRC signaling, or a dedicated or UE-specific or BWP-specific higher layer / RRC signaling.

The UE can be configured with a list of up to *M TCI-State* configurations within the higher layer parameter *PDSCH-Config* to decode PDSCH according to a detected PDCCH with DCI intended for the UE and the given serving cell, where M depends on the UE capability *maxNumberConfiguredTCIstatesPerCC*. Each *TCI-State* contains parameters for configuring a quasi co-location relationship between one or two downlink reference signals and the DM-RS ports of the PDSCH, the DM-RS port of PDCCH or the CSI-RS port(s) of a CSI-RS resource. The quasi co-location relationship is configured by the higher layer parameter *qcl-Type1* for the first DL RS, and *qcl-Type2* for the second DL RS (if configured). For the case of two DL RSs, the QCL types shall not be the same, regardless of whether the references are to the same DL RS or different DL RSs. The quasi co-location types corresponding to each DL RS are given by the higher layer parameter *qcl-Type* in *QCL-Info* and may take one of the following values: (1) 'typeA': {Doppler shift, Doppler spread, average delay, delay spread}, (2) 'typeB': {Doppler shift, Doppler spread}, (3) 'typeC': {Doppler shift, average delay}, and (4) 'typeD': {Spatial Rx parameter}.

The UE can be configured with a list of up to *128 DLorJointTCIState* configurations, within the higher layer parameter *PDSCH-Config* for providing a reference signal for the quasi co-location for DM-RS of PDSCH and DM-RS of PDCCH in a CC, for CSI-RS, and to provide a reference, if applicable, for determining UL TX spatial filter for dynamic-grant and configured-grant based PUSCH and PUCCH resource in a CC, and SRS.

If the *DLorJointTCIState* or *UL-TCIState* configurations are absent in a BWP of the CC, the UE can apply the *DLorJointTCIState* or *UL-TCIState* configurations from a reference BWP of a reference CC. The UE is not expected to be configured with *TCI-State*, *SpatialRelationInfo* or *PUCCH-SpatialRelationInfo*, except *SpatialRelationInfoPos* in a CC in a band, if the UE is configured with *DLorJointTCIState* or *UL-TCIState* in any CC in the same band. The UE can assume that when the UE is configured with *TCI-State* in any CC in the CC list configured by *simultaneousTCI-UpdateList1-r16, simultaneousTCI-UpdateList2-r16, simultaneousSpatial-UpdatedList1-r16, or simultaneousSpatial-UpdatedList2-r16,* the UE is not configured with *DLorJointTCIState* or *UL-TCIState* in any CC within the same band in the CC list.

The UE receives an activation command, as described in clause 6.1.3.14 of [10, TS 38.321] or 6.1.3.x of [10, TS 38.321], used to map up to 8 TCI states and/or pairs of TCI states, with one TCI state for DL channels/signals and one TCI state for UL channels/signals to the codepoints of the DCI field *'Transmission Configuration Indication'* for one or for a set of CCs/DL BWPs, and if applicable, for one or for a set of CCs/UL BWPs. When a set of TCI state IDs are activated for a set of CCs/DL BWPs and if applicable, for a set of CCs/UL BWPs, where the applicable list of CCs is determined by the indicated CC in the activation command, the same set of TCI state IDs are applied for all DL and/or UL BWPs in the indicated CCs.

The Unified TCI States Activation/Deactivation MAC CE is identified by a MAC subheader with eLCID as specified in Table 6.2.1-1b in TS 38.321. It has a variable size consisting of one or more of the following fields: (1) serving Cell ID: This field indicates the identity of the Serving Cell for which the MAC CE applies. The length of the field is 5 bits. If the indicated Serving Cell is configured as part of a *simultaneousU-TCI-UpdateList1, simultaneousU-TCI-UpdateList2, simultaneousU-TCI-UpdateList3* or *simultaneousU-TCI-UpdateList4* as specified in TS 38.331, this MAC CE applies to all theServing Cells in the set *simultaneousU-TCI-UpdateList1, simultaneousU-TCI-UpdateList2, simultaneousU-TCI-*

*UpdateList3* or *simultaneousU-TCI-UpdateList4*, respectively; (2) DL BWP ID: This field indicates a DL BWP for which the MAC CE applies as the codepoint of the DCI bandwidth *part indicator* field as specified in TS 38.212. The length of the BWP ID field is 2 bits; (3) UL BWP ID: This field indicates a UL BWP for which the MAC CE applies as the codepoint of the DCI bandwidth *part indicator* field as specified in TS 38.212. The length of the BWP ID field is 2 bits; (4) $P_i$: This field indicates whether each TCI codepoint has multiple TCI states or single TCI state. If $P_i$ field set to 1, it indicates that $i^{th}$ TCI codepoint includes the DL TCI state and the UL TCI state. If $P_i$ field set to 0, it indicates that $i^{th}$ TCI codepoint includes only the DL TCI state or the UL TCI state; (5) D/U: This field indicate whether the TCI state ID in the same octet is for joint/downlink or uplink TCI state. If this field is set to 1, the TCI state ID in the same octet is for joint/downlink. If this field is set to 0, the TCI state ID in the same octet is for uplink; (6) TCI state ID: This field indicates the TCI state identified by *TCI-StateId* as specified in TS 38.331. If D/U is set to 1, 7-bits length TCI state ID i.e. *TCI-StateId* as specified in TS 38.331 is used. If D/U is set to 0, the most significant bit of TCI state ID is considered as the reserved bit and remainder 6 bits indicate the *UL-TCIState-Id* as specified in TS 38.331. The maximum number of activated TCI states is 16; (7) R: Reserved bit, set to 0.

The *CellGroupConfig* IE specified in the TS 38.331 is used to configure a master cell group (MCG) or secondary cell group (SCG). A cell group comprises of one MAC entity, a set of logical channels with associated RLC entities and of a primary cell (SpCell) and one or more secondary cells (SCells).

*simultaneousTCI-UpdateList1, simultaneousTCI-UpdateList2* are list of serving cells which can be updated simultaneously for TCI relation with a MAC CE. The *simultaneousTCI-UpdateList1* and *simultaneousTCI-UpdateList2* shall not contain same serving cells. Network should not configure serving cells that are configured with a BWP with two different values for the *coresetPoolIndex* in these lists.

*simultaneousU-TCI-UpdateList1, simultaneousU-TCI-UpdateList2, simultaneousU-TCI-UpdateList3, simultaneousU-TCI-UpdateList4* are list of serving cells for which the Unified TCI States Activation/Deactivation MAC CE applies simultaneously, as specified in [TS 38.321 v17.1.0 clause 6.1.3.47]. The different lists shall not contain same serving cells. Network only configures in these lists serving cells that are configured with *unifiedtci-StateType.*

When the *bwp-id* or *cell* for QCL-TypeA/D source RS in a QCL-Info of the TCI state configured with *DLorJointTCIState* is not configured, the UE assumes that QCL-TypeA/D source RS is configured in the CC/DL BWP where TCI state applies.

When *tci-PresentInDCI* is set as 'enabled' or *tci-PresentDCI-1-2* is configured for the CORESET, the UE with activated *DLorJointTCIState* or *UL-TCIState* receives DCI format 1_1/1_2 providing indicated *DLorJointTCIState* or *UL-TCIState* for a CC or all CCs in the same CC list configured by *simultaneousTCI-UpdateList1-r17, simultaneousTCI-UpdateList2-r17, simultaneousTCI-UpdateList3-r17, simultaneousTCI-UpdateList4-r17.* The DCI format 1_1/1_2 can be with or without, if applicable, DL assignment. If the DCI format 1_1/1_2/ is without DL assignment, the UE can assume the following: (1) CS-RNTI is used to scramble the CRC for the DCI, (2) the values of the following DCI fields are set as follows: RV all '1's, MCS = all '1's, NDI = 0, and set to all '0's for FDRA Type 0, or all '1's for FDRA Type 1, or all '0's for dynamicSwitch (same as in Table 10.2-4 of [6, TS 38.213]).

After a UE receives an initial higher layer configuration of more than one *DLorJoint-TCIState* and before application of an indicated TCI state from the configured TCI states: the UE assumes that DM-RS of PDSCH and DM-RS of PDCCH and the CSI-RS applying the indicated TCI state are quasi co-located with the SS/PBCH block the UE identified during the initial access procedure.

After a UE receives an initial higher layer configuration of more than one *DLorJoint-TCIState* or *UL-TCIState* and before application of an indicated TCI state from the configured TCI states: the UE assumes that the UL TX spatial filter, if applicable, for dynamic-grant and configured-grant based PUSCH and PUCCH, and for SRS applying the indicated TCI state, is the same as that for a PUSCH transmission scheduled by a RAR UL grant during the initial access procedure.

After a UE receives a higher layer configuration of more than one *DLorJoint-TCIState* as part of a Reconfiguration with sync procedure as described in [12, TS 38.331] and before applying an indicated TCI state from the configured TCI states: the UE assumes that DM-RS of PDSCH and DM-RS of PDCCH, and the CSI-RS applying the indicated TCI state are quasi co-located with the SS/PBCH block or the CSI-RS resource the UE identified during the random access procedure initiated by the Reconfiguration with sync procedure as described in [12, TS 38.331].

After a UE receives a higher layer configuration of more than one *DLorJoint-TCIState* or *UL-TCIState* as part of a Reconfiguration with sync procedure as described in [12, TS 38.331] and before applying an indicated TCI state from the configured TCI states: the UE assumes that the UL TX spatial filter, if applicable, for dynamic-grant and configured-grant based PUSCH and PUCCH, and for SRS applying the indicated TCI state, is the same as that for a PUSCH transmission scheduled by a RAR UL grant during random access procedure initiated by the Reconfiguration with sync procedure as described in [12, TS 38.331].

If a UE receives a higher layer configuration of a single *DLorJoint-TCIState,* that can be used as an indicated TCI state, the UE obtains the QCL assumptions from the configured TCI state for DM-RS of PDSCH and DM-RS of PDCCH, and the CSI -RS applying the indicated TCI state.

If a UE receives a higher layer configuration of a single *DLorJoint-TCIState or UL-TCIState,* that can be used as an indicated TCI state, the UE determines an UL TX spatial filter, if applicable, from the configured TCI state for dynamic-grant and configured-grant based PUSCH and PUCCH, and SRS applying the indicated TCI state.

When the UE would transmit the last symbol of a PUCCH with HARQ-ACK information corresponding to the DCI carrying the TCI State indication and without DL assignment, or corresponding to the PDSCH scheduling by the DCI carrying the TCI State indication, and if the indicated TCI State is different from the previously indicated one, the indicated *DLorJointTCIState* or *UL-TCIstate* should be applied starting from the first slot that is at least *BeamAppTime_r*17 symbols after the last symbol of the PUCCH. The first slot and the *BeamAppTime_r*17 symbols are both determined on the carrier with the smallest SCS among the carrier(s) applying the beam indication.

If a UE is configured with *pdsch-TimeDomainAllocationListForMultiPDSCH-r17* in which one or more rows contain multiple *SLIVs* for PDSCH on a DL BWP of a serving cell, and the UE is receiving a DCI carrying the *TCI-State* indication and without DL assignment, the UE does not expect that the number of indicated *SLIV*s in the row of the *pdsch-TimeDomainAllocationListForMultiPDSCH-r17* by the DCI is more than one.

If the UE is configured with *NumberOfAdditionalPCI* and with *PDCCH-Config* that contains two different values of *coresetPoolIndex* in *ControlResourceSet*, the UE receives an activation command for CORESET associated with each *coresetPoolIndex,* as described in clause 6.1.3.14 of [10, TS 38.321], used to map up to 8 TCI states to the codepoints of the DCI field *'Transmission Configuration Indication'* in one CC/DL BWP. When a set of TCI state IDs are activated for a *coresetPoolIndex,* the activated TCI states corresponding to one *coresetPoolIndex* can be associated with one physical cell ID and activated TCI states corresponding to another *coresetPoolIndex* can be associated with another physical cell ID.

When a UE supports two TCI states in a codepoint of the DCI field *'Transmission Configuration Indication'* the UE may receive an activation command, as described in clause 6.1.3.24 of [10, TS 38.321], the activation command is used to map up to 8 combinations of one or two TCI states to the codepoints of the DCI field *'Transmission Configuration Indication'.* The UE is not expected to receive more than 8 TCI states in the activation command.

When the DCI field *'Transmission Configuration Indication'* is present in DCI format 1_2 and when the number of codepoints S in the DCI field *'Transmission Configuration Indication'* of DCI format 1_2 is smaller than the number of TCI codepoints that are activated by the activation command, as described in clause 6.1.3.14 and 6.1.3.24 of [10, TS38.321], only the first S activated codepoints are applied for DCI format 1_2.

When the UE would transmit a PUCCH with HARQ-ACK information in slot *n* corresponding to the PDSCH carrying the activation command, the indicated mapping between TCI states and codepoints of the DCI field *'Transmission Configuration Indication'* should be applied starting from the first slot that is after slot

$$n + 3N_{slot}^{subframe,\mu} + \frac{2^{\mu}}{2^{\mu_{K_{mac}}}} \cdot k_{mac}$$

where *m* is the SCS configuration for the PUCCH and $\mu_{K_{mac}}$ is the subcarrier spacing configuration for $k_{mac}$ with a value of 0 for frequency range 1, and $k_{mac}$ is provided by *K-Mac* or $k_{mac} = 0$ if *K-Mac* is not provided. If *tci-PresentInDCI* is set to 'enabled' or *tci-PresentDCI-1-2* is configured for the CORESET scheduling the PDSCH, and the time offset between the reception of the DL DCI and the corresponding PDSCH is equal to or greater than *timeDurationForQCL* if applicable, after a UE receives an initial higher layer configuration of TCI states and before reception of the activation command, the UE may assume that the DM-RS ports of PDSCH of a serving cell are quasi co-located with the SS/PBCH block determined in the initial access procedure with respect to *qcl-Type* set to 'typeA', and when applicable, also with respect to *qcl-Type* set to 'typeD'.

If a UE is configured with the higher layer parameter *tci-PresentInDCI* that is set as 'enabled' for the CORESET scheduling a PDSCH, the UE assumes that the TCI field is present in the DCI format 1_1 of the PDCCH transmitted on the CORESET. If a UE is configured with the higher layer parameter *tci-PresentDCI-1-2* for the CORESET scheduling the PDSCH, the UE assumes that the TCI field with a DCI field size indicated by *tci-PresentDCI-1-2* is present in the DCI format 1_2 of the PDCCH transmitted on the CORESET. If the PDSCH is scheduled by a DCI format not having the TCI field present, and the time offset between the reception of the DL DCI and the corresponding PDSCH of a serving cell is equal to or greater than a threshold *timeDurationForQCL* if applicable, where the threshold is based on reported UE capability [13, TS 38.306], for determining PDSCH antenna port quasi co-location, the UE assumes that the TCI state or the QCL assumption for the PDSCH is identical to the TCI state or QCL assumption whichever is applied for the CORESET used for the PDCCH transmission within the active BWP of the serving cell.

When a UE is configured with both *sfnSchemePdcch* and *sfnSchemePdsch* scheduled by DCI format 1_0 or by DCI format 1_1/1_2, if the time offset between the reception of the DL DCI and the corresponding PDSCH of a serving cell is equal to or greater than a threshold *timeDurationForQCL* if applicable: if the UE supports DCI scheduling without TCI field, the UE assumes that the TCI state(s) or the QCL assumption(s) for the PDSCH is identical to the TCI state(s) or QCL assumption(s) whichever is applied for the CORESET used for the reception of the DL DCI within the active BWP of the serving cell regardless of the number of active TCI states of the CORESET. If the UE does not support dynamic switching between SFN PDSCH and non-SFN PDSCH, the UE should be activated with the CORESET with two TCI states; else if the UE does not support DCI scheduling without TCI field, the UE shall expect TCI field present when scheduled by DCI format 1_1/1_2.

When a UE is configured with *sfnSchemePdsch* and *sfnSchemePdcch* is not configured, when scheduled by DCI format 1_1/1_2, if the time offset between the reception of the DL DCI and the corresponding PDSCH of a serving cell is equal to or greater than a threshold *timeDurationForQCL* if applicable, the UE shall expect TCI field present.

For PDSCH scheduled by DCI format 1_0, 1_1, 1_2, when a UE is configured with *sfnSchemePdcch* set to 'sfnSchemeA' and *sfnSchemePdsch* is not configured, and there is no TCI codepoint with two TCI states in the activation command, and if the time offset between the reception of the DL DCI and the corresponding PDSCH is equal or larger than the threshold *timeDurationForQCL* if applicable and the CORESET which schedules the PDSCH is indicated with two TCI states, the UE assumes that the TCI state or the QCL assumption for the PDSCH is identical to the first TCI state or QCL assumption which is applied for the CORESET used for the PDCCH transmission within the active BWP of the serving cell.

If a PDSCH is scheduled by a DCI format having the TCI field present, the TCI field in DCI in the scheduling component carrier points to the activated TCI states in the scheduled component carrier or DL BWP, the UE shall use the *TCI-State* according to the value of the '*Transmission Configuration Indication*' field in the detected PDCCH with DCI for determining PDSCH antenna port quasi co-location. The UE may assume that the DM-RS ports of PDSCH of a serving cell are quasi co-located with the RS(s) in the TCI state with respect to the QCL type parameter(s) given by the indicated TCI state if the time offset between the reception of the DL DCI and the corresponding PDSCH is equal to or greater than a threshold *timeDurationForQCL,* where the threshold is based on reported UE capability [13, TS 38.306]. For a single slot PDSCH, the indicated TCI state(s) should be based on the activated TCI states in the slot with the scheduled PDSCH. For a multi-slot PDSCH or the UE is configured with higher layer parameter *pdsch-TimeDomainAllocationListForMultiPDSCH-r17*, the indicated TCI state(s) should be based on the activated TCI states in the first slot with the scheduled PDSCH(s), and UE shall expect the activated TCI states are the same across the slots with the scheduled PDSCH(s). When the UE is configured with CORESET associated with a search space set for cross-carrier scheduling and the UE is not configured with *enableDefaultBeamForCCS*, the UE expects *tci-PresentInDCI* is set as 'enabled' or *tci-PresentDCI-1-2* is configured for the CORESET, and if one or more of the TCI states configured for the serving cell scheduled by the search space set contains *qcl-Type* set to 'typeD', the UE expects the time offset between the reception of the detected PDCCH in the search space set and a corresponding PDSCH is larger than or equal to the threshold *timeDurationForQCL.*

Independent of the configuration of *tci-PresentInDCI* and *tci-PresentDCI-1-2* in RRC connected mode, if the offset between the reception of the DL DCI and the corresponding PDSCH is less than the threshold *timeDurationForQCL* and at least one configured TCI state for the serving cell of scheduled PDSCH contains *qcl-Type* set to 'typeD', the UE may assume that the DM-RS ports of PDSCH(s) of a serving cell are quasi co-located with the RS(s) with respect to the QCL parameter(s) used for PDCCH quasi co-location indication of the CORESET associated with a monitored search space with the lowest *controlResourceSetId* in the latest slot in which one or more CORESETs within the active BWP of the serving cell are monitored by the UE. In this case, if the *qcl-Type* is set to 'typeD' of the PDSCH DM-RS is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers).

Independent of the configuration of *tci-PresentInDCI* and *tci-PresentDCI-1-2* in RRC connected mode, if the offset between the reception of the DL DCI and the corresponding PDSCH is less than the threshold *timeDurationForQCL* and at least one configured TCI state for the serving cell of scheduled PDSCH contains *qcl-Type* set to 'typeD', If a UE is configured with *enableDefaultTCI-StatePerCoresetPoolIndex* and the UE is configured by higher layer parameter *PDCCH-Config* that contains two different values of *coresetPoolIndex* in different *ControlResourceSets*, the UE may assume that the DM-RS ports of PDSCH associated with a value of *coresetPoolIndex* of a serving cell are quasi co-located with the RS(s) with respect to the QCL parameter(s) used for PDCCH quasi co-location indication of the CORESET associated with a monitored search space with the lowest *controlResourceSetId* among CORESETs, which are configured with the same value of *coresetPoolIndex* as the PDCCH scheduling that PDSCH, in the latest slot in which one or more CORESETs associated with the same value of *coresetPoolIndex* as the PDCCH scheduling that PDSCH within the active BWP of the serving cell are monitored by the UE. In this case, if the 'QCL-TypeD' of the PDSCH DM-RS is different from that of the PDCCH DM-RS with which they overlap in at least one symbol and they are associated with same value of *coresetPoolIndex,* the UE is expected to prioritize the reception of PDCCH associated with that CORESET. This also applies to the intra-band CA case (when PDSCH and the CORESET are in different component carriers).

Independent of the configuration of *tci-PresentInDCI* and *tci-PresentDCI-1-2* in RRC connected mode, if the offset between the reception of the DL DCI and the corresponding PDSCH is less than the threshold *timeDurationForQCL* and at least one configured TCI state for the serving cell of scheduled PDSCH contains *qcl-Type* set to 'typeD', If a UE is configured with *enableTwoDefaultTCI-States*, and at least one TCI codepoint indicates two TCI states, the UE may assume that the DM-RS ports of PDSCH or PDSCH transmission occasions of a serving cell are quasi co-located with the RS(s) with respect to the QCL parameter(s) associated with the TCI states corresponding to the lowest codepoint among the TCI codepoints containing two different TCI states. When the UE is configured by higher layer parameter *repetitionScheme* set to 'tdmSchemeA' or is configured with higher layer parameter *repetitionNumber*, and the offset between the reception of the DL DCI and the first PDSCH transmission occasion is less than the threshold *timeDurationForQCL,* the mapping of the TCI states to PDSCH transmission occasions is determined according to clause 5.1.2.1 in TS 38.214 by replacing the indicated TCI states with the TCI states corresponding to the lowest codepoint among the TCI codepoints containing two different TCI states based on the activated TCI states in the slot with the first PDSCH transmission occasion. In this case, if the 'QCL-TypeD' in both of the TCI states corresponding to the lowest codepoint among the TCI codepoints containing two different TCI states is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers).

Independent of the configuration of *tci-PresentInDCI* and *tci-PresentDCI-1-2 in* RRC connected mode, if the offset between the reception of the DL DCI and the corresponding PDSCH is less than the threshold *timeDurationForQCL* and at least one configured TCI state for the serving cell of scheduled PDSCH contains *qcl-Type* set to 'typeD', if a UE is not configured with *sfnSchemePdsch,* and the UE is configured with *sfnSchemePdcch* set to 'sfnSchemeA' and there is no TCI codepoint witih two TCI states in the activation command and the CORESET with the lowest ID in the latest slot is indicated with two TCI states, the UE may assume that the DM-RS ports of PDSCH of a serving cell are quasi co-located with the RS(s) with respect to the QCL parameter(s) associated with the first TCI state of two TCI states indicated for the CORESET.

Independent of the configuration of *tci-PresentInDCI* and *tci-PresentDCI-1-2 in* RRC connected mode, if the offset between the reception of the DL DCI and the corresponding PDSCH is less than the threshold *timeDurationForQCL* and at least one configured TCI state for the serving cell of scheduled PDSCH contains *qcl-Type* set to 'typeD', in all cases above, if none of configured TCI states for the serving cell of scheduled PDSCH is configured with *qcl-Type* set to 'typeD', the UE shall obtain the other QCL assumptions from the indicated TCI state(s) for its scheduled PDSCH irrespective of the time offset between the reception of the DL DCI and the corresponding PDSCH.

If the PDCCH carrying the scheduling DCI is received on one component carrier, and a PDSCH scheduled by that DCI is on another component carrier: (1) the *timeDurationForQCL* is determined based on the subcarrier spacing of the

$$d\frac{2^{\mu_{PDSCH}}}{2^{\mu_{PDCCH}}}$$

scheduled PDSCH. If $\mu_{PDCCH} < \mu_{PDSCH}$ an additional timing delay    is added to the *timeDurationForQCL,* where *d* is defined in 5.2.1.5.1a-1 in TS 38.214, otherwise *d* is zero; or (2) when the UE is configured with *enable-DefaultBeamForCCS*, if the offset between the reception of the DL DCI and the corresponding PDSCH is less than the threshold *timeDurationForQCL,* or if the DL DCI does not have the TCI field present, the UE obtains its QCL assumption for the scheduled PDSCH from the activated TCI state with the lowest ID applicable to PDSCH in the active BWP of the scheduled cell.

A UE that has indicated a capability *beamCorrespondenceWithoutUL-BeamSweeping* set to '1', as described in [18, TS 38.822], can determine a spatial domain filter to be used while performing the applicable channel access procedures described in [16, TS 37.213] to transmit a UL transmission on the channel as follows: (1) if UE is indicated with an SRI corresponding to the UL transmission, the UE may use a spatial domain filter that is same as the spatial domain transmission filter associated with the indicated SRI, or (2) if UE is configured with *TCI-State* configurations with *DLorJointTCIState* or *UL-TCIState,* the UE may use a spatial domain transmit filter that is same as the spatial domain receive filter the UE may use to receive the DL reference signal associated with the indicated TCI state.

When the PDCCH reception includes two PDCCH from two respective search space sets, as described in clause 10.1 of [6, TS 38.213], for the purpose of determining the time offset between the reception of the DL DCI and the corresponding PDSCH, the PDCCH candidate that ends later in time is used. When the PDCCH reception includes two PDCCH candidates from two respective search space sets, as described in clause 10.1 of [6, TS 38.213], for the configuration of *tci-PresentInDCI* or *tci-PresentDCI-1-2,* the UE expects the same configuration in the first and second CORESETs associated with the two PDCCH candidates; and if the PDSCH is scheduled by a DCI format not having the TCI field present and if the scheduling offset is equal to or larger than *timeDurationForQCL,* if applicable, PDSCH QCL assumption is based on the CORESET with lower ID among the first and second CORESETs associated with the two PDCCH candidates.

For a periodic CSI-RS resource in an *NZP-CSI-RS-ResourceSet* configured with higher layer parameter *trs-Info,* the UE shall expect that a TCI-State indicates one of the following quasi co-location type(s): (1) 'typeC' with an SS/PBCH block and, when applicable, 'typeD' with the same SS/PBCH block, or (2) 'typeC' with an SS/PBCH block and, when applicable, 'typeD' with a CSI-RS resource in an *NZP-CSI-RS-ResourceSet* configured with higher layer parameter *repetition.*

For periodic/semi-persistent CSI-RS, the UE can assume that the indicated *DLorJointTCIState* is not applied.

For an aperiodic CSI-RS resource in an *NZP-CSI-RS-ResourceSet* configured with higher layer parameter *trs-Info,* the UE shall expect that a *TCI-State* indicates *qcl-Type* set to 'typeA' with a periodic CSI-RS resource in a *NZP-CSI-RS-ResourceSet* configured with higher layer parameter *trs-Info* and, when applicable, *qcl-Type* set to 'typeD' with the same periodic CSI-RS resource.

For a CSI-RS resource in an *NZP-CSI-RS-ResourceSet* configured without higher layer parameter *trs-Info* and without the higher layer parameter *repetition,* the UE shall expect that a TCI-State indicates one of the following quasi co-location type(s): (1) 'typeA' with a CSI-RS resource in a *NZP-CSI-RS-ResourceSet* configured with higher layer parameter *trs-Info* and, when applicable, 'typeD' with the same CSI-RS resource, (2) 'typeA' with a CSI-RS resource in a *NZP-CSI-RS-ResourceSet* configured with higher layer parameter *trs-Info* and, when applicable, 'typeD' with an SS/PBCH block, (3) 'typeA' with a CSI-RS resource in a *NZP-CSI-RS-ResourceSet* configured with higher layer parameter *trs-Info* and, when applicable, 'typeD' with a CSI-RS resource in a *NZP-CSI-RS-ResourceSet* configured with higher layer parameter *repetition,* or (4) 'typeB' with a CSI-RS resource in a *NZP-CSI-RS-ResourceSet* configured with higher layer parameter *trs-Info* when 'typeD' is not applicable.

For a CSI-RS resource in an *NZP-CSI-RS-ResourceSet* configured with higher layer parameter *repetition,* the UE shall expect that a TCI-State indicates one of the following quasi co-location type(s): (1) 'typeA' with a CSI-RS resource in a *NZP-CSI-RS-ResourceSet* configured with higher layer parameter *trs-Info* and, when applicable, 'typeD' with the same CSI-RS resource, (2) 'typeA' with a CSI-RS resource in a *NZP-CSI-RS-ResourceSet* configured with higher layer parameter *trs-Info* and, when applicable, 'typeD' with a CSI-RS resource in a *NZP-CSI-RS-ResourceSet* configured with higher layer parameter *repetition,* (3) 'typeC' with an SS/PBCH block and, when applicable, 'typeD' with the same SS/PBCH block, the reference RS may additionally be an SS/PBCH block having a PCI different from the PCI of the serving cell. The UE can assume center frequency, SCS, SFN offset are the same for SS/PBCH block from the serving cell and SS/PBCH block having a PCI different from the serving cell.

For the DM-RS of PDCCH, the UE shall expect that a TCI-State or *DLorJointTCIState* except an indicated *DLorJointTCIState* indicates one of the following quasi co-location type(s): (1) 'typeA' with a CSI-RS resource in a *NZP-CSI-RS-ResourceSet* configured with higher layer parameter *trs-Info* and, when applicable, 'typeD' with the same CSI-RS resource, (2) 'typeA' with a CSI-RS resource in a *NZP-CSI-RS-ResourceSet* configured with higher layer parameter *trs-Info* and, when applicable, 'typeD' with a CSI-RS resource in an *NZP-CSI-RS-ResourceSet* configured with higher layer parameter *repetition,* or (3) 'typeA' with a CSI-RS resource in a *NZP-CSI-RS-ResourceSet* configured without higher layer parameter trs-Info and without higher layer parameter *repetition* and, when applicable, 'typeD' with the same CSI-RS resource.

When a UE is configured with *sfnSchemePdcch* set to 'sfnSchemeA', and CORESET is activated with two TCI states, the UE shall assume that the DM-RS port(s)of the PDCCH in the CORESET is quasi co-located with the DL-RSs of the two TCI states. When a UE is configured with *sfnSchemePdcch* set to 'sfnSchemeB', and a CORESET is activated with two TCI states, the UE shall assume that the DM-RS port(s)of the PDCCH is quasi co-located with the DL-RSs of the two TCI states except for quasi co-location parameters {Doppler shift, Doppler spread} of the second indicated TCI state.

For the DM-RS of PDSCH, the UE shall expect that a TCI-State or *DLorJointTCIState* except an indicated *DLorJointTCIState* indicates one of the following quasi co-location type(s): (1) 'typeA' with a CSI-RS resource in a *NZP-CSI-RS-ResourceSet* configured with higher layer parameter *trs-Info* and, when applicable, 'typeD' with the same CSI-RS resource, (2) 'typeA' with a CSI-RS resource in a *NZP-CSI-RS-ResourceSet* configured with higher layer parameter *trs-Info* and, when applicable, 'typeD' with a CSI-RS resource in an *NZP-CSI-RS-ResourceSet* configured with higher layer parameter *repetition,* or (3) 'typeA' with a CSI-RS resource in a *NZP-CSI-RS-ResourceSet* configured without higher layer parameter *trs-Info* and without higher layer parameter *repetition* and, when applicable, 'typeD' with the same CSI-RS resource.

For the DM-RS of PDCCH, the UE shall expect that an indicated *DLorJointTCIState* indicates one of the following quasi co-location type(s): (1) 'typeA' with a CSI-RS resource in a *NZP-CSI-RS-ResourceSet* configured with higher layer parameter *trs-Info* and, when applicable, 'typeD' with the same CSI-RS resource, or (2) 'typeA' with a CSI-RS resource in a *NZP-CSI-RS-ResourceSet* configured with higher layer parameter *trs-Info* and, when applicable, 'typeD' with a CSI-RS resource in an *NZP-CSI-RS-ResourceSet* configured with higher layer parameter *repetition.*

For the DM-RS of PDSCH, the UE shall expect that an indicated *DLorJointTCIState* indicates one of the following quasi co-location type(s) if the UE is configured *TCI-State(s)* with *tci-StateId_r17*: (1) 'typeA' with a CSI-RS resource in a *NZP-CSI-RS-ResourceSet* configured with higher layer parameter *trs-Info* and, when applicable, 'typeD' with the same CSI-RS resource, or (2) 'typeA' with a CSI-RS resource in a *NZP-CSI-RS-ResourceSet* configured with higher layer parameter *trs-Info* and, when applicable, 'typeD' with a CSI-RS resource in an *NZP-CSI-RS-ResourceSet* configured with higher layer parameter *repetition.*

When a UE is configured with *sfnSchemePdsch* set to 'sfnSchemeA', and the UE is indicated with two TCI states in a codepoint of the DCI field 'Transmission Configuration Indication' in a DCI scheduling a PDSCH, the UE shall assume that the DM-RS port(s)of the PDSCH is quasi co-located with the DL-RSs of the two TCI states. When a UE is configured with *sfnSchemePdsch* set to 'sfnSchemeB', and the UE is indicated with two TCI states in a codepoint of the DCI field 'Transmission Configuration Indication' in a DCI scheduling a PDSCH, the UE shall assume that the DM-RS port(s)of the PDSCH is quasi co-located with the DL-RSs of the two TCI states except for quasi co-location parameters {Doppler shift, Doppler spread} of the second indicated TCI state.

Throughout the present disclosure, the joint (e.g., provided by *DLorJoint-TCIState*), separate DL (e.g., provided by *DLorJoint-TCIState*) and/or separate UL (e.g., provided by *UL-TCIState*) TCI states described/discussed herein could also be referred to as unified TCI states, common TCI states, main TCI states and etc.

In the present disclosure, the TCI state/beam indication for the PUSCH(s)/PUCCH(s) repetition in a multi-TRP system is discussed under the Rel. 17 unified TCI framework, wherein one or more DL/UL TCI states could be separately/jointly indicated in various channels such as MAC CE and/or DCI (e.g., DCI format 1_1 or 1_2 with or without DL assignment). The UE could transmit the same PUSCH(s)/PUCCH(s) to different TRPs in the multi-TRP system using different time domain resources and/or different frequency domain resources and/or different spatial domain filters.

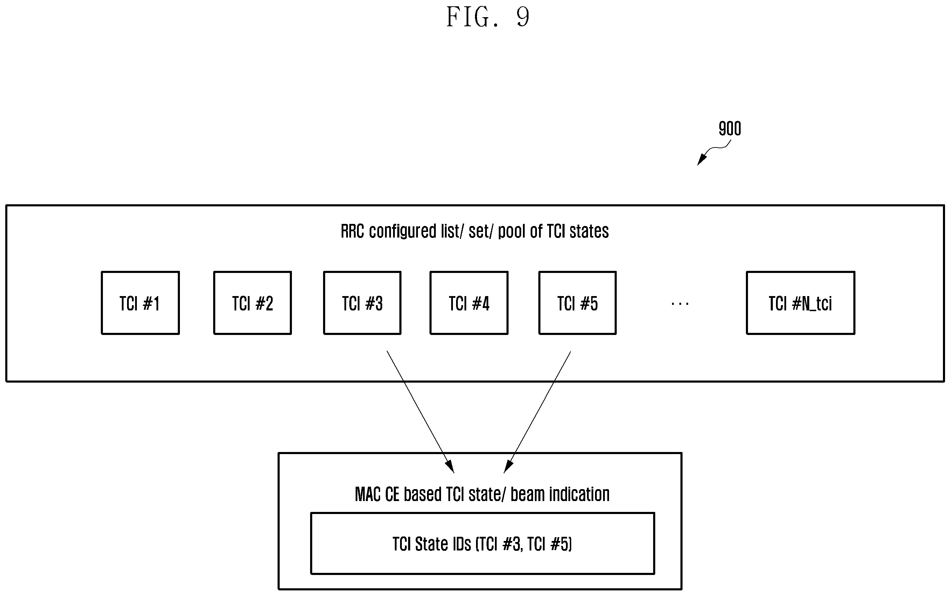

FIGURE 9 illustrates an example of MAC CE based unified TCI state/beam indication for a multiple TRP operation 900 according to embodiments of the present disclosure. An embodiment of the MAC CE based unified TCI state/beam indication for a multiple TRP operation 900 shown in FIGURE 9 is for illustration only.

In FIGURE 9, an example of MAC CE based Rel. 17 unified TCI state/beam indication for the multi-TRP operation is presented. As illustrated in FIGURE 9, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE commands to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single MAC CE command for beam indication to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system.

The MAC CE for beam indication could include at least a Rel. 17 unified TCI state ID. As discussed above, the Rel.17 unified TCI state corresponding to the TCI state ID could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the MAC CE command(s) and the TRPs in the multi-TRP system needs to be specified. There could be various means to associate/map the TCI state(s)/beam(s) indicated in the MAC CE command(s) for beam indication and the TRPs in the multi-TRP system.

For N>1 TCI states/beams indication in a single MAC CE command for beam indication, following examples can be provided.

In one example, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the MAC CE command for beam indication could correspond to the first entry/TRP in the list/set/pool of TRP-specific ID/index values, the second TCI state and/or the TCI state with the second lowest TCI state ID value indicated in the MAC CE command for beam indication could correspond to the second entry/TRP in the list/set/pool of TRP-specific ID/index values, and so on, and the last TCI state and/or the TCI state with the highest TCI state ID value indicated in the MAC CE command for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the MAC CE command for beam indication could correspond to the first MAC CE(s)/bitmap(s) activated TRP-specific ID/index value, the second TCI state and/or the TCI state with the second lowest TCI state ID value indicated in the MAC CE command for beam indication could correspond to the second MAC CE(s)/bitmap(s) activated TRP-specific ID/index value, and so on, and the last TCI state and/or the TCI state with the highest TCI state ID value indicated in the MAC CE command for beam indication could correspond to the last MAC CE(s)/bitmap(s) activated TRP-specific ID/index value. Other exact association/mapping relationships between the TCI states/beams indicated in the MAC CE command for beam indication and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the TCI states/beams indicated in the MAC CE command for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the MAC CE command for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the MAC CE command for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the MAC CE command for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the MAC CE command for beam indication could correspond to the TRP with the highest/highest MAC CE activated TRP-specific ID/index value such as the highest PCI value and/or the last TRP (e.g., TRP #N), the second TCI state and/or the TCI state with the second lowest TCI state ID value indicated in the MAC CE command for beam indication could correspond to the TRP with the second highest/second highest MAC CE activated TRP-specific ID/index value such as the second highest PCI value and/or the second last TRP (e.g., TRP #N-1), and so on, and the last TCI state and/or the TCI state with the highest TCI state ID value indicated in the MAC CE command for beam indication could correspond to the TRP with the lowest/lowest MAC CE activated TRP-specific ID/index value such as the lowest PCI value and/or the first TRP (e.g., TRP #1). Other implicit indication methods of the association/mapping between the N>1 TCI states/beams indicated in the MAC CE command for beam indication and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the MAC CE command for beam indication could correspond to the first entry/CORESETPoolIndex value in the list/set/pool of CORESETPoolIndex values, the second TCI state and/or the TCI state with the second lowest TCI state ID value indicated in the MAC CE command for beam indication could correspond to the second entry/CORESETPoolIndex value in the list/set/pool of CORESETPoolIndex values, and so on, and the last TCI state and/or the TCI state with the highest TCI state ID value indicated in the MAC CE command for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the MAC CE command for beam indication could correspond to the first MAC CE(s)/bitmap(s) activated CORESETPoolIndex value, the second TCI state and/or the TCI state with the second lowest TCI state ID value indicated in the MAC CE command for beam indication could correspond to the second MAC CE(s)/bitmap(s) activated CORESETPoolIndex value, and so on, and the last TCI state and/or the TCI state with the highest TCI state ID value indicated in the MAC CE command for beam indication could correspond to the last MAC CE(s)/bitmap(s) activated CORESETPoolIndex value. Other exact association/mapping relationships between the TCI states/beams indicated in the MAC CE command for beam indication and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the TCI states/beams indicated in the MAC CE command for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the MAC CE command for beam indication could correspond to the lowest/lowest MAC CE activated CORESETPoolIndex value such as "0," the second TCI state and/or the TCI state with the second lowest TCI state ID value indicated in the MAC CE command for beam indication could correspond to the second lowest/second lowest MAC CE activated CORESETPoolIndex value such as "1," and so on, and the last TCI state and/or the TCI state with the highest TCI state ID value indicated in the MAC CE command for beam indication could correspond to the highest/highest MAC CE activated CORESETPoolIndex value such as "N-1."

For another example, the first TCI state and/or the TCI state with the lowest TCI state ID value indicated in the MAC CE command for beam indication could correspond to the highest/highest MAC CE activated CORESETPoolIndex value such as "N-1," the second TCI state and/or the TCI state with the second lowest TCI state ID value indicated in the MAC CE command for beam indication could correspond to the second highest/second highest MAC CE activated CORESETPoolIndex value such as "N-2," and so on, and the last TCI state and/or the TCI state with the highest TCI state ID value indicated in the MAC CE command for beam indication could correspond to the lowest/lowest MAC CE activated CORESETPoolIndex value such as "0." Other implicit indication methods of the association/mapping between the N>1 TCI states/beams indicated in the MAC CE command for beam indication and the CORESETPoolIndex values are also possible.

In yet another example, a TCI state, e.g., the higher layer parameter TCI-State, indicated in the MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the MAC CE command for Rel. 17 unified TCI state/beam indication could include/-comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same MAC CE command for Rel. 17 unified TCI state/beam indication, where $n \in \{1,...,N\}$ or $m \in \{1,...,M\}$. For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same MAC CE command for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroup-pIndex value 1 indicated in the same MAC CE command for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroup-pIndex value (e.g., either 0 or 1) in the parameter, e.g., the higher layer parameter ControlResourceSet, configuring the CORESET.

For a list/set/pool of N>1 MAC CE commands for beam indication with each MAC CE command indicating a single TCI state/beam; a unique entity ID/index could be included/incorporated in each MAC CE command for beam indication.

In one example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of TRP-specific ID/index values such as PCIs. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/TRP in the list/set/pool of TRP-specific ID/index values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/TRP in the list/set/pool of TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first MAC CE command for beam indication in the list/set/pool of N>1 MAC CE commands for beam indication and/or the MAC CE command indicating the lowest entity ID/index value and/or the MAC CE command for beam indication indicating the TCI state with the lowest TCI state ID value could correspond to the first MAC CE(s)/bitmap(s) activated TRP-specific ID/index values, the second MAC CE command for beam indication in the list/set/pool of N>1 MAC CE commands for beam indication and/or the MAC CE command for beam indication indicting the second lowest entity ID/index value and/or the MAC CE command for beam indication indicating the TCI state with the second lowest TCI state ID value could correspond to the second MAC CE(s)/bitmap(s) activated TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated TRP-specific ID/index values. Other exact association/mapping relationships between the MAC CE commands for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the MAC CE commands for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the lowest/lowest MAC CE activated TRP-specific ID/index value such as the lowest PCI value and/or the first TRP (e.g., TRP #1), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the TRP with the highest/highest MAC CE activated TRP-specific ID/index value such as the highest PCI value and/or the last TRP (e.g., TRP #N).

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the highest/highest MAC CE activated TRP-specific ID/index value such as the highest PCI value and/or the last TRP (e.g., TRP #N), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second highest/second highest MAC CE activated TRP-specific ID/index value such as the second highest PCI value and/or the second last TRP (e.g., TRP #N-1), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the TRP with the lowest/lowest MAC CE activated TRP-specific ID/index value such as the lowest PCI value and/or the first TRP (e.g., TRP #1). Other implicit indication methods of the association/mapping between the N>1 MAC CE commands for beam indication (and therefore, the TCI states/beams indicated therein) and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of CORESETPoolIndex values - e.g., a set of two CORESETPoolIndex values 0 and 1. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/CORESETPoolIndex value in the list/set/pool of CORESETPoolIndex values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/CORESETPoolIndex value in the list/set/pool of CORESETPoolIndex values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/CORESETPoolIndex value in the list/set/pool of CORESETPoolIndex values. For another example, the UE could be first higher layer configured by the network a list/set/pool of CORESETPoolIndex values - e.g., a set of two CORESETPoolIndex values 0 and 1.

The UE could then receive from the network one or more MAC CE activation commands/bitmaps to activate one or more CORESETPoolIndex values from the higher layer configured list/set/pool of CORESETPoolIndex values. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first MAC CE(s)/bitmap(s) activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second MAC CE(s)/bitmap(s) activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated CORESETPoolIndex value. Other exact association/mapping relationships between the MAC CE commands for beam indication (and therefore, the TCI states/beams indicated therein) and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the MAC CE commands for beam indication (and therefore, the TCI states/beams indicated therein) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the lowest/lowest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second lowest/second lowest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the highest/highest MAC CE activated CORESETPoolIndex value.

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the highest/highest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second highest/second highest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the lowest/lowest MAC CE activated CORESETPoolIndex value. Other implicit indication methods of the association/mapping between the N>1 MAC CE commands for beam indication (and therefore, the TCI states/beams indicated therein) and the CORESETPoolIndex values are also possible.

In yet another example, a MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The MAC CE command for beam indication may indicate/update the corresponding TCI state(s) for the TRP(s) associated with the same ID/index value, e.g., the CORESETPoolIndex value, as that indicated in the MAC CE command for beam indication.

In yet another example, a MAC CE command for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-

th or m-th joint DL and UL TCI state or separate DL TCI state or separate UL TCI state) among/within the indicated N>1 or M>1 Rel. 17 unified TCI states could be associated with the n-th or m-th entity ID/index indicated in the same MAC CE command for Rel. 17 unified TCI state/beam indication, where n ∈ {1,..., N} or m∈{1,..., M}.

For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same MAC CE command for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same MAC CE command for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

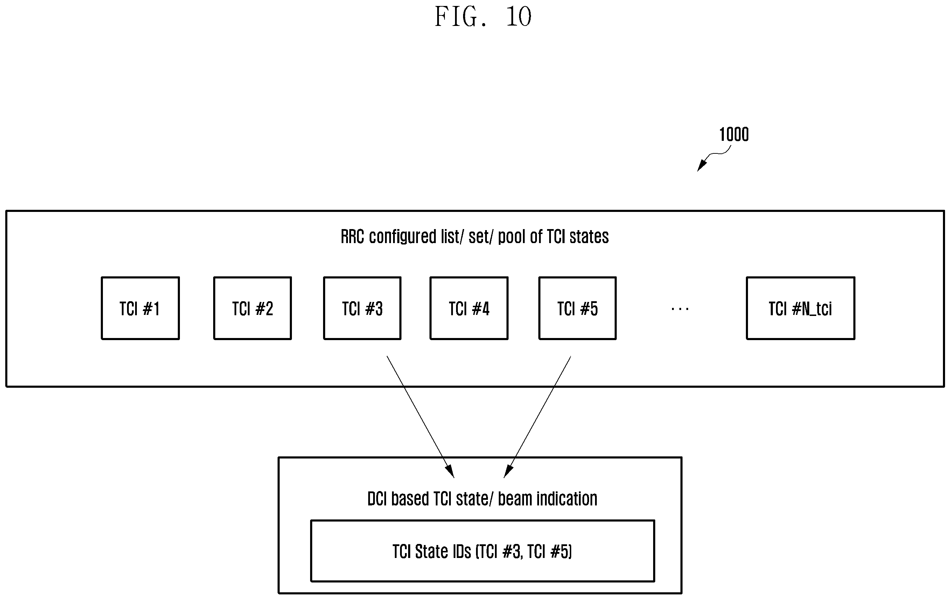

FIGURE 10 illustrates an example of DCI based unified TCI state/beam indication for a multiple TRP operation 1000 according to embodiments of the present disclosure. An embodiment of the DCI based unified TCI state/beam indication for a multiple TRP operation 1000 shown in FIGURE 10 is for illustration only.

In FIGURE 10, an example of DCI based Rel. 17 unified TCI state/beam indication for the multi-TRP operation is presented. As illustrated in FIGURE 10, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more DCIs (e.g., DCI format 1_1 or 1_2 with or without DL assignment) to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI (e.g., DCI format 1_1 or 1_2 with or without DL assignment) to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system.

As described above, a DCI used to indicate to the UE a beam (i.e., a TCI state and/or a TCI state ID) for the transmission/reception of a PDCCH or a PDSCH could be at least one of the following examples.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet in another example, a custom/purpose designed DCI format could be used to indicate to the UE a beam (i.e., a TCI state and/or a TCI state ID) for the transmission/reception of a PDCCH or a PDSCH.

Furthermore, the Rel. 17 unified TCI state indicated in the DCI for beam indication could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the DCI(s) and the TRPs in the multi-TRP system needs to be specified. There could be various means to associate/map the TCI state(s)/beam(s) indicated in the DCI(s) and the TRPs in the multi-TRP system.

For N>1 TCI states/beams indication in a single DCI, following examples can be provided.

In one example, the UE could be explicitly indicated by the network, e.g., via higher layer RRC signaling and/or MAC CE command and/or dynamic DCI signaling, the exact association/mapping between the TCI states/beams indicated in the DCI and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values. For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the TCI states/beams indicated in the DCI for beam indication and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the TCI states/beams indicated in the DCI for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the DCI for beam indication could correspond to the TRP with the highest/highest MAC CE activated TRP-specific ID/index value such as PCI value, the second TCI state and/or the TCI state with the second lowest TCI state ID value indicated in the DCI for beam indication could correspond to the TRP with the second highest/second highest MAC CE activated TRP-specific ID/index value such as PCI value, and so on, and the last TCI state and/or the TCI state with the highest TCI state ID value indicated in the DCI for beam indication could correspond to the TRP with the lowest/lowest MAC CE activated TRP-specific ID/index value such as PCI value. Other implicit indication methods of the association/mapping between the N>1 TCI states/beams indicated in the DCI and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the TCI states/beams indicated in the DCI for beam indication and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value. Other exact association/mapping relationships between the TCI states/beams indicated in the DCI for beam indication and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the TCI states/beams indicated in the DCI for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the DCI for beam indication could correspond to the lowest/lowest MAC CE activated CORESETPoolIndex value such as "0," the second TCI state and/or the TCI state with the second lowest TCI state ID value indicated in the DCI for beam indication could correspond to the second lowest/second lowest MAC CE activated CORESETPoolIndex value such as "1," and so on, and the last TCI state and/or the TCI state with the highest TCI state ID value indicated in the DCI for beam indication could correspond to the highest/highest MAC CE activated CORESETPoolIndex value such as "N-1."

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N>1 TCI states/beams indicated in the DCI for beam indication and the CORESETPoolIndex values are also possible.

In yet another example, a TCI state, e.g., the higher layer parameter TCI-State, indicated in the DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the DCI (e.g., DCI format 1_1 or 1_2 with or without DL assignment) for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same DCI (e.g., DCI format 1_1 or 1_2 with or without DL assignment) for Rel. 17 unified TCI state/beam indication, where n $\in$ {1,..., N} or m$\in$ {1,..., M}.

For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For N>1 DCIs with each DCI indicating a single TCI state/beam, following examples can be provided.

In one example, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein) and the TRPs in the multi-TRP system. For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values. Other exact association/mapping relationships between the DCIs for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCIs for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N).

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as PCI value, the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as PCI value, and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as PCI value. Other implicit indication methods of the association/mapping between the N>1 DCIs for beam indication (and therefore, the TCI states/beams indicated therein) and the TRPs in the multi-TRP system are also possible.

In yet another example, a DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication may indicate/update the corresponding TCI state(s) for the TRP(s) associated with the same ID/index value, e.g., the CORESETPoolIndex value, as that indicated in the DCI for beam indication.

In yet another example, a DCI (e.g., DCI format 1_1 or 1_2 with or without DL assignment) for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same DCI (e.g., DCI format 1_1 or 1_2 with or without DL assignment) for Rel. 17 unified TCI state/beam indication, where $n \in \{1,..., N\}$ or $m \in \{1,..., M\}$.

For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

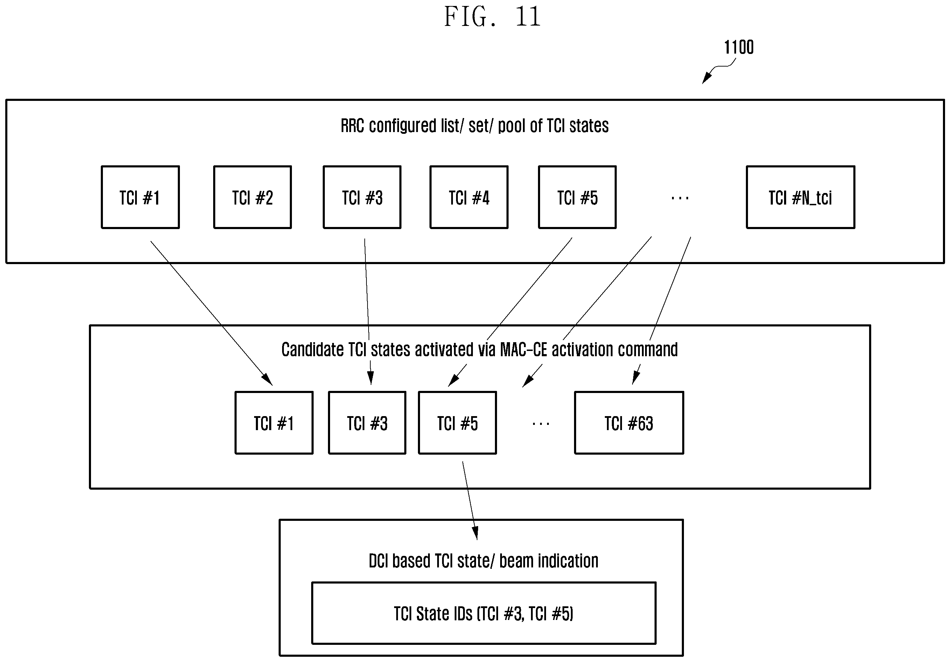

FIGURE 11 illustrates an example of DCI based TCI state/beam indication (with MAC CE activated TCI states/codepoints) for a multiple TRP operation 1100 according to embodiments of the present disclosure. An embodiment of the DCI based TCI state/beam indication (with MAC CE activated TCI states/codepoints) for a multiple TRP operation 1100 shown in FIGURE 11 is for illustration only.

In FIGURE 11, an example of Rel. 17 DCI based TCI state/beam indication (with MAC CE activated TCI states) for the multi-TRP operation is presented. As illustrated in FIGURE 11, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE activation commands activating one or more TCI states from the higher layer configured list/pool of TCI states, e.g., up to eight TCI states could be activated by a MAC CE activation command. The UE could receive from the network one or more DCIs to indicate one or more beam(s) (i.e., the Rel. 17 unified TCI state(s)) from the MAC CE activated TCI state(s)/beam(s) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI to indicate M'>1 Rel. 17 unified TCI states/beams (e.g., M'>1 joint DL and UL TCI states or M'>1 separate UL TCI states) from the MAC CE activated TCI states/beams for the same PUSCH(s)/PUCCH(s) transmitted to/associated with different TRPs in the multi-TRP system.

As described above, a DCI used to indicate to the UE a beam (i.e., a TCI state and/or a TCI state ID) for the transmission/reception of a PDCCH or a PDSCH could be at least one of the following examples.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

In yet another example, a custom/purpose designed DCI format could be used to indicate to the UE a beam (i.e., a TCI state and/or a TCI state ID) for the transmission/reception of a PDCCH or a PDSCH.

Furthermore, the Rel. 17 unified TCI state indicated in the DCI for beam indication could be at least one of: (1) a DL TCI state; (2) an UL TCI state; (3) a joint DL and UL TCI state; and (4) Separate DL TCI state and UL TCI state.

The association/mapping between the DCI(s) indicated TCI state(s)/beam(s) - from the MAC CE activated TCI state(s)/beam(s) - and the TRPs in the multi-TRP system needs to be specified. There could be various means to associate/map the DCI(s) indicated TCI state(s)/beam(s) - from the MAC CE activated TCI state(s)/beam(s) - and the TRPs in the multi-TRP system. For N'>1 TCI states/beams indication in a single DCI, following examples can be provided.

In one example, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the DCI indicated TCI states/beams (selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCI indicated TCI states/beams (selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N').

For another example, the first TCI state and/or the TCI state with the lowest TCI state ID value indicated in the DCI for beam indication could correspond to the TRP with the highest/highest MAC CE activated TRP-specific ID/index value such as the highest PCI value and/or the last TRP (e.g., TRP #N'), the second TCI state and/or the TCI state with the second lowest TCI state ID value indicated in the DCI for beam indication could correspond to the TRP with the second highest/second highest MAC CE activated TRP-specific ID/index value such as the second highest PCI value and/or the second last TRP (e.g., TRP #N'-1), and so on, and the last TCI state and/or the TCI state with the highest TCI state ID value indicated in the DCI for beam indication could correspond to the TRP with the lowest/lowest MAC CE activated TRP-specific ID/index value such as the lowest PCI value and/or the first TRP (e.g., TRP #1). Other implicit indication methods of the association/mapping between the N'>1 DCI indicated TCI states/beams (selected from the MAC CE activated TCI states/beams) and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value. Other exact association/mapping relationships between the DCI indicated TCI states/beams (selected from the MAC CE activated TCI states/beams) and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the DCI indicated TCI states/beams (selected from the MAC CE activated TCI states/beams) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the DCI for beam indication could correspond to the lowest/lowest MAC CE activated CORESETPoolIndex value such as "0," the second TCI state and/or the TCI state with the second lowest TCI state ID value indicated in the DCI for beam indication could correspond to the second lowest/second lowest MAC CE activated CORESETPoolIndex value such as "1," and so on, and the last TCI state and/or the TCI state with the highest TCI state ID value indicated in the DCI for beam indication could correspond to the highest/highest MAC CE activated CORESETPoolIndex value such as "N-1."

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N'>1 DCI indicated TCI states/beams (selected from the MAC CE activated TCI states/beams) and the CORESETPoolIndex values are also possible.

In yet another example, a TCI state (selected from the MAC CE activated TCI states/beams), e.g., the higher layer parameter TCI-State, indicated in the MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the DCI (e.g., DCI format 1_1 or 1_2 with or without DL assignment) for Rel. 17 unified TCI state/beam indication could include/comprise/incorporate at least one (e.g., N'>1 or M'>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n'-th or m'-th TCI state (e.g., the n'-th or m'-th joint DL and UL TCI state or separate DL TCI state or separate UL TCI state) among/within the indicated N'>1 or M'>1 Rel. 17 unified TCI states (selected from the MAC CE activated TCI states/beams) could be associated with the n'-th or m'-th entity ID/index indicated in the same DCI (e.g., DCI format 1_1 or 1_2 with or without DL assignment) for Rel. 17 unified TCI state/beam indication, where n' ∈ {1,..., N'} or m' ∈ {1,..., M'}.

For instance, the first TCI state in the indicated N'=2 or M'=2 Rel. 17 unified TCI states selected from the MAC CE activated TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N'=2 or M'=2 Rel. 17 unified TCI states selected from the MAC CE activated TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For N'>1 DCIs with each DCI indicating a single TCI state/beam, following examples can be provided.

In one example, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein - selected from the MAC CE activated TCI states/beams) and the TRPs in the multi-TRP system. For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values. Other exact association/mapping relationships between the DCIs for beam indication (and therefore, the TCI states/beams indicated therein - selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCIs for beam indication (and therefore, the TCI states/beams indicated therein - selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N').

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as the highest PCI value and/or the last TRP (e.g., TRP #N'), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as the second highest PCI value and/or the second last TRP (e.g., TRP #N'-1), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as the lowest PCI value and/or the first TRP (e.g., TRP #1). Other implicit indication methods of the association/mapping between the N'>1 DCIs for beam indication (and therefore, the TCI states/beams indicated therein - selected from the MAC CE activated TCI states/beams) and the TRPs in the multi-TRP system are also possible.

In yet another example, a DCI for beam indication (indicating the TCI state(s)/beam(s) selected from the MAC CE activated TCI states/beams) could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication (indicating the TCI state(s)/beam(s) selected from the MAC CE activated TCI states/beams) may indicate/update the corresponding TCI state(s) for the TRP(s) associated with the same ID/index value, e.g., the CORESETPoolIndex value, as that indicated in the DCI for beam indication (indicating the TCI state(s)/beam(s) selected from the MAC CE activated TCI states/beams).

In yet another example, a DCI (e.g., DCI format 1_1 or 1_2 with or without DL assignment) for Rel. 17 unified TCI state/beam indication could include/comprise/incorporate at least one (e.g., N'>1 or M'>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n'-th or m'-th TCI state (e.g., the n'-th or m'-th joint DL and UL TCI state or separate DL TCI state or separate UL TCI state) among/within the indicated N'>1 or M'>1 Rel. 17 unified TCI states (selected from the MAC CE activated TCI states/beams) could be associated with the n'-th or m'-th entity ID/index indicated in the same DCI (e.g., DCI format 1_1 or 1_2 with or without DL assignment) for Rel. 17 unified TCI state/beam indication, where n' ∈ {1,..., N'} or m' ∈ {1,..., M'}.

For instance, the first TCI state in the indicated N'=2 or M'=2 Rel. 17 unified TCI states selected from the MAC CE activated TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N'=2 or M'=2 Rel. 17 unified TCI states selected from the MAC CE activated TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

In one example, the UE could be provided/configured by the network a CSI-RS resource set, e.g., a SSB resource set provided by the higher layer parameter CSI-SSB-ResourceSet or a NZP CSI-RS resource set provided by the higher layer parameter nzp-CSI-RS-ResourceSet for L1 beam metric reporting, including one or more SSB resources or one or more NZP CSI-RS resource configurations associated with one or more PCIs or one or more PCI indexes corresponding/pointing to one or more PCIs in a list/set/pool of PCIs higher layer configured to the UE or one or more CORESETPoolIndex values or one or more CORESETGroupIndex values (e.g., 0 and 1). The association between a CORESET and a CORESETGroupIndex value could be via indicating the explicit CORESETGroupIndex value (e.g., either 0 or 1) in the parameter, e.g., the higher layer parameter ControlResourceSet, configuring the CORESET. Detailed association methods between the SSB resources or NZP CSI-RS resource configurations and the PCIs/PCI indexes/CORESETPoolIndex/CORESETGroupIndex values are described in the U.S. Patent Application 17/646,104 incorporated by reference in its entirety.

Furthermore, under the Rel. 17 unified TCI framework, there could be various means to configured/indicate QCL assumption(s) for the NZP CSI-RS resource configurations in the NZP CSI-RS resource set (provided by nzp-CSI-RS-ResourceSet). When a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate DL Rel. 17 unified TCI states and separate UL Rel. 17 unified TCI states via MAC CE or DCI (e.g., DCI format 1_1 or 1_2 with or without DL assignment) based signaling,

For example, the NZP CSI-RS resource set provided by the higher layer parameter nzp-CSI-RS-ResourceSet could be configured with "useIndicatedr17TCIState." In this case, the m-th (or the n-th) NZP CSI-RS resource configuration or the NZP CSI-RS resource configuration with the m-th lowest or highest (or the n-th lowest or highest) NZP-CSI-RS-ResourceId value could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID, where m=1,..., M and n=1,..., N. Specifically, for N=2 or M=2, the first NZP CSI-RS resource configuration or the NZP CSI-RS resource configuration with the lowest or highest NZP-CSI-RS-ResourceId value could be associated with the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID, and the second NZP CSI-RS resource configuration or the NZP CSI-RS resource configuration with the highest or lowest NZP-CSI-RS-ResourceId value could be associated with the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID. If a NZP CSI-RS resource configuration is associated with a Rel. 17 unified TCI state, the UE could assume the quasi co-location configuration of quasi co-location RS resource(s) and quasi co-location type(s) from the indicated Rel. 17 unified TCI state for the NZP CSI-RS resource configuration.

For another example, the NZP CSI-RS resource set provided by the higher layer parameter nzp-CSI-RS-ResourceSet could be configured with "useIndicatedr17TCIState." In this case, a NZP CSI-RS resource configuration in the NZP CSI-RS resource set could be associated with an indicated joint DL and UL TCI state or separate UL TCI state or separate DL TCI state or TCI state in the first combination of TCI states or TCI state in the second combination of TCI states or TCI state in the third combination of TCI states if they are associated with the same PCI/PCI index/CORESETPoolIndex value/CORESETGroupIndex value. The association between a Rel. 17 unified TCI state and PCI/PCI index/CORESETPoolIndex value/CORESETGroupIndex value could follow those specified in the above discussed design examples. The association between a NZP CSI-RS resource configuration and PCI/PCI index/CORESETPoolIndex value/CORESETGroupIndex value could follow those specified in the U.S. Patent Application 17/646,104 incorporated by reference in its entirety. If a NZP CSI-RS resource configuration is associated with a Rel. 17 unified TCI state, the UE could assume the quasi co-location configuration of quasi co-location RS resource(s) and quasi co-location type(s) from the indicated Rel. 17 unified TCI state for the NZP CSI-RS resource configuration.

Yet for another example, one or more NZP CSI-RS resources provided by NZP-CSI-RS-Resource in the NZP CSI-RS resource set could be configured with "useIndicatedr17TCIState." In this case, the m-th (or the n-th) NZP CSI-RS resource configuration or the NZP CSI-RS resource configuration with the m-th lowest or highest (or the n-th lowest or highest) NZP-CSI-RS-ResourceId value among/within the NZP CSI-RS resource configurations configured with "useIndicatedr17TCIState" in the NZP CSI-RS resource set could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID, where m=1,..., M and n=1,..., N.

Specifically, for N=2 or M=2, the first NZP CSI-RS resource configuration or the NZP CSI-RS resource configuration with the lowest or highest NZP-CSI-RS-ResourceId value among/within the NZP CSI-RS resource configurations configured with "useIndicatedTCIState" in the NZP CSI-RS resource set could be associated with the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID, and the second NZP CSI-RS resource configuration or the NZP CSI-RS resource configuration with the highest or lowest NZP-CSI-RS-ResourceId value among/within the NZP CSI-RS resource configurations configured with "useIndicatedr17TCIState" in the NZP CSI-RS resource set could be associated with the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID. If a NZP CSI-RS resource configuration is associated with a Rel. 17 unified TCI state, the UE could assume the quasi-co-location configuration of quasi co-location RS resource(s) and quasi co-location type(s) from the indicated Rel. 17 unified TCI state for the NZP CSI-RS resource configuration.

Yet for another example, one or more NZP CSI-RS resources provided by NZP-CSI-RS-Resource in the NZP CSI-RS resource set could be configured with "useIndicatedr17TCIState." In this case, a NZP CSI-RS resource configuration configured with "useIndicatedr17TCIState" in the NZP CSI-RS resource set could be associated with an indicated joint DL and UL TCI state or separate UL TCI state or separate DL TCI state or TCI state in the first combination of TCI states or TCI state in the second combination of TCI states or TCI state in the third combination of TCI states if they are associated with the same PCI/PCI index/CORESETPoolIndex value/CORESETGroupIndex value. The association between a Rel. 17 unified TCI state and PCI/PCI index/CORESETPoolIndex/CORESETGroupIndex value could follow those specified in the above discussed design examples. The association between a NZP CSI-RS resource configuration and PCI/PCI index/CORESETPoolIndex/CORESETGroupIndex value could follow those specified in the the U.S. Patent Application 17/646,104 incorporated by reference in its entirety. If a NZP CSI-RS resource configuration is associated with a Rel. 17 unified TCI state, the UE could assume the quasi-co-location configuration of quasi co-location RS resource(s) and quasi co-location type(s) from the indicated Rel. 17 unified TCI state for the NZP CSI-RS resource configuration.

Yet for another example, one or more NZP CSI-RS resources provided by NZP-CSI-RS-Resource in the NZP CSI-RS resource set could be configured with a TCI state ID value corresponding/pointing to an indicated Rel. 17 unified TCI state. In this case, the m-th (or the n-th) NZP CSI-RS resource configuration or the NZP CSI-RS resource configuration with the m-th lowest or highest (or the n-th lowest or highest) NZP-CSI-RS-ResourceId value among/within the NZP CSI-RS resource configurations configured with a same TCI state ID value corresponding/pointing to an indicated Rel. 17 unified TCI state in the NZP CSI-RS resource set could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID, where m=1,..., M and n=1,..., N.

Specifically, for N=2 or M=2, the first NZP CSI-RS resource configuration or the NZP CSI-RS resource configuration with the lowest or highest NZP-CSI-RS-ResourceId value among/within the NZP CSI-RS resource configurations configured with a same TCI state ID value corresponding/pointing to an indicated Rel. 17 unified TCI state in the NZP CSI-RS resource set could be associated with the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID, and the second NZP CSI-RS resource configuration or the NZP CSI-RS resource configuration with the highest or lowest NZP-CSI-RS-ResourceId value among/within the NZP CSI-RS resource configurations configured with a same TCI state ID value corresponding/pointing to an indicated Rel. 17 unified TCI state in the NZP CSI-RS resource set could be associated with the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID. If a NZP CSI-RS resource configuration is associated with a Rel. 17 unified TCI state, the UE could assume the quasi-co-location configuration of quasi co-location RS resource(s) and quasi co-location type(s) from the indicated Rel. 17 unified TCI state for the NZP CSI-RS resource configuration.

Yet for another example, one or more NZP CSI-RS resources provided by NZP-CSI-RS-Resource in the NZP CSI-RS resource set could be configured with a same TCI state ID value corresponding/pointing to an indicated Rel. 17 unified TCI state. In this case, a NZP CSI-RS resource configuration configured with a TCI state ID value corresponding/pointing to an indicated Rel. 17 unified TCI state in the NZP CSI-RS resource set could be associated with an indicated joint DL and UL TCI state or separate UL TCI state or separate DL TCI state or TCI state in the first combination of TCI states or TCI state in the second combination of TCI states or TCI state in the third combination of TCI states if they are associated with the same PCI/PCI index/CORESETPoolIndex value/CORESETGroupIndex value. The association between a Rel. 17 unified TCI state and PCI/PCI index/CORESETPoolIndex value/CORESETGroupIndex value could follow those specified in the above discussed design examples. The association between a NZP CSI-RS resource configuration and PCI/PCI index/CORESETPoolIndex value/CORESETGroupIndex value could follow those specified in the the U.S. Patent Application 17/646,104 incorporated by reference in its entirety. If a NZP CSI-RS resource configuration is associated with a Rel. 17 unified TCI state, the UE could assume the quasi-co-location configuration of quasi co-location RS resource(s) and quasi co-location type(s) from the indicated Rel. 17 unified TCI state for the NZP CSI-RS resource configuration.

Yet for another example, a NZP CSI-RS resource configuration provided by NZP-CSI-RS-Resource in the NZP CSI-RS resource set could be configured with an index corresponding/pointing to a TCI state among/within the indicated M>1 or N>1 Rel. 17 unified TCI states. If a NZP CSI-RS resource configuration provided by NZP-CSI-RS-Resource in the NZP CSI-RS resource set is configured with a TCI state index m ($m \in \{1,..., M\}$) or n ($n \in \{1,..., N\}$), the NZP CSI-RS resource configuration could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

For example, one or more TCI state indexes each corresponding/pointing to a TCI state among/within the indicated M>1 or N>1 Rel. 17 unified TCI states could be included/indicated in the parameter configuring the NZP CSI-RS resource set, e.g., in the higher layer parameter nzp-CSI-RS-ResourceSet, and each indicated TCI state index could be associated with a NZP CSI-RS resource configuration configured in the same NZP CSI-RS resource set. For instance, for a NZP CSI-RS resource set composed of K NZP CSI-RS resource configurations, K TCI state indexes each corresponding/pointing to a TCI state among/within the indicated M>1 or N>1 Rel. 17 unified TCI states could be indicated/included in the corresponding higher layer parameter nzp-CSI-RS-ResourceSet. For this case, the k-th TCI state index, and therefore the corresponding TCI state among/within the indicated M>1 or N>1 Rel. 17 unified TCI states, could correspond to the k-th NZP CSI-RS resource configuration in the NZP CSI-RS resource set. For another example, a TCI state index corresponding/pointing to a TCI state among/within the indicated M>1 or N>1 Rel. 17 unified TCI states could be included/indicated in the parameter configuring the NZP CSI-RS resource configuration, e.g., in the higher layer parameter NZP-CSI-RS-Resource.

Yet for another example, one or more NZP CSI-RS resource configurations provided by NZP-CSI-RS-Resource in the NZP CSI-RS resource set could be configured with a one-bit flag indicating the serving cell PCI (e.g., "0" indicating the serving cell PCI or "1" indicating the non-serving cell PCI) or a one-bit flag indicating value 0 of CORESETPoolIndex/CORESETGroupIndex (e.g., "0" indicating value 0 of CORESETPoolIndex/CORESETGroupIndex and "1" indicating value 1 of CORESETPoolIndex/CORESETGroupIndex) or "useIndicatedr17TCIStateForSC" or "useIndicatedr17TCIStateForCORESETPoolIndex0" or "useIndicatedr17TCIStateForCORESETGroupIndex0." Furthermore, one or more NZP CSI-RS resource configurations provided by NZP-CSI-RS-Resource in the NZP CSI-RS resource set could be configured with a one-bit flag indicating a non-serving cell PCI different from the serving cell PCI (e.g., "0" indicating the serving cell PCI or "1" indicating the non-serving cell PCI) or a one-bit flag indicating value 1 of CORESETPoolIndex/CORESETGroupIndex (e.g., "0" indicating value 0 of CORESETPoolIndex/CORESETGroupIndex and "1" indicating value 1 of CORESETPoolIndex/CORESETGroupIndex) or "useIndicatedr17TCIStateForNSC" or "useIndicatedr17TCIStateForCORESETPoolIndex1" or "useIndicatedr17TCIStateForCORESETGroupIndex1." The UE could be provided by the network, e.g., via MAC CE or DCI (e.g., DCI format 1_1 or 1_2 with or without DL assignment) based signaling through the higher layer parameter TCI-State_r17, M0>1 joint DL and UL Rel. 17 unified TCI states or M0>1 separate UL Rel. 17 unified TCI states or a first combination of M0>1 joint DL and UL Rel. 17 unified TCI states and separate UL Rel. 17 unified TCI states or N0>1 separate DL Rel. 17 unified TCI states or a second combination of N0>1 joint DL and UL Rel. 17 unified TCI states and separate DL Rel. 17 unified TCI states or a third combination of N0>1 joint DL and UL Rel. 17 unified TCI states, separate DL Rel. 17 unified TCI states and separate UL Rel. 17 unified TCI states associated with the serving cell PCI or value 0 of CORESETPoolIndex/CORESETGroupIndex.

Furthermore, the UE could be provided by the network, e.g., via MAC CE or DCI (e.g., DCI format 1_1 or 1_2 with or without DL assignment) based signaling through the higher layer parameter TCI-State_r17, M1>1 joint DL and UL Rel. 17 unified TCI states or M1>1 separate UL Rel. 17 unified TCI states or a first combination of M1>1 joint DL and UL Rel. 17 unified TCI states and separate UL Rel. 17 unified TCI states or N1>1 separate DL Rel. 17 unified TCI states or a second combination of N1>1 joint DL and UL Rel. 17 unified TCI states and separate DL Rel. 17 unified TCI states or a third combination of N1>1 joint DL and UL Rel. 17 unified TCI states, separate DL Rel. 17 unified TCI states and separate UL Rel. 17 unified TCI states associated with the non-serving cell PCI different from the serving cell PCI or value 1 of CORESETPoolIndex/CORESETGroupIndex. The association between a Rel. 17 unified TCI state and PCI/PCI index/CORESETPoolIndex value/CORESETGroupIndex value could follow those specified in the above discussed design examples. For this case, one or more of the NZP CSI-RS resource configurations provided by NZP-CSI-RS-Resource in the NZP CSI-RS resource set configured with a one-bit flag indicating the serving cell PCI (e.g., "0" indicating the serving cell PCI or "1" indicating the non-serving cell PCI) or a one-bit flag indicating value 0 of CORESETPoolIndex/CORESETGroupIndex (e.g., "0" indicating value 0 of CORESETPoolIndex/CORESETGroupIndex and "1" indicating value 1 of CORESETPoolIndex/CORESETGroupIndex) or "useIndicatedr17TCIStateForSC" or "useIndicatedr17TCIStateForCORESETPoolIndex0" or "useIndicatedr17TCIStateForCORESETGroupIndex0" could be associated with one or more of the M0>1 joint DL and UL Rel. 17 unified TCI states or M0>1 separate UL Rel. 17 unified TCI states or a first combination of M0>1 joint DL and UL Rel. 17 unified TCI states and separate UL Rel. 17 unified TCI states or N0>1 separate DL Rel. 17 unified TCI states or a second combination of N0>1 joint DL and UL Rel. 17 unified TCI states and separate DL Rel. 17 unified TCI states or a third combination of N0>1 joint DL and UL Rel. 17 unified TCI states, separate DL Rel. 17 unified TCI states and separate UL Rel. 17 unified TCI states following those specified in examples mentioned in the present disclosure.

Furthermore, one or more of the NZP CSI-RS resource configurations provided by NZP-CSI-RS-Resource in the NZP CSI-RS resource set configured with a one-bit flag indicating the non-serving cell PCI different from the serving cell PCI (e.g., "0" indicating the serving cell PCI or "1" indicating the non-serving cell PCI) or a one-bit flag indicating value 1 of CORESETPoolIndex/CORESETGroupIndex (e.g., "0" indicating value 0 of CORESETPoolIndex/CORESETGroupIndex and "1" indicating value 1 of CORESETPoolIndex/CORESETGroupIndex) or "useIndicatedr17TCIStateForNSC" or "useIndicatedr17TCIStateForCORESETPoolIndex1" or "useIndicatedr17TCIStateForCORESETGroupIndex1" could be associated with one or more of the M1>1 joint DL and UL Rel. 17 unified TCI states or M1>1 separate UL Rel. 17 unified TCI states or a first combination of M1>1 joint DL and UL Rel. 17 unified TCI states and separate UL Rel. 17 unified TCI states or N1>1 separate DL Rel. 17 unified TCI states or a second combination of N1>1 joint DL and UL Rel. 17 unified TCI states and separate DL Rel. 17 unified TCI states or a third combination of N1>1 joint DL and UL Rel. 17 unified TCI states, separate DL Rel. 17 unified TCI states and separate UL Rel. 17 unified TCI states following those specified in examples provided in the present disclosure.

In another example, the UE could be provided/configured by the network at least two (e.g., N>1 or M>1) CSI-RS resource sets, e.g., at least two (e.g., N>1 or M>1) SSB resource sets provided by the higher layer parameter CSI-SSB-ResourceSet or at least two (e.g., N>1, M>1) NZP CSI-RS resource set provided by the higher layer parameter nzp-CSI-RS-ResourceSet for L1 beam metric reporting. Each configured SSB resource set including one or more SSB resources could be associated with one or more PCIs or one or more PCI indexes corresponding/pointing to one or more PCIs in a list/set/pool of PCIs higher layer configured to the UE or one or more CORESETPoolIndex values or one or more CORESETGroupIndex values, or each configured NZP CSI-RS resource set including one or more NZP CSI-RS resource configurations could be associated with one or more PCIs or one or more PCI indexes corresponding/pointing to one or more PCIs in a list/set/pool of PCIs higher layer configured to the UE or one or more CORESETPoolIndex values or one or more CORESETGroupIndex values.

Detailed association methods between the SSB resource sets or NZP CSI-RS resource sets and the PCIs/PCI indexes/CORESETPoolIndex values/CORESETGroupIndex values are described in the the U.S. Patent Application 17/646,104 incorporated by reference in its entirety. Furthermore, under the Rel. 17 unified TCI framework, there could be various means to configured/indicate QCL assumptions for the NZP CSI-RS resource configurations in the NZP CSI-RS resource sets (provided by nzp-CSI-RS-ResourceSet). When a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate DL Rel. 17 unified TCI states and separate UL Rel. 17 unified TCI states via MAC CE or DCI (e.g., DCI format 1_1 or 1_2 with or without DL assignment) based signaling,

For example, one or more NZP CSI-RS resource sets provided by the higher layer parameter nzp-CSI-RS-ResourceSet could be configured with "useIndicatedr17TCIState." In this case, one or more NZP CSI-RS resource configurations configured in the m-th (or the n-th) NZP CSI-RS resource set or the NZP CSI-RS resource set with the m-th lowest or highest (or the n-th lowest or highest) NZP-CSI-RS-ResourceSetId value among/within the NZP CSI-RS resource sets configured with "useIndicatedr17TCIState" could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID, where m=1,..., M and n=1,..., N.

Specifically, for N=2 or M=2, one or more NZP CSI-RS resource configurations configured in the first NZP CSI-RS resource set or the NZP CSI-RS resource set with the lowest or highest NZP-CSI-RS-ResourceSetId value among/within the NZP CSI-RS resource sets configured with "useIndicatedr17TCIState" could be associated with the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID, and one or more NZP CSI-RS resource configurations configured in the second NZP CSI-RS resource set or the NZP CSI-RS resource set with the highest or lowest NZP-CSI-RS-ResourceSetId value among/within the NZP CSI-RS resource sets configured with "useIndicatedr17TCIState" could be associated with the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID. If a NZP CSI-RS resource configuration is associated with a Rel. 17 unified TCI state, the UE could assume the quasi-co-location configuration of quasi co-location RS resource(s) and quasi co-location type(s) from the indicated Rel. 17 unified TCI state for the NZP CSI-RS resource configuration.

For another example, one or more NZP CSI-RS resource sets provided by the higher layer parameter nzp-CSI-RS-ResourceSet could be configured with "useIndicatedr17TCIState." In this case, one or more NZP CSI-RS resource configurations configured in a NZP CSI-RS resource set configured with "useIndicatedr17TCIState" could be associated with an indicated joint DL and UL TCI state or separate UL TCI state or separate DL TCI state or TCI state in the first combination of TCI states or TCI state in the second combination of TCI states or TCI state in the third combination of TCI states if the NZP CSI-RS resource set configured with "useIndicatedr17TCIState" and the indicated Rel. 17 unified TCI state are associated with the same PCI/PCI index/CORESETPoolIndex value/CORESETGroupIndex value. The association between a Rel. 17 unified TCI state and PCI/PCI index/CORESETPoolIndex value/CORESETGroupIndex value could follow those specified in the above discussed design examples. The association between a NZP CSI-RS resource set and PCI/PCI index/CORESETPoolIndex value/CORESETGroupIndex value could follow those specified in the the U.S. Patent Application 17/646,104 incorporated by reference in its entirety. If a NZP CSI-RS resource configuration is associated with a Rel. 17 unified TCI state, the UE could assume the quasi-co-location configuration of quasi co-location RS resource(s) and quasi co-location type(s) from the indicated Rel. 17 unified TCI state for the NZP CSI-RS resource configuration.

Yet for another example, one or more NZP CSI-RS resource sets provided by the higher layer parameter nzp-CSI-RS-ResourceSet could be configured with a TCI state ID corresponding/pointing to an indicated Rel. 17 unified TCI state. In this case, one or more NZP CSI-RS resource configurations configured in the m-th (or the n-th) NZP CSI-RS resource set or the NZP CSI-RS resource set with the m-th lowest or highest (or the n-th lowest or highest) NZP-CSI-RS-ResourceSetId value among/within the NZP CSI-RS resource sets configured with a same TCI state ID corresponding/pointing to an indicated Rel. 17 unified TCI state could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID, where m=1,..., M and n=1,..., N.

Specifically, for N=2 or M=2, one or more NZP CSI-RS resource configurations configured in the first NZP CSI-RS resource set or the NZP CSI-RS resource set with the lowest or highest NZP-CSI-RS-ResourceSetId value among/within the NZP CSI-RS resource sets configured with a same TCI state ID corresponding/pointing to an indicated Rel. 17 unified TCI state could be associated with the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID, and one or more NZP CSI-RS resource configurations configured in the second NZP CSI-RS resource set or the NZP CSI-RS resource set with the highest or lowest NZP-CSI-RS-ResourceSetId value among/within the NZP CSI-RS resource sets configured with a same TCI state ID corresponding/pointing to an indicated Rel. 17 unified TCI state could be associated with the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID. If a NZP CSI-RS resource configuration is associated with a Rel. 17 unified TCI state, the UE could assume the quasi-co-location configuration of quasi co-location RS resource(s) and quasi co-location type(s) from the indicated Rel. 17 unified TCI state for the NZP CSI-RS resource configuration.

Yet for another example, one or more NZP CSI-RS resource sets provided by the higher layer parameter nzp-CSI-RS-ResourceSet could be configured with "useIndicatedr17TCIState." In this case, one or more NZP CSI-RS resource configurations configured in a NZP CSI-RS resource set configured with a TCI state ID corresponding/pointing to an indicated Rel. 17 unified TCI state could be associated with an indicated joint DL and UL TCI state or separate UL TCI state or separate DL TCI state or TCI state in the first combination of TCI states or TCI state in the second combination of TCI states or TCI state in the third combination of TCI states if the NZP CSI-RS resource set configured with a TCI state ID corresponding/pointing to an indicated Rel. 17 unified TCI state and the indicated Rel. 17 unified TCI state are associated with the same PCI/PCI index/CORESETPoolIndex value/CORESETGroupIndex value. The association between a Rel. 17 unified TCI state and PCI/PCI index/CORESETPoolIndex value/CORESETGroupIndex value could follow those specified in the above discussed design examples. The association between a NZP CSI-RS resource set and PCI/PCI index/CORESETPoolIndex value/CORESETGroupIndex value could follow those specified in the the U.S. Patent Application 17/646,104 incorporated by reference in its entirety. If a NZP CSI-RS resource configuration is associated with a Rel. 17 unified TCI state, the UE could assume the quasi-co-location configuration of quasi co-location RS resource(s) and quasi co-location type(s) from the indicated Rel. 17 unified TCI state for the NZP CSI-RS resource configuration.

Yet for another example, one or more NZP CSI-RS resource configurations configured in a NZP CSI-RS resource set could be configured with "useIndicatedr17TCIState." The association between the one or more NZP CSI-RS resource configurations configured with "useIndicatedr17TCIState" in a NZP CSI-RS resource set and an indicated Rel. 17 unified TCI state could be according to the association between the NZP CSI-RS resource set, wherein the one or more NZP CSI-RS resource configurations configured with "useIndicatedr17TCIState" are configured, and the indicated Rel. 17 unified TCI state following those specified in the above discussed design examples.

Yet for another example, one or more NZP CSI-RS resource configurations configured in a NZP CSI-RS resource set could be configured with a TCI state ID corresponding/pointing to a Rel. 17 unified TCI state. The association between the one or more NZP CSI-RS resource configurations configured with a TCI state ID corresponding/pointing to a Rel. 17 unified TCI state in a NZP CSI-RS resource set and an indicated Rel. 17 unified TCI state could be according to the association between the NZP CSI-RS resource set, wherein the one or more NZP CSI-RS resource configurations configured with a TCI state ID corresponding/pointing to a Rel. 17 unified TCI state are configured, and the indicated Rel. 17 unified TCI state following those specified in the above discussed design examples.

In one example, if configured by the network - e.g., the UE is configured with the higher layer parameter AdditionalPCIInfo, the UE is allowed to report in a single reporting instance K>1 SSBRIs or CRIs for each reporting setting as shown in following examples.

In one example, for the CSI-RS resource configurations described in example provided in the present disclosure, the SSB resources or NZP CSI-RS resources corresponding to the reported SSBRIs or CRIs could be from the CSI-RS resource set, and the SSB resources or NZP CSI-RS resources corresponding to the reported SSBRIs or CRIs could be associated with the serving cell PCI and PCI(s) different from the serving cell PCI or PCI indexes referring to the serving cell PCI and PCI(s) different from the serving cell PCI or CORESETPoolIndex values associated with the serving cell PCI and PCI(s) different from the serving cell PCI. Furthermore, the UE could use differential L1-RSRP based reporting, where the largest measured value of L1-RSRP is quantized to a 7-bit value in the range [-140, -44] dBm with 1dB step size, and the differential L1-RSRP is quantized to a 4-bit value. The differential L1-RSRP value is computed with 2 dB step size with a reference to the largest measured L1-RSRP value which is part of the same L1-RSRP reporting instance. The mapping between the reported L1-RSRP value and the measured quantity is described in the 3GPP TS 38.133.

In one example, for the CSI-RS resource configurations described in example provided in the present disclosure, the SSB resources or NZP CSI-RS resources corresponding to the reported SSBRIs or CRIs could be from different CSI-RS resource sets, and the SSB resources or NZP CSI-RS resources corresponding to the reported SSBRIs or CRIs could be associated with the serving cell PCI and PCI(s) different from the serving cell PCI or PCI indexes referring to the serving cell PCI and PCI(s) different from the serving cell PCI or CORESETPoolIndex values associated with the serving cell PCI and PCI(s) different from the serving cell PCI. Furthermore, the UE could use differential L1-RSRP based reporting, where the largest measured value of L1-RSRP is quantized to a 7-bit value in the range [-140, -44] dBm with 1dB step size, and the differential L1-RSRP is quantized to a 4-bit value. The differential L1-RSRP value is computed with 2 dB step size with a reference to the largest measured L1-RSRP value which is part of the same L1-RSRP reporting instance. The mapping between the reported L1-RSRP value and the measured quantity is described in the 3GPP TS 38.133. The UE could also indicate the CSI-RS resource set associated with the largest measured value of L1-RSRP.

In another example, if configured by the network - e.g., the UE is configured with the higher layer parameter groupBasedBeamReporting-r17, the UE could report in a single reporting instance nrofReportedRSgroup, if configured, group(s) of G>1 (e.g., G=2) CRIs or SSBRIs as shown in following examples.

In one example, for the CSI-RS resource configurations described in examples provided in the present disclosure, the SSB resources or NZP CSI-RS resources corresponding to the reported SSBRIs or CRIs could be from the CSI-RS resource set, the SSB resources or NZP CSI-RS resources corresponding to the reported SSBRIs or CRIs could be associated with the serving cell PCI and PCI(s) different from the serving cell PCI or PCI indexes referring to the serving cell PCI and PCI(s) different from the serving cell PCI or CORESETPoolIndex values associated with the serving cell PCI and PCI(s) different from the serving cell PCI, and the SSB resources or NZP CSI-RS resources corresponding to the reported SSBRIs or CRIs of each group can be received simultaneously by the UE either with a single spatial domain receive filter, or with multiple simultaneous spatial receive filters. Furthermore, the UE could use differential L1-RSRP based reporting, where the largest measured value of L1-RSRP is quantized to a 7-bit value in the range [-140, -44] dBm with 1dB step size, and the differential L1-RSRP is quantized to a 4-bit value. The differential L1-RSRP value is computed with 2 dB step size with a reference to the largest measured L1-RSRP value which is part of the same L1-RSRP reporting instance. The mapping between the reported L1-RSRP value and the measured quantity is described in the 3GPP TS 38.133.

In one example, for the CSI-RS resource configurations described in example provided in the present disclosure, the SSB resources or NZP CSI-RS resources corresponding to the reported SSBRIs or CRIs could be from different CSI-RS resource sets, the SSB resources or NZP CSI-RS resources corresponding to the reported SSBRIs or CRIs could be associated with the serving cell PCI and PCI(s) different from the serving cell PCI or PCI indexes referring to the serving cell PCI and PCI(s) different from the serving cell PCI or CORESETPoolIndex values associated with the serving cell PCI and PCI(s) different from the serving cell PCI, and the SSB resources or NZP CSI-RS resources corresponding to the reported SSBRIs or CRIs of each group can be received simultaneously by the UE either with a single spatial domain receive filter, or with multiple simultaneous spatial receive filters. Furthermore, the UE could use differential L1-RSRP based reporting, where the largest measured value of L1-RSRP is quantized to a 7-bit value in the range [-140, -44] dBm with 1dB step size, and the differential L1-RSRP is quantized to a 4-bit value. The differential L1-RSRP value is computed with 2 dB step size with a reference to the largest measured L1-RSRP value which is part of the same L1-RSRP reporting instance. The mapping between the reported L1-RSRP value and the measured quantity is described in the 3GPP TS 38.133. The UE could also indicate the CSI-RS resource set associated with the largest measured value of L1-RSRP, and for each group, CRI or SSBRI of the indicated CSI-RS resource set is present first.

Yet for another example, a NZP CSI-RS resource set provided by nzp-CSI-RS-ResourceSet could be configured with an index corresponding/pointing to a TCI state among/within the indicated M>1 or N>1 Rel. 17 unified TCI states. If a NZP CSI-RS resource set provided by nzp-CSI-RS-ResourceSet is configured with a TCI state index m (m ∈ {1,..., M}) or n (n ∈ {1,..., N}), the NZP CSI-RS resource set could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID. For example, one or more TCI state indexes each corresponding/pointing to a TCI state among/within the indicated M>1 or N>1 Rel. 17 unified TCI states could be included/indicated in the parameter configuring the NZP CSI-RS resource sets, e.g., in the higher layer parameter CSI-ResourceConfig, and each indicated TCI state index could be associated with a NZP CSI-RS resource set configured in the same CSI resource setting/configuration.

For instance, for a CSI resource setting/configuration composed of K NZP CSI-RS resource sets, K TCI state indexes each corresponding/pointing to a TCI state among/within the indicated M>1 or N>1 Rel. 17 unified TCI states could be indicated/included in the corresponding higher layer parameter CSI-ResourceConfig. For this case, the k-th TCI state index, and therefore the corresponding TCI state among/within the indicated M>1 or N>1 Rel. 17 unified TCI states, could correspond to the k-th NZP CSI-RS resource set in the CSI resource setting/configuration. For another example, a TCI state index corresponding/pointing to a TCI state among/within the indicated M>1 or N>1 Rel. 17 unified TCI states could be included/indicated in the parameter configuring the NZP CSI-RS resource set, e.g., in the higher layer parameter nzp-CSI-RS-ResourceSet.

Yet for another example, one or more NZP CSI-RS resource sets provided by nzp-CSI-RS-ResourceSet could be configured with a one-bit flag indicating the serving cell PCI (e.g., "0" indicating the serving cell PCI or "1" indicating the non-serving cell PCI) or a one-bit flag indicating value 0 of CORESETPoolIndex/CORESETGroupIndex (e.g., "0" indicating value 0 of CORESETPoolIndex/CORESETGroupIndex and "1" indicating value 1 of CORESETPoolIndex/CORESETGroupIndex) or "useIndicatedr17TCIStateForSC" or "useIndicatedr17TCIStateForCORESETPoolIndex0" or "useIndicatedr17TCIStateForCORESETGroupIndex0." Furthermore, one or more NZP CSI-RS resource sets provided by nzp-CSI-RS-ResourceSet could be configured with a one-bit flag indicating a non-serving cell PCI different from the serving cell PCI (e.g., "0" indicating the serving cell PCI or "1" indicating the non-serving cell PCI) or a one-bit flag indicating value 1 of CORESETPoolIndex/CORESETGroupIndex (e.g., "0" indicating value 0 of CORESETPoolIndex/CORESETGroupIndex and "1" indicating value 1 of CORESETPoolIndex/CORESETGroupIndex) or "useIndicatedr17TCIStateForNSC" or "useIndicatedr17TCIStateForCORESETPoolIndex1" or "useIndicatedr17TCIStateForCORESETGroupIndex1." The UE could be provided by the network, e.g., via MAC CE or DCI (e.g., DCI format 1_1 or 1_2 with or without DL assignment) based signaling through the higher layer parameter TCI-State_r17, M0>1 joint DL and UL Rel. 17 unified TCI states or M0>1 separate UL Rel. 17 unified TCI states or a first combination of M0>1 joint DL and UL Rel. 17 unified TCI states and separate UL Rel. 17 unified TCI states or N0>1 separate DL Rel. 17 unified TCI states or a second combination of N0>1 joint DL and UL Rel. 17 unified TCI states and separate DL Rel. 17 unified TCI states or a third combination of N0>1 joint DL and UL Rel. 17 unified TCI states, separate DL Rel. 17 unified TCI states and separate UL Rel. 17 unified TCI states associated with the serving cell PCI or value 0 of CORESETPoolIndex/CORESETGroupIndex.

Furthermore, the UE could be provided by the network, e.g., via MAC CE or DCI (e.g., DCI format 1_1 or 1_2 with or without DL assignment) based signaling through the higher layer parameter TCI-State_r17, M1>1 joint DL and UL Rel. 17 unified TCI states or M1>1 separate UL Rel. 17 unified TCI states or a first combination of M1>1 joint DL and UL Rel. 17 unified TCI states and separate UL Rel. 17 unified TCI states or N1>1 separate DL Rel. 17 unified TCI states or a second combination of N1>1 joint DL and UL Rel. 17 unified TCI states and separate DL Rel. 17 unified TCI states or a third combination of N1>1 joint DL and UL Rel. 17 unified TCI states, separate DL Rel. 17 unified TCI states and separate UL Rel. 17 unified TCI states associated with the non-serving cell PCI different from the serving cell PCI or value 1 of CORESETPoolIndex/CORESETGroupIndex. The association between a Rel. 17 unified TCI state and PCI/PCI index/-CORESETPoolIndex value/CORESETGroupIndex value could follow those specified in the above discussed design examples.

For this case, one or more of the NZP CSI-RS resource sets provided by nzp-CSI-RS-ResourceSet configured with a one-bit flag indicating the serving cell PCI (e.g., "0" indicating the serving cell PCI or "1" indicating the non-serving cell PCI) or a one-bit flag indicating value 0 of CORESETPoolIndex/CORESETGroupIndex (e.g., "0" indicating value 0 of CORESETPoolIndex/CORESETGroupIndex and "1" indicating value 1 of CORESETPoolIndex/CORESETGroupIndex) or "useIndicatedr17TCIStateForSC" or "useIndicatedr17TCIStateForCORESETPoolIndex0" or "useIndicatedr17TCIStateForCORESETGroupIndex0" could be associated with one or more of the M0>1 joint DL and UL Rel. 17 unified TCI states or M0>1 separate UL Rel. 17 unified TCI states or a first combination of M0>1 joint DL and UL Rel. 17 unified TCI states and separate UL Rel. 17 unified TCI states or N0>1 separate DL Rel. 17 unified TCI states or a second combination of N0>1 joint DL and UL Rel. 17 unified TCI states and separate DL Rel. 17 unified TCI states or a third combination of N0>1 joint DL and UL Rel. 17 unified TCI states, separate DL Rel. 17 unified TCI states and separate UL Rel. 17 unified TCI states following those specified in examples provided in the present disclosure.

Furthermore, one or more of the NZP CSI-RS resource sets provided by nzp-CSI-RS-ResourceSet configured with a one-bit flag indicating the non-serving cell PCI different from the serving cell PCI (e.g., "0" indicating the serving cell PCI or "1" indicating the non-serving cell PCI) or a one-bit flag indicating value 1 of CORESETPoolIndex/CORESETGroupIndex (e.g., "0" indicating value 0 of CORESETPoolIndex/CORESETGroupIndex and "1" indicating value 1 of CORESETPoolIndex/CORESETGroupIndex) or "useIndicatedr17TCIStateForNSC" or "useIndicatedr17TCIStateFor-CORESETPoolIndex1" or "useIndicatedr17TCIStateForCORESETGroupIndex1" could be associated with one or more of the M1>1 joint DL and UL Rel. 17 unified TCI states or M1>1 separate UL Rel. 17 unified TCI states or a first combination of M1>1 joint DL and UL Rel. 17 unified TCI states and separate UL Rel. 17 unified TCI states or N1>1 separate DL Rel. 17 unified TCI states or a second combination of N1>1 joint DL and UL Rel. 17 unified TCI states and separate DL Rel. 17 unified TCI states or a third combination of N1>1 joint DL and UL Rel. 17 unified TCI states, separate DL Rel. 17 unified TCI states and separate UL Rel. 17 unified TCI states following those specified in examples provided in the present disclosure.

In one example, the physical layer in the UE assesses the radio link quality according to one or more RS resources (such as SSB resources or NZP CSI-RS resource configurations) configured in one or more RS resource sets (such as SSB resource sets provided by CSI-SSB-ResourceSet or NZP CSI-RS resource sets provided by nzp-CSI-RS-ResourceSet) against a threshold Qsc, which could be (1) fixed in the system specification(s), (2) configured by the network (e.g., via higher layer RRC signaling), or (3) autonomously determined by the UE. The one or more RS resources are associated with the serving cell PCI or value 0 of CORESETPoolIndex/CORESETGroupIndex or CORESETPoolIndex value/CORESETGroupIndex value associated with the serving cell PCI. The association between a RS resource such as SSB resource or NZP CSI-RS resource and PCI/PCI index/CORESETPoolIndex value/CORESETGroupIndex value could follow those specified in the the U.S. Patent Application 17/646,104 incorporated by reference in its entirety.

Furthermore, the physical layer in the UE provides an indication to higher layers when the radio link quality for all corresponding RS resources associated with the serving cell PCI or value 0 of CORESETPoolIndex/CORESETGroupIndex or CORESETPoolIndex value/CORESETGroupIndex value associated with the serving cell PCI that the UE uses to assess the radio link quality is worse (or better) than the threshold Qsc. The higher layers in the UE may increment a beam reporting instance (BRI) count (by one) in a BRI counter (denoted by BRI_COUNTER) if the higher layers receive from the physical layer in the UE that the radio link quality of all corresponding RS resources associated with the serving cell PCI or value 0 of CORESETPoolIndex/CORESETGroupIndex or CORESETPoolIndex value/CORESETGroupIndex value associated with the serving cell PCI is worse (or better) than Qsc. The UE may trigger inter-cell beam reporting including beam measurement result(s) for the non-serving cell PCI(s) different from the serving cell PCI if the BRI count in the BRI counter BRI_COUNTER reaches the maximum number of BRI counts (e.g., provided by the higher layer parameter maxBRIcount or fixed in the system specifications - e.g., 1) before a beam reporting timer expires. After the higher layers in the UE triggers the inter-cell beam reporting for at least the non-serving cell PCI(s), the higher layers in the UE may reset the BRI count in the BRI counter BFI_COUNTER or the beam reporting timer to zero.

Furthermore, if the UE receives from the network, e.g., via MAC CE or DCI (e.g., DCI format 1_1 or 1_2 with or without DL assignment) based signalling, a Rel. 17 unified TCI state update associated with at least one of the RS resources associated with the serving cell PCI or value 0 of CORESETPoolIndex/CORESETGroupIndex or CORESETPoolIndex value/CORESETGroupIndex value associated with the serving cell PCI, the higher layers in the UE may reset the BRI count in the BRI counter BFI_COUNTER or the beam reporting timer to zero. The association between a RS resource such as NZP CSI-RS resource and an indicated Rel. 17 unified TCI state could follow those specified in the above discussed design examples.

In another example, the physical layer in the UE assesses the radio link quality according to one or more RS resources (such as SSB resources or NZP CSI-RS resource configurations) configured in one or more RS resource sets (such as SSB resource sets provided by CSI-SSB-ResourceSet or NZP CSI-RS resource sets provided by nzp-CSI-RS-ResourceSet) against a threshold Qnsc, which could be (1) fixed in the system specification(s), (2) configured by the network (e.g., via higher layer RRC signaling), or (3) autonomously determined by the UE. The one or more RS resources are associated with a non-serving cell PCI different from the serving cell PCI or value 1 of CORESETPoolIndex/CORESETGroupIndex or CORESETPoolIndex value/CORESETGroupIndex value associated with the non-serving cell PCI. The association between a RS resource such as SSB resource or NZP CSI-RS resource and PCI/PCI index/CORESETPoolIndex value/CORESETGroupIndex value could follow those specified in the the U.S. Patent Application 17/646,104 incorporated by reference in its entirety.

Furthermore, the physical layer in the UE provides an indication to higher layers when the radio link quality for all corresponding RS resources associated with the non-serving cell PCI or value 1 of CORESETPoolIndex/CORESETGroupIndex or CORESETPoolIndex value/CORESETGroupIndex value associated with the non-serving cell PCI that the UE uses to assess the radio link quality is greater (or lower) than the threshold Qnsc. The higher layers in the UE may increment a beam reporting instance (BRI) count (by one) in a BRI counter (denoted by BRI_COUNTER) if the higher layers receive from the physical layer in the UE that the radio link quality of all corresponding RS resources associated with the non-serving cell PCI or value 1 of CORESETPoolIndex/CORESETGroupIndex or CORESETPoolIndex value/CORESETGroupIndex value associated with the non-serving cell PCI is greater (or lower) than Qnsc. The UE may trigger inter-cell beam reporting for at least the non-serving cell PCI(s) different from the serving cell PCI if the BRI count in the BRI counter BRI_COUNTER reaches the maximum number of BRI counts (e.g., provided by the higher layer parameter maxBRIcount or fixed in the system specifications - e.g., 1) before a beam reporting timer expires. After the higher layers in the UE triggers the inter-cell beam reporting for at least the non-serving cell PCI(s), the higher layers in the UE may reset the BRI count in the BRI counter BFI_COUNTER or the beam reporting timer to zero.

Furthermore, if the UE receives from the network, e.g., via MAC CE or DCI (e.g., DCI format 1_1 or 1_2 with or without DL assignment) based signalling, a Rel. 17 unified TCI state update associated with at least one of the RS resources associated with the non-serving cell PCI or value 1 of CORESETPoolIndex/CORESETGroupIndex or CORESETPoolIndex value/CORESETGroupIndex value associated with the non-serving cell PCI, the higher layers in the UE may reset the BRI count in the BRI counter BFI_COUNTER or the beam reporting timer to zero. The association between a RS resource such as NZP CSI-RS resource and an indicated Rel. 17 unified TCI state could follow those specified in the above discussed design examples.

In yet another example, the physical layer in the UE assesses first radio link quality according to one or more first RS resources (such as SSB resources or NZP CSI-RS resource configurations) configured in one or more first RS resource sets (such as SSB resource sets provided by CSI-SSB-ResourceSet or NZP CSI-RS resource sets provided by nzp-CSI-RS-ResourceSet) against a threshold Qsc, which could be (1) fixed in the system specification(s), (2) configured by the network (e.g., via higher layer RRC signaling), or (3) autonomously determined by the UE. The one or more first RS resources are associated with the serving cell PCI or value 0 of CORESETPoolIndex/CORESETGroupIndex or CORESETPoolIndex value/CORESETGroupIndex value associated with the serving cell PCI. The association between a first RS resource such as SSB resource or NZP CSI-RS resource and PCI/PCI index/CORESETPoolIndex value/CORESETGroupIndex value could follow those specified in the the U.S. Patent Application 17/646,104 incorporated by reference in its entirety.

Furthermore, the physical layer in the UE provides an indication to higher layers when the first radio link quality for all corresponding first RS resources associated with the serving cell PCI or value 0 of CORESETPoolIndex/CORESETGroupIndex or CORESETPoolIndex value/CORESETGroupIndex value associated with the serving cell PCI that the UE uses to assess the first radio link quality is worse (or better) than the threshold Qsc. Furthermore, the physical layer in the UE assesses second radio link quality according to one or more second RS resources (such as SSB resources or NZP CSI-RS resource configurations) configured in one or more second RS resource sets (such as SSB resource sets provided by CSI-SSB-ResourceSet or NZP CSI-RS resource sets provided by nzp-CSI-RS-ResourceSet) against a threshold Qnsc, which could be (1) fixed in the system specification(s), (2) configured by the network (e.g., via higher layer RRC signaling), or (3) autonomously determined by the UE. The one or more second RS resources are associated with a non-serving cell PCI different from the serving cell PCI or value 1 of CORESETPoolIndex/CORESETGroupIndex or CORESETPoolIndex value/CORESETGroupIndex value associated with the non-serving cell PCI.

The association between a RS resource such as SSB resource or NZP CSI-RS resource and PCI/PCI index/CORESETPoolIndex value/CORESETGroupIndex value could follow those specified in the the U.S. Patent Application 17/646,104 incorporated by reference in its entirety. The physical layer in the UE provides an indication to higher layers when the second radio link quality for all corresponding second RS resources associated with the non-serving cell PCI or value 1 of CORESETPoolIndex/CORESETGroupIndex or CORESETPoolIndex value/CORESETGroupIndex value associated with the non-serving cell PCI that the UE uses to assess the second radio link quality is greater (or lower) than the threshold Qnsc. The higher layers in the UE may increment a beam reporting instance (BRI) count (by one) in a BRI counter (denoted by BRI_COUNTER) if the higher layers receive from the physical layer in the UE that the first radio link quality of all corresponding first RS resources associated with the serving cell PCI or value 0 of CORESETPoolIndex/CORESETGroupIndex or CORESETPoolIndex value/CORESETGroupIndex value associated with the serving cell PCI is worse (or better) than Qsc and the second radio link quality of all corresponding second RS resources associated with the non-serving cell PCI or value 1 of CORESETPoolIndex/CORESETGroupIndex or CORESETPoolIndex value/CORESETGroupIndex value associated with the non-serving cell PCI is greater (or lower) than Qnsc. The UE may trigger inter-cell beam reporting for at least the non-serving cell PCI(s) different from the serving cell PCI if the BRI count in the BRI counter BRI_COUNTER reaches the maximum number of BRI counts (e.g., provided by the higher layer parameter maxBRIcount or fixed in the system specifications - e.g., 1) before a beam reporting timer expires. After the higher layers in the UE triggers the inter-cell beam reporting for at least the non-serving cell PCI(s), the higher layers in the UE may reset the BRI count in the BRI counter BFI_COUNTER or the beam reporting timer to zero.

Furthermore, if the UE receives from the network, e.g., via MAC CE or DCI (e.g., DCI format 1_1 or 1_2 with or without DL assignment) based signalling, a Rel. 17 unified TCI state update associated with at least one of the first RS resources associated with the serving cell PCI or value 0 of CORESETPoolIndex/CORESETGroupIndex or CORESETPoolIndex value/CORESETGroupIndex value associated with the serving cell PCI or at least one of the second RS resources associated with the non-serving cell PCI or value 1 of CORESETPoolIndex/CORESETGroupIndex or CORESETPoolIndex value/CORESETGroupIndex value associated with the non-serving cell PCI, the higher layers in the UE may reset the BRI count in the BRI counter BFI_COUNTER or the beam reporting timer to zero. The association between a RS resource such as NZP CSI-RS resource and an indicated Rel. 17 unified TCI state could follow those specified in the above discussed design examples.

In yet another example, the physical layer in the UE assesses first radio link quality according to one or more first RS resources (such as SSB resources or NZP CSI-RS resource configurations) configured in one or more first RS resource sets (such as SSB resource sets provided by CSI-SSB-ResourceSet, or NZP CSI-RS resource sets provided by nzp-CSI-RS-ResourceSet). The one or more first RS resources are associated with the serving cell PCI or value 0 of CORESETPoolIndex/CORESETGroupIndex or CORESETPoolIndex value/CORESETGroupIndex value associated with the serving cell PCI. Furthermore, the physical layer in the UE assesses second radio link quality according to one or more second RS resources (such as SSB resources or NZP CSI-RS resource configurations) configured in one or more second RS resource sets (such as SSB resource sets provided by CSI-SSB-ResourceSet, or NZP CSI-RS resource sets provided by nzp-CSI-RS-ResourceSet). The one or more second RS resources are associated with a non-serving cell PCI different from the serving cell PCI or value 1 of CORESETPoolIndex/CORESETGroupIndex or CORESETPoolIndex value/CORESETGroupIndex value associated with the non-serving cell PCI. The association between a RS resource such as SSB resource or NZP CSI-RS resource and PCI/PCI index/CORESETPoolIndex value/CORESETGroupIndex value could follow those specified in the the U.S. Patent Application 17/646,104 incorporated by reference in its entirety.

Furthermore, the physical layer in the UE provides an indication to higher layers when the first radio link quality for all corresponding first RS resources associated with the serving cell PCI or value 0 of CORESETPoolIndex/CORESETGroupIndex or CORESETPoolIndex value/CORESETGroupIndex value associated with the serving cell PCI that the UE uses to assess the first radio link quality is worse (or better) than the second radio link quality for all corresponding second RS resources associated with the non-serving cell PCI or value 1 of CORESETPoolIndex/CORESETGroupIndex or CORESETPoolIndex value/CORESETGroupIndex value associated with the non-serving cell PCI by a threshold Th_0, or the second radio link quality for all corresponding second RS resources associated with the non-serving cell PCI or value 1 of CORESETPoolIndex/CORESETGroupIndex or CORESETPoolIndex value/CORESETGroupIndex value associated with the non-serving cell PCI is greater (or lower) than the first radio link quality for all corresponding first RS resources associated with the serving cell PCI or value 0 of CORESETPoolIndex/CORESETGroupIndex or CORESETPoolIndex value/CORESETGroupIndex value associated with the serving cell PCI that the UE uses to assess the first radio link quality by a threshold Th_1.

The thresholds Th_0 or Th_1 could be (1) fixed in the system specification(s), (2) configured by the network (e.g., via higher layer RRC signaling), or (3) autonomously determined by the UE. The higher layers in the UE may increment a beam reporting instance (BRI) count (by one) in a BRI counter (denoted by BRI_COUNTER) if the higher layers receive from the physical layer in the UE that the first radio link quality is worse (or better) than the second radio link quality by Th_0 or the second radio link quality is greater (or lower) than the first radio link quality by Th_1. The UE may trigger inter-cell beam reporting including beam measurement result(s) for the non-serving cell PCI(s) different from the serving cell PCI if the BRI count in the BRI counter BRI_COUNTER reaches the maximum number of BRI counts (e.g., provided by the higher layer parameter maxBRIcount or fixed in the system specifications - e.g., 1) before a beam reporting timer expires. After the higher layers in the UE triggers the beam reporting for at least the non-serving cell PCI(s), the higher layers in the UE may reset the BRI count in the BRI counter BFI_COUNTER or the beam reporting timer to zero.

Furthermore, if the UE receives from the network, e.g., via MAC CE or DCI (e.g., DCI format 1_1 or 1_2 with or without DL assignment) based signalling, a Rel. 17 unified TCI state update associated with at least one of the first RS resources associated with the serving cell PCI or value 0 of CORESETPoolIndex/CORESETGroupIndex or CORESETPoolIndex value/CORESETGroupIndex value associated with the serving cell PCI or at least one of the second RS resources associated with the non-serving cell PCI or value 1 of CORESETPoolIndex/CORESETGroupIndex or CORESETPoolIndex value/CORESETGroupIndex value associated with the non-serving cell PCI, the higher layers in the UE may reset the BRI count in the BRI counter BFI_COUNTER or the beam reporting timer to zero. The association between a RS resource such as NZP CSI-RS resource and an indicated Rel. 17 unified TCI state could follow those specified in the above discussed design examples.

The UE could trigger the inter-cell beam reporting including beam measurement result(s) - e.g., the resource indicator(s) such as SSBRI(s)/CRI(s) and the corresponding beam metric(s) such as L1-RSRP(s)/L1-SINR(s) - for at least the PCI(s) other than the serving cell PCI according to one or more or combinations of one or more of the design examples specified herein in the present disclosure. For example, the physical layer in the UE assesses the radio link quality according to one or more RS resources (such as SSB resources or NZP CSI-RS resource configurations) configured in one or more RS resource sets (such as SSB resource sets provided by CSI-SSB-ResourceSet or NZP CSI-RS resource sets provided by nzp-CSI-RS-ResourceSet) against a threshold Qsc, which could be (1) fixed in the system specification(s), (2) configured by the network (e.g., via higher layer RRC signaling), or (3) autonomously determined by the UE. The one or more RS resources are associated with the serving cell PCI or value 0 of CORESETPoolIndex/CORESETGroupIndex or CORESETPoolIndex value/CORESETGroupIndex value associated with the serving cell PCI. The association between a RS resource such as SSB resource or NZP CSI-RS resource and PCI/PCI index/CORESETPoolIndex value/CORESETGroupIndex value could follow those specified in the the U.S. Patent Application 17/646,104 incorporated by reference in its entirety.

Furthermore, the physical layer in the UE provides an indication to higher layers when the radio link quality for all corresponding RS resources associated with the serving cell PCI or value 0 of CORESETPoolIndex/CORESETGroupIndex or CORESETPoolIndex value/CORESETGroupIndex value associated with the serving cell PCI that the UE uses to assess the radio link quality is worse (or better) than the threshold Qsc. The higher layers in the UE may increment a beam reporting instance (BRI) count (by one) in a BRI counter (denoted by BRI_COUNTER_sc) if the higher layers receive from the physical layer in the UE that the radio link quality of all corresponding RS resources associated with the serving cell PCI or value 0 of CORESETPoolIndex/CORESETGroupIndex or CORESETPoolIndex value/CORESETGroupIndex value associated with the serving cell PCI is worse (or better) than Qsc.

In addition, the physical layer in the UE assesses the radio link quality according to one or more RS resources (such as SSB resources or NZP CSI-RS resource configurations) configured in one or more RS resource sets (such as SSB resource sets provided by CSI-SSB-ResourceSet or NZP CSI-RS resource sets provided by nzp-CSI-RS-ResourceSet) against a threshold Qnsc, which could be (1) fixed in the system specification(s), (2) configured by the network (e.g., via higher layer RRC signaling), or (3) autonomously determined by the UE. The one or more RS resources are associated with a non-serving cell PCI different from the serving cell PCI or value 1 of CORESETPoolIndex/CORESETGroupIndex or CORESETPoolIndex value/CORESETGroupIndex value associated with the non-serving cell PCI. The association between a RS resource such as SSB resource or NZP CSI-RS resource and PCI/PCI index/CORESETPoolIndex value/CORESETGroupIndex value could follow those specified in the the U.S. Patent Application 17/646,104 incorporated by reference in its entirety.

Furthermore, the physical layer in the UE provides an indication to higher layers when the radio link quality for all corresponding RS resources associated with the non-serving cell PCI or value 1 of CORESETPoolIndex/CORESETGroupIndex or CORESETPoolIndex value/CORESETGroupIndex value associated with the non-serving cell PCI that the UE uses to assess the radio link quality is greater (or lower) than the threshold Qnsc. The higher layers in the UE may increment a beam reporting instance (BRI) count (by one) in a BRI counter (denoted by BRI_COUNTER_nsc) if the higher layers receive from the physical layer in the UE that the radio link quality of all corresponding RS resources associated with the non-serving cell PCI or value 1 of CORESETPoolIndex/CORESETGroupIndex or CORESETPoolIndex value/CORESETGroupIndex value associated with the non-serving cell PCI is greater (or lower) than Qnsc.

The UE may trigger inter-cell beam reporting for at least the non-serving cell PCI(s) different from the serving cell PCI if (1) the BRI count in the BRI counter BRI_COUNTER_sc reaches the maximum number of BRI counts (e.g., provided by the higher layer parameter maxBRIcount_sc or fixed in the system specifications - e.g., 1) and/or (2) the BRI count in the BRI counter BRI_COUNTER_nsc reaches the maximum number of BRI counts (e.g., provided by the higher layer parameter maxBRIcount_nsc or fixed in the system specifications - e.g., 1) before a beam reporting timer expires. After the higher layers in the UE triggers the inter-cell beam reporting for at least the non-serving cell PCI(s), the higher layers in the UE may reset the BRI count in the BRI counter(s) BFI_COUNTER_sc and/or BFI_COUNTER_nsc or the beam reporting timer to zero.

Furthermore, if the UE receives from the network, e.g., via MAC CE or DCI (e.g., DCI format 1_1 or 1_2 with or without DL assignment) based signalling, a Rel. 17 unified TCI state update associated with at least one of the RS resources associated with the serving cell PCI or value 0 of CORESETPoolIndex/CORESETGroupIndex or CORESETPoolIndex value/CORESETGroupIndex value associated with the serving cell PCI, the higher layers in the UE may reset the BRI count in the BRI counter BFI_COUNTER_sc or the beam reporting timer to zero; if the UE receives from the network, e.g., via MAC CE or DCI (e.g., DCI format 1_1 or 1_2 with or without DL assignment) based signalling, a Rel. 17 unified TCI state update associated with at least one of the RS resources associated with the non-serving cell PCI or value 1 of CORESETPoolIndex/CORESETGroupIndex or CORESETPoolIndex value/CORESETGroupIndex value associated with the non-serving cell PCI, the higher layers in the UE may reset the BRI count in the BRI counter BFI_COUNTER_nsc or the beam reporting timer to zero. The association between a RS resource such as NZP CSI-RS resource and an indicated Rel. 17 unified TCI state could follow those specified in the above discussed design examples.

The UE could be provided, by a higher layer parameter schedulingRequestID-BeamReporting-NSC, a configuration for PUCCH transmission with a beam reporting request (BRR) - a form of scheduling request - using either PUCCH format 0 or PUCCH format 1 for the UE to transmit PUCCH carrying the L1 beam measurement results for one or more non-serving cell PCIs different from the serving cell PCI. The UE could transmit a PUCCH with BRR associated with the serving cell PCI or value 0 of CORESETPoolIndex/CORESETGroupIndex or CORESETPoolIndex value/CORESETGroupIndex value associated with the serving cell PCI, or associated with the non-serving cell PCI or value 1 of CORESETPoolIndex/CORESETGroupIndex or CORESETPoolIndex value/CORESETGroupIndex value associated with the non-serving cell PCI.

Optionally, the UE could be provided, by a higher layer parameter schedulingRequestID-BeamReporting-NSC, a first configuration for PUCCH transmission with a BRR and, if the UE provides twoBRRcapability, a second configuration for PUCCH transmission with a BRR, using either PUCCH format 0 or PUCCH format 1 for the UE to transmit PUCCH carrying the L1 beam measurement results for one or more non-serving cell PCIs different from the serving cell PCI. For this case, the UE could use the first configuration to transmit a PUCCH with BRR associated with the serving cell PCI or value 0 of CORESETPoolIndex/CORESETGroupIndex or CORESETPoolIndex value/CORESETGroupIndex value associated with the serving cell PCI, or second configuration to transmit a PUCCH with BRR associated with the non-serving cell PCI or value 1 of CORESETPoolIndex/CORESETGroupIndex or CORESETPoolIndex value/CORESETGroupIndex value associated with the non-serving cell PCI.

Upon receiving uplink grant(s) in response to PUCCH BRR(s), the UE could provide in the corresponding PUSCH MAC CE(s) the L1 beam measurement results, e.g., one or more resource indicators such as SSBRIs or CRIs and the corresponding beam metrics such as L1-RSRPs or L1-SINRs, associated with the non-serving cell PCI(s) different from the serving cell PCI. Alternatively, the UE could provide in a CSI report/UCI the L1 beam measurement results, e.g., one or more resource indicators such as SSBRIs or CRIs and the corresponding beam metrics such as L1-RSRPs or L1-SINRs, associated with the non-serving cell PCI(s) different from the serving cell PCI. The UE could report in the same CSI reporting instance/CSI report (i) the L1 beam measurements, e.g., one or more resource indicators such as SSBRIs or CRIs and the corresponding beam metrics such as L1-RSRPs or L1-SINRs, associated with the serving cell PCI and (ii) the L1 beam measurement results, e.g., one or more resource indicators such as SSBRIs or CRIs and the corresponding beam metrics such as L1-RSRPs or L1-SINRs, associated with the non-serving cell PCI(s).

In one embodiment, for inter-cell mobility or inter-cell beam management (e.g., when a higher layer parameter specified for turning on/off the inter-cell mobility or beam management operation is enabled/configured), the UE could send to the network, e.g., in/via (periodic/semi-persistent/aperiodic) PUSCH(s) (MAC CE(s)) or PUCCH(s), one or more pairs of resource indicator(s) and beam metric(s) - e.g., in part of UCI - for one or more PCIs in the same frequency (e.g., intra-frequency) or across different frequencies (e.g., inter-frequency), wherein a resource indicator could be a SSBRI or a CRI, a beam metric could correspond to a L1-RSRP or L1-SINR, and a pair of resource indicator and beam metric could be associated with a PCI (e.g., the serving cell PCI and a PCI other than the serving cell PCI).

In one example, when/if the payload size of the (inter-cell) beam report/UCI is greater/larger (or lower/smaller) than a threshold, the UE could send to the network, in/via (periodic/semi-persistent/aperiodic) PUSCH (MAC CE(s)), the (inter-cell) beam report/UCI including the one or more pairs of resource indicator(s) and beam metric(s) for the one or more PCIs. Otherwise, i.e., when/if the payload size of the (inter-cell) beam report/UCI is lower/smaller (or greater/larger) than a threshold, the UE could send to the network, in/via PUCCH, the (inter-cell) beam report/UCI including the one or more pairs of resource indicator(s) and beam metric(s) for the one or more PCIs. The UE could be provided/indicated/configured by the network, e.g., via higher layer RRC signaling/parameter and MAC CE command and dynamic DCI based L1 signaling, the threshold.

In another example, when/if the number of PCIs - e.g., configured by the network to the UE via higher layer RRC signaling/parameter and/or MAC CE command and/or dynamic DCI based L1 signaling - and/or the number of the corresponding RS resources such as SSBs and CSI-RSs configured for (inter-cell) beam measurement/reporting is greater/larger (or smaller/lower) than a threshold, the UE could send to the network, in/via (periodic/semi-persistent/aperiodic) PUSCH (MAC CE(s)), the (inter-cell) beam report/UCI including the one or more pairs of resource indicator(s) and beam metric(s) for the one or more PCIs. Otherwise, i.e., when/if the number of PCIs - e.g., configured by the network to the UE via higher layer RRC signaling/parameter and/or MAC CE command and/or dynamic DCI based L1 signaling - and/or the number of the corresponding RS resources such as SSBs and CSI-RSs configured for (inter-cell) beam measurement/reporting is smaller/lower (or greater/larger) than a threshold, the UE could send to the network, in/via PUCCH, the (inter-cell) beam report/UCI including the one or more pairs of resource indicator(s) and beam metric(s) for the one or more PCIs. The UE could be provided/indicated/configured by the network, e.g., via higher layer RRC signaling/parameter and MAC CE command and dynamic DCI based L1 signaling, the threshold. Here, the PCIs could be PCIs other than the serving cell PCI, or both the serving cell PCI and PCI(s) other than the serving cell PCI.

In yet another example, when/if the (total) number of beam reports including resource indicator(s) and beam metric(s) - e.g., configured by the network to the UE via higher layer RRC signaling/parameter and/or MAC CE command and/or dynamic DCI based L1 signaling - for (inter-cell) beam reporting is greater/larger (or smaller/lower) than a threshold, the UE could send to the network, in/via (periodic/semi-persistent/aperiodic) PUSCH (MAC CE(s)), the (inter-cell) beam report/UCI including the one or more pairs of resource indicator(s) and beam metric(s) for the one or more PCIs. Otherwise, i.e., when/if the (total) number of beam reports including resource indicator(s) and beam metric(s) - e.g., configured by the network to the UE via higher layer RRC signaling/parameter and/or MAC CE command and/or dynamic DCI based L1 signaling - for (inter-cell) beam reporting is smaller/lower (or greater/larger) than a threshold, the UE could send to the network, in/via PUCCH, the (inter-cell) beam report/UCI including the one or more pairs of resource indicator(s) and beam metric(s) for the one or more PCIs. The UE could be provided/indicated/configured by the network, e.g., via higher layer RRC signaling/parameter and MAC CE command and dynamic DCI based L1 signaling, the threshold.

In yet another example, when/if the number of beam reports per PCI (e.g., the serving cell PCI or PCI(s) other than the serving cell PCI) including resource indicator(s) and beam metric(s) - e.g., configured by the network to the UE via higher layer RRC signaling/parameter and/or MAC CE command and/or dynamic DCI based L1 signaling - for (inter-cell) beam reporting is greater/larger (or smaller/lower) than a threshold, the UE could send to the network, in/via (periodic/semi-persistent/aperiodic) PUSCH (MAC CE(s)), the (inter-cell) beam report/UCI including the one or more pairs of resource indicator(s) and beam metric(s) for the one or more PCIs. Otherwise, i.e., when/if the number of beam reports per PCI (e.g., the serving cell PCI or PCI(s) other than the serving cell PCI) including resource indicator(s) and beam metric(s) - e.g., configured by the network to the UE via higher layer RRC signaling/parameter and/or MAC CE command and/or dynamic DCI based L1 signaling - for (inter-cell) beam reporting is smaller/lower (or greater/larger) than a threshold, the UE could send to the network, in/via PUCCH, the (inter-cell) beam report/UCI including the one or more pairs of resource indicator(s) and beam metric(s) for the one or more PCIs. The UE could be provided/indicated/configured by the network, e.g., via higher layer RRC signaling/parameter and MAC CE command and dynamic DCI based L1 signaling, the threshold.

In yet another example, when/if the number of beam reports for one or more PCIs (e.g., the serving cell PCI and/or PCI(s) other than the serving cell PCI) including resource indicator(s) and beam metric(s) - e.g., configured by the network to the UE via higher layer RRC signaling/parameter and/or MAC CE command and/or dynamic DCI based L1 signaling - for (inter-cell) beam reporting is greater/larger (or smaller/lower) than a threshold, the UE could send to the network, in/via (periodic/semi-persistent/aperiodic) PUSCH (MAC CE(s)), the (inter-cell) beam report/UCI including the one or more pairs of resource indicator(s) and beam metric(s) for the one or more PCIs. Otherwise, i.e., when/if the number of beam reports for one or more PCIs (e.g., the serving cell PCI and/or PCI(s) other than the serving cell PCI) including resource indicator(s) and beam metric(s) - e.g., configured by the network to the UE via higher layer RRC signaling/parameter and/or MAC CE command and/or dynamic DCI based L1 signaling - for (inter-cell) beam reporting is smaller/lower (or greater/larger) than a threshold, the UE could send to the network, in/via PUCCH, the (inter-cell) beam report/UCI including the one or more pairs of resource indicator(s) and beam metric(s) for the one or more PCIs. The UE could be provided/indicated/configured by the network, e.g., via higher layer RRC signaling/parameter and MAC CE command and dynamic DCI based L1 signaling, the threshold. Furthermore, the UE could also be provided/indicated/configured by the network, e.g., via higher layer RRC signaling/parameter and/or MAC CE command and/or dynamic DCI based L1 signaling, the one or more PCIs.

In yet another example, the UE could be configured/provided/indicated by the network, e.g., via higher layer RRC signaling/parameter and/or MAC CE command and/or dynamic DCI based L1 signaling, which signaling medium(s), e.g., (periodic/semi-persistent/aperiodic) PUSCH(s) (MAC CE(s)) or PUCCH, to use to send the (inter-cell) beam report/UCI including the one or more pairs of resource indicator(s) and beam metric(s) for the one or more PCIs.

In yet another example, when/if the PUSCH(s) (MAC CE(s)) for the (inter-cell) beam/CSI reporting is not available/configured/provided/scheduled/indicated/triggered, the UE could send to the network, in/via PUCCH, the (inter-cell) beam report/UCI including the one or more pairs of resource indicator(s) and beam metric(s) for the one or more PCIs.

In yet another example, when/if the PUCCH for the (inter-cell) beam/CSI reporting is not available/configured/provided/scheduled/indicated/triggered, the UE could send to the network, in/via PUSCH (MAC CE), the (inter-cell) beam report/UCI including the one or more pairs of resource indicator(s) and beam metric(s) for the one or more PCIs.

As described herein in the present disclosure, the one or more PCIs could be in the same frequency (e.g., intra-frequency) or across different frequencies (e.g., inter-frequency). The UE could be configured/indicated/provided by the network, e.g., via higher layer RRC signaling/parameter and/or MAC CE command and/or dynamic DCI based L1 signaling, whether to measure and/or send the (inter-cell) beam report/UCI as discussed herein in the present disclosure for the same frequency (i.e., intra-frequency) or across different frequencies (i.e., inter-frequency). Alternatively, the UE could indicate to the network, e.g., in part of the beam report/UCI, whether the reported (inter-cell) beam report/UCI as discussed herein in the present disclosure is for the same frequency (i.e., intra-frequency) or across different frequencies (i.e., inter-frequency). Furthermore, the UE could also indicate to the network, e.g., in part of the beam report/UCI, information of one or more frequencies (e.g., for inter-frequency scenario) associated to the reported pair(s) of resource indicator(s) and beam metric(s).

The UE could report to the network in a single reporting instance/CSI report a beam report including two parts. Part 1 of the beam report/UCI could have a fixed payload size (in terms of the number of bits) and could be used to identify/indicate the size of the payload in Part 2 of the beam report/UCI. Part 1 of the beam report/UCI may be transmitted in its entirety before the transmission of Part 2 of the beam report/UCI. In one example, Part 2 of the beam report/UCI can be absent. When absent, the beam report is via Part 1 only (i.e., one part UCI), and when present, the beam report is via both Part 1 and Part 2 (i.e., two-part UCI). In one example, Part 2 of the beam report/UCI is always present, but its payload could vary depending on the information in Part 1. In this part of the disclosure, a reported resource indicator (RI) such as SSBRI/CRI and its corresponding/associated beam metric (BM) such as L1-RSRP/L1-SINR form a BM-RI pair {beam metric, resource indicator}. Or a reported resource indicator such as SSBRI/CRI and its corresponding/associated beam metric such as L1-RSRP/L1-SINR form a beam quality.

In one example, the UE could report to the network in a single CSI reporting instance/CSI report the BM-RI pairs/beam qualities including the resource indicators such as SSBRIs/CRIs and the corresponding/associated beam metrics such as L1-RSRPs/L1-SINRs for both the serving cell PCI and the non-serving cell(s) - i.e., PCI(s) other than the serving cell PCI; this report could be in form of the two-part beam report/two-part UCI. In another example, the UE could report to the network in a single CSI reporting instance/CSI report the BM-RI pairs/beam qualities including the resource indicators such as SSBRIs/CRIs and the corresponding/associated beam metrics such as L1-RSRPs/L1-SINRs for only the non-serving cell(s) - i.e., PCI(s) other than the serving cell PCI; this report could be in form of the two-part beam report/two-part UCI.

In the following, various design options of the two-part beam report/UCI for the inter-cell beam reporting are presented.

In one example, the UE could report to the network, e.g., in a two-part UCI/CSI, at least N≥1 pairs of resource indicators such as SSBRIs/CRIs and beam metrics such as L1-RSRPs/L1-SINRs for K≥1 cells/PCIs corresponding to the serving cell PCI and/or non-serving cell PCI(s) - i.e., PCI(s) other than the serving cell PCI. Part 1 of the two-part UCI/CSI could contain/provide/indicate/comprise/include one or more of the followings.

In one instance, the (total) number of pairs of resource indicators and beam metrics, i.e., N, that are reported/contained/included/provided, e.g., in part 2 of the two-part UCI/CSI.

In one instance, the (total) number, i.e., K, of cells/PCIs (corresponding to the serving cell PCI and/or non-serving cell PCI(s)) that are associated with their respective/corresponding pair(s) of resource indicators and beam metrics reported/contained/included/provided, e.g., in part 2 of the two-part UCI/CSI.

In one instance, the number(s) of pairs of resource indicators and beam metrics associated with the serving cell PCI that are reported/contained/included/provided, e.g., in part 2 of the two-part UCI/CSI.

In one instance, the number(s) of non-serving cell PCI(s) - or PCI(s) other than the serving cell PCI - that are associated with their respective/corresponding pair(s) of resource indicators and beam metrics reported/contained/included/provided, e.g., in part 2 of the two-part UCI/CSI.

In one instance, the number(s) of pairs of resource indicators and beam metrics associated with one or more of the non-serving cell PCI(s) - or PCI(s) other than the serving cell PCI - that are reported/contained/included/provided, e.g., in part 2 of the two-part UCI/CSI.

Part 2 of the two-part UCI/CSI could contain/indicate/provide/include/comprise the N pairs of resource indicators and beam metrics. The N pairs of beam metrics and resource indicators in part 2 could be associated with the serving cell PCI and/or PCI(s) other than the serving cell PCI. The N pairs of beam metrics and resource indicators in part 2 could contain/include/comprise/provide a first pair of resource indicator and beam metric, wherein the SSBRI/CRI in the first pair could be associated with the serving cell PCI or a PCI other than the serving cell PCI, and the L1-RSRP/L1-SINR in the first pair could be the largest/highest L1-RSRP/L1-SINR among all L1-RSRPs/L1-SINRs in the N pairs.

In another example, the UE could report to the network, e.g., in a two-part UCI/CSI, at least N≥1 pairs of resource indicators such as SSBRIs/CRIs and beam metrics such as L1-RSRPs/L1-SINRs for K≥1 cells/PCIs corresponding to the serving cell PCI and/or non-serving cell PCI(s) - i.e., PCI(s) other than the serving cell PCI. Part 1 of the two-part UCI/CSI could contain/provide/indicate/comprise/include at least a first pair of a resource indicator such as SSBRI/CRI and a beam metric such as L1-RSRP/L1-SINR. The resource indicator SSBRI/CRI and the corresponding beam metric L1-RSRP/L1-SINR in the first pair could be associated with the serving cell PCI or a PCI other than the serving cell PCI. The L1-RSRP/L1-SINR in the first pair could be the largest/highest L1-RSRP/L1-SINR among all L1-RSRPs/L1-SINRs in the N pairs.

Furthermore, part 1 of the two-part UCI/CSI could contain/provide/indicate/include/comprise one or more of the following examples.

In one example, the number of pairs of resource indicators and beam metrics - i.e., (N - 1) - that are reported/contained/included/provided in part 2 of the two-part UCI/CSI.

In one example, the total number of pairs of resource indicators and beam metrics, i.e., N, that are reported/contained/included/provided in both part 1 and part 2 of the two-part UCI/CSI.

In one example, the number - i.e., (K - 1) - of cells/PCIs (corresponding to the serving cell PCI and/or non-serving cell PCI(s)) that are associated with their respective/corresponding pair(s) of resource indicators and beam metrics reported/contained/included/provided in part 2 of the two-part UCI/CSI.

In one example, the total number, i.e., K, of cells/PCIs (corresponding to the serving cell PCI and/or non-serving cell PCI(s)) that are associated with their respective/corresponding pair(s) of resource indicators and beam metrics reported/contained/included/provided in both part 1 and part 2 of the two-part UCI/CSI.

In one example, the number(s) of pairs of resource indicators and beam metrics associated with the serving cell PCI that are reported/contained/included/provided in part 1, part 2 and/or both part 1 and part 2 of the two-part UCI/CSI.

In one example, the number(s) of non-serving cell PCI(s) - or PCI(s) other than the serving cell PCI - that are associated with their respective/corresponding pair(s) of resource indicators and beam metrics reported/contained/included/provided in part 1, part 2 and/or both part 1 and part 2 of the two-part UCI/CSI.

In one example, the number(s) of pairs of resource indicators and beam metrics associated with one or more of the non-serving cell PCI(s) - or PCI(s) other than the serving cell PCI - that are reported/contained/included/provided in part 1, part 2 and/or both part 1 and part 2 of the two-part UCI/CSI.

Part 2 of the two-part UCI/CSI could contain/provide/indicate/comprise/include the remaining (N - 1) second pairs of resource indicators and beam metrics. The (N - 1) second pairs of beam metrics and resource indicators in part 2 could be associated with the serving cell PCI and/or PCI(s) other than the serving cell PCI. If N 1 or K = 1, part 2 of the two-part UCI/CSI could be absent.

In yet another example, the UE could report to the network, e.g., in a two-part UCI/CSI, at least N≥1 pairs of resource indicators such as SSBRIs/CRIs and beam metrics such as L1-RSRPs/L1-SINRs for K≥1 cells/PCIs corresponding to the serving cell PCI and/or non-serving cell PCI(s) - i.e., PCI(s) other than the serving cell PCI. Part 1 of the two-part UCI/CSI could contain/provide/indicate/comprise/include at least M≥1 pairs of resource indicators such as SSBRIs/CRIs and beam metrics such as L1-RSRPs/L1-SINRs for L≥1 cells/PCIs corresponding to the serving cell PCI and/or non-serving cell PCI(s) - i.e., PCI(s) other than the serving cell PCI. For instance, the M pairs of resource indicators SSBRIs/CRIs and the corresponding beam metrics L1-RSRPs/L1-SINRs could contain/comprise/include/provide m≥0 or m≥1 pairs of SSBRIs/CRIs and L1-RSRPs/L1-SINRs for the serving cell PCI, where the UE could be configured/provided/indicated by the network, e.g., via higher layer RRC signaling/parameter (e.g., in CSI-ReportConfig, CSI-ResourceConfig, and etc.) and/or MAC CE command and/or dynamic DCI based L1 signaling, the value of m. For example, m 1, wherein the first pair or the pair with the highest/largest L1-RSRP/L1-SINR among all Msc pairs associated with the serving cell PCI could be reported in part 1, where Msc corresponds to the total number of pairs of resource indicators and beam metrics associated with the serving cell PCI. For another example, m = Msc. Yet for another example, m pairs of resource indicators and beam metrics associated with the serving cell PCI with their corresponding L1-RSRPs/L1-SINRs greater/higher/larger than a first threshold could be reported in part 1.

For example, the M pairs of resource indicators and beam metrics could correspond to the first (or last) M pairs out of the total N pairs of resource indicators and beam metrics.

For another example, the M pairs of resource indicators and beam metrics could correspond to the total N pairs of resource indicators and beam metrics.

Yet for another example, the L1-RSRPs/L1-SINRs of the M pairs of resource indicators and beam metrics - out of the total N pairs of resource indicators and beam metrics - could be greater/higher/larger than a second threshold. For instance, for M=2, a first pair of a resource indicator such as SSBRI/CRI and a beam metric such as L1-RSRP/L1-SINR and a second pair of a resource indicator such as SSBRI/CRI and a beam metric such as L1-RSRP/L1-SINR could be reported/indicated in part 1 of the two-part UCI/CSI. The resource indicator SSBRI/CRI and the corresponding beam metric L1-RSRP/L1-SINR in the first pair could be associated with the serving cell PCI or a PCI other than the serving cell PCI, and/or the resource indicator SSBRI/CRI and the corresponding beam metric L1-RSRP/L1-SINR in the second pair could be associated with the serving cell PCI or a PCI other than the serving cell PCI. The L1-RSRP/L1-SINR in the first pair could be the largest/highest L1-RSRP/L1-SINR among all L1-RSRPs/L1-SINRs in the N pairs, and/or the L1-RSRP/L1-SINR in the second pair could be the second largest/highest L1-RSRP/L1-SINR among all L1-RSRPs/L1-SINRs in the N pairs.

Furthermore, part 1 of the two-part UCI/CSI could contain/provide/indicate/include/comprise one or more of the following examples.

In one example, the number of pairs of resource indicators and beam metrics - i.e., (N - M) - that are reported/contained/included/provided in part 2 of the two-part UCI/CSI.

In one example, the total number of pairs of resource indicators and beam metrics, i.e., N, that are reported/-contained/included/provided in both part 1 and part 2 of the two-part UCI/CSI.

In one example, the number, i.e., L, of cells/PCIs (corresponding to the serving cell PCI and/or non-serving cell PCI(s)) that are associated with their respective/corresponding pair(s) of resource indicators and beam metrics reported/contained/included/provided in part 1 of the two-part UCI/CSI.

In one example, the number - i.e., (K - L) - of cells/PCIs (corresponding to the serving cell PCI and/or non-serving cell PCI(s)) that are associated with their respective/corresponding pair(s) of resource indicators and beam metrics reported/contained/included/provided in part 2 of the two-part UCI/CSI.

In one example, the total number, i.e., K, of cells/PCIs (corresponding to the serving cell PCI and/or non-serving cell PCI(s)) that are associated with their respective/corresponding pair(s) of resource indicators and beam metrics reported/contained/included/provided in both part 1 and part 2 of the two-part UCI/CSI.

In one example, the number(s) of pairs of resource indicators and beam metrics associated with the serving cell PCI that are reported/contained/included/provided in part 1, part 2 and/or both part 1 and part 2 of the two-part UCI/CSI.

In one example, the number(s) of non-serving cell PCI(s) - or PCI(s) other than the serving cell PCI - that are associated with their respective/corresponding pair(s) of resource indicators and beam metrics reported/contained/included/provided in part 1, part 2 and/or both part 1 and part 2 of the two-part UCI/CSI.

In one example, the number(s) of pairs of resource indicators and beam metrics associated with one or more of the non-serving cell PCI(s) - or PCI(s) other than the serving cell PCI - that are reported/contained/included/provided in part 1, part 2 and/or both part 1 and part 2 of the two-part UCI/CSI.

Part 2 of the two-part UCI/CSI could contain/provide/indicate/comprise/include the remaining (N - M) pairs of resource indicators and beam metrics. The (N - M) pairs of beam metrics and resource indicators in part 2 could be associated with the serving cell PCI and/or PCI(s) other than the serving cell PCI. If M = N or L = K, part 2 of the two-part UCI/CSI could be absent. The UE could be configured/provided/indicated by the network, e.g., via higher layer RRC signaling/parameter (e.g., in CSI-ReportConfig, CSI-ResourceConfig and etc.) and/or MAC CE command and/or dynamic DCI based L1 signaling, the value(s) of M and/or L and/or the first threshold and/or the second threshold, as specified herein in the present disclosure.

In yet another example, the UE could report to the network, e.g., in a two-part UCI/CSI, at least N≥1 pairs of resource indicators such as SSBRIs/CRIs and beam metrics such as L1-RSRPs/L1-SINRs for K≥1 cells/PCIs corresponding to the serving cell PCI and/or non-serving cell PCI(s) - i.e., PCI(s) other than the serving cell PCI. Part 1 of the two-part UCI/CSI could contain/provide/indicate/comprise/include at least a first pair of a resource indicator such as SSBRI/CRI and a beam metric such as L1-RSRP/L1-SINR. The resource indicator SSBRI/CRI and the corresponding beam metric L1-RSRP/L1-SINR in the first pair could be associated with the serving cell PCI. The first pair could correspond to the m-th pair of resource indicator and beam metric associated with the serving cell PCI (e.g., $m \in \{1,..., Msc\}$, where Msc represents the total number of pairs of resource indicators and beam metrics associated with the serving cell PCI), wherein the UE could be indicated/configured/provided by the network, e.g., via higher layer RRC signaling/parameter (e.g., in CSI-ReportConfig, CSI-ResourceConfig and etc.) and/or MAC CE command and/or dynamic DCI based L1 signaling, the value of m. For instance, the m-th pair could correspond to the first pair or the pair with the highest/largest L1-RSRP/L1-SINR among all the Msc pairs associated with the serving cell PCI.

Furthermore, part 1 of the two-part UCI/CSI could contain/provide/indicate/include/comprise one or more of the following examples.

In one example, the number of pairs of resource indicators and beam metrics - i.e., (N - 1) - that are reported/contained/included/provided in part 2 of the two-part UCI/CSI.

In one example, the total number of pairs of resource indicators and beam metrics, i.e., N, that are reported/-contained/included/provided in both part 1 and part 2 of the two-part UCI/CSI.

In one example, the number - i.e., (K - 1) - of cells/PCIs (corresponding to the serving cell PCI and/or non-serving cell PCI(s)) that are associated with their respective/corresponding pair(s) of resource indicators and beam metrics reported/contained/included/provided in part 2 of the two-part UCI/CSI.

In one example, the total number, i.e., K, of cells/PCIs (corresponding to the serving cell PCI and/or non-serving cell PCI(s)) that are associated with their respective/corresponding pair(s) of resource indicators and beam metrics reported/contained/included/provided in both part 1 and part 2 of the two-part UCI/CSI.

In one example, the number(s) of pairs of resource indicators and beam metrics associated with the serving cell PCI that are reported/contained/included/provided in part 2 and/or both part 1 and part 2 of the two-part UCI/CSI.

In one example, the number(s) of non-serving cell PCI(s) - or PCI(s) other than the serving cell PCI - that are associated with their respective/corresponding pair(s) of resource indicators and beam metrics reported/contained/included/provided in part 2 of the two-part UCI/CSI.

In one example, the number(s) of pairs of resource indicators and beam metrics associated with one or more of the non-serving cell PCI(s) - or PCI(s) other than the serving cell PCI - that are reported/contained/included/provided in part 2 of the two-part UCI/CSI.

Part 2 of the two-part UCI/CSI could contain/provide/indicate/comprise/include the remaining (N - 1) second pairs of resource indicators and beam metrics. The (N - 1) second pairs of beam metrics and resource indicators in part 2 could be associated with the serving cell PCI and/or PCI(s) other than the serving cell PCI. If N = 1 or K = 1, part 2 of the two-part UCI/CSI could be absent.

In yet another example, the UE could report to the network, e.g., in a two-part UCI/CSI, at least N≥1 pairs of resource indicators such as SSBRIs/CRIs and beam metrics such as L1-RSRPs/L1-SINRs for K≥1 cells/PCIs corresponding to the serving cell PCI and/or non-serving cell PCI(s) - i.e., PCI(s) other than the serving cell PCI. Part 1 of the two-part UCI/CSI could contain/provide/indicate/comprise/include at least M≥1 pairs of resource indicators such as SSBRIs/-CRIs and beam metrics such as L1-RSRPs/L1-SINRs for the serving cell PCI.

For example, the M pairs of resource indicators and beam metrics could correspond to the first (or last) M pairs out of the total Msc pairs of resource indicators and beam metrics associated with the serving cell PCI.

For another example, the M pairs of resource indicators and beam metrics could correspond to the total Msc pairs of resource indicators and beam metrics associated with the serving cell PCI.

Yet for another example, the L1-RSRPs/L1-SINRs of the M pairs of resource indicators and beam metrics - out of the total Msc pairs of resource indicators and beam metrics associated with the serving cell PCI - could be greater/higher/larger than a threshold. For instance, for M=2, a first pair of a resource indicator such as SSBRI/CRI and a beam metric such as L1-RSRP/L1-SINR associated with the serving cell PCI and a second pair of a resource indicator such as SSBRI/CRI and a beam metric such as L1-RSRP/L1-SINR associated with the serving cell PCI could be reported/indicated in part 1 of the two-part UCI/CSI. The L1-RSRP/L1-SINR in the first pair could be the largest/highest L1-RSRP/L1-SINR among all L1-RSRPs/L1-SINRs in the Msc pairs associated with the serving cell PCI, and/or the L1-RSRP/L1-SINR in the second pair could be the second largest/highest L1-RSRP/L1-SINR among all L1-RSRPs/L1-SINRs in the Msc pairs associated with the serving cell PCI.

Furthermore, part 1 of the two-part UCI/CSI could contain/provide/indicate/include/comprise one or more of the following examples.

In one example, the number of pairs of resource indicators and beam metrics - i.e., (N - M) - that are reported/contained/included/provided in part 2 of the two-part UCI/CSI.

In one example, the total number of pairs of resource indicators and beam metrics, i.e., N, that are reported/contained/included/provided in both part 1 and part 2 of the two-part UCI/CSI.

In one example, the number - i.e., (K - 1) - of cells/PCIs (corresponding to the serving cell PCI and/or non-serving cell PCI(s)) that are associated with their respective/corresponding pair(s) of resource indicators and beam metrics reported/contained/included/provided in part 2 of the two-part UCI/CSI.

In one example, the total number, i.e., K, of cells/PCIs (corresponding to the serving cell PCI and/or non-serving cell PCI(s)) that are associated with their respective/corresponding pair(s) of resource indicators and beam metrics reported/contained/included/provided in both part 1 and part 2 of the two-part UCI/CSI.

In one example, the number(s) of pairs of resource indicators and beam metrics associated with the serving cell PCI that are reported/contained/included/provided in part 2 and/or both part 1 and part 2 of the two-part UCI/CSI.

In one example, the number(s) of non-serving cell PCI(s) - or PCI(s) other than the serving cell PCI - that are associated with their respective/corresponding pair(s) of resource indicators and beam metrics reported/contained/included/provided in part 2 of the two-part UCI/CSI.

In one example, the number(s) of pairs of resource indicators and beam metrics associated with one or more of the non-serving cell PCI(s) - or PCI(s) other than the serving cell PCI - that are reported/contained/included/provided in part 2 of the two-part UCI/CSI.

Part 2 of the two-part UCI/CSI could contain/provide/indicate/comprise/include the remaining (N - M) pairs of resource indicators and beam metrics. The (N - M) pairs of beam metrics and resource indicators in part 2 could be associated with the serving cell PCI and/or PCI(s) other than the serving cell PCI. If M N or K = 1, part 2 of the two-part UCI/CSI could be absent. The UE could be configured/provided/indicated by the network, e.g., via higher layer RRC signaling/parameter (e.g., in CSI-ReportConfig, CSI-ResourceConfig and etc.) and/or MAC CE command and/or dynamic DCI based L1 signaling, the value(s) of M and/or the threshold, as specified herein in the present disclosure.

In yet another example, the UE could report to the network, e.g., in a two-part UCI/CSI, at least N≥1 pairs of resource indicators such as SSBRIs/CRIs and beam metrics such as L1-RSRPs/L1-SINRs for K≥1 cells/PCIs corresponding to the serving cell PCI and/or non-serving cell PCI(s) - i.e., PCI(s) other than the serving cell PCI. Part 1 of the two-part UCI/CSI could contain/provide/indicate/comprise/include at least a first pair of a resource indicator such as SSBRI/CRI and a beam metric such as L1-RSRP/L1-SINR and a second pair of a resource indicator such as SSBRI/CRI and a beam metric such as L1-RSRP/L1-SINR. The resource indicator SSBRI/CRI and the corresponding beam metric L1-RSRP/L1-SINR in the first pair could be associated with the serving cell PCI. The first pair could correspond to the m-th pair of resource indicator and beam metric associated with the serving cell PCI (e.g., $m \in \{1,..., Msc\}$, where Msc represents the total number of pairs of resource indicators and beam metrics associated with the serving cell PCI), wherein the UE could be indicated/configured/provided by the network, e.g., via higher layer RRC signaling/parameter (e.g., in CSI-Report-Config, CSI-ResourceConfig and etc.) and/or MAC CE command and/or dynamic DCI based L1 signaling, the value of m. For instance, the m-th pair could correspond to the first pair or the pair with the highest/largest L1-RSRP/L1-SINR among all the Msc pairs associated with the serving cell PCI.

The second pair of resource indicator SSBRI/CRI and beam metric L1-RSRP/L1-SINR could correspond to at least one of the followings examples.

In one example, the second pair of resource indicator and beam metric could correspond to the m'-th pair of resource indicator and beam metric associated with the serving cell PCI (e.g., $m' \in \{1,..., Msc\}$, where Msc represents the total number of pairs of resource indicators and beam metrics associated with the serving cell PCI), wherein the UE could be indicated/configured/provided by the network, e.g., via higher layer RRC signaling/parameter (e.g., in CSI-Report-Config, CSI-ResourceConfig and etc.) and/or MAC CE command and/or dynamic DCI based L1 signaling, the value of m'. For instance, the m'-th pair could correspond to the second pair or the pair with the second highest/largest L1-RSRP/L1-SINR among all the Msc pairs associated with the serving cell PCI.

In one example, the second pair of resource indicator and beam metric could correspond to a pair of resource indicator and beam metric, wherein the beam metric L1-RSRP/L1-SINR could be the largest/highest L1-RSRP/L1-SINR among all L1-RSRPs/L1-SINRs in the N pairs.

In one example, the second pair of resource indicator and beam metric could correspond to a pair of resource indicator and beam metric, wherein the beam metric L1-RSRP/L1-SINR could be the second largest/highest L1-RSRP/L1-SINR among all L1-RSRPs/L1-SINRs in the N pairs.

In one example, the second pair of resource indicator and beam metric could correspond to the m"-th pair of resource indicator and beam metric associated with the (K - 1) PCI(s) other than the serving cell PCI (e.g., $m" \in \{1,..., Mnsc\}$, where Mnsc represents the total number of pairs of resource indicators and beam metrics associated with the (K - 1) PCI(s) other than the serving cell PCI, wherein the UE could be indicated/configured/provided by the network, e.g., via higher layer RRC signaling/parameter (e.g., in CSI-ReportConfig, CSI-ResourceConfig and etc.) and/or MAC CE command and/or dynamic DCI based L1 signaling, the value of m". For instance, the m"-th pair could correspond to the first pair or the pair with the highest/largest L1-RSRP/L1-SINR among all the Mnsc pairs associated with the (K - 1) PCI(s) other than the serving cell PCI.

Furthermore, the first pair of resource indicator and beam metric could always be present/reported in part 1 of the two-part UCI/CSI, while the second pair of resource indicator and beam metric could be present or absent in part 1 of the two-part UCI/CSI according to one or more of the following examples.

In one example, whether or not the second pair of resource indicator and beam metric is present/absent could depend on or could be according to/based on network's configuration/indication, e.g., via higher layer RRC signaling/-parameter (e.g., in CSI-ReportConfig, CSI-ResourceConfig and etc.) and/or MAC CE command and/or dynamic DCI based L1 signaling. For instance, a higher layer parameter "secondPairInPart1" could be configured/provided/indicated in higher layer RRC signaling/parameter such as CSI-ResourceConfig, CSI-ReportConfig and etc. When the higher layer parameter "secondPairInPart1" is set to "enabled"/"on" or configured/present, the UE could report the second pair of resource indicator and beam metric as specified/described herein in the present disclosure in part 1 of the two-part UCI/CSI. Otherwise, when the higher layer parameter "secondPairInPart1" is set to "disabled"/"off" or not configured/-present, the UE may not report the second pair of resource indicator and beam metric as specified/described herein in the present disclosure in part 1 of the two-part UCI/CSI.

In one example, the UE could report to the network, e.g., according to/based on network's configuration(s) (e.g., via higher layer RRC signaling/parameter in CSI-ReportConfig, CSI-ResourceConfig and etc. and/or MAC CE command and/or dynamic DCI based L1 signaling), a single pair of resource indicator and beam metric (i.e., corresponding to the first pair of resource indicator and beam metric described/specified herein in the present disclosure). For this case, the UE may not report the second pair of resource indicator and beam metric in part 1 of the two-part UCI/CSI.

In one example, the UE could only report to the network, e.g., according to/based on network's configuration(s) (e.g., via higher layer RRC signaling/parameter in CSI-ReportConfig, CSI-ResourceConfig and etc. and/or MAC CE command and/or dynamic DCI based L1 signaling), one or more pairs of resource indicator and beam metric associated with only the serving cell PCI. For this case, the UE may not report the second pair of resource indicator and beam metric in part 1 of the two-part UCI/CSI.

In one example, the UE may not be configured/provided/indicated by the network, e.g., via higher layer RRC signaling/parameter such as CSI-ReportConfig, CSI-ResourceConfig and etc. and/or MAC CE command and/or dynamic DCI based L1 signaling, measurement RSs or RS resources for PCI(s) other than the serving cell PCI, wherein the measurement RSs or RS resources could be SSBs and/or CSI-RSs. For this case, the UE may not report the second pair of resource indicator and beam metric as specified/described herein in the present disclosure in part 1 of the two-part UCI/CSI.

In one example, the UE may be configured/provided/indicated by the network, e.g., via higher layer RRC signaling/parameter such as CSI-ReportConfig, CSI-ResourceConfig and etc. and/or MAC CE command and/or dynamic DCI based L1 signaling, measurement RSs or RS resources only for the serving cell PCI, wherein the measurement RSs or RS resources could be SSBs and/or CSI-RSs. For this case, the UE may not report the second pair of resource indicator and beam metric as specified/described herein in the present disclosure in part 1 of the two-part UCI/CSI.

In one example, when the difference between the beam metric L1-RSRP/L1-SINR of/in the first pair and the beam metric L1-RSRP/L1-SINR of/in the second pair is smaller/lower (or greater/larger) than a threshold, the UE may not report the second pair of resource indicator and beam metric as specified/described herein in the present disclosure in part 1 of the two-part UCI/CSI. The UE could be provided/indicated/configured by the network, e.g., via higher layer RRC signaling/parameter and/or MAC CE command and/or dynamic DCI based L1 signaling, the threshold.

Furthermore, part 1 of the two-part UCI/CSI could contain/provide/indicate/include/comprise one or more of the following examples.

In one example, the number of pairs of resource indicators and beam metrics - i.e., (N - 2) if the second pair is reported or (N - 1) if the second pair is not reported - that are reported/contained/included/provided in part 2 of the two-part UCI/CSI.

In one example, the total number of pairs of resource indicators and beam metrics, i.e., N, that are reported/contained/included/provided in both part 1 and part 2 of the two-part UCI/CSI.

In one example, the number of cells/PCIs (corresponding to the serving cell PCI and/or non-serving cell PCI(s)) that are associated with their respective/corresponding pair(s) of resource indicators and beam metrics reported/contained/included/provided in part 2 of the two-part UCI/CSI.

In one example, the total number, i.e., K, of cells/PCIs (corresponding to the serving cell PCI and/or non-serving cell PCI(s)) that are associated with their respective/corresponding pair(s) of resource indicators and beam metrics reported/contained/included/provided in both part 1 and part 2 of the two-part UCI/CSI.

In one example, the number(s) of pairs of resource indicators and beam metrics associated with the serving cell PCI that are reported/contained/included/provided in part 2 and/or both part 1 and part 2 of the two-part UCI/CSI.

In one example, the number(s) of non-serving cell PCI(s) - or PCI(s) other than the serving cell PCI - that are associated with their respective/corresponding pair(s) of resource indicators and beam metrics reported/contained/included/provided in part 2 and/or both part 1 and part 2 of the two-part UCI/CSI.

In one example, the number(s) of pairs of resource indicators and beam metrics associated with one or more of the non-serving cell PCI(s) - or PCI(s) other than the serving cell PCI - that are reported/contained/included/provided in part 2 and/or both part 1 and part 2 of the two-part UCI/CSI.

Part 2 of the two-part UCI/CSI could contain/provide/indicate/comprise/include the remaining (N - 2) third pairs of resource indicators and beam metrics - if the second pair is reported in part 1 of the 2-part UCI/CSI, or (N - 1) third pairs of resource indictors and beam metrics - if the second pair is not reported in part 1 of the two-part UCI/CSI. The (N - 2) or (N - 1) third pairs of beam metrics and resource indicators in part 2 could be associated with the serving cell PCI and/or PCI(s) other than the serving cell PCI. If N = 1 for the case wherein the second pair is not reported in part 1 of the two-part UCI/CSI or N = 2 for the case wherein the second pair is reported in part 1 of the two-part UCI/CSI, part 2 of the two-part UCI/CSI could be absent.

In yet another example, the UE could report to the network, e.g., in a two-part UCI/CSI, at least $N{\geq}1$ pairs of resource indicators such as SSBRIs/CRIs and beam metrics such as L1-RSRPs/L1-SINRs for $K{\geq}1$ cells/PCIs corresponding to the serving cell PCI and/or non-serving cell PCI(s) - i.e., PCI(s) other than the serving cell PCI. Part 1 of the two-part UCI/CSI could contain/provide/indicate/comprise/include at least a first pair of a resource indicator such as SSBRI/CRI and a beam metric such as L1-RSRP/L1-SINR and a second pair of a resource indicator such as SSBRI/CRI and a beam metric such as L1-RSRP/L1-SINR. The resource indicator SSBRI/CRI and the corresponding beam metric L1-RSRP/L1-SINR in the first pair could be associated with the serving cell PCI or a PCI other than the serving cell PCI. Furthermore, the beam metric L1-RSRP/L1-SINR in/of the first pair could correspond to the largest/highest L1-RSRP/L1-SINR among all the N pairs. The second pair of resource indicator SSBRI/CRI and beam metric L1-RSRP/L1-SINR could correspond to at least one of the following examples.

For example, the second pair of resource indicator and beam metric could correspond to the m-th pair of resource indicator and beam metric associated with the serving cell PCI (e.g., $m{\in}\{1,..., Msc\}$, where Msc represents the total number of pairs of resource indicators and beam metrics associated with the serving cell PCI), wherein the UE could be indicated/configured/provided by the network, e.g., via higher layer RRC signaling/parameter (e.g., in CSI-ReportConfig, CSI-ResourceConfig and etc.) and/or MAC CE command and/or dynamic DCI based L1 signaling, the value of m. For instance, the m-th pair could correspond to the first pair or the second pair or the pair with the highest/largest L1-RSRP/L1-SINR or the pair with the second highest/largest L1-RSRP/L1-SINR among all the Msc pairs associated with the serving cell PCI.

For another example, the second pair of resource indicator and beam metric could correspond to a pair of resource indicator and beam metric, wherein the beam metric L1-RSRP/L1-SINR could be the second largest/highest L1-RSRP/L1-SINR among all L1-RSRPs/L1-SINRs in the N pairs.

Yet for another example, the second pair of resource indicator and beam metric could correspond to the m"-th pair of resource indicator and beam metric associated with the (K - 1) PCI(s) other than the serving cell PCI (e.g., m"∈{1,..., Mnsc}, where Mnsc represents the total number of pairs of resource indicators and beam metrics associated with the (K - 1) PCI(s) other than the serving cell PCI, wherein the UE could be indicated/configured/provided by the network, e.g., via higher layer RRC signaling/parameter (e.g., in CSI-ReportConfig, CSI-ResourceConfig and etc.) and/or MAC CE command and/or dynamic DCI based L1 signaling, the value of m". For instance, the m"-th pair could correspond to the first pair or the second pair or the pair with the highest/largest L1-RSRP/L1-SINR or the pair with the second highest/largest L1-RSRP/L1-SINR among all the Mnsc pairs associated with the (K - 1) PCI(s) other than the serving cell PCI.

Furthermore, the first pair of resource indicator and beam metric could always be present/reported in part 1 of the two-part UCI/CSI, while the second pair of resource indicator and beam metric could be present or absent in part 1 of the two-part UCI/CSI according to one or more of the following examples.

For example, whether or not the second pair of resource indicator and beam metric is present/absent could depend on or could be according to/based on network's configuration/indication, e.g., via higher layer RRC signaling/-parameter (e.g., in CSI-ReportConfig, CSI-ResourceConfig and etc.) and/or MAC CE command and/or dynamic DCI based L1 signaling. For instance, a higher layer parameter "secondPairInPart1" could be configured/provided/indicated in higher layer RRC signaling/parameter such as CSI-ResourceConfig, CSI-ReportConfig and etc. When the higher layer parameter "secondPairInPart1" is set to "enabled"/"on" or configured/present, the UE could report the second pair of resource indicator and beam metric as specified/described herein in the present disclosure in part 1 of the two-part UCI/CSI. Otherwise, when the higher layer parameter "secondPairInPart1" is set to "disabled"/"off" or not configured/-present, the UE may not report the second pair of resource indicator and beam metric as specified/described herein in the present disclosure in part 1 of the two-part UCI/CSI.

For another example, the UE could report to the network, e.g., according to/based on network's configuration(s) (e.g., via higher layer RRC signaling/parameter in CSI-ReportConfig, CSI-ResourceConfig and etc. and/or MAC CE command and/or dynamic DCI based L1 signaling), a single pair of resource indicator and beam metric (i.e., corresponding to the first pair of resource indicator and beam metric described/specified herein in the present disclosure). For this case, the UE may not report the second pair of resource indicator and beam metric in part 1 of the two-part UCI/CSI.

Yet for another example, the UE could only report to the network, e.g., according to/based on network's configuration(s) (e.g., via higher layer RRC signaling/parameter in CSI-ReportConfig, CSI-ResourceConfig and etc. and/or MAC CE command and/or dynamic DCI based L1 signaling), one or more pairs of resource indicator and beam metric associated with only the serving cell PCI. For this case, the UE may not report the second pair of resource indicator and beam metric in part 1 of the two-part UCI/CSI.

Yet for another example, the UE could only report to the network, e.g., according to/based on network's configuration(s) (e.g., via higher layer RRC signaling/parameter in CSI-ReportConfig, CSI-ResourceConfig and etc. and/or MAC CE command and/or dynamic DCI based L1 signaling), one or more pairs of resource indicator and beam metric associated with only the PCI(s) other than the serving cell PCI. For this case, the UE may not report the second pair of resource indicator and beam metric in part 1 of the two-part UCI/CSI.

Yet for another example, the UE may not be configured/provided/indicated by the network, e.g., via higher layer RRC signaling/parameter such as CSI-ReportConfig, CSI-ResourceConfig and etc. and/or MAC CE command and/or dynamic DCI based L1 signaling, measurement RSs or RS resources for the serving cell PCI, wherein the measurement RSs or RS resources could be SSBs and/or CSI-RSs. For this case, the UE may not report the second pair of resource indicator and beam metric as specified/described herein in the present disclosure in part 1 of the two-part UCI/CSI.

Yet for another example, the UE may not be configured/provided/indicated by the network, e.g., via higher layer RRC signaling/parameter such as CSI-ReportConfig, CSI-ResourceConfig and etc. and/or MAC CE command and/or dynamic DCI based L1 signaling, measurement RSs or RS resources for PCI(s) other than the serving cell PCI, wherein the measurement RSs or RS resources could be SSBs and/or CSI-RSs. For this case, the UE may not report the second pair of resource indicator and beam metric as specified/described herein in the present disclosure in part 1 of the two-part UCI/CSI.

Yet for another example, the UE may be configured/provided/indicated by the network, e.g., via higher layer RRC signaling/parameter such as CSI-ReportConfig, CSI-ResourceConfig and etc. and/or MAC CE command and/or dynamic DCI based L1 signaling, measurement RSs or RS resources only for the serving cell PCI, wherein the measurement RSs or RS resources could be SSBs and/or CSI-RSs. For this case, the UE may not report the second pair of resource indicator and beam metric as specified/described herein in the present disclosure in part 1 of the two-part UCI/CSI.

Yet for another example, the UE may be configured/provided/indicated by the network, e.g., via higher layer RRC signaling/parameter such as CSI-ReportConfig, CSI-ResourceConfig and etc. and/or MAC CE command and/or dynamic DCI based L1 signaling, measurement RSs or RS resources only for PCI(s) other than the serving cell PCI, wherein the measurement RSs or RS resources could be SSBs and/or CSI-RSs. For this case, the UE may not report the second pair of resource indicator and beam metric as specified/described herein in the present disclosure in part 1 of the two-part UCI/CSI.

Yet for another example, when the difference between the beam metric L1-RSRP/L1-SINR of/in the first pair and the beam metric L1-RSRP/L1-SINR of/in the second pair is smaller/lower (or greater/larger) than a threshold, the UE may not report the second pair of resource indicator and beam metric as specified/described herein in the present disclosure in part 1 of the two-part UCI/CSI. The UE could be provided/indicated/configured by the network, e.g., via higher layer RRC signaling/parameter and/or MAC CE command and/or dynamic DCI based L1 signaling, the threshold.

Furthermore, part 1 of the two-part UCI/CSI could contain/provide/indicate/include/comprise one or more of the following examples.

In one example, the number of pairs of resource indicators and beam metrics - i.e., (N - 2) if the second pair is reported or (N - 1) if the second pair is not reported - that are reported/contained/included/provided in part 2 of the two-part UCI/CSI.

In one example, the total number of pairs of resource indicators and beam metrics, i.e., N, that are reported/contained/included/provided in both part 1 and part 2 of the two-part UCI/CSI.

In one example, the number of cells/PCIs (corresponding to the serving cell PCI and/or non-serving cell PCI(s)) that are associated with their respective/corresponding pair(s) of resource indicators and beam metrics reported/contained/included/provided in part 2 of the two-part UCI/CSI.

In one example, the total number, i.e., K, of cells/PCIs (corresponding to the serving cell PCI and/or non-serving cell PCI(s)) that are associated with their respective/corresponding pair(s) of resource indicators and beam metrics reported/contained/included/provided in both part 1 and part 2 of the two-part UCI/CSI.

In one example, the number(s) of pairs of resource indicators and beam metrics associated with the serving cell PCI that are reported/contained/included/provided in part 2 and/or both part 1 and part 2 of the two-part UCI/CSI.

In one example, the number(s) of non-serving cell PCI(s) - or PCI(s) other than the serving cell PCI - that are associated with their respective/corresponding pair(s) of resource indicators and beam metrics reported/contained/included/provided in part 2 and/or both part 1 and part 2 of the two-part UCI/CSI.

In one example, the number(s) of pairs of resource indicators and beam metrics associated with one or more of the non-serving cell PCI(s) - or PCI(s) other than the serving cell PCI - that are reported/contained/included/provided in part 2 and/or both part 1 and part 2 of the two-part UCI/CSI.

Part 2 of the two-part UCI/CSI could contain/provide/indicate/comprise/include the remaining (N - 2) third pairs of resource indicators and beam metrics - if the second pair is reported in part 1 of the 2-part UCI/CSI, or (N - 1) third pairs of resource indictors and beam metrics - if the second pair is not reported in part 1 of the two-part UCI/CSI. The (N - 2) or (N - 1) third pairs of beam metrics and resource indicators in part 2 could be associated with the serving cell PCI and/or PCI(s) other than the serving cell PCI. If N = 1 for the case wherein the second pair is not reported in part 1 of the two-part UCI/CSI or N = 2 for the case wherein the second pair is reported in part 1 of the two-part UCI/CSI, part 2 of the two-part UCI/CSI could be absent.

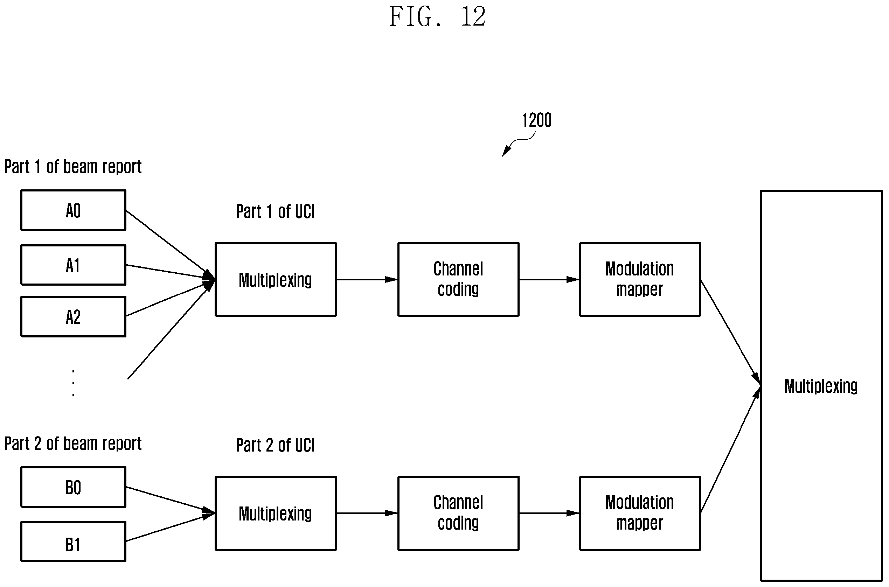

FIGURE 12 illustrates an example of two-part CSI/UCI design for inter-cell beam reporting 1200 according to embodiments of the present disclosure. An embodiment of the two-part CSI/UCI design for inter-cell beam reporting 1200 shown in FIGURE 12 is for illustration only.

For the two-part CSI/UCI design based inter-cell beam reporting in the present disclosure, Part 1 and Part 2 of the beam report/UCI could be separately encoded (see FIGURE 12) and reported in a single reporting instance/CSI report. For instance, in FIGURE 12, the component A0 in Part 1 could correspond to the beam metric in the first pair (if reported), the component A1 in Part 1 could correspond to the resource indicator in the first pair (if reported), and the component A2 in Part 1 could correspond to the number of second pair(s) of resource indicators and beam metrics that are reported in Part 2; the component B0 in Part 2 could correspond to the beam metrics in the second pair(s) (if reported), and the component B1 in Part 2 could correspond to the resource indicators in the second pair(s) (if reported). Furthermore, for any given two-part beam reporting/two-part UCI scheme presented above, the payload size of Part 1 of the beam report/UCI is fixed for a given RRC configuration. The payload size of Part 2 of the beam report/UCI, however, could vary because the UE could (dynamically) determine a different number of pairs of resource indicators and beam metrics for each CSI resource/reporting setting/configuration.

In one example of the design examples specified herein in the present disclosure, the inter-cell beam reporting is via one-part UCI or a two-part UCI depending on a condition. In one example, the condition is based on the value of N, which is the number of pairs of resource indicators and beam metrics reported in a CSI report. For example, when N <= x (where x is threshold, fixed or configured), the one-part UCI is used for the reporting, and when N > x, the two-part UCI is used for the reporting.

In another example of the design examples specified herein in the present disclosure, the inter-cell beam reporting is via one-part UCI or a two-part UCI depending on a signaling from the NW. This signaling could be semi-static via higher layer RRC signaling (using a dedicated parameter or with a joint configuration parameter) or more dynamic via MAC CE or DCI based signaling (using a dedicated indication or with a joint indication).

In one example of the design examples specified herein in the present disclosure, the UE could be configured/indicated/provided by the network, e.g., via higher layer RRC signaling/parameter and/or MAC CE command and/or dynamic DCI based L1 signaling, to perform/conduct the inter-cell beam reporting via the two-part UCI as specified/described herein in the present disclosure.

In one example, when the UE is configured with the higher layer parameter, e.g., SSB-MTC-AdditionalPCI, i.e., the UE is configured/indicated by the network that inter-cell operation is enabled, the UE could report to the network, via the two-part UCI following the design examples specified/described herein in the present disclosure, the inter-cell beam measurement result(s).

In another example, a dedicated higher layer parameter, e.g., denoted by "TwoPartUCIInterCell," could be provided in the higher layer parameter CSI-ReportConfig to turn on/off the two-part UCI for inter-cell beam reporting. When/if the dedicated higher layer parameter, e.g., "TwoPartUCIInterCell," is configured or set to "enabled"/"on," and/or when the UE is configured with the higher layer parameter, e.g., SSB-MTC-AdditionalPCI, i.e., the UE is configured/indicated by the network that inter-cell operation is enabled, the UE could report to the network, via the two-part UCI following the design examples specified/described herein in the present disclosure, the inter-cell beam measurement result(s).

In a fourth variation of the design examples specified herein in the present disclosure, the UE could be configured/indicated/provided by the network, e.g., via higher layer RRC signaling/parameter and/or MAC CE command and/or dynamic DCI based L1 signaling, to report to the network the beam measurement result(s) for at least the serving cell PCI and/or associated with the highest measured L1-RSRP/L1-SINR. A dedicated higher layer parameter, e.g., denoted by "BeamReportServBest," could be provided in the higher layer parameter CSI-ReportConfig for this case/-purpose. When/if the dedicated higher layer parameter, e.g., "BeamReportServBest," is configured or set to "enabled"/"on," and/or when the UE is configured with the higher layer parameter, e.g., SSB-MTC-AdditionalPCI, i.e., the UE is configured/indicated by the network that inter-cell operation is enabled, the UE could report to the network, via the two-part UCI following the design examples specified/described herein in the present disclosure, the inter-cell beam measurement result(s).

Alternatively, the UE could be configured/indicated/provided by the network, e.g., via higher layer RRC signaling/parameter and/or MAC CE command and/or dynamic DCI based L1 signaling, to report to the network the beam measurement result(s) for both the serving cell PCI and PCI(s) other than the serving cell PCI. A dedicated higher layer parameter, e.g., denoted by "BeamReportMixedServNonServ," could be provided in the higher layer parameter CSI-ReportConfig for this case/purpose. When/if the dedicated higher layer parameter, e.g., "BeamReportMixedServNon-Serv," is configured or set to "enabled"/"on," and/or when the UE is configured with the higher layer parameter, e.g., SSB-MTC-AdditionalPCI, i.e., the UE is configured/indicated by the network that inter-cell operation is enabled, the UE could report to the network, via the two-part UCI following the design examples specified/described herein in the present disclosure, the inter-cell beam measurement result(s).

In one example of the design examples specified herein in the present disclosure, when the UE is configured with the higher layer parameter, e.g., SSB-MTC-AdditionalPCI, i.e., the UE is configured/indicated by the network that inter-cell operation is enabled, and a CSI-RS resource set (such as a CSI-SSB-ResourceSet) configured for L1-RSRP reporting with one set of RS indices (such as one set of SSB indices) and one set of PCI indices included/provided therein, where each RS index (such as each SSB index) is associated with a PCI index and the set of PCI indices include at least the serving cell PCI/the PCI index pointing/associating to the serving cell PCI, the UE could report to the network, via the two-part UCI following the design examples specified/described herein in the present disclosure, the inter-cell beam measurement result(s).

In one example of the design examples specified herein in the present disclosure, when the UE is configured with the higher layer parameter, e.g., SSB-MTC-AdditionalPCI, i.e., the UE is configured/indicated by the network that inter-cell operation is enabled, and a CSI-RS resource set (such as a CSI-SSB-ResourceSet) configured for L1-RSRP reporting with one set of RS indices (such as one set of SSB indices) and one set of PCI indices included/provided therein, where each RS index (such as each SSB index) is associated with a PCI index and the set of PCI indices include at least a PCI other than the serving cell PCI or a PCI index other than the PCI index pointing/associating to the serving cell PCI, the UE could report to the network, via the two-part UCI following the design examples specified/described herein in the present disclosure, the inter-cell beam measurement result(s).

In one example of the design examples specified herein in the present disclosure, when the UE is configured with the higher layer parameter, e.g., SSB-MTC-AdditionalPCI, i.e., the UE is configured/indicated by the network that inter-cell operation is enabled, and a CSI-RS resource set (such as a CSI-SSB-ResourceSet) configured for L1-RSRP reporting with one set of RS indices (such as one set of SSB indices) and one set of PCI indices included/provided therein, where each RS index (such as each SSB index) is associated with a PCI index and the set of PCI indices include at least the serving cell PCI/the PCI index pointing/associating to the serving cell PCI and a PCI other than the serving cell PCI or a PCI index other than the PCI index pointing/associating to the serving cell PCI, the UE could report to the network, via the two-part UCI following the design examples specified/described herein in the present disclosure, the inter-cell beam measurement result(s).

In one example of the design examples specified herein in the present disclosure, when the UE is configured with the higher layer parameter, e.g., SSB-MTC-AdditionalPCI, i.e., the UE is configured/indicated by the network that inter-cell operation is enabled, and when/if the payload size of the (inter-cell) beam report/UCI is greater/larger (or lower/smaller) than a threshold, the UE could report to the network, via the two-part UCI following the design examples specified/described herein in the present disclosure, the inter-cell beam measurement result(s).

In one example of the design examples specified herein in the present disclosure, when the UE is configured with the higher layer parameter, e.g., SSB-MTC-AdditionalPCI, i.e., the UE is configured/indicated by the network that inter-cell operation is enabled, and when/if the number of PCIs - e.g., configured by the network to the UE via higher layer RRC signaling/parameter and/or MAC CE command and/or dynamic DCI based L1 signaling - and/or the number of the corresponding RS resources such as SSBs and CSI-RSs configured for (inter-cell) beam measurement/reporting is greater/larger (or smaller/lower) than a threshold, the UE could report to the network, via the two-part UCI following the design examples specified/described herein in the present disclosure, the inter-cell beam measurement result(s).

In one example of the design examples specified herein in the present disclosure, when the UE is configured with the higher layer parameter, e.g., SSB-MTC-AdditionalPCI, i.e., the UE is configured/indicated by the network that inter-cell operation is enabled, and when/if the (total) number of beam reports including resource indicator(s) and beam metric(s) - e.g., configured by the network to the UE via higher layer RRC signaling/parameter and/or MAC CE command and/or dynamic DCI based L1 signaling - for (inter-cell) beam reporting is greater/larger (or smaller/lower) than a threshold, the UE could report to the network, via the two-part UCI following the design examples specified/described herein in the present disclosure, the inter-cell beam measurement result(s).

In one example of the design examples specified herein in the present disclosure, when the UE is configured with the higher layer parameter, e.g., SSB-MTC-AdditionalPCI, i.e., the UE is configured/indicated by the network that inter-cell operation is enabled, and when/if the number of beam reports per PCI (e.g., the serving cell PCI or PCI(s) other than the serving cell PCI) including resource indicator(s) and beam metric(s) - e.g., configured by the network to the UE via higher layer RRC signaling/parameter and/or MAC CE command and/or dynamic DCI based L1 signaling - for (inter-cell) beam reporting is greater/larger (or smaller/lower) than a threshold, the UE could report to the network, via the two-part UCI following the design examples specified/described herein in the present disclosure, the inter-cell beam measurement result(s).

In one example of the design examples specified herein in the present disclosure, when the UE is configured with the higher layer parameter, e.g., SSB-MTC-AdditionalPCI, i.e., the UE is configured/indicated by the network that inter-cell operation is enabled, and when/if the number of beam reports for one or more PCIs (e.g., the serving cell PCI and/or PCI(s) other than the serving cell PCI) including resource indicator(s) and beam metric(s) - e.g., configured by the network to the UE via higher layer RRC signaling, the UE could report to the network, via the two-part UCI following the design examples specified/described herein in the present disclosure, the inter-cell beam measurement result(s).

The UE could be provided/indicated/configured by the network, e.g., via higher layer RRC signaling/parameter and/or MAC CE command and/or dynamic DCI based L1 signaling, the threshold discussed/described in the design examples in the present disclosure.

Throughout the present disclosure, when/if the UE is configured/provided by the network a CSI-RS resource set (such as a CSI-SSB-ResourceSet) configured for L1-RSRP reporting with one set of RS indices (such as one set of SSB indices) and one set of PCI indices included/provided therein, where each RS index (such as each SSB index) is associated with a PCI index and the set of PCI indices include at least the serving cell PCI/the PCI index pointing/associating to the serving cell PCI and a PCI other than the serving cell PCI or a PCI index other than the PCI index pointing/associating to the serving cell PCI, the UE could report in a single CSI report/reporting instance resource indicator(s) and beam metric(s) for both the serving cell PCI and PCI(s) other than the serving cell PCI in the same frequency (i.e., intra-frequency operation/system) and/or across different frequencies (i.e., inter-frequency operation/-system).

In one example, the inter-cell beam reporting could be multiplexed with other types of CSI or beam reports, wherein whether one-part or two-part UCI is used for beam reporting could depend on the other CSI or beam reports. For example, the two-part UCI is used only when at least one of the other CSI or beam reports is configured with a two-part UCI.

In one example, the UL channel for the inter-cell beam reporting (via two-part UCI) can be fixed, e.g., to PUSCH (e.g., on/via/in MAC CE). In one example, the UL channel for group based beam reporting (via two-part UCI) can be fixed, e.g., to PUCCH. In one example, the UL channel for group based beam reporting (via two-part UCI) can be configured from PUCCH and PUSCH (e.g., on/via/in MAC CE).

In one example, the inter-cell beam reporting (via two-part UCI) can be configured via higher layer RRC signaling. In one example, the group based beam reporting (via two-part UCI) can only be triggered via a code point in DCI (UL-related or DL-related DCI).

In a multiple TRP system depicted in FIGURE 8, the UE could simultaneously receive from multiple physically non-co-located TRPs various channels/RSs such as PDCCHs and/or PDSCHs using either a single receive (RX) panel or multiple RX panels. In this disclosure, a RX panel could correspond to a set of RX antenna elements/ports at the UE, a set of measurement RS resources such as SRS resources, a spatial domain RX filter or etc. Further, a TRP in the multi-TRP system can represent a collection of measurement antenna ports, measurement RS resources and/or control resource sets (CORESETs).

For example, a TRP could be associated with one or more of: (1) a plurality of CSI-RS resources; (2) a plurality of CRIs (CSI-RS resource indices/indicators); (3) a measurement RS resource set, for example, a CSI-RS resource set along with its indicator; (4) a plurality of CORESETs associated with a CORESETPoolIndex; and (5) a plurality of CORESETs associated with a TRP-specific index/indicator/identity.

A cell/TRP could be a non-serving cell/TRP. In this disclosure, the non-serving cell(s) or the non-serving cell TRP(s) could have/broadcast different physical cell IDs (PCIs) and/or other higher layer signaling index values from that of the serving cell or the serving cell TRP (i.e., the serving cell PCI). In one example, the serving cell or the serving cell TRP could be associated with the serving cell ID (SCI) and/or the serving cell PCI. That is, for the inter-cell operation considered in the present disclosure, different cells/TRPs could broadcast different PCIs and/or one or more cells/TRPs (referred to/defined as non-serving cells/TRPs in the present disclosure) could broadcast different PCIs from that of the serving cell/TRP (i.e., the serving cell PCI) and/or one or more cells/TRPs are not associated with valid SCI (e.g., provided by the higher layer parameter ServCellIndex). In the present disclosure, a non-serving cell PCI can also be referred to as an additional PCI, another PCI or a different PCI (with respect to the serving cell PCI).

The UE could be configured by the network one or more transmission configuration information (TCI) states, which indicate the QCL information/assumptions for one or more RSs/channels such as PDCCHs and/or PDSCHs. The TCI state update/indication for PDCCH and/or PDSCH can also be referred to as beam indication. For instance, for data transmissions on the shared channel (such as the physical downlink shared channel in NR, i.e. PDSCH), the corresponding beam indication procedure under the 3GPP Rel. 15/16 TCI framework can be summarized as follows: a UE can be first higher layer configured by the network (e.g., via high layer RRC signaling) a set/pool of TCI states; the UE could then receive from the network a MAC CE command activating one or more TCI states from the set/pool of RRC configured TCI states; the UE could be indicated by the network via dynamic DCI signaling that one or more of the MAC CE activated TCI states are active for the reception of the PDSCH(s).

Under the Rel. 17 unified TCI framework, wherein a UE could be provided by the network one or more separate/joint DL or UL TCI state for various DL or UL channels/signals, various design aspects related to beam indication for control resource sets (CORESETs) especially CORESET with index 0 need to be specified.

As described in the U.S. Patent Application 17/584,239 incorporated by reference, in its entirety, a unified TCI framework could indicate/include N≥1 DL TCI states and/or M≥1 UL TCI states, wherein the indicated TCI state could be at least one of: (1) a DL TCI state and/or its corresponding/associated TCI state ID; (2) an UL TCI state and/or its corresponding/associated TCI state ID; (3) a joint DL and UL TCI state and/or its corresponding/associated TCI state ID; and (4) separate DL TCI state and UL TCI state and/or their corresponding/associated TCI state ID(s)

There could be various design options/channels to indicate to the UE a beam (i.e., a TCI state) for the transmission/reception of a PDCCH or a PDSCH. As described in the U.S. Patent Application 17/584,239 incorporated by reference, in its entirety, in one example, a MAC CE could be used to indicate to the UE a beam (i.e., a TCI state and/or a TCI state ID) for the transmission/reception of a PDCCH or a PDSCH. In another example, a DCI could be used to indicate to the UE a beam (i.e., a TCI state and/or a TCI state ID) for the transmission/reception of a PDCCH or a PDSCH. In such examples: (1) a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment; (2) an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant; and (3) a custom/purpose designed DCI format could be used to indicate to the UE a beam (i.e., a TCI state and/or a TCI state ID) for the transmission/reception of a PDCCH or a PDSCH.

Rel-17 introduced the unified TCI framework, where a unified or master or main TCI state is signaled to the UE. The unified or master or main TCI state can be one of: (1) in case of joint TCI state indication, wherein a same beam is used for DL and UL channels, a joint TCI state that can be used at least for UE-dedicated DL channels and UE-dedicated UL channels; (2) in case of separate TCI state indication, wherein different beams are used for DL and UL channels, a DL TCI state can be used at least for UE-dedicated DL channels; and (3) in case of separate TCI state indication, wherein different beams are used for DL and UL channels, a UL TCI state can be used at least for UE-dedicated UL channels.

The unified (master or main) TCI state is TCI state of UE-dedicated reception on PDSCH/PDCCH or dynamic-grant/configured-grant based PUSCH and all of dedicated PUCCH resources.

In the present disclosure, the TCI state/beam indication for the PUSCH(s)/PUCCH(s) repetition in a multi-TRP system is discussed under the Rel. 17 unified TCI framework, wherein one or more DL/UL TCI states could be separately/jointly indicated in various channels such as MAC CE and/or DCI (e.g., DCI format 1_1 or 1_2 with or without DL assignment). The UE could transmit the same PUSCH(s)/PUCCH(s) to different TRPs in the multi-TRP system using different time domain resources and/or different frequency domain resources and/or different spatial domain filters.

As illustrated in FIGURE 9, an example of MAC CE based Rel. 17 unified TCI state/beam indication for the multi-TRP operation is presented. As illustrated in FIGURE 9, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE commands to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single MAC CE command for beam indication to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system.

The MAC CE for beam indication could include at least a Rel. 17 unified TCI state ID. As discussed above, the Rel.17 unified TCI state corresponding to the TCI state ID could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the MAC CE command(s) and the TRPs in the multi-TRP system needs to be specified. There could be various means to associate/map the TCI state(s)/beam(s) indicated in the MAC CE command(s) for beam indication and the TRPs in the multi-TRP system.

For N>1 TCI states/beams indication in a single MAC CE command for beam indication, following examples can be provided.

In one example, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the MAC CE command for beam indication could correspond to the first entry/TRP in the list/set/pool of TRP-specific ID/index values, the second TCI state and/or the TCI state with the second lowest TCI state ID value indicated in the MAC CE command for beam indication could correspond to the second entry/TRP in the list/set/pool of TRP-specific ID/index values, and so on, and the last TCI state and/or the TCI state with the highest TCI state ID value indicated in the MAC CE command for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the MAC CE command for beam indication could correspond to the first MAC CE(s)/bitmap(s) activated TRP-specific ID/index value, the second TCI state and/or the TCI state with the second lowest TCI state ID value indicated in the MAC CE command for beam indication could correspond to the second MAC CE(s)/bitmap(s) activated TRP-specific ID/index value, and so on, and the last TCI state and/or the TCI state with the highest TCI state ID value indicated in the MAC CE command for beam indication could correspond to the last MAC CE(s)/bitmap(s) activated TRP-specific ID/index value. Other exact association/mapping relationships between the TCI states/beams indicated in the MAC CE command for beam indication and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the TCI states/beams indicated in the MAC CE command for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the MAC CE command for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the MAC CE command for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the MAC CE command for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the MAC CE command for beam indication could correspond to the TRP with the highest/highest MAC CE activated TRP-specific ID/index value such as the highest PCI value and/or the last TRP (e.g., TRP #N), the second TCI state and/or the TCI state with the second lowest TCI state ID value indicated in the MAC CE command for beam indication could correspond to the TRP with the second highest/second highest MAC CE activated TRP-specific ID/index value such as the second highest PCI value and/or the second last TRP (e.g., TRP #N-1), and so on, and the last TCI state and/or the TCI state with the highest TCI state ID value indicated in the MAC CE command for beam indication could correspond to the TRP with the lowest/lowest MAC CE activated TRP-specific ID/index value such as the lowest PCI value and/or the first TRP (e.g., TRP #1). Other implicit indication methods of the association/mapping between the N>1 TCI states/beams indicated in the MAC CE command for beam indication and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the MAC CE command for beam indication could correspond to the first entry/CORESETPoolIndex value in the list/set/pool of CORESETPoolIndex values, the second TCI state and/or the TCI state with the second lowest TCI state ID value indicated in the MAC CE command for beam indication could correspond to the second entry/CORESETPoolIndex value in the list/set/pool of CORESETPoolIndex values, and so on, and the last TCI state and/or the TCI state with the highest TCI state ID value indicated in the MAC CE command for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the MAC CE command for beam indication could correspond to the first MAC CE(s)/bitmap(s) activated CORESETPoolIndex value, the second TCI state and/or the TCI state with the second lowest TCI state ID value indicated in the MAC CE command for beam indication could correspond to the second MAC CE(s)/bitmap(s) activated CORESETPoolIndex value, and so on, and the last TCI state and/or the TCI state with the highest TCI state ID value indicated in the MAC CE command for beam indication could correspond to the last MAC CE(s)/bitmap(s) activated CORESETPoolIndex value. Other exact association/mapping relationships between the TCI states/beams indicated in the MAC CE command for beam indication and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the TCI states/beams indicated in the MAC CE command for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the MAC CE command for beam indication could correspond to the lowest/lowest MAC CE activated CORESETPoolIndex value such as "0," the second TCI state and/or the TCI state with the second lowest TCI state ID value indicated in the MAC CE command for beam indication could correspond to the second lowest/second lowest MAC CE activated CORESETPoolIndex value such as "1," and so on, and the last TCI state and/or the TCI state with the highest TCI state ID value indicated in the MAC CE command for beam indication could correspond to the highest/highest MAC CE activated CORESETPoolIndex value such as "N-1."

For another example, the first TCI state and/or the TCI state with the lowest TCI state ID value indicated in the MAC CE command for beam indication could correspond to the highest/highest MAC CE activated CORESETPoolIndex value such as "N-1," the second TCI state and/or the TCI state with the second lowest TCI state ID value indicated in the MAC CE command for beam indication could correspond to the second highest/second highest MAC CE activated CORESETPoolIndex value such as "N-2," and so on, and the last TCI state and/or the TCI state with the highest TCI state ID value indicated in the MAC CE command for beam indication could correspond to the lowest/lowest MAC CE activated CORESETPoolIndex value such as "0." Other implicit indication methods of the association/mapping between the N>1 TCI states/beams indicated in the MAC CE command for beam indication and the CORESETPoolIndex values are also possible.

In yet another example, a TCI state, e.g., the higher layer parameter TCI-State, indicated in the MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the MAC CE command for Rel. 17 unified TCI state/beam indication could include/-

comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same MAC CE command for Rel. 17 unified TCI state/beam indication, where n∈{1,..., N} or m∈{1,..., M}.

For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same MAC CE command for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same MAC CE command for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For a list/set/pool of N>1 MAC CE commands for beam indication with each MAC CE command indicating a single TCI state/beam; a unique entity ID/index could be included/incorporated in each MAC CE command for beam indication.

In one example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of TRP-specific ID/index values such as PCIs. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/TRP in the list/set/pool of TRP-specific ID/index values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/TRP in the list/set/pool of TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first MAC CE command for beam indication in the list/set/pool of N>1 MAC CE commands for beam indication and/or the MAC CE command indicating the lowest entity ID/index value and/or the MAC CE command for beam indication indicating the TCI state with the lowest TCI state ID value could correspond to the first MAC CE(s)/bitmap(s) activated TRP-specific ID/index values, the second MAC CE command for beam indication in the list/set/pool of N>1 MAC CE commands for beam indication and/or the MAC CE command for beam indication indicting the second lowest entity ID/index value and/or the MAC CE command for beam indication indicating the TCI state with the second lowest TCI state ID value could correspond to the second MAC CE(s)/bitmap(s) activated TRP-specific ID/index values, and so on, and the last MAC CE command for beam indication in the list/set/pool of N> 1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated TRP-specific ID/index values. Other exact association/mapping relationships between the MAC CE commands for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the MAC CE commands for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the lowest/lowest MAC CE activated TRP-specific ID/index value such as the lowest PCI value and/or the first TRP (e.g., TRP #1), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the TRP with the highest/highest MAC CE activated TRP-specific ID/index value such as the highest PCI value and/or the last TRP (e.g., TRP #N).

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the highest/highest MAC CE activated TRP-specific ID/index value such as the highest PCI value and/or the last TRP (e.g., TRP #N), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second highest/second highest MAC CE activated TRP-specific ID/index value such as the second highest PCI value and/or the second last TRP (e.g., TRP #N-1), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the TRP with the lowest/lowest MAC CE activated TRP-specific ID/index value such as the lowest PCI value and/or the first TRP (e.g., TRP #1). Other implicit indication methods of the association/mapping between the N>1 MAC CE commands for beam indication (and therefore, the TCI states/beams indicated therein) and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of CORESETPoolIndex values - e.g., a set of two CORESETPoolIndex values 0 and 1. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/CORESETPoolIndex value in the list/set/pool of CORESETPoolIndex values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/CORESETPoolIndex value in the list/set/pool of CORESETPoolIndex values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first MAC CE(s)/bitmap(s) activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second MAC CE(s)/bitmap(s) activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated CORESETPoolIndex value. Other exact association/mapping relationships between the MAC CE commands for beam indication (and therefore, the TCI states/beams indicated therein) and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the MAC CE commands for beam indication (and therefore, the TCI states/beams indicated therein) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the lowest/lowest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second lowest/second lowest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the highest/highest MAC CE activated CORESETPoolIndex value.

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the highest/highest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second highest/second highest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the lowest/lowest MAC CE activated CORESETPoolIndex value. Other implicit indication methods of the association/mapping between the N>1 MAC CE commands for beam indication (and therefore, the TCI states/beams indicated therein) and the CORESETPoolIndex values are also possible.

In yet another example, a MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The MAC CE command for beam indication may indicate/update the corresponding TCI state(s) for the TRP(s) associated with the same ID/index value, e.g., the CORESETPoolIndex value, as that indicated in the MAC CE command for beam indication.

In yet another example, a MAC CE command for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same MAC CE command for Rel. 17 unified TCI state/beam indication, where $n \in \{1,..., N\}$ or $m \in \{1,..., M\}$.

For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same MAC CE command for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same MAC CE command for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

In FIGURE 10, an example of DCI based Rel. 17 unified TCI state/beam indication for the multi-TRP operation is presented. As illustrated in FIGURE 10, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more DCIs (e.g., DCI format 1_1 or 1_2 with or without DL assignment) to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI (e.g., DCI format 1_1 or 1_2 with or without DL assignment) to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system.

As described above, a DCI used to indicate to the UE a beam (i.e., a TCI state and/or a TCI state ID) for the transmission/reception of a PDCCH or a PDSCH could be at least one of the following examples.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

In yet another example, a custom/purpose designed DCI format could be used to indicate to the UE a beam (i.e., a TCI state and/or a TCI state ID) for the transmission/reception of a PDCCH or a PDSCH.

Furthermore, the Rel. 17 unified TCI state indicated in the DCI for beam indication could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the DCI(s) and the TRPs in the multi-TRP system needs to be specified. There could be various means to associate/map the TCI state(s)/beam(s) indicated in the DCI(s) and the TRPs in the multi-TRP system.

For N>1 TCI states/beams indication in a single DCI, following examples can be provided.

In one example, the UE could be explicitly indicated by the network, e.g., via higher layer RRC signaling and/or MAC CE command and/or dynamic DCI signaling, the exact association/mapping between the TCI states/beams indicated in the DCI and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the TCI states/beams indicated in the DCI for beam indication and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the TCI states/beams indicated in the DCI for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the DCI for beam indication could correspond to the TRP with the highest/highest MAC CE activated TRP-specific ID/index value such as PCI value, the second TCI state and/or the TCI state with the second lowest TCI state ID value indicated in the DCI for beam indication could correspond to the TRP with the second highest/second highest MAC CE activated TRP-specific ID/index value such as PCI value, and so on, and the last TCI state and/or the TCI state with the highest TCI state ID value indicated in the DCI for beam indication could correspond to the TRP with the lowest/lowest MAC CE activated TRP-specific ID/index value such as PCI value. Other implicit indication methods of the association/mapping between the N>1 TCI states/beams indicated in the DCI and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the TCI states/beams indicated in the DCI for beam indication and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value. Other exact association/mapping relationships between the TCI states/beams indicated in the DCI for beam indication and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the TCI states/beams indicated in the DCI for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the DCI for beam indication could correspond to the lowest/lowest MAC CE activated CORESETPoolIndex value such as "0," the second TCI state and/or the TCI state with the second lowest TCI state ID value indicated in the DCI for beam indication could correspond to the second lowest/second lowest MAC CE activated CORESETPoolIndex value such as "1," and so on, and the last TCI state and/or the TCI state with the highest TCI state ID value indicated in the DCI for beam indication could correspond to the highest/highest MAC CE activated CORESETPoolIndex value such as "N-1."

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N>1 TCI states/beams indicated in the DCI for beam indication and the CORESETPoolIndex values are also possible.

In yet another example, a TCI state, e.g., the higher layer parameter TCI-State, indicated in the DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the DCI (e.g., DCI format 1_1 or 1_2 with or without DL assignment) for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same DCI (e.g., DCI format 1_1 or 1_2 with or without DL assignment) for Rel. 17 unified TCI state/beam indication, where n∈{1,..., N} or m∈{1,..., M}.

For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For N>1 DCIs with each DCI indicating a single TCI state/beam, following examples can be provided.

In one example, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein) and the TRPs in the multi-TRP system. For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values. Other exact association/mapping relationships between the DCIs for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCIs for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N).

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as PCI value, the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as PCI value, and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as PCI value. Other implicit indication methods of the association/mapping between the N>1 DCIs for beam indication (and therefore, the TCI states/beams indicated therein) and the TRPs in the multi-TRP system are also possible.

In yet another example, a DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication may indicate/update the corresponding TCI state(s) for the TRP(s) associated with the same ID/index value, e.g., the CORESETPoolIndex value, as that indicated in the DCI for beam indication.

In yet another example, a DCI (e.g., DCI format 1_1 or 1_2 with or without DL assignment) for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same DCI (e.g., DCI format 1_1 or 1_2 with or without DL assignment) for Rel. 17 unified TCI state/beam indication, where $n \in \{1,..., N\}$ or $m \in \{1,..., M\}$.

For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

In FIGURE 11, an example of Rel. 17 DCI based TCI state/beam indication (with MAC CE activated TCI states) for the multi-TRP operation is presented. As illustrated in FIGURE 11, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE activation commands activating one or more TCI states from the higher layer configured list/pool of TCI states, e.g., up to eight TCI states could be activated by a MAC CE activation command. The UE could receive from the network one or more DCIs to indicate one or more beam(s) (i.e., the Rel. 17 unified TCI state(s)) from the MAC CE activated TCI state(s)/beam(s) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI to indicate M'>1 Rel. 17 unified TCI states/beams (e.g., M'>1 joint DL and UL TCI states or M'>1 separate UL TCI states) from the MAC CE activated TCI states/beams for the same PUSCH(s)/PUCCH(s) transmitted to/associated with different TRPs in the multi-TRP system.

As described above, a DCI used to indicate to the UE a beam (i.e., a TCI state and/or a TCI state ID) for the transmission/reception of a PDCCH or a PDSCH could be at least one of the following examples.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

In yet another example, a custom/purpose designed DCI format could be used to indicate to the UE a beam (i.e., a TCI state and/or a TCI state ID) for the transmission/reception of a PDCCH or a PDSCH.

Furthermore, the Rel. 17 unified TCI state indicated in the DCI for beam indication could be at least one of: (1) a DL TCI state; (2) an UL TCI state; (3) A joint DL and UL TCI state; and 4) separate DL TCI state and UL TCI state.

The association/mapping between the DCI(s) indicated TCI state(s)/beam(s) - from the MAC CE activated TCI state(s)/beam(s) - and the TRPs in the multi-TRP system needs to be specified. There could be various means to associate/map the DCI(s) indicated TCI state(s)/beam(s) - from the MAC CE activated TCI state(s)/beam(s) - and the TRPs in the multi-TRP system.

For N'>1 TCI states/beams indication in a single DCI, following examples can be provided.

In one example, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the DCI indicated TCI states/beams (selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCI indicated TCI states/beams (selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N').

For another example, the first TCI state and/or the TCI state with the lowest TCI state ID value indicated in the DCI for beam indication could correspond to the TRP with the highest/highest MAC CE activated TRP-specific ID/index value such as the highest PCI value and/or the last TRP (e.g., TRP #N'), the second TCI state and/or the TCI state with the second lowest TCI state ID value indicated in the DCI for beam indication could correspond to the TRP with the second highest/second highest MAC CE activated TRP-specific ID/index value such as the second highest PCI value and/or the second last TRP (e.g., TRP #N'-1), and so on, and the last TCI state and/or the TCI state with the highest TCI state ID value indicated in the DCI for beam indication could correspond to the TRP with the lowest/lowest MAC CE activated TRP-specific ID/index value such as the lowest PCI value and/or the first TRP (e.g., TRP #1). Other implicit indication methods of the association/mapping between the N'>1 DCI indicated TCI states/beams (selected from the MAC CE activated TCI states/beams) and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value. Other exact association/mapping relationships between the DCI indicated TCI states/beams (selected from the MAC CE activated TCI states/beams) and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the DCI indicated TCI states/beams (selected from the MAC CE activated TCI states/beams) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the DCI for beam indication could correspond to the lowest/lowest MAC CE activated CORESETPoolIndex value such as "0," the second TCI state and/or the TCI state with the second lowest TCI state ID value indicated in the DCI for beam indication could correspond to the second lowest/second lowest MAC CE activated CORESETPoolIndex value such as "1," and so on, and the last TCI state and/or the TCI state with the highest TCI state ID value indicated in the DCI for beam indication could correspond to the highest/highest MAC CE activated CORESETPoolIndex value such as "N-1."

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N'>1 DCI indicated TCI states/beams (selected from the MAC CE activated TCI states/beams) and the CORESETPoolIndex values are also possible.

In yet another example, a TCI state (selected from the MAC CE activated TCI states/beams), e.g., the higher layer parameter TCI-State, indicated in the DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the DCI (e.g., DCI format 1_1 or 1_2 with or without DL assignment) for Rel. 17 unified TCI state/beam indication could include/comprise/incorporate at least one (e.g., N'>1 or M'>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n'-th or m'-th TCI state (e.g., the n'-th or m'-th joint DL and UL TCI state or separate DL TCI state or separate UL TCI state) among/within the indicated N'>1 or M'>1 Rel. 17 unified TCI states (selected from the MAC CE activated TCI states/beams) could be associated with the n'-th or m'-th entity ID/index indicated in the same DCI (e.g., DCI format 1_1 or 1_2 with or without DL assignment) for Rel. 17 unified TCI state/beam indication, where n'∈{1,..., N'} or m'E {1,..., M'}.

For instance, the first TCI state in the indicated N'=2 or M'=2 Rel. 17 unified TCI states selected from the MAC CE activated TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N'=2 or M'=2 Rel. 17 unified TCI states selected from the MAC CE activated TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For N'>1 DCIs with each DCI indicating a single TCI state/beam, following examples can be provided.

In one example, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein - selected from the MAC CE activated TCI states/beams) and the TRPs in the multi-TRP system. For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values. Other exact association/mapping relationships between the DCIs for beam indication (and therefore, the TCI states/beams indicated therein - selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCIs for beam indication (and therefore, the TCI states/beams indicated therein - selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N').

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as the highest PCI value and/or the last TRP (e.g., TRP #N'), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as the second highest PCI value and/or the second last TRP (e.g., TRP #N'-1), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as the lowest PCI value and/or the first TRP (e.g., TRP #1). Other implicit indication methods of the association/mapping between the N'>1 DCIs for beam indication (and therefore, the TCI states/beams indicated therein - selected from the MAC CE activated TCI states/beams) and the TRPs in the multi-TRP system are also possible.

In yet another example, a DCI for beam indication (indicating the TCI state(s)/beam(s) selected from the MAC CE activated TCI states/beams) could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication (indicating the TCI state(s)/beam(s) selected from the MAC CE activated TCI states/beams) may indicate/update the corresponding TCI state(s) for the TRP(s) associated with the same ID/index value, e.g., the CORESETPoolIndex value, as that indicated in the DCI for beam indication (indicating the TCI state(s)/beam(s) selected from the MAC CE activated TCI states/beams).

In yet another example, a DCI (e.g., DCI format 1_1 or 1_2 with or without DL assignment) for Rel. 17 unified TCI state/beam indication could include/comprise/incorporate at least one (e.g., N'>1 or M'>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the $n'$-th or $m'$-th TCI state (e.g., the $n'$-th or $m'$-th joint DL and UL TCI state or separate DL TCI state or separate UL TCI state) among/within the indicated N'>1 or M'>1 Rel. 17 unified TCI states (selected from the MAC CE activated TCI states/beams) could be associated with the $n'$-th or $m'$-th entity ID/index indicated in the same DCI (e.g., DCI format 1_1 or 1_2 with or without DL assignment) for Rel. 17 unified TCI state/beam indication, where $n' \in \{1,..., N'\}$ or $m' \in \{1,..., M'\}$.

For instance, the first TCI state in the indicated N'=2 or M'=2 Rel. 17 unified TCI states selected from the MAC CE activated TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N'=2 or M'=2 Rel. 17 unified TCI states selected from the MAC CE activated TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

In a single-DCI (sDCI) based multi-TRP system, if a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate DL Rel. 17 unified TCI states and separate UL Rel. 17 unified TCI states via MAC CE or DCI (e.g., DCI format 1_1 or 1_2 with or without DL assignment) based signaling,

In one example, a DM-RS antenna port for PDCCH receptions in a CORESET associated only with USS sets, and a DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in one or more of the indicated Rel. 17 unified TCI states.

For example, the DM-RS antenna port for PDCCH receptions in the CORESET associated only with USS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID; alternatively, the DM-RS antenna port for PDCCH receptions in the CORESET associated only with USS sets, and the DM-RS antenna port for PDSCH receptions scheduled by DCI formats provided by PDCCH receptions in the CORESET, or a spatial filter for respective PUCCH/-PUSCH transmissions could be quasi co-located with or spatially related to reference signals provided in the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

For another example, the UE could be provided by the network, e.g., via higher layer RRC signalling/parameter and/or MAC CE command and/or dynamic DCI based L1 signaling, an index corresponding/pointing to a TCI state among/within the indicated M>1 or N>1 Rel. 17 unified TCI states for a CORESET associated only with USS sets. If the UE is provided by the network, e.g., via higher layer RRC signalling/parameter and/or MAC CE command and/or dynamic DCI based L1 signaling, a TCI state index m (mE { 1,..., M}) or n (nE { 1,..., N}) for the CORESET, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

Yet for another example, the UE could be provided by the network, e.g., via higher layer RRC signalling and/or MAC CE command and/or dynamic DCI based L1 signaling, a higher layer parameter useIndicatedr17TCIState or a TCI state ID for a CORESET associated only with USS sets. If the useIndicatedr17TCIstate is enabled or the TCI state ID corresponds/points to the indicated Rel. 17 unified TCI state(s), the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions are quasi co-located with or spatially related to reference signals provided in one or more of the indicated Rel. 17 unified TCI states.

For this case, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID; alternatively, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the second joint DL and UL TCI state or the second separate UL TCI state or the second separate DL TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

Yet for another example, the UE could be provided by the network, e.g., via higher layer RRC signalling/parameter and/or MAC CE command and/or dynamic DCI based L1 signaling, a higher layer parameter useIndicatedr17TCIState or a TCI state ID for a CORESET associated only with USS sets. Furthermore, the UE could also be provided by the network, e.g., via higher layer RRC signalling/parameter and/or MAC CE command and/or dynamic DCI based L1 signaling, an index corresponding/pointing to a TCI state among/within the indicated M>1 or N>1 Rel. 17 unified TCI states for the CORESET. If the useIndicatedr17TCIstate is enabled or the TCI state ID corresponds/points to the indicated Rel. 17 unified TCI state(s), the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions are quasi co-located with or spatially related to reference signals provided in one or more of the indicated Rel. 17 unified TCI states.

For this case, if the UE is provided by the network, e.g., via higher layer RRC signalling/parameter and/or MAC CE command and/or dynamic DCI based L1 signaling, a TCI state index m (m∈{1,..., M}) or n (n∈{1,..., N}) for the CORESET, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/-PUSCH transmissions could be quasi co-located with or spatially related to reference signals provided in the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

Yet for another example, the DM-RS antenna port for PDCCH receptions in the CORESET associated only with USS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in one or more of the indicated Rel. 17 unified TCI states if the CORESET and the one or more of the indicated Rel. 17 unified TCI states are associated with a same entity ID/index. In the present disclosure, the entity ID/index could correspond to a PCI value, a PCI index corresponding/pointing to a PCI value in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. The association between a CORESET and an entity ID/index could be via indicating/including the entity ID/index in the parameter, e.g., the higher layer parameter ControlResourceSet, that configures the CORESET. The association between a Rel. 17 unified TCI state and an entity ID/index could follow those specified in the above discussed design examples in the present disclosure.

In another example, a DM-RS antenna port for PDCCH receptions in a CORESET associated only with CSS sets such as Type0/0A/1/2/3-PDCCH CSS sets, and a DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in one or more of the indicated Rel. 17 unified TCI states.

For example, the DM-RS antenna port for PDCCH receptions in the CORESET associated only with CSS sets such as Type0/0A/1/2/3-PDCCH CSS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID; alternatively, the DM-RS antenna port for PDCCH receptions in the CORESET associated only with CSS sets such as Type0/0A/1/2/3-PDCCH CSS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

For another example, the UE could be provided by the network, e.g., via higher layer RRC signalling/parameter and/or MAC CE command and/or dynamic DCI based L1 signaling, an index corresponding/pointing to a TCI state among/within the indicated M>1 or N>1 Rel. 17 unified TCI states for a CORESET associated only with CSS sets such as Type0/0A/1/2/3-PDCCH CSS sets. If the UE is provided by the network, e.g., via higher layer RRC signalling/parameter and/or MAC CE command and/or dynamic DCI based L1 signaling, a TCI state index m ($m \in \{1,..., M\}$) or n ($n \in \{1,..., N\}$) for the CORESET, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

Yet for another example, the UE could be provided by the network, e.g., via higher layer RRC signalling/parameter and/or MAC CE command and/or dynamic DCI based L1 signaling, a higher layer parameter useIndicatedr17TCIState or a TCI state ID for a CORESET associated only with CSS sets such as Type0/0A/1/2/3-PDCCH CSS sets. If the useIndicatedr17TCIstate is enabled or the TCI state ID corresponds/points to the indicated Rel. 17 unified TCI state(s), the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/-PUSCH transmissions are quasi co-located with or spatially related to reference signals provided in one or more of the indicated Rel. 17 unified TCI states.

For this case, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID; alternatively, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

Yet for another example, the UE could be provided by the network, e.g., via higher layer RRC signalling/parameter and/or MAC CE command and/or dynamic DCI based L1 signaling, a higher layer parameter useIndicatedr17TCIState or a TCI state ID for a CORESET associated only with CSS sets such as Type0/0A/1/2/3-PDCCH CSS sets. Furthermore, the UE could also be provided by the network, e.g., via higher layer RRC signalling/parameter and/or MAC CE command and/or dynamic DCI based L1 signaling, an index corresponding/pointing to a TCI state among/within the indicated M>1 or N>1 Rel. 17 unified TCI states for the CORESET. If the useIndicatedr17TCIstate is enabled or the TCI state ID corresponds/points to the indicated Rel. 17 unified TCI state(s), the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in one or more of the indicated Rel. 17 unified TCI states. For this case, if the UE is provided by the network, e.g., via higher layer RRC signalling/parameter and/or MAC CE command and/or dynamic DCI based L1 signaling, a TCI state index m (mE { 1,..., M}) or n (nE { 1,..., N}) for the CORESET, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

Yet for another example, the DM-RS antenna port for PDCCH receptions in the CORESET associated only with CSS sets such as Type0/0A/1/2/3-PDCCH CSS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in one or more of the indicated Rel. 17 unified TCI states if the CORESET and the one or more of the indicated Rel. 17 unified TCI states are associated with a same entity ID/index. In the present disclosure, the entity ID/index could correspond to a PCI value, a PCI index corresponding/pointing to a PCI value in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. The association between a CORESET and an entity ID/index could be via indicating/including the entity ID/index in the parameter, e.g., the higher layer parameter ControlResourceSet, that configures the CORESET. The association between a Rel. 17 unified TCI state and an entity ID/index could follow those specified in the above discussed design examples in the present disclosure.

In some cases, e.g., configured/indicated by the network, for Type3-PDCCH CSS sets, following examples can be provided.

In one example, if the Type-3 PDCCH CSS sets are configured for a PCell or PSCell, the QCL assumptions for the DM-RS antenna port for PDCCH receptions in the CORESET associated with the Type3-PDCCH CSS sets, and the DM-RS antenna port for PDSCH receptions scheduled by DCI formats provided by PDCCH receptions in the CORESET, or the spatial relation assumptions for respective PUCCH/PUSCH transmissions could follow those specified in the examples provided in the present disclosure.

In another example, if the Type-3 PDCCH CSS sets are configured for a SCell, the QCL assumptions for the DM-RS antenna port for PDCCH receptions in the CORESET associated with the Type3-PDCCH CSS sets, and the DM-RS antenna port for PDSCH receptions scheduled by DCI formats provided by PDCCH receptions in the CORESET, or the spatial relation assumptions for respective PUCCH/PUSCH transmissions could follow those specified in the examples provided in the present disclosure.

Regardless of whether the Type-3 PDCCH CSS sets are configured for a PCell or PSCell or a SCell, the QCL assumptions for the DM-RS antenna port for PDCCH receptions in the CORESET associated with the Type3-PDCCH CSS sets, and the DM-RS antenna port for PDSCH receptions scheduled by DCI formats provided by PDCCH receptions in the CORESET, or the spatial relation assumptions for respective PUCCH/PUSCH transmissions could follow those specified in examples provided in the present disclosure.

In yet another example, a DM-RS antenna port for PDCCH receptions in a CORESET associated with both USS sets and CSS sets such as Type0/0A/1/2/3-PDCCH CSS sets, and a DM-RS antenna port for PDSCH receptions scheduled by DCI formats provided by PDCCH receptions in the CORESET, or a spatial filter for respective PUCCH/-PUSCH transmissions could be quasi co-located with or spatially related to reference signals provided in one or more of the indicated Rel. 17 unified TCI states.

For example, the DM-RS antenna port for PDCCH receptions in the CORESET associated with both USS sets and CSS sets such as Type0/0A/1/2/3-PDCCH CSS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID; alternatively, the DM-RS antenna port for PDCCH receptions in the CORESET associated with both USS sets and CSS sets such as Type0/0A/1/2/3-PDCCH CSS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

For another example, the UE could be provided by the network, e.g., via higher layer RRC signalling/parameter and/or MAC CE command and/or dynamic DCI based L1 signaling, an index corresponding/pointing to a TCI state among/within the indicated M>1 or N>1 Rel. 17 unified TCI states for a CORESET associated with both USS sets and CSS sets such as Type0/0A/1/2/3-PDCCH CSS sets. If the UE is provided by the network, e.g., via higher layer RRC signalling/parameter and/or MAC CE command and/or dynamic DCI based L1 signaling, a TCI state index m (m∈{1,..., M}) or n (n∈{1,..., N}) for the CORESET, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

Yet for another example, the UE could be provided by the network, e.g., via higher layer RRC signalling/parameter and/or MAC CE command and/or dynamic DCI based L1 signaling, a higher layer parameter useIndicatedr17TCIState or a TCI state ID for a CORESET associated with both USS sets and CSS sets such as Type0/0A/1/2/3-PDCCH CSS sets. If the useIndicatedr17TCIstate is enabled or the TCI state ID corresponds/points to the indicated Rel. 17 unified TCI state(s), the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions are quasi co-located with or spatially related to reference signals provided in one or more of the indicated Rel. 17 unified TCI states.

For this case, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID; alternatively, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

Yet for another example, the UE could be provided by the network, e.g., via higher layer RRC signalling/parameter and/or MAC CE command and/or dynamic DCI based L1 signaling, a higher layer parameter useIndicatedr17TCIState or a TCI state ID for a CORESET associated with both USS sets and CSS sets such as Type0/0A/1/2/3-PDCCH CSS sets. Furthermore, the UE could also be provided by the network, e.g., via higher layer RRC signalling/parameter and/or MAC CE command and/or dynamic DCI based L1 signaling, an index corresponding/pointing to a TCI state among/within the indicated M>1 or N>1 Rel. 17 unified TCI states for the CORESET. If the useIndicatedr17TCIstate is enabled or the TCI state ID corresponds/points to the indicated Rel. 17 unified TCI state(s), the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions are quasi co-located with or spatially related to reference signals provided in one or more of the indicated Rel. 17 unified TCI states.

For this case, if the UE is provided by the network, e.g., via higher layer RRC signalling/parameter and/or MAC CE command and/or dynamic DCI based L1 signaling, a TCI state index m ($m \in \{1,..., M\}$) or n ($n \in \{1,..., N\}$) for the CORESET, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/-PUSCH transmissions could be quasi co-located with or spatially related to reference signals provided in the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

Yet for another example, the DM-RS antenna port for PDCCH receptions in the CORESET associated with both USS sets and CSS sets such as Type0/0A/1/2/3-PDCCH CSS sets, and the DM-RS antenna port for PDSCH receptions scheduled by DCI formats provided by PDCCH receptions in the CORESET, or a spatial filter for respective PUCCH/-PUSCH transmissions could be quasi co-located with or spatially related to reference signals provided in one or more of the indicated Rel. 17 unified TCI states if the CORESET and the one or more of the indicated Rel. 17 unified TCI states are associated with a same entity ID/index. In the present disclosure, the entity ID/index could correspond to a PCI value, a PCI index corresponding/pointing to a PCI value in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. The association between a CORESET and an entity ID/index could be via indicating/including the entity ID/index in the parameter, e.g., the higher layer parameter ControlResourceSet, that configures the CORESET. The association between a Rel. 17 unified TCI state and an entity ID/index could follow those specified in the above discussed design examples in the present disclosure.

As CORESET with index 0 could be associated with only USS sets, only CSS sets or both USS and CSS sets, the QCL assumptions for the DM-RS antenna port for PDCCH receptions in the CORESET with index 0, and the DM-RS antenna port for PDSCH receptions scheduled by DCI formats provided by PDCCH receptions in the CORESET with index 0, or the spatial relation assumptions for respective PUCCH/PUSCH transmissions could follow those specified in examples provided in the present disclosure.

For some cases, e.g., configured/indicated by the network, the QCL assumptions for the DM-RS antenna port for PDCCH receptions in the CORESET with index 0, and the DM-RS antenna port for PDSCH receptions scheduled by DCI formats provided by PDCCH receptions in the CORESET with index 0, or the spatial relation assumptions for PUCCH/-PUSCH transmissions could only follow those specified in examples provided in the present disclosure, i.e., whether the QCL assumptions for the DM-RS antenna port for PDCCH receptions in the CORESET with index 0 may follow one or more of the indicated Rel. 17 unified TCI states is higher layer configured, e.g., via higher layer RRC configuration, by the network.

In a multi-DCI (mDCI) based multi-TRP system, a UE could be provided with PDCCH-Config that contains two different CORESETPoolIndex values in CORESETs. For this case, a UE could be configured with the higher layer parameter TCI-State_r17 and provided by the network, via MAC CE or DCI (e.g., DCI format 1_1 or 1_2 with or without DL assignment) based signaling, M0>1 joint DL and UL Rel. 17 unified TCI states or M0>1 separate UL Rel. 17 unified TCI states or a first combination of M0>1 joint DL and UL Rel. 17 unified TCI states and separate UL Rel. 17 unified TCI states or N0>1 separate DL Rel. 17 unified TCI states or a second combination of N0>1 joint DL and UL Rel. 17 unified TCI states and separate DL Rel. 17 unified TCI states or a third combination of N0>1 joint DL and UL Rel. 17 unified TCI states, separate DL Rel. 17 unified TCI states and separate UL Rel. 17 unified TCI states associated with associated with CORESETPoolIndex value 0, and M1>1 joint DL and UL Rel. 17 unified TCI states or M1>1 separate UL Rel. 17 unified TCI states or a first combination of M1>1 joint DL and UL Rel. 17 unified TCI states and separate UL Rel. 17 unified TCI states or N1>1 separate DL Rel. 17 unified TCI states or a second combination of N1>1 joint DL and UL Rel. 17 unified TCI states and separate DL Rel. 17 unified TCI states or a third combination of N1>1 joint DL and UL Rel. 17 unified TCI states, separate DL Rel. 17 unified TCI states and separate UL Rel. 17 unified TCI states associated with associated with CORESETPoolIndex value 1. The association between one or more indicated Rel. 17 unified TCI states and CORESETPoolIndex values could follow those specified in the above discussed design examples.

Hence, a DM-RS antenna port for PDCCH receptions in a CORESET configured with a CORESETPoolIndex value (e.g., 0 or 1), and a DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in one or more of the indicated Rel. 17 unified TCI states associated with the same CORESETPoolIndex value; the CORESET could be associated with only USS sets, only CSS sets or both USS and CSS sets; for a same CORESETPoolIndex value, the detailed beam indication methods for PDCCH receptions in the CORESET (and therefore, the corresponding PDSCH receptions and PUCCH/PUSCH transmissions), could follow those specified for the sDCI based multi-TRP system, i.e., examples provided in the present disclosure.

As discussed above, in the present disclosure, a UE could be indicated/provided/configured by the network, e.g., via one or more TCI fields in a DCI (e.g., DCI format 1_1 or 1_2 with or without DL assignment) or a MAC CE, one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources in a multi-TRP system, wherein each indicated TCI state (or pair of TCI states) could correspond to a joint DL and UL TCI state (e.g., provided by higher layer parameter DLorJointTCI-State) and/or a separate DL TCI state (e.g., provided by higher layer parameter DLorJointTCI-State) and/or a separate UL TCI state (e.g., provided by higher layer parameter UL-TCIState).

In a (sDCI based) multi-TRP system, for PDCCH reception(s) in a CORESET, following examples can be provided.

In one example, the UE could be indicated/provided/configured by the network, e.g., via higher layer RRC signaling/parameter, an indicator to indicate one or more of the indicated TCI states for PDCCH reception(s) - i.e., the DM-RS antenna port(s) for the PDCCH reception(s) could be quasi co-located with the reference signal(s) provided in the indicated (e.g., by the RRC configured/indicated/provided indicator) one or more of the indicated TCI states. For example, the higher layer parameter PDCCH-Config/PDSCH-Config or ControlResourceSet that configures a CORESET could include/configure/provide/comprise/indicate the indicator. When/if a UE receives a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) in a CORESET associated/configured with the indicator set to "enabled" (or "disabled") or "1" (or "0") or "00" (or "01," "10," "11"), the first indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the first indicated TCI state - among all the indicated (e.g., M>1 or N>1, or M=2/N=2) TCI states.

Furthermore, when/if a UE receives a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) in a CORESET associated/configured with the indicator set to "disabled" (or "enabled") or "0" (or "1") or "01" (or "00," "10," "11"), the second indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the second indicated TCI state - among all the indicated (e.g., M>1 or N>1, or M=2/N=2) TCI states. In addition, when/if a UE receives a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) in a CORESET associated/configured with the indicator set to "enabled" (or "disabled") or "1" (or "0") or "10" (or "00," "01," "11"), the first and second indicated TCI states - among all the indicated (e.g., M>1 or N>1, or M=2/N=2) TCI states - could be (respectively) used for PDCCH reception(s) in a CORESET, or none of the indicated TCI states may be used for the PDCCH reception(s); i.e., the DM-RS antenna port(s) for the PDCCH reception(s) in a CORESET could be quasi co-located with the reference signals (respectively) provided in the first and second indicated TCI states - among all the indicated (e.g., M>1 or N>1, or M=2/N=2) TCI states.

And, when/if a UE receives a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) in a CORESET associated/configured with the indicator set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for PDCCH reception(s) in a CORESET, or none of the indicated TCI states may be used for the PDCCH reception(s); i.e., the DM-RS antenna port(s) for the PDCCH reception(s) in a CORESET could be quasi co-located with the reference signals (respectively) provided in the second and first indicated TCI states - among all the indicated (e.g., M>1 or N>1, or M=2/N=2) TCI states. As discussed above, a UE could receive one or more (e.g., 2) PDCCH candidates associated with search space set(s) configured with searchSpaceLinking.

For this case, when/if a UE receives a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) in a CORESET associated/configured with the indicator set to "enabled" (or "disabled") or "1" (or "0") or "10" (or "00," "01," "11"), the first and second indicated TCI states - among all the indicated (e.g., M>1 or N>1, or M=2/N=2) TCI states - could be (respectively) used for receiving the first and second PDCCH candidates (or the second and first PDCCH candidates, depending on network's configuration/indication via RRC signaling/parameter and/or MAC CE command and/or dynamic DCI based L1 signaling) associated with search space set(s) configured with higher layer parameter searchSpaceLinking, or none of the indicated TCI states may be used for receiving the first and/or second PDCCH candidates; i.e., the DM-RS antenna port(s) for receiving the first and second (or the second and first depending on network's configuration/indication via RRC signaling/parameter and/or MAC CE command and/or dynamic DCI based signaling) PDCCH candidates associated with search space set(s) configured with higher layer parameter searchSpaceLinking could be quasi co-located with the reference signals (respectively) provided in the first and second indicated TCI states - among all the indicated (e.g., M>1 or N>1, or M=2/N=2) TCI states.

And, when/if a UE receives a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) in a CORESET associated/configured with the indicator set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for receiving the first and second PDCCH candidates (or the second and first PDCCH candidates, depending on network's configuration/indication via RRC signaling/parameter and/or MAC CE command and/or dynamic DCI based L1 signaling) associated with search space set(s) configured with higher layer parameter searchSpaceLinking, or none of the indicated TCI states may be used for receiving the first and/or second PDCCH candidates; i.e., the DM-RS antenna port(s) for receiving the first and second (or the second and first depending on network's configuration/indication via RRC signaling/parameter and/or MAC CE command and/or dynamic DCI based signaling) PDCCH candidates associated with search space set(s) configured with higher layer parameter searchSpaceLinking could be quasi co-located with the reference signals (respectively) provided in the second and first indicated TCI states - among all the indicated (e.g., M>1 or N>1, or M=2/N=2) TCI states.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or "00," "01," "10" and "11"). One or more CORESETs could be configured/associated with the same value of CORESETGroupIndex. Moreover, the UE could receive the second (or first) PDCCH candidate associated with a search space set configured with higher layer parameter searchSpaceLinking later in time than the first (or second) PDCCH candidate associated with a search space set configured with higher layer parameter searchSpaceLinking.

In another example, the UE could be indicated/provided/configured by the network, e.g., via higher layer RRC signaling/parameter, an indicator to indicate one or more of the indicated TCI states for PDCCH reception(s) - i.e., the DM-RS antenna port(s) for the PDCCH reception(s) could be quasi co-located with the reference signal(s) provided in the indicated (e.g., by the RRC configured/indicated/provided indicator) one or more of the indicated TCI states. For example, the higher layer parameter PDCCH-Config/PDSCH-Config or ControlResourceSet that configures a CORESET could include/configure/provide/comprise/indicate the indicator.

When/if a UE receives a PDCCH candidate in a CORESET associated/configured with the indicator set to "enabled" (or "disabled") or "1" (or "0") or "00" (or "01," "10," "11"), the first indicated TCI state - among all the indicated (e.g., M>1 or N>1, or M=2/N=2) TCI states - could be used for receiving the PDCCH candidate; i.e., the DM-RS antenna port(s) for receiving the PDCCH candidate could be quasi co-located with the reference signal(s) provided in the first indicated TCI state - among all the indicated (e.g., M>1 or N>1, or M=2/N=2) TCI states. Furthermore, when/if a UE receives a PDCCH candidate in a CORESET associated/configured with the indicator set to "disabled" (or "enabled") or "0" (or "1") or "01" (or "00," "10," "11"), the second indicated TCI state - among all the indicated (e.g., M>1 or N>1, or M=2/N=2) TCI states - could be used for receiving the PDCCH candidate; i.e., the DM-RS antenna port(s) for receiving the PDCCH candidate could be quasi co-located with the reference signal(s) provided in the second indicated TCI state - among all the indicated (e.g., M>1 or N>1, or M=2/N=2) TCI states. In addition, when/if a UE receives a PDCCH candidate in a CORESET associated/configured with the indicator set to "enabled" (or "disabled") or "1" (or "0") or "10" (or "00," "01," "11"), the first and second indicated TCI states - among all the indicated (e.g., M>1 or N>1, or M=2/N=2) TCI states - could be (respectively) used for receiving the PDCCH candidate in a CORESET, or none of the indicated TCI states may be used for receiving the PDCCH candidate; i.e., the DM-RS antenna port(s) for receiving the PDCCH candidate in a CORESET could be quasi co-located with the reference signals (respectively) provided in the first and second indicated TCI states - among all the indicated (e.g., M>1 or N>1, or M=2/N=2) TCI states.

And, when/if a UE receives a PDCCH candidate in a CORESET associated/configured with the indicator set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for receiving the PDCCH candidate in a CORESET, or none of the indicated TCI states may be used for receiving the PDCCH candidate; i.e., the DM-RS antenna port(s) for receiving the PDCCH candidate in a CORESET could be quasi co-located with the reference signals (respectively) provided in the second and first indicated TCI states - among all the indicated (e.g., M>1 or N>1, or M=2/N=2) TCI states.

As discussed above, a UE could receive one or more (e.g., 2) PDCCH candidates associated with search space set(s) configured with searchSpaceLinking. For this case, when/if a UE receives the one or more (e.g., 2) PDCCH candidates in their respective CORESETs associated/configured with the indicators set to "enabled" (or "disabled") or "1" (or "0") or "10" (or "00," "01," "11"), the first and second indicated TCI states - among all the indicated (e.g., M>1 or N>1, or M=2/N=2) TCI states - could be (respectively) used for receiving the first and second PDCCH candidates (or the second and first PDCCH candidates, depending on network's configuration/indication via higher layer RRC signaling/parameter and/or MAC CE command and/or dynamic DCI based signaling) associated with search space set(s) configured with higher layer parameter searchSpaceLinking, or none of the indicated TCI states may be used for receiving the first and/or second PDCCH candidates; i.e., the DM-RS antenna port(s) for receiving the first and second (or the second and first depending on network's configuration/indication via RRC signaling/parameter and/or MAC CE command and/or dynamic DCI based signaling) PDCCH candidates associated with search space set(s) configured with higher layer parameter searchSpaceLinking could be quasi co-located with the reference signals (respectively) provided in the first and second indicated TCI states - among all the indicated (e.g., M>1 or N>1, or M=2/N=2) TCI states.

And, when/if a UE receives the one or more (e.g., 2) PDCCH candidates in their respective CORESETs associated/configured with the indicators set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for receiving the first and second PDCCH candidates (or the second and first PDCCH candidates, depending on network's configuration/indication via higher layer RRC signaling/parameter and/or MAC CE command and/or dynamic DCI based signaling) associated with search space set(s) configured with higher layer parameter searchSpaceLinking, or none of the indicated TCI states may be used for receiving the first and/or second PDCCH candidates; i.e., the DM-RS antenna port(s) for receiving the first and second (or the second and first depending on network's configuration/indication via RRC signaling/parameter and/or MAC CE command and/or dynamic DCI based signaling) PDCCH candidates associated with search space set(s) configured with higher layer parameter searchSpaceLinking could be quasi co-located with the reference signals (respectively) provided in the second and first indicated TCI states - among all the indicated (e.g., M>1 or N>1, or M=2/N=2) TCI states.

Alternatively, when/if a UE receives a PDCCH candidate in a CORESET associated/configured with the indicator set to a TCI state index/ID, the indicated TCI state - among all the indicated (e.g., M>1 or N>1, or M=2/N=2) TCI states - corresponding to the indicated (e.g., by the RRC indicated/configured/provided indicator) TCI state index/ID could be used for receiving the PDCCH candidate; i.e., the DM-RS antenna port(s) for receiving the PDCCH candidate could be quasi co-located with the reference signal(s) provided in the indicated TCI state - among all the indicated (e.g., M>1 or N>1, or M=2/N=2) TCI states - corresponding to the indicated (e.g., by the RRC indicated/configured/provided indicator) TCI state index/ID; and, when/if a UE receives a PDCCH candidate in a CORESET associated/configured with the indicator set to multiple (e.g., 2) TCI state indexes/IDs, the indicated (e.g., the first and second, or the second and first) TCI states - among all the indicated (e.g., M>1 or N>1, or M=2/N=2) TCI states - corresponding to the indicated (e.g., by the RRC indicated/configured/provided indicator) TCI state indexes/IDs could be used for receiving the PDCCH candidate in a CORESET; i.e., the DM-RS antenna port(s) for receiving the PDCCH candidate in a CORESET could be quasi co-located with the reference signals provided in the indicated (e.g., the first and second, or the second and first) TCI states - among all the indicated (e.g., M>1 or N>1, or M=2/N=2) TCI states - corresponding to the indicated (e.g., by the RRC indicated/-configured/provided indicator) TCI state indexes/IDs.

As discussed above, a UE could receive one or more (e.g., 2) PDCCH candidates associated with search space set(s) configured with searchSpaceLinking. For this case, when/if a UE receives the one or more (e.g., 2) PDCCH candidates in their respective CORESETs associated/configured with the indicator set to multiple (e.g., 2) TCI state indexes/IDs, the indicated (e.g., the first and second, or the second and first) TCI states - among all the indicated (e.g., M>1 or N>1, or M=2/N=2) TCI states - corresponding to the indicated (e.g., by the RRC indicated/configured/provided indicator) TCI state indexes/IDs could be used for receiving the first and second PDCCH candidates (or the second and first PDCCH candidates, depending on network's configuration/indication via higher layer RRC signaling/parameter and/or MAC CE command and/or dynamic DCI based L1 signaling) associated with search space set(s) configured with higher layer parameter searchSpaceLinking; i.e., the DM-RS antenna port(s) for receiving the first and second (or the second and first depending on network's configuration/indication via higher layer RRC signaling/parameter and/or MAC CE command and/or dynamic DCI based L1 signaling) PDCCH candidates associated with search space set(s) configured with higher layer parameter searchSpaceLinking could be quasi co-located with the reference signals provided in the indicated (e.g., the first and second, or the second and first) TCI states - among all the indicated (e.g., M>1 or N>1, or M=2/N=2) TCI states - corresponding to the indicated (e.g., by the RRC indicated/configured/provided indicator) TCI state indexes/IDs.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or "00," "01," "10" and "11"). One or more CORESETs could be configured/associated with the same value of CORESETGroupIndex. Moreover, the UE could receive the second (or first) PDCCH candidate associated with a search space set configured with higher layer parameter searchSpaceLinking later in time than the first (or second) PDCCH candidate associated with a search space set configured with higher layer parameter searchSpaceLinking.

In yet another example, the UE could be indicated/provided/configured by the network, e.g., via higher layer RRC signaling/parameter, an indicator to indicate one or more of the indicated TCI states for PDCCH reception(s) - i.e., the DM-RS antenna port(s) for the PDCCH reception(s) could be quasi co-located with the reference signal(s) provided in the indicated (e.g., by the RRC configured/indicated/provided indicator) one or more of the indicated TCI states. For example, the higher layer parameter PDCCH-Config/PDSCH-Config or ControlResourceSet that configures a CORESET could include/configure/provide/comprise/indicate the indicator. When/if a UE receives a PDCCH candidate in a CORESET associated/configured with the indicator set to "enabled" (or "disabled") or "1" (or "0") or "00" (or "01," "10," "11"), the first/second or the m-th (or n-th) indicated TCI state - among all the indicated (e.g., M>1 or N>1, or M=2/N=2) TCI states - in a beam indication DCI received in a CORESET associated/configured with the same indicator set to "enabled" (or "disabled") or "1" (or "0") or "00" (or "01," "10," "11") could be used for receiving the PDCCH candidate; i.e., the DM-RS antenna port(s) for receiving the PDCCH candidate could be quasi co-located with the reference signal(s) provided in the first/second or the m-th (n-th) indicated TCI state - among all the indicated (e.g., M>1 or N>1, or M=2/N=2) TCI states - in the beam indication DCI, wherein the PDCCH candidate and the beam indication DCI could be received in CORESET(s) associated/configured with the same indicator set to "enabled" (or "disabled") or "1" (or "0") or "00" (or "01," "10," "11").

The value(s) of m or n could be fixed in the system specifications; alternatively, the UE could be configured/indicated/provided by the network, e.g., via higher layer RRC signaling/parameter and/or MAC CE command and/or dynamic DCI based L1 signaling, the value(s) of m or n, wherein m∈{1,..., M} and n∈{1,..., N}. Furthermore, when/if a UE receives a PDCCH candidate in a CORESET associated/configured with the indicator set to "disabled" (or "enabled") or "0" (or "1") or "01" (or "00," "10," "11"), the first/second or the m'-th (or n'-th) indicated TCI state - among all the indicated (e.g., M>1 or N>1, or M=2/N=2) TCI states - in a beam indication DCI received in a CORESET associated/configured with the same indicator set to "disabled" (or "enabled") or "0" (or "1") or "01" (or "00," "10," "11") could be used for receiving the PDCCH candidate; i.e., the DM-RS antenna port(s) for receiving the PDCCH candidate could be quasi co-located with the reference signal(s) provided in the first/second or the m'-th (n'-th) indicated TCI state - among all the indicated (e.g., M>1 or N>1, or M=2/N=2) TCI states - in the beam indication DCI, wherein the PDCCH candidate and the beam indication DCI could be received in CORESET(s) associated/configured with the same indicator set to "disabled" (or "enabled") or "0" (or "1") or "01" (or "00," "10," "11").

The value(s) of m' or n' could be fixed in the system specifications; alternatively, the UE could be configured/indicated/provided by the network, e.g., via higher layer RRC signaling/parameter and/or MAC CE command and/or dynamic DCI based L1 signaling, the value(s) of m' or n', wherein m'∈{1,..., M} and n'∈{1,..., N}. In addition, when/if a UE receives a PDCCH candidate in a CORESET associated/configured with the indicator set to "enabled" (or "disabled") or "1" (or "0") or "10" (or "00," "01," "11"), the first and second indicated TCI states - among all the indicated (e.g., M>1 or N>1, or M=2/N=2) TCI states - in a beam indication DCI received in a CORESET associated/configured with the same indicator set to "enabled" (or "disabled") or "1" (or "0") or "10" (or "00," "01," "11") could be (respectively) used for receiving the PDCCH candidate in a CORESET, or none of the indicated TCI states may be used for receiving the PDCCH candidate; i.e., the DM-RS antenna port(s) for receiving the PDCCH candidate in a CORESET could be quasi co-located with the reference signals (respectively) provided in the first and second indicated TCI states - among all the indicated (e.g., M>1 or **N>1**, or M=2/N=2) TCI states - in the beam indication DCI, wherein the PDCCH candidate in a CORESET and the beam indication DCI could be received in CORESET(s) associated/configured with the same indicator set to "enabled" (or "disabled") or "1" (or "0") or "10" (or "00," "01," "11").

And, when/if a UE receives a PDCCH candidate in a CORESET associated/configured with the indicator set to "disabled" (or "enabled") or "0" (or "1") or "11" (or "00," "01," "10"), the second and first indicated TCI states - among all the indicated (e.g., M>1 or **N>1**, or M=2/N=2) TCI states - in a beam indication DCI received in a CORESET associated/configured with the same indicator set to "disabled" (or "enabled") or "0" (or "1") or "11" (or "00," "01," "10") could be (respectively) used for receiving the PDCCH candidate in a CORESET, or none of the indicated TCI states may be used for receiving the PDCCH candidate; i.e., the DM-RS antenna port(s) for receiving the PDCCH candidate in a CORESET could be quasi co-located with the reference signals (respectively) provided in the second and first indicated TCI states - among all the indicated (e.g., M>1 or N>1, or M=2/N=2) TCI states - in the beam indication DCI, wherein the PDCCH candidate in a CORESET and the beam indication DCI could be received in CORESET(s) associated/configured with the same indicator set to "disabled" (or "enabled") or "0" (or "1") or "11" (or "00," "01," "10").

As discussed above, a UE could receive one or more (e.g., 2) PDCCH candidates associated with search space set(s) configured with searchSpaceLinking. For this case, when/if a UE receives the one or more (e.g., 2) PDCCH candidates in their respective CORESETs associated/configured with the indicator set to "enabled" (or "disabled") or "1" (or "0") or "10" (or "00," "01," "11"), the first and second indicated TCI states - among all the indicated (e.g., M>1 or N>1, or M=2/N=2) TCI states - in a beam indication DCI received in a CORESET associated/configured with the same indicator set to "enabled" (or "disabled") or "1" (or "0") or "10" (or "00," "01," "11") could be (respectively) used for receiving the first and second PDCCH candidates (or the second and first PDCCH candidates, depending on network's indication/configuration via higher layer RRC signaling/parameter and/or MAC CE command and/or dynamic DCI based L1 signaling) associated with search space set(s) configured with higher layer parameter searchSpaceLinking, or none of the indicated TCI states may be used for receiving the first and/or second PDCCH candidates; i.e., the DM-RS antenna port(s) for receiving the first and second (or the second and first depending on network's indication/configuration via higher layer RRC signaling/-parameter and/or MAC CE command and/or dynamic DCI based L1 signaling) PDCCH candidates associated with search space set(s) configured with higher layer parameter searchSpaceLinking could be quasi co-located with the reference signals (respectively) provided in the first and second indicated TCI states - among all the indicated (e.g., M>1 or N>1, or M=2/N=2) TCI states - in the beam indication DCI, wherein the first and/or second PDCCH candidates and the beam indication DCI could be received in CORESET(s) associated/configured with the same indicator set to "enabled" (or "disabled") or "1" (or "0") or "10" (or "00," "01," "11").

And, when/if a UE receives the one or more (e.g., 2) PDCCH candidates in their respective CORESETs associated/configured with the indicator set to "disabled" (or "enabled") or "0" (or "1") or "11" (or "00," "01," "10"), the second and first indicated TCI states - among all the indicated (e.g., M>1 or N>1, or M=2/N=2) TCI states - in a beam indication DCI received in a CORESET associated/configured with the same indicator set to "disabled" (or "enabled") or "0" (or "1") or "11" (or "00," "01," "10") could be (respectively) used for receiving the first and second PDCCH candidates (or the second and first PDCCH candidates, depending on network's indication/configuration via higher layer RRC signaling/-parameter and/or MAC CE command and/or dynamic DCI based L1 signaling) associated with search space set(s) configured with higher layer parameter searchSpaceLinking, or none of the indicated TCI states may be used for receiving the first and/or second PDCCH candidates; i.e., the DM-RS antenna port(s) for receiving the first and second (or the second and first depending on network's indication/configuration via higher layer RRC signaling/parameter and/or MAC CE command and/or dynamic DCI based L1 signaling) PDCCH candidates associated with search space set(s) configured with higher layer parameter searchSpaceLinking could be quasi co-located with the reference signals (respectively) provided in the second and first indicated TCI states - among all the indicated (e.g., M>1 or N>1, or M=2/N=2) TCI states - in the beam indication DCI, wherein the first and/or second PDCCH candidates and the beam indication DCI could be received in CORESET(s) associated/configured with the same indicator set to "disabled" (or "enabled") or "0" (or "1") or "11" (or "00," "01," "10").

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or "00," "01," "10" and "11"). One or more CORESETs could be configured/associated with the same value of CORESETGroupIndex. Moreover, the UE could receive the second (or first) PDCCH candidate associated with a search space set configured with higher layer parameter searchSpaceLinking later in time than the first (or second) PDCCH candidate associated with a search space set configured with higher layer parameter searchSpaceLinking.

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), an indicator to indicate one or more of the indicated TCI states for PDCCH reception(s) - i.e., the DM-RS antenna port(s) for the PDCCH reception(s) could be quasi co-located with the reference signal(s) provided in the indicated (e.g., by the indicator provided/indicated/configured in the MAC CE) one or more of the indicated TCI states. In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc.

For example, when/if the UE receives from the network the MAC CE command with the indicator provided/indicated/configured therein set to "enabled" (or "disabled") or "1" (or "0") or "00" ("01," "10," "11"), the first indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the first indicated TCI state - among all the indicated (e.g., M>1 or N>1, or M=2/N=2) TCI states. Furthermore, when/if the UE receives from the network the MAC CE command with the indicator provided/indicated/configured therein set to "disabled" (or "enabled") or "0" (or "1") or "01" ("00," "10," "11"), the second indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the second indicated TCI state - among all the indicated (e.g., M>1 or N>1, or M=2/N=2) TCI states.

In addition, when/if the UE receives from the network the MAC CE command with the indicator provided/indicated/configured therein set to "enabled" (or "disabled") or "1" (or "0") or "10" ("00," "01," "11"), the first and second indicated TCI states - among all the indicated (e.g., M>1 or N>1, or M=2/N=2) TCI states - could be (respectively) used for PDCCH reception(s) in a CORESET, or none of the indicated TCI states may be used for the PDCCH reception(s); i.e., the DM-RS antenna port(s) for the PDCCH reception(s) in a CORESET could be quasi co-located with the reference signals (respectively) provided in the first and second indicated TCI states - among all the indicated (e.g., M>1 or N>1, or M=2/N=2) TCI states. And, when/if the UE receives from the network the MAC CE command with the indicator provided/indicated/configured therein set to "disabled" (or "enabled") or "0" (or "1") or "11" ("00," "01," "10"), the second and first indicated TCI states - among all the indicated (e.g., M>1 or N>1, or M=2/N=2) TCI states - could be (respectively) used for PDCCH reception(s) in a CORESET, or none of the indicated TCI states may be used for the PDCCH reception(s); i.e., the DM-RS antenna port(s) for the PDCCH reception(s) in a CORESET could be quasi co-located with the reference signals (respectively) provided in the second and first indicated TCI states - among all the indicated (e.g., M>1 or N>1, or M=2/N=2) TCI states.

For another example, when/if the UE receives from the network the MAC CE command with the indicator provided/indicated/configured therein set to a TCI state ID/index, the indicated TCI state corresponding to the TCI state ID/index could be used for PDCCH reception(s); and, when/if the UE receives from the network the MAC CE command with the indicator provided/indicated/configured therein set to multiple (e.g., 2) TCI state IDs/indexes, the indicated (e.g., the first and second, or the second and first) TCI states corresponding to the indicated (e.g., by the MAC CE indicated/configured/provided indicator) TCI state indexes/IDs could be used for PDCCH reception(s) in a CORESET; i.e., the DM-RS antenna port(s) for the PDCCH reception(s) in a CORESET could be quasi co-located with the reference signals (respectively) provided in the indicated (e.g., the first and second, or the second and first) TCI states - among all the indicated (e.g., M>1 or N>1, or M=2/N=2) TCI states - corresponding to the indicated (e.g., by the MAC CE indicated/configured/provided indicator) TCI state indexes/IDs.

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), one or more indicators each associated/configured to/for an activated TCI codepoint in the MAC CE command; each indicator could indicate one or more of the TCI states of the corresponding TCI codepoint for PDCCH reception(s) - e.g., when the corresponding TCI codepoint is indicated in the beam indication DCI. That is, the DM-RS antenna port(s) for the PDCCH reception(s) could be quasi co-located with the reference signal(s) provided in the indicated (e.g., by an indicator provided/indicated/configured in the MAC CE command) one or more of the indicated TCI states.

In the present disclosure, each indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For example, when/if the indicator associated/configured to/for the TCI codepoint indicated in the beam indication DCI is set to "enabled" (or "disabled") or "1" (or "0") or "00" (or "01," "10," "11") - the indicator is provided/indicated/configured in the MAC CE command, the first indicated TCI state - among all the indicated (e.g., M>1 or N>1, or M=2/N=2) TCI states of the TCI codepoint indicated in the beam indication DCI - could be used for PDCCH reception(s). Furthermore, when/if the indicator associated/configured to/for the TCI codepoint indicated in the beam indication DCI is set to "disabled" (or "enabled") or "0" (or "1") or "01" (or "00," "10," "11") - the indicator is provided/indicated/configured in the MAC CE command, the second indicated TCI state - among all the indicated (e.g., M>1 or N>1, or M=2/N=2) TCI states of the TCI codepoint indicated in the beam indication DCI - could be used for PDCCH reception(s).

In addition, when/if the indicator associated/configured to/for the TCI codepoint indicated in the beam indication DCI is set to "enabled" (or "disabled") or "1" (or "0") or "10" (or "00," "01," "11") - the indicator is provided/indicated/configured in the MAC CE command, the first and second indicated TCI states - among all the indicated (e.g., M>1 or N>1, or M=2/N=2) TCI states of the TCI codepoint indicated in the beam indication DCI - could be (respectively) used for PDCCH reception(s) in a CORESET, or none of the indicated TCI states of the TCI codepoint indicated in the beam indication DCI may be used for the PDCCH reception(s); and, when/if the indicator associated/configured to/for the TCI codepoint indicated in the beam indication DCI is set to "disabled" (or "enabled") or "0" (or "1") or "11" (or "00," "01," "10") - the indicator is provided/indicated/configured in the MAC CE command, the second and first indicated TCI states - among all the indicated (e.g., M>1 or N>1, or M=2/N=2) TCI states of the TCI codepoint indicated in the beam indication DCI - could be (respectively) used for PDCCH reception(s) in a CORESET, or none of the indicated TCI states of the TCI codepoint indicated in the beam indication DCI may be used for the PDCCH reception(s).

For another example, when/if the indicator associated/configured to/for the TCI codepoint indicated in the beam indication DCI is set to a TCI state ID/index - the indicator is provided/indicated/configured in the MAC CE command, the indicated TCI state - among all the indicated (e.g., M>1 or N>1, or M=2/N=2) TCI states of the TCI codepoint indicated in the beam indication DCI - corresponding to the TCI state ID/index could be used for PDCCH reception(s); and, when/if the indicator associated/configured to/for the TCI codepoint indicated in the beam indication DCI is set to multiple (e.g., 2) TCI state IDs/indexes - the indicator is provided/indicated/configured in the MAC CE command, the indicated (e.g., the first and second, or the second and first) TCI states - among all the indicated (e.g., M>1 or N>1, or M=2/N=2) TCI states of the TCI codepoint indicated in the beam indication DCI - corresponding to the indicated (e.g., by an indicator configured/indicated/provided in the MAC CE command) TCI state IDs/indexes could be used for PDCCH reception(s) in a CORESET.

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), an indicator to indicate one or more of the indicated TCI states for PDCCH reception(s) in one or more CORESETs associated/configured with a (or the same) value of CORESET group index - i.e., the DM-RS antenna port(s) for the PDCCH reception(s) in one or more CORESETs associated/configured with a (or the same) value of CORESET group index could be quasi co-located with the reference signal(s) provided in the indicated (e.g., by the indicator in the MAC CE command configured/associated with the same value of CORESET group index) one or more of the indicated TCI states.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. Furthermore, as discussed above, the MAC CE command could be configured/associated with the CORESETGroupIndex value. For instance, the MAC CE command/format could contain/provide/indicate/comprise one or more fields indicating/providing a value of CORESETGroupIndex. For example, when/if the UE receives from the network the MAC CE command configured/associated with a CORESETGroupIndex value with the indicator provided/indicated/configured therein set to "enabled" (or "disabled") or "1" (or "0") or "00" (or "01," "10," "11"), the first indicated TCI state - among all the indicated (e.g., M>1 or N>1, or M=2/N=2) TCI states - could be used for PDCCH reception(s) in one or more CORESETs associated/configured with a (or the same) CORESETGroupIndex value; i.e., the DM-RS antenna port(s) for the PDCCH reception(s) in one or more CORESETs associated/configured with a (or the same) CORESET group index value could be quasi co-located with the reference signal(s) provided in the first indicated TCI state - among all the indicated (e.g., M>1 or N>1, or M=2/N=2) TCI states. Furthermore, when/if the UE receives from the network the MAC CE command configured/associated with a CORESETGroupIndex value with the indicator provided/indicated/configured therein set to "disabled" (or "enabled") or "0" (or "1") or "01" (or "00," "10," "11"), the second indicated TCI state - among all the indicated (e.g., M>1 or N>1, or M=2/N=2) TCI states - could be used for PDCCH reception(s) in one or more CORESETs associated/configured with a (or the same) CORESETGroupIndex value; i.e., the DM-RS antenna port(s) for the PDCCH reception(s) in one or more CORESETs associated/configured with a (or the same) CORESETGroupIndex value could be quasi co-located with the reference signal(s) provided in the second indicated TCI state - among all the indicated (e.g., M>1 or N>1, or M=2/N=2) TCI states.

In addition, when/if the UE receives from the network the MAC CE command configured/associated with a CORESETGroupIndex value with the indicator provided/indicated/configured therein set to "enabled" (or "disabled") or "1" (or "0") or "10" (or "00," "01," "11"), the first and second indicated TCI states - among all the indicated (e.g., M>1 or N>1, or M=2/N=2) TCI states - could be (respectively) used for PDCCH reception(s) in a CORESET associated/configured with a (or the same) CORESETGroupIndex value, or none of the indicated TCI states may be used for PDCCH reception(s) in a CORESET associated/configured with a (or the same) CORESETGroupIndex value; i.e., the DM-RS antenna port(s) for the PDCCH reception(s) in a CORESET associated/configured with a (or the same) CORESET group index value could be quasi co-located with the reference signals (respectively) provided in the first and second indicated TCI states - among all the indicated (e.g., M>1 or N>1, or M=2/N=2) TCI states; and, when/if the UE receives from the network the MAC CE command configured/associated with a CORESETGroupIndex value with the indicator provided/indicated/configured therein set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for PDCCH reception(s) in a CORESET associated/configured with a (or the same) CORESETGroupIndex value, or none of the indicated TCI states may be used for PDCCH reception(s) in a CORESET associated/configured with a (or the same) CORESETGroupIndex value; i.e., the DM-RS antenna port(s) for the PDCCH reception(s) in a CORESET associated/configured with a (or the same) CORESET group index value could be quasi co-located with the reference signals (respectively) provided in the second and first indicated TCI states - among all the indicated (e.g., M>1 or N>1, or M=2/N=2) TCI states.

For another example, when/if the UE receives from the network the MAC CE command configured/associated with a CORESETGroupIndex value with the indicator provided/indicated/configured therein set to a TCI state ID/index, the indicated TCI state corresponding to the TCI state ID/index could be used for PDCCH reception(s) in one or more CORESETs configured/associated with a (or the same) value of CORESETGroupIndex; and, when/if the UE receives from the network the MAC CE command configured/associated with a CORESETGroupIndex value with the indicator provided/indicated/configured therein set to multiple (e.g., 2) TCI state IDs/indexes, the indicated (e.g., the first and second, or the second and first) TCI states corresponding to the TCI state IDs/indexes could be used for PDCCH reception(s) in one or more CORESETs configured/associated with a (or the same) value of CORESETGroupIndex.

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), one or more indicators each associated/configured to/for an activated TCI codepoint in the MAC CE command; each indicator could indicate one or more of the TCI states of the corresponding TCI codepoint for PDCCH reception(s) in one or more CORESETs associated with a (or the same) value of CORESET group index - e.g., when the corresponding TCI codepoint is indicated in the beam indication DCI. That is, the DM-RS antenna port(s) for the PDCCH reception(s) in one or more CORESETs configured/associated with a (or the same) value of CORESET group index could be quasi co-located with the reference signal(s) provided in the indicated (e.g., by an indicator in the MAC CE command configured/associated with the same value of CORESETGroupIndex value) one or more of the indicated TCI states.

In the present disclosure, each indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. Furthermore, as discussed above, the MAC CE command could be configured/associated with the CORESETGroupIndex value. For instance, the MAC CE command/format could contain/provide/indicate/comprise one or more fields indicating/providing a value of CORESETGroupIndex. For example, when/if the indicator associated/configured to/for the TCI codepoint indicated in the beam indication DCI is set to "enabled" (or "disabled") or "1" (or "0") or "00" (or "01," "10," "11") - the indicator is provided/indicated/configured in the MAC CE command configured/associated with a value of CORESETGroupIndex, the first indicated TCI state - among all the indicated (e.g., M>1 or N>1, or M=2/N=2) TCI states of the TCI codepoint indicated in the beam indication DCI - could be used for PDCCH reception(s) in one or more CORESETs associated/configured with the same value of CORESETGroupIndex; i.e., the DM-RS antenna port(s) for the PDCCH reception(s) in one or more CORESETs associated/configured with the same CORESET group index value could be quasi co-located with the reference signal(s) provided in the first indicated TCI state - among all the indicated (e.g., M>1 or N>1, or M=2/N=2) TCI states.

Furthermore, when/if the indicator associated/configured to/for the TCI codepoint indicated in the beam indication DCI is set to "disabled" (or "enabled") or "0" (or "1") or "01" (or "00," "10," "11") - the indicator is provided/indicated/configured in the MAC CE command associated/configured with a value of CORESETGroupIndex, the second indicated TCI state - among all the indicated (e.g., M>1 or N>1, or M=2/N=2) TCI states of the TCI codepoint indicated in the beam indication DCI - could be used for PDCCH reception(s) in one or more CORESETs configured/associated with the same value of CORESETGroupIndex; i.e., the DM-RS antenna port(s) for the PDCCH reception(s) in one or more CORESETs associated/configured with a (or the same) CORESET group index value could be quasi co-located with the reference signal(s) provided in the second indicated TCI state - among all the indicated (e.g., M>1 or N>1, or M=2/N=2) TCI states.

In addition, when/if the indicator associated/configured to/for the TCI codepoint indicated in the beam indication DCI is set to "enabled" (or "disabled") or "1" (or "0") or "10" (or "00," "01," "11") - the indicator is provided/indicated/configured in the MAC CE command configured/associated with a value of CORESETGroupIndex, the first and second indicated TCI states - among all the indicated (e.g., M>1 or N>1, or M=2/N=2) TCI states of the TCI codepoint indicated in the beam indication DCI - could be (respectively) used for PDCCH reception(s) in a CORESET associated/configured with the same value of CORESETGroupIndex, or none of the indicated TCI states may be used for PDCCH reception(s) in a CORESET associated/configured with the same value of CORESETGroupIndex; i.e., the DM-RS antenna port(s) for the PDCCH reception(s) in a CORESET associated/configured with the same CORESET group index value could be quasi co-located with the reference signals (respectively) provided in the first and second indicated TCI states - among all the indicated (e.g., M>1 or N>1, or M=2/N=2) TCI states. Furthermore, when/if the indicator associated/configured to/for the TCI codepoint indicated in the beam indication DCI is set to "disabled" (or "enabled") or "0" (or "1") or "11" (or "00," "01," "10") - the indicator is provided/indicated/configured in the MAC CE command associated/configured with a value of CORESETGroupIndex, the second and first indicated TCI states - among all the indicated (e.g., M>1 or N>1, or M=2/N=2) TCI states of the TCI codepoint indicated in the beam indication DCI - could be (respectively) used for PDCCH reception(s) in a CORESET configured/associated with the same value of CORESETGroupIndex, or none of the indicated TCI states may be used for PDCCH reception(s) in a CORESET configured/associated with the same value of CORESET group index; i.e., the DM-RS antenna port(s) for the PDCCH reception(s) in a CORESET associated/configured with a (or the same) CORESET group index value could be quasi co-located with the reference signals provided in the second and first indicated TCI states - among all the indicated (e.g., M>1 or N>1, or M=2/N=2) TCI states.

For another example, when/if the indicator associated/configured to/for the TCI codepoint indicated in the beam indication DCI is set to a TCI state ID/index - the indicator is provided/indicated/configured in the MAC CE command configured/associated with a value of CORESET group index, the indicated TCI state - among all the indicated (e.g., M>1 or N>1, or M=2/N=2) TCI states of the TCI codepoint indicated in the beam indication DCI - corresponding to the TCI state ID/index could be used for PDCCH reception(s) in one or more CORESETs associated/configured with the same value of CORESETGroupIndex; and, when/if the indicator associated/configured to/for the TCI codepoint indicated in the beam indication DCI is set to multiple (e.g., 2) TCI state IDs/indexes - the indicator is provided/indicated/configured in the MAC CE command configured/associated with a value of CORESET group index, the indicated TCI states - among all the indicated (e.g., M>1 or N>1, or M=2/N=2) TCI states of the TCI codepoint indicated in the beam indication DCI - corresponding to the indicated TCI state IDs/indexes could be used for PDCCH reception(s) in a CORESET associated/configured with the same value of CORESETGroupIndex.

In yet another example, the UE could be indicated/provided/configured by the network, e.g., in a DCI or via dynamic DCI based L1 signaling, an indicator to indicate one or more of the indicated TCI states for PDCCH reception(s) - i.e., the DM-RS antenna port(s) for the PDCCH reception(s) could be quasi co-located with the reference signal(s) provided in the indicated (e.g., by the indicator in the DCI) one or more of the indicated TCI states. For example, a new DCI field, denoted by "TCI state(s) indication" field, could be introduced in a DCI format (e.g., in DCI format 1_1, 1_2, 0_1, 0_2 or etc.), and used to provide the indicator. For another example, one or more bits/codepoints of one or more existing DCI fields - e.g., the "Transmission configuration indication" field(s) or the "SRS resource set indicator" field(s) - in a DCI format (e.g., DCI format 1_1, 1_2, 0_1, 0_2 or etc.) could be repurposed/used to provide the indicator. For instance, the indicator could be provided in a beam indication DCI (e.g., DCI format 1_1 or 1_2 with or without DL assignment); alternatively, the indicator could be provided in an uplink DCI (e.g., DCI format 0_1 or 0_2 with or without UL assignment).

Furthermore, in the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and **1**, or "00", "01," "10" and "11"). One or more CORESETs could be configured/associated with the same value of CORESETGroupIndex.

For example, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or **N>1, or** M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "enabled" (or "disabled") or "1" (or "0") or "00" (or "01," "10," "11"), the first indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the first indicated TCI state - among all the indicated (e.g., M>1 or N>1, or M=2/N=2) TCI states.

Furthermore, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "disabled" (or "enabled") or "0" (or "1") or "01" (or "00," "10," "11"), the second indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the second indicated TCI state - among all the indicated (e.g., M>1 or N>1, or M=2/N=2) TCI states.

In addition, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "enabled" (or "disabled") or "1" (or "0") or "10" (or "00," "01," "11"), the first and second indicated TCI states - among all the indicated (e.g., M>1 or N>1, or M=2/N=2) TCI states - could be (respectively) used for PDCCH reception(s) in a CORESET, none of the indicated TCI states may be used for the PDCCH reception(s); i.e., the DM-RS antenna port(s) for the PDCCH reception(s) in a CORESET could be quasi co-located with the reference signals (respectively) provided in the first and second indicated TCI states - among all the indicated (e.g., M>1 or N>1, or M=2/N=2) TCI states; and, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for PDCCH reception(s) in a CORESET, or none of the indicated TCI states may be used for the PDCCH reception(s); i.e., the DM-RS antenna port(s) for the PDCCH reception(s) in a CORESET could be quasi co-located with the reference signals (respectively) provided in the second and first indicated TCI states - among all the indicated (e.g., M>1 or N>1, or M=2/N=2) TCI states.

For another example, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to a TCI state ID/index, the indicated TCI state - among all the indicated (e.g., M>1 or **N>1,** or M=2/N=2) TCI states - that corresponds to the indicated (e.g., by the indicator/DCI field(s) in the DCI) TCI state ID/index could be used for PDCCH reception(s); i.e., the DM-RS antenna port(s) for the PDCCH reception(s) could be quasi co-located with the reference signal(s) provided in the indicated TCI state - among all the indicated (e.g., M>1 or **N>1,** or M=2/N=2) TCI states - that corresponds to the indicated (e.g., by the indicator/DCI field(s) in the DCI) TCI state ID/index.

And, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or **N>1,** or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to multiple (e.g., 2) TCI state IDs/indexes, the indicated (e.g., the first and second, or the second and first) TCI states - among all the indicated (e.g., M>1 or **N>1,** or M=2/N=2) TCI states - that correspond to the indicated (e.g., by the indicator/DCI field(s) in the DCI) TCI state IDs/indexes could be used for PDCCH reception(s) in a CORESET; i.e., the DM-RS antenna port(s) for the PDCCH reception(s) in a CORESET could be quasi co-located with the reference signals provided in the indicated (e.g., the first and second, or the second and first) TCI states - among all the indicated (e.g., M>1 or N>1, or M=2/N=2) TCI states - that correspond to the indicated (e.g., by the indicator/DCI field(s) in the DCI) TCI state IDs/indexes.

Yet for another example, when/if a UE is provided/indicated/configured by the network, in an UL DCI (e.g., DCI format 0_1 or 0_2), the SRS resource set indicator set to "00" (or "01," "10," "11"), the first indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the first indicated TCI state - among all the indicated (e.g., M>1 or N>1, or M=2/N=2) TCI states. Furthermore, when/if a UE is provided/indicated/configured by the network, in an UL DCI (e.g., DCI format 0_1 or 0_2), the SRS resource set indicator set to "01" (or "00," "10," "11"), the second indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the second indicated TCI state - among all the indicated (e.g., M>1 or N>1, or M=2/N=2) TCI states.

In addition, when/if a UE is provided/indicated/configured by the network, in an UL DCI (e.g., DCI format 0_1 or 0_2), the SRS resource set indicator set to "10" (or "00," "01," "11"), the first and second indicated TCI states - among all the indicated (e.g., M>1 or N>1, or M=2/N=2) TCI states - could be (respectively) used for PDCCH reception(s) in a CORESET, or none of the indicated TCI states may be used for the PDCCH reception(s); i.e., the DM-RS antenna port(s) for the PDCCH reception(s) in a CORESET could be quasi co-located with the reference signals (respectively) provided in the first and second indicated TCI states - among all the indicated (e.g., M>1 or N>1, or M=2/N=2) TCI states. And, when/if a UE is provided/indicated/configured by the network, in an UL DCI (e.g., DCI format 0_1 or 0_2), the SRS resource set indicator set to "11" (or "00," "01," "10"), the second and first indicated TCI states - among all the indicated (e.g., M>1 or N>1, or M=2/N=2) TCI states - could be (respectively) used for PDCCH reception(s) in a CORESET, or none of the indicated TCI states may be used for the PDCCH reception(s); i.e., the DM-RS antenna port(s) for the PDCCH reception(s) in a CORESET could be quasi co-located with the reference signals (respectively) provided in the second and first indicated TCI states - among all the indicated (e.g., M>1 or N>1, or M=2/N=2) TCI states.

In yet another example, the UE could be indicated/provided/configured by the network, e.g., in a DCI or via dynamic DCI based L1 signaling received in a CORESET associated/configured with a value of CORESET group index, an indicator to indicate one or more of the indicated TCI states for PDCCH reception(s) in one or more CORESETs associated/configured with a (or the same) value of CORESET group index - i.e., the DM-RS antenna port(s) for the PDCCH reception(s) in one or more CORESETs associated/configured with a value of CORESETGroupIndex could be quasi co-located with the reference signal(s) provided in the indicated (e.g., by the indicator in the DCI received in a CORESET associated/configured with a (or the same) value of CORESETGroupIndex) one or more of the indicated TCI states.

For example, a new DCI field, denoted by "TCI state(s) indication" field, could be introduced in a DCI format (e.g., in DCI format 1_1, 1_2, 0_1, 0_2 or etc.), and used to provide the indicator. For another example, one or more bits/codepoints of one or more existing DCI fields - e.g., the "Transmission configuration indication" field(s) or the "SRS resource set indicator" field(s) - in a DCI format (e.g., DCI format 1_1, 1_2, 0_1, 0_2 or etc.) could be repurposed/used to provide the indicator. For instance, the indicator could be provided in a beam indication DCI (e.g., DCI format 1_1 or 1_2 with or without DL assignment); alternatively, the indicator could be provided in an uplink DCI (e.g., DCI format 0_1 or 0_2 with or without UL assignment).

Furthermore, in the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or "00," "01," "10" and "11"). One or more CORESETs could be configured/associated with the same value of CORESETGroupIndex.

For example, when/if a UE is provided/indicated/configured by the network, in a DL DCI received in a CORESET associated with a value of CORESETGroupIndex, e.g., a beam indication DCI (e.g., DCI format 1_1 or 1_2 with or without DL assignment having one or more TCI fields to indicate one or more (e.g., $M>1$ or $N>1$, or $M=2/N=2$) TCI states/pairs of TCI states for UE-dedicated reception on PDSCH/PDCCH or dynamic-grant/configured-grant based PUSCH and all of dedicated PUCCH resources) received in a CORESET associated with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "enabled" (or "disabled") or "1" (or "0") or "00" (or "01," "10," "11"), the first indicated TCI state - among all the indicated (e.g., $M>1$ or $N>1$, or $M=2/N=2$) TCI states - could be used for PDCCH reception(s) in one or more CORESETs associated/configured with a (or the same) value of CORESETGroupIndex; i.e., the DM-RS antenna port(s) for the PDCCH reception(s) in one or more CORESETs associated/configured with a value of CORESET group index could be quasi co-located with the reference signal(s) provided in the first indicated TCI state - among all the indicated (e.g., $M>1$ or $N>1$, or $M=2/N=2$) TCI states.

Furthermore, when/if a UE is provided/indicated/configured by the network, in a DL DCI received in a CORESET associated/configured with a value of CORESETGroupIndex, e.g., a beam indication DCI (e.g., DCI format 1_1 or 1_2 with or without DL assignment having one or more TCI fields to indicate one or more (e.g., $M>1$ or $N>1$, or $M=2/N=2$) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "disabled" (or "enabled") or "0" (or "1") or "01" (or "00," "10," "11"), the second indicated TCI state - among all the indicated (e.g., $M>1$ or $N>1$, or $M=2/N=2$) TCI states - could be used for PDCCH reception(s) in one or more CORESETs associated/configured with a (or the same) value of CORESET group index; i.e., the DM-RS antenna port(s) for the PDCCH reception(s) in one or more CORESETs associated/configured with a value of CORESETGroupIndex could be quasi co-located with the reference signal(s) provided in the second indicated TCI state - among all the indicated (e.g., $M>1$ or $N>1$, or $M=2/N=2$) TCI states.

In addition, when/if a UE is provided/indicated/configured by the network, in a DL DCI received in a CORESET associated with a value of CORESETGroupIndex, e.g., a beam indication DCI (e.g., DCI format 1_1 or 1_2 with or without DL assignment having one or more TCI fields to indicate one or more (e.g., $M>1$ or $N>1$, or $M=2/N=2$) TCI states/pairs of TCI states for UE-dedicated reception on PDSCH/PDCCH or dynamic-grant/configured-grant based PUSCH and all of dedicated PUCCH resources) received in a CORESET associated with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "enabled" (or "disabled") or "1" (or "0") or "10" (or "00," "01," "11"), the first and second indicated TCI states - among all the indicated (e.g., $M>1$ or **$N>1$, or** $M=2/N=2$) TCI states - could be (respectively) used for PDCCH reception(s) in a CORESET associated/configured with a (or the same) value of CORESETGroupIndex, or none of the indicated TCI states may be used for the PDCCH reception(s) in a CORESET associated/configured with a (or the same) value of CORESETGroupIndex; i.e., the DM-RS antenna port(s) for the PDCCH reception(s) in a CORESET associated/configured with a value of CORESET group index could be quasi co-located with the reference signals (respectively) provided in the first and second indicated TCI states - among all the indicated (e.g., $M>1$ or $N>1$, or $M=2/N=2$) TCI states.

And, when/if a UE is provided/indicated/configured by the network, in a DL DCI received in a CORESET associated with a value of CORESETGroupIndex, e.g., a beam indication DCI (e.g., DCI format 1_1 or 1_2 with or without DL assignment having one or more TCI fields to indicate one or more (e.g., $M>1$ or $N>1$, or $M=2/N=2$) TCI states/pairs of TCI states for UE-dedicated reception on PDSCH/PDCCH or dynamic-grant/configured-grant based PUSCH and all of dedicated PUCCH resources) received in a CORESET associated with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for PDCCH reception(s) in a CORESET associated/configured with a (or the same) value of CORESETGroupIndex, or none of the indicated TCI states may be used for the PDCCH reception(s) in a CORESET associated/configured with a (or the same) value of CORESETGroupIndex; i.e., the DM-RS antenna port(s) for the PDCCH reception(s) in a CORESET associated/configured with a value of CORESET group index could be quasi co-located with the reference signals (respectively) provided in the second and first indicated TCI states - among all the indicated (e.g., M>1 or N>1, or M=2/N=2) TCI states.

For another example, when/if a UE is provided/indicated/configured by the network, in a DL DCI received in a CORESET configured/associated with a value of CORESETGroupIndex, e.g., a beam indication DCI (e.g., DCI format 1_1 or 1_2 with or without DL assignment having one or more TCI fields to indicate one or more (e.g., M>1 or **N>1,** or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to a TCI state ID/index, the indicated TCI state - among all the indicated (e.g., M>1 or N>1, or M=2/N=2) TCI states - that corresponds to the indicated (e.g., by the indicator/DCI field(s) in the DCI) TCI state ID/index could be used for PDCCH reception(s) in one or more CORESETs associated/configured with a (or the same) value of CORESETGroupIndex; i.e., the DM-RS antenna port(s) for the PDCCH reception(s) in one or more CORESETs associated/configured with a value of CORESETGroupIndex could be quasi co-located with the reference signal(s) provided in the indicated TCI state - among all the indicated (e.g., M>1 or N>1, or M=2/N=2) TCI states - that corresponds to the indicated (e.g., by the indicator/DCI field(s) in the DCI) TCI state ID/index.

And, when/if a UE is provided/indicated/configured by the network, in a DL DCI received in a CORESET configured/associated with a value of CORESETGroupIndex, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to multiple (e.g., 2) TCI state IDs/indexes, the indicated (e.g., the first and second, or the second and first) TCI states - among all the indicated (e.g., M>1 or N>1, or M=2/N=2) TCI states - that correspond to the indicated (e.g., by the indicator/DCI field(s) in the DCI) TCI state IDs/indexes could be used for PDCCH reception(s) in a CORESET associated/configured with a (or the same) value of CORESETGroupIndex; i.e., the DM-RS antenna port(s) for the PDCCH reception(s) in a CORESET associated/configured with a value of CORESETGroupIndex could be quasi co-located with the reference signals (respectively) provided in the indicated (e.g., the first and second, or the second and first) TCI states - among all the indicated (e.g., M>1 or N>1, or M=2/N=2) TCI states - that correspond to the indicated (e.g., by the indicator/DCI field(s) in the DCI) TCI state IDs/indexes.

Yet for another example, when/if a UE is provided/indicated/configured by the network, in an UL DCI (e.g., DCI format 0_1 or 0_2) received in a CORESET configured/associated with a value of CORESET group index, the SRS resource set indicator set to "00" (or "01," "10," "11"), the first indicated TCI state - among all the indicated (e.g., M>1 or N>1, or M=2/N=2) TCI states - could be used for PDCCH reception(s) in one or more CORESETs associated/configured with a (or the same) value of CORESET group index; i.e., the DM-RS antenna port(s) for the PDCCH reception(s) in one or more CORESETs associated/configured with a value of CORESETGroupIndex could be quasi co-located with the reference signal(s) provided in the first indicated TCI state - among all the indicated (e.g., M>1 or N>1, or M=2/N=2) TCI states. Furthermore, when/if a UE is provided/indicated/configured by the network, in an UL DCI (e.g., DCI format 0_1 or 0_2) received in a CORESET associated/configured with a value of CORESET group index, the SRS resource set indicator set to "01" (or "00," "10," "11"), the second indicated TCI state - among all the indicated (e.g., M>1 or N>1, or M=2/N=2) TCI states - could be used for PDCCH reception(s) in one or more CORESETs associated/configured with a (or the same) value of CORESET group index; i.e., the DM-RS antenna port(s) for the PDCCH reception(s) in one or more CORESETs associated/configured with a value of CORESETGroupIndex could be quasi co-located with the reference signal(s) provided in the second indicated TCI state - among all the indicated (e.g., M>1 or N>1, or M=2/N=2) TCI states.

In addition, when/if a UE is provided/indicated/configured by the network, in an UL DCI (e.g., DCI format 0_1 or 0_2) received in a CORESET configured/associated with a value of CORESET group index, the SRS resource set indicator set to "10" (or "00," "01," "11"), the first and second indicated TCI states - among all the indicated (e.g., M>1 or N>1, or M=2/N=2) TCI states - could be (respectively) used for PDCCH reception(s) in a CORESET associated/configured with a (or the same) value of CORESET group index, or none of the indicated TCI states may be used for PDCCH reception(s) in a CORESET associated/configured with a (or the same) value of CORESETGroupIndex; i.e., the DM-RS antenna port(s) for the PDCCH reception(s) in a CORESET associated/configured with a value of CORESETGroupIndex could be quasi co-located with the reference signals (respectively) provided in the first and second indicated TCI states - among all the indicated (e.g., M>1 or N>1, or M=2/N=2) TCI states.

And, when/if a UE is provided/indicated/configured by the network, in an UL DCI (e.g., DCI format 0_1 or 0_2) received in a CORESET configured/associated with a value of CORESET group index, the SRS resource set indicator set to "11" (or "00," "01," "10"), the second and first indicated TCI states - among all the indicated (e.g., M>1 or N>1, or M=2/N=2) TCI states - could be (respectively) used for PDCCH reception(s) in a CORESET associated/configured with a (or the same) value of CORESET group index, or none of the indicated TCI states may be used for PDCCH reception(s) in a CORESET associated/configured with a (or the same) value of CORESETGroupIndex; i.e., the DM-RS antenna port(s) for the PDCCH reception(s) in a CORESET associated/configured with a value of CORESETGroupIndex could be quasi co-located with the reference signals (respectively) provided in the second and first indicated TCI states - among all the indicated (e.g., M>1 or N>1, or M=2/N=2) TCI states.

In a (sDCI based) multi-TRP system, for PDSCH reception(s), following examples can be provided.

In one example, the UE could be indicated/provided/configured by the network, e.g., via higher layer RRC signaling/parameter, an indicator to indicate one or more of the indicated TCI states for PDSCH reception(s) - i.e., the DM-RS antenna port(s) for the PDSCH reception(s) could be quasi co-located with the reference signal(s) provided in the indicated (e.g., by the RRC configured/indicated/provided indicator) one or more of the indicated TCI states. For example, the higher layer parameter PDCCH-Config/PDSCH-Config or ControlResourceSet that configures a CORESET could include/configure/provide/comprise/indicate the indicator. When/if the indicator is set to "enabled" (or "disabled") or "1" (or "0") or "00" (or "01," "10," "11"), e.g., when/if a UE receives a DCI - e.g., that schedules the PDSCH, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) - e.g., that schedules the PDSCH, in a CORESET associated/configured with the indicator set to "enabled" (or "disabled") or "1" (or "0") or "00" (or "01," "10," "11"), the first indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the first indicated TCI state - among all the indicated (e.g., M>1 or N>1, or M=2/N=2) TCI states.

Furthermore, when/if the indicator is set to "disabled" (or "enabled") or "0" (or "1") or "01" (or "00," "10," "11"), e.g., when/if a UE receives a DCI - e.g., that schedules the PDSCH, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) - e.g., that schedules the PDSCH, in a CORESET associated/configured with the indicator set to "disabled" (or "enabled") or "0" (or "1") or "01" (or "00," "10," "11"), the second indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the second indicated TCI state - among all the indicated (e.g., M>1 or N>1, or M=2/N=2) TCI states. In addition, when/if the indicator is set to "enabled" (or "disabled") or "1" (or "0") or "10" (or "00," "01," "11"), e.g., when/if a UE receives a DCI - e.g., that schedules the PDSCH, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) - e.g., that schedules the PDSCH, in a CORESET associated/configured with the indicator set to "enabled" (or "disabled") or "1" (or "0") or "10" (or "00," "01," "11"), the first and second indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the first and second indicated TCI states - among all the indicated (e.g., M>1 or N>1, or M=2/N=2) TCI states - respectively; when/if the indicator is set to "disabled" (or "enabled") or "0" (or "1") or "11" (or "00," "01," "10"), e.g., when/if a UE receives a DCI - e.g., that schedules the PDSCH, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) - e.g., that schedules the PDSCH, in a CORESET associated/configured with the indicator set to "disabled" (or "enabled") or "0" (or "1") or "11" (or "00," "01," "10"), the second and first indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the second and first indicated TCI states - among all the indicated (e.g., M>1 or N>1, or M=2/N=2) TCI states - respectively.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or 00, 01, 10 and 11). One or more CORESETs could be configured/associated with the same value of CORESETGroupIndex.

In another example, the UE could be indicated/provided/configured by the network, e.g., via higher layer RRC signaling/parameter, an indicator to indicate one or more of the indicated TCI states for PDSCH reception(s) - i.e., the DM-RS antenna port(s) for the PDSCH reception(s) could be quasi co-located with the reference signal(s) provided in the indicated (e.g., by the RRC configured/indicated/provided indicator) one or more of the indicated TCI states. For example, the higher layer parameter PDCCH-Config/PDSCH-Config or ControlResourceSet that configures a CORESET could include/configure/provide/comprise/indicate the indicator. When/if the indicator is set to "enabled" (or "disabled") or "1" (or "0") or "00" (or "01," "10," "11"), the TCI state for receiving the PDSCH could follow the TCI state used for receiving the PDCCH, e.g., the TCI state used for receiving a DCI - e.g., that schedules the PDSCH, e.g., a beam indication DCI (e.g., DCI format 1_1 or 1_2 with or without DL assignment having one or more TCI fields to indicate one or more (e.g., M>1 or **N>1,** or M=2/N=2) TCI states/pairs of TCI states for UE-dedicated reception on PDSCH/PDCCH or dynamic-grant/configured-grant based PUSCH and all of dedicated PUCCH resources) - e.g., that schedules the PDSCH; here, the TCI state could correspond to the first or second indicated TCI state - among all the indicated (e.g., M>1 or **N>1,** or M=2/N=2) TCI states; i.e., the DM-RS antenna port(s) for the PDSCH reception(s) could be quasi co-located with the reference signal(s) provided in the TCI state (e.g., the first or second indicated TCI state - among all the indicated (e.g., M>1 or **N>1,** or M=2/N=2) TCI states), with which the DM-RS antenna port(s) for the PDCCH reception(s) is quasi co-located.

Furthermore, when/if the indicator is set to "enabled" (or "disabled") or "1" (or "0") or "10" (or "00," "01," "11"), the first and second indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the first and second indicated TCI states - among all the indicated (e.g., M>1 or N>1, or M=2/N=2) TCI states - respectively; when/if the indicator is set to "enabled" (or "disabled") or "1" (or "0") or "11" (or "00," "01," "10"), the second and first indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the second and first indicated TCI states - among all the indicated (e.g., M>1 or N>1, or M=2/N=2) TCI states - respectively. In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or 00, 01, 10 and 11). One or more CORESETs could be configured/associated with the same value of CORESETGroupIndex.

In yet another example, the UE could be indicated/provided/configured by the network, e.g., via higher layer RRC signaling/parameter, an indicator to indicate one or more of the indicated TCI states for PDSCH reception(s) - i.e., the DM-RS antenna port(s) for the PDSCH reception(s) could be quasi co-located with the reference signal(s) provided in the indicated (e.g., by the RRC configured/indicated/provided indicator) one or more of the indicated TCI states. For example, the higher layer parameter PDCCH-Config/PDSCH-Config or ControlResourceSet that configures a CORESET could include/configure/provide/comprise/indicate the indicator. When/if the indicator is set to "enabled" (or "disabled") or "1" (or "0") or "00" (or "01," "10," "11"), the TCI state for receiving the PDSCH could follow the TCI state used for receiving the PDCCH(s) in one or more CORESETs associated/configured with CORESETGroupIndex value k (e.g., k=0 or 1, or k= "00," "01," "10" or "11"), e.g., the TCI state used for receiving a DCI - e.g., that schedules the PDSCH - in a CORESET associated/configured with CORESETGroupIndex value k (e.g., k=0 or 1, or k= "00," "01," "10" or "11"), e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) - e.g., that schedules the PDSCH - received in a CORESET associated/configured with CORESETGroupIndex value k (e.g., k=0 or 1, or k= "00," "01," "10" or "11"); here, the TCI state could correspond to the first or second indicated TCI state - among all the indicated (e.g., M>1 or N>1, or M=2/N=2) TCI states, and the value k could be determined according to (i) fixed in the system specification(s) or (2) indicated/configured/provided by the network, e.g., via higher layer RRC signaling and/or MAC CE command and/or dynamic DCI based L1 signaling; i.e., the DM-RS antenna port(s) for the PDSCH reception(s) could be quasi co-located with the reference signal(s) provided in the TCI state (e.g., the first or second indicated TCI state - among all the indicated (e.g., M>1 or N>1, or M=2/N=2) TCI states), with which the DM-RS antenna port(s) for the PDCCH reception(s) in one or more CORESETs associated/configured with CORESETGroupIndex value k (e.g., k=0 or 1, or k= "00," "01," "10" or "11") is quasi co-located, where the value k could be determined according to (i) fixed in the system specification(s) or (2) indicated/configured/provided by the network, e.g., via higher layer RRC signaling and/or MAC CE command and/or dynamic DCI based L1 signaling. Furthermore, when/if the indicator is set to "enabled" (or "disabled") or "1" (or "0") or "10" (or "00," "01," "11"), the first and second indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the first and second indicated TCI states - among all the indicated (e.g., M>1 or N>1, or M=2/N=2) TCI states - respectively; when/if the indicator is set to "enabled" (or "disabled") or "1" (or "0") or "11" (or "00," "01," "10"), the second and first indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the second and first indicated TCI states - among all the indicated (e.g., M>1 or N>1, or M=2/N=2) TCI states - respectively.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., "0" and "1," or "00," "01," "10," and "11"). One or more CORESETs could be configured/associated with the same value of CORESETGroupIndex.

In yet another example, the UE could be indicated/provided/configured by the network, e.g., via higher layer RRC signaling/parameter and/or MAC CE command and/or dynamic DCI based L1 signaling, an indicator to indicate one or more of the indicated TCI states for PDSCH reception(s) - i.e., the DM-RS antenna port(s) for the PDSCH reception(s) could be quasi co-located with the reference signal(s) provided in the indicated (e.g., by the RRC/MAC CE/DCI configured/indicated/provided indicator) one or more of the indicated TCI states. For example, the higher layer parameter PDCCH-Config/PDSCH-Config or ControlResourceSet that configures a CORESET or a MAC CE command or a DCI format (e.g., DCI format 0_1, 0_2, 1_1, 1_2 or etc.) could include/configure/provide/comprise/indicate the indicator. When/if the indicator is set to "enabled" (or "disabled") or "1" (or "0") or "00" (or "01," "10," "11"), the first indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the first indicated TCI state - among all the indicated (e.g., M>1 or N>1, or M=2/N=2) TCI states; when/if the indicator is set to "disabled" (or "enabled") or "0" (or "1") or "01" (or "00," "10," "11"), the second indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the second indicated TCI state - among all the indicated (e.g., M>1 or N>1, or M=2/N=2) TCI states.

Furthermore, when/if the indicator is set to "enabled" (or "disabled") or "1" (or "0") or "10" (or "00," "01," "11"), the first and second indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the first and second indicated TCI states - among all the indicated (e.g., M>1 or N>1, or M=2/N=2) TCI states - respectively; when/if the indicator is set to "enabled" (or "disabled") or "1" (or "0") or "11" (or "00," "01," "10"), the second and first indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the second and first indicated TCI states - among all the indicated (e.g., M>1 or N>1, or M=2/N=2) TCI states - respectively.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or 00, 01, 10 and 11). One or more CORESETs could be configured/associated with the same value of CORESETGroupIndex.

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), an indicator to indicate one or more of the indicated TCI states for PDSCH reception(s) - i.e., the DM-RS antenna port(s) for the PDSCH reception(s) could be quasi co-located with the reference signal(s) provided in the indicated (e.g., by the indicator provided/indicated/configured in the MAC CE) one or more of the indicated TCI states.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For example, when/if the UE receives from the network the MAC CE command with the indicator provided/indicated/configured therein set to "enabled" (or "disabled") or "1" (or "0"), the first indicated TCI state - among all the indicated (e.g., M>1 or N>1, or M=2/N=2) TCI states - could be used for PDSCH reception(s).

Furthermore, when/if the UE receives from the network the MAC CE command with the indicator provided/indicated/configured therein set to "disabled" (or "enabled") or "0" (or "1"), the second indicated TCI state - among all the indicated (e.g., M>1 or N>1, or M=2/N=2) TCI states - could be used for PDSCH reception(s). For another example, when/if the UE receives from the network the MAC CE command with the indicator provided/indicated/configured therein set to a TCI state ID/index, the indicated TCI state corresponding to the TCI state ID/index could be used for PDSCH reception(s).

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), one or more indicators each associated/configured to/for an activated TCI codepoint in the MAC CE command; each indicator could indicate one or more of the TCI states of the corresponding TCI codepoint for PDSCH reception(s) - e.g., when the corresponding TCI codepoint is indicated in the beam indication DCI. That is, the DM-RS antenna port(s) for the PDSCH reception(s) could be quasi co-located with the reference signal(s) provided in the indicated (e.g., by an indicator provided/configured/indicated in the MAC CE command) one or more of the indicated TCI states.

In the present disclosure, each indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For example, when/if the indicator associated/configured to/for the TCI codepoint indicated in the beam indication DCI is set to "enabled" (or "disabled") or "1" (or "0") - the indicator is provided/indicated/configured in the MAC CE command, the first indicated TCI state - among all the indicated (e.g., M>1 or N>1, or M=2/N=2) TCI states of the TCI codepoint indicated in the beam indication DCI - could be used for PDSCH reception(s).

Furthermore, when/if the indicator associated/configured to/for the TCI codepoint indicated in the beam indication DCI is set to "disabled" (or "enabled") or "0" (or "1") - the indicator is provided/indicated/configured in the MAC CE command, the second indicated TCI state - among all the indicated (e.g., M>1 or N>1, or M=2/N=2) TCI states of the TCI codepoint indicated in the beam indication DCI - could be used for PDSCH reception(s). For another example, when/if the indicator associated/configured to/for the TCI codepoint indicated in the beam indication DCI is set to a TCI state ID/index - the indicator is provided/indicated/configured in the MAC CE command, the indicated TCI state - among all the indicated (e.g., M>1 or N>1, or M=2/N=2) TCI states of the TCI codepoint indicated in the beam indication DCI - corresponding to the TCI state ID/index could be used for PDSCH reception(s).

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), an indicator to indicate one or more of the indicated TCI states for receiving PDSCH(s) scheduled by DCI(s)/PDCCH candidate(s) received in one or more CORESETs associated/configured with a (or the same) value of CORESET group index - i.e., the DM-RS antenna port(s) for receiving PDSCH(s) scheduled by DCI(s)/PDCCH candidate(s) received in one or more CORESETs associated/configured with a (or the same) value of CORESET group index could be quasi co-located with the reference signal(s) provided in the indicated (e.g., by the indicator in the MAC CE command configured/associated with the same value of CORESET group index) one or more of the indicated TCI states.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. Furthermore, as discussed above, the MAC CE command could be configured/associated with the CORESETGroupIndex value. For instance, the MAC CE command/format could contain/provide/indicate/comprise one or more fields indicating/providing a value of CORESETGroupIndex.

For example, when/if the UE receives from the network the MAC CE command configured/associated with a CORESETGroupIndex value with the indicator provided/indicated/configured therein set to "enabled" (or "disabled") or "1" (or "0"), the first indicated TCI state - among all the indicated (e.g., M>1 or N>1, or M=2/N=2) TCI states - could be used for receiving PDSCH(s) scheduled by DCI(s)/PDCCH candidate(s) received in one or more CORESETs associated/configured with a (or the same) CORESETGroupIndex value.

Furthermore, when/if the UE receives from the network the MAC CE command configured/associated with a CORESETGroupIndex value with the indicator provided/indicated/configured therein set to "disabled" (or "enabled") or "0" (or "1"), the second indicated TCI state - among all the indicated (e.g., M>1 or N>1, or M=2/N=2) TCI states - could be used for receiving PDSCH(s) scheduled by DCI(s)/PDCCH candidate(s) received in one or more CORESETs associated/configured with a (or the same) CORESETGroupIndex value. For another example, when/if the UE receives from the network the MAC CE command configured/associated with a CORESETGroupIndex value with the indicator provided/indicated/configured therein set to a TCI state ID/index, the indicated TCI state corresponding to the TCI state ID/index could be used for receiving PDSCH(s) scheduled by DCI(s)/PDCCH candidate(s) received in one or more CORESETs configured/associated with a (or the same) value of CORESETGroupIndex.

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), one or more indicators each associated/configured to/for an activated TCI codepoint in the MAC CE command; each indicator could indicate one or more of the TCI states of the corresponding TCI codepoint for receiving PDSCH(s) scheduled by DCI(s)/PDCCH candidate(s) received in one or more CORESETs associated with a (or the same) value of CORESET group index - e.g., when the corresponding TCI codepoint is indicated in the beam indication DCI. That is, the DM-RS antenna port(s) for receiving the PDSCH(s) scheduled by DCI(s)/PDCCH candidate(s) received in one or more CORESETs configured/associated with a (or the same) value of CORESET group index could be quasi co-located with the reference signal(s) provided in the indicated (e.g., by an indicator in the MAC CE command configured/associated with the same value of CORESETGroupIndex value) one or more of the indicated TCI states.

In the present disclosure, each indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. Furthermore, as discussed above, the MAC CE command could be configured/associated with the CORESETGroupIndex value. For instance, the MAC CE command/format could contain/provide/indicate/comprise one or more fields indicating/providing a value of CORESETGroupIndex. For example, when/if the indicator associated/configured to/for the TCI codepoint indicated in the beam indication DCI is set to "enabled" (or "disabled") or "1" (or "0") - the indicator is provided/indicated/configured in the MAC CE command configured/associated with a value of CORESETGroupIndex, the first indicated TCI state - among all the indicated (e.g., M>1 or N>1, or M=2/N=2) TCI states of the TCI codepoint indicated in the beam indication DCI - could be used for receiving PDSCH(s) scheduled by DCI(s)/PDCCH candidate(s) received in one or more CORESETs associated/configured with the same value of CORESETGroupIndex.

Furthermore, when/if the indicator associated/configured to/for the TCI codepoint indicated in the beam indication DCI is set to "disabled" (or "enabled") or "0" (or "1") - the indicator is provided/indicated/configured in the MAC CE command associated/configured with a value of CORESETGroupIndex, the second indicated TCI state - among all the indicated (e.g., M>1 or N>1, or M=2/N=2) TCI states of the TCI codepoint indicated in the beam indication DCI - could be used for receiving PDSCH(s) scheduled by DCI(s)/PDCCH candidate(s) received in one or more CORESETs configured/associated with the same value of CORESETGroupIndex.

For another example, when/if the indicator associated/configured to/for the TCI codepoint indicated in the beam indication DCI is set to a TCI state ID/index - the indicator is provided/indicated/configured in the MAC CE command configured/associated with a value of CORESET group index, the indicated TCI state - among all the indicated (e.g., M>1 or N>1, or M=2/N=2) TCI states of the TCI codepoint indicated in the beam indication DCI - corresponding to the TCI state ID/index could be used for receiving PDSCH(s) scheduled by DCI(s)/PDCCH candidate(s) received in one or more CORESETs associated/configured with the same value of CORESETGroupIndex.

In yet another example, the UE could be indicated/provided/configured by the network, e.g., in a DCI or via dynamic DCI based L1 signaling, an indicator to indicate one or more of the indicated TCI states for PDSCH reception(s) - i.e., the DM-RS antenna port(s) for the PDSCH reception(s) could be quasi co-located with the reference signal(s) provided in the indicated (e.g., by the indicator in the DCI) one or more of the indicated TCI states. For example, a new DCI field, denoted by "TCI state(s) indication" field, could be introduced in a DCI format (e.g., in DCI format 1_1, 1_2, 0_1, 0_2 or etc.), and used to provide the indicator. For another example, one or more bits/codepoints of one or more existing DCI fields - e.g., the "Transmission configuration indication" field(s) or the "SRS resource set indicator" field(s) or the "time-domain resource allocation" (TDRA) field(s) or the "frequency-domain resource allocation" (FDRA) field(s) - in a DCI format (e.g., DCI format 1_1, 1_2, 0_1, 0_2 or etc.) could be repurposed/used to provide the indicator.

For instance, the indicator could be provided in a beam indication DCI (e.g., DCI format 1_1 or 1_2 with or without DL assignment); alternatively, the indicator could be provided in an uplink DCI (e.g., DCI format 0_1 or 0_2 with or without UL assignment). In addition, the DCI that provides/indicates/configures the indicator could schedule the PDSCH(s) or not. Furthermore, in the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., "0" and "1," or "00," "01," "10" or "11"). One or more CORESETs could be configured/associated with the same value of CORESETGroupIndex.

For example, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or **N>1, or** M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "enabled" (or "disabled") or "1" (or "0") or "00" (or "01," "10," "11"), the first indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the first indicated TCI state - among all the indicated (e.g., M>1 or N>1, or M=2/N=2) TCI states.

Furthermore, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or **N>1, or** M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "disabled" (or "enabled") or "0" (or "1") or "01" (or "00," "10," "11"), the second indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the second indicated TCI state - among all the indicated (e.g., M>1 or N>1, or M=2/N=2) TCI states. When/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or **N>1,** or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "enabled" (or "disabled") or "1" (or "0") or "10" (or "00," "01," "11"), the first and second indicated TCI states - among all the indicated (e.g., M>1 or N>1, or M=2/N=2) TCI states - could be used for PDSCH reception(s), respectively; i.e., the DM-RS antenna port(s) for the PDSCH reception(s) could be quasi co-located with the reference signal(s) provided in the first and second indicated TCI states - among all the indicated (e.g., M>1 or N>1, or M=2/N=2) TCI states - respectively; when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "disabled" (or "enabled") or "0" (or "1") or "11" (or "00," "01," "10"), the second and first indicated TCI states - among all the indicated (e.g., M>1 or N>1, or M=2/N=2) TCI states - could be used for PDSCH reception(s), respectively; i.e., the DM-RS antenna port(s) for the PDSCH reception(s) could be quasi co-located with the reference signal(s) provided in the second and first indicated TCI states - among all the indicated (e.g., M>1 or N>1, or M=2/N=2) TCI states - respectively. The DCI that provides/configures/indicates the indicator could be with or without DL assignment, or could schedule the corresponding PDSCH(s) or not.

For another example, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s) such as the "Transmission configuration indication" field that provides/configures/indicates the indicator) set to a TCI state ID/index, the indicated TCI state - among all the indicated (e.g., M>1 or N>1, or M=2/N=2) TCI states - that corresponds to the indicated (e.g., by the indicator/DCI field(s) such as the TCI field in the DCI) TCI state ID/index could be used for PDSCH reception(s); i.e., the DM-RS antenna port(s) for the PDSCH reception(s) could be quasi co-located with the reference signal(s) provided in the indicated TCI state - among all the indicated (e.g., M>1 or N>1, or M=2/N=2) TCI states - that corresponds to the indicated (e.g., by the indicator/DCI field(s) such as the TCI field in the DCI) TCI state ID/index.

Furthermore, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s) such as the TCI field that provides/configures/indicates the indicator) set to multiple (e.g., more than one) TCI state IDs/indexes, the indicated TCI states - among all the indicated (e.g., M>1 or N>1, or M=2/N=2) TCI states - that correspond to the indicated (e.g., by the indicator/DCI field(s) such as the TCI field in the DCI) TCI state IDs/indexes could be used for PDSCH reception(s); i.e., the DM-RS antenna port(s) for the PDSCH reception(s) could be quasi co-located with the reference signal(s) provided in the indicated TCI states - among all the indicated (e.g., M>1 or N>1, or M=2/N=2) TCI states - that correspond to the indicated (e.g., by the indicator/DCI field(s) such as the TCI field in the DCI) TCI state IDs/indexes; for this example, the indicated TCI states could correspond to the first and second indicated TCI states respectively or the second and first TCI states respectively, depending on, e.g., a fixed relationship specified/defined in the system specification(s) and/or network's configuration(s)/indication(s) via higher layer RRC signaling/parameter and/or MAC CE command and/or dynamic DCI based L1 signaling. The DCI that provides/configures/indicates the indicator could be with or without DL assignment, or could schedule the corresponding PDSCH(s) or not.

Yet for another example, when/if a UE is provided/indicated/configured by the network, in an UL DCI (e.g., DCI format 0_1 or 0_2), the SRS resource set indicator set to "00" (or "01," "10," "11"), the first indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the first indicated TCI state - among all the indicated (e.g., M>1 or N>1, or M=2/N=2) TCI states; when/if a UE is provided/indicated/configured by the network, in an UL DCI (e.g., DCI format 0_1 or 0_2), the SRS resource set indicator set to "01" (or "00," "10," "11"), the second indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the second indicated TCI state - among all the indicated (e.g., M>1 or N>1, or M=2/N=2) TCI states.

Furthermore, when/if a UE is provided/indicated/configured by the network, in an UL DCI (e.g., DCI format 0_1 or 0_2), the SRS resource set indicator set to "10" (or "00," "01," "11"), the first and second indicated TCI states - among all the indicated (e.g., M>1 or N>1, or M=2/N=2) TCI states - could be used for PDSCH reception(s), respectively; i.e., the DM-RS antenna port(s) for the PDSCH reception(s) could be quasi co-located with the reference signal(s) provided in the first and second indicated TCI states - among all the indicated (e.g., M>1 or N>1, or M=2/N=2) TCI states - respectively; when/if a UE is provided/indicated/configured by the network, in an UL DCI (e.g., DCI format 0_1 or 0_2), the SRS resource set indicator set to "11" (or "00," "01," "10"), the second and first indicated TCI states - among all the indicated (e.g., M>1 or N>1, or M=2/N=2) TCI states - could be used for PDSCH reception(s), respectively; i.e., the DM-RS antenna port(s) for the PDSCH reception(s) could be quasi co-located with the reference signal(s) provided in the second and first indicated TCI states - among all the indicated (e.g., M>1 or N>1, or M=2/N=2) TCI states - respectively.

Yet for another example, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), a TCI state (or a TCI state ID/index) provided by a codepoint of the "Transmission configuration indication" (TCI) field, the indicated TCI state could be used for PDSCH reception(s); i.e., the DM-RS antenna port(s) for the PDSCH reception(s) could be quasi co-located with the reference signal(s) provided in the indicated TCI state by the TCI state codepoint of the TCI field in the DCI.

Furthermore, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), multiple (e.g., more than one) TCI states (or TCI state IDs/indexes) by a codepoint of the TCI field, the indicated TCI states could be used for PDSCH reception(s); i.e., the DM-RS antenna port(s) for the PDSCH reception(s) could be quasi co-located with the reference signal(s) provided in the indicated TCI states by the TCI state codepoint of the TCI field in the DCI; for this example, the indicated TCI states could correspond to the first and second indicated TCI states respectively or the second and first TCI states respectively, depending on, e.g., a fixed relationship specified/defined in the system specification(s) and/or network's configuration(s)/indication(s) via higher layer RRC signaling/parameter and/or MAC CE command and/or dynamic DCI based L1 signaling.

Alternatively, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), multiple (e.g., more than one) TCI states (or TCI state IDs/indexes) by a codepoint of the TCI field, the UE could use one or more of the indicated TCI states for PDSCH reception(s) based on an indicator provided/configured/indicated by the network, e.g., via higher layer RRC signaling and/or MAC CE command and/or dynamic DCI based signaling; i.e., the DM-RS antenna port(s) for the PDSCH reception(s) could be quasi co-located with the reference signal(s) provided in one or more of the indicated TCI states, e.g., by the TCI state codepoint of the TCI field in the DCI according to the indicator; here, the indicator could be defined/specified follow the design examples presented therein. The DCI that provides/configures/indicates the indicator could be with or without DL assignment, or could schedule the corresponding PDSCH(s) or not.

Yet for another example, when the UE is scheduled with one or more PDSCHs by a DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources), the UE could use one or more of the indicated TCI states for PDSCH reception(s) based on an indicator provided/configured/indicated by the network, e.g., via higher layer RRC signaling and/or MAC CE command and/or dynamic DCI based signaling; i.e., the DM-RS antenna port(s) for the PDSCH reception(s) could be quasi co-located with the reference signal(s) provided in one or more of the indicated TCI states, e.g., by the TCI state codepoint of the TCI field in the DCI according to the indicator; here, the indicator could be defined/specified follow the design examples provided in the present disclosure.

For instance, when the UE is scheduled with one PDSCH by a DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources), the UE could use the first or second indicated TCI state - among all the indicated (e.g., M>1 or N>1, or M=2/N=2) TCI states - for PDSCH reception(s) based on the indicator; i.e., the DM-RS antenna port(s) for the PDSCH reception(s) could be quasi co-located with the reference signal(s) provided in the first or second indicated TCI states - among all the indicated (e.g., M>1 or N>1, or M=2/N=2) TCI states - according to the indicator; when the UE is scheduled with multiple PDSCHs by a DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources), the UE could use the first and second indicated TCI states or the second and first indicated TCI states - among all the indicated (e.g., M>1 or N>1, or M=2/N=2) TCI states - for receiving the first and second PDSCH indicated by the TDRA information field respectively based on the indicator; i.e., the DM-RS antenna port(s) for receiving the first and second PDSCHs indicated by the TDRA information field could be quasi co-located with the reference signal(s) provided in the first and second indicated TCI states or the second and first indicated TCI states - among all the indicated (e.g., M>1 or N>1, or M=2/N=2) TCI states - respectively according to the indicator.

Yet for another example, when the UE is scheduled with multiple (e.g., two) PDSCHs by a DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources), the UE could use one or more of the indicated TCI states for PDSCH reception(s) based on an indicator provided/configured/indicated by the network, e.g., via higher layer RRC signaling and/or MAC CE command and/or dynamic DCI based signaling; i.e., the DM-RS antenna port(s) for the PDSCH reception(s) could be quasi co-located with the reference signal(s) provided in one or more of the indicated TCI states, e.g., by the TCI state codepoint of the TCI field in the DCI according to the indicator; here, the indicator could be defined/specified follow the design examples provided in the present disclosure.

For instance, the UE could use the first or second indicated TCI state (based on the indicator) - among all the indicated (e.g., M>1 or N>1, or M=2/N=2) TCI states - for receiving the first or second PDSCHs indicated by the TDRA information field; i.e., the DM-RS antenna port(s) for the first or second PDSCHs indicated by the TDRA information field could be quasi co-located with the reference signal(s) provided in the first or second indicated TCI states - among all the indicated (e.g., M>1 or N>1, or M=2/N=2) TCI states - according to the indicator; whether the indicated (e.g., the first or second) TCI state may be used for the first or second PDSCHs indicated by the TDRA information filed could be determined according to: (i) a fixed mapping/association relationship in the system specification(s) or (ii) provided/indicated/configured by the network, e.g., via higher layer RRC signaling and/or MAC CE command and/or dynamic DCI based signaling; alternatively, the UE could use the first and second indicated TCI states or the second and first indicated TCI states - among all the indicated (e.g., M>1 or N>1, or M=2/N=2) TCI states - for receiving the first and second PDSCHs indicated by the TDRA information field respectively based on the indicator; i.e., the DM-RS antenna port(s) for receiving the first and second PDSCHs indicated by the TDRA information field could be quasi co-located with the reference signal(s) provided in the first and second indicated TCI states or the second and first indicated TCI states - among all the indicated (e.g., M>1 or N>1, or M=2/N=2) TCI states - respectively according to the indicator.

In yet another example, the UE could be indicated/provided/configured by the network, e.g., in a DCI or via dynamic DCI based L1 signaling received in a CORESET associated/configured with a value of CORESET group index, an indicator to indicate one or more of the indicated TCI states for receiving PDSCH(s) scheduled by DCI(s)/PDCCH candidate(s) received in one or more CORESETs configured/associated with the same value of CORESET group index - i.e., the DM-RS antenna port(s) for the PDSCH reception(s) scheduled by DCI(s)/PDCCH candidate(s) received in one or more CORESETs configured/associated with the a value of CORESET group index could be quasi co-located with the reference signal(s) provided in the indicated (e.g., by the indicator in the DCI received in a CORESET associated/configured with the same value of CORESETGroupIndex) one or more of the indicated TCI states.

For example, a new DCI field, denoted by "TCI state(s) indication" field, could be introduced in a DCI format (e.g., in DCI format 1_1, 1_2, 0_1, 0_2 or etc.), and used to provide the indicator. For another example, one or more bits/codepoints of one or more existing DCI fields - e.g., the "Transmission configuration indication" field(s) or the "SRS resource set indicator" field(s) or the "time-domain resource allocation" (TDRA) field(s) or the "frequency-domain resource allocation" (FDRA) field(s) - in a DCI format (e.g., DCI format 1_1, 1_2, 0_1, 0_2 or etc.) could be repurposed/used to provide the indicator.

For instance, the indicator could be provided in a beam indication DCI (e.g., DCI format 1_1 or 1_2 with or without DL assignment); alternatively, the indicator could be provided in an uplink DCI (e.g., DCI format 0_1 or 0_2 with or without UL assignment). Furthermore, in the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and **1,** or "00," "01," "10" or "11"). One or more CORESETs could be configured/associated with the same value of CORESETGroupIndex.

For example, when/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "enabled" (or "disabled") or "1" (or "0") or "00" (or "01," "10," "11"), the first indicated TCI state - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the first indicated TCI state - among all the indicated (e.g., M>1 or N>1, or M=2/N=2) TCI states.

Furthermore, when/if a UE is provided/indicated/configured by the network, in a DL DCI received in a CORESET associated/configured with a value of CORESETGroupIndex, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "disabled" (or "enabled") or "0" (or "1") or "01" (or "00," "10," "11"), the second indicated TCI state - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the second indicated TCI state - among all the indicated (e.g., M>1 or N>1, or M=2/N=2) TCI states.

When/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "enabled" (or "disabled") or "1" (or "0") or "10" (or "00," "01," "11"), the first and second indicated TCI states - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index, respectively; i.e., the DM-RS antenna port(s) for the PDSCH reception(s) scheduled by DCI(s)/PDCCH candidate(s) received in one or more CORESETs configured/associated with the same value of CORESET group index could be quasi co-located with the reference signal(s) provided in the first and second indicated TCI states - among all the indicated (e.g., M>1 or N>1, or M=2/N=2) TCI states - respectively; when/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESET group index, the indicator (and therefore, the corresponding DCI field(s)) set to "disabled" (or "enabled") or "0" (or "1") or "11" (or "00," "01," "10"), the second and first indicated TCI states - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index, respectively; i.e., the DM-RS antenna port(s) for the PDSCH reception(s) scheduled by DCI(s)/PDCCH candidate(s) received in one or more CORESETs configured/associated with the same value of CORESET group index could be quasi co-located with the reference signal(s) provided in the second and first indicated TCI states - among all the indicated (e.g., M>1 or N>1, or M=2/N=2) TCI states - respectively.

For another example, when/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESET group index, the indicator (and therefore, the corresponding DCI field(s) such as the "transmission configuration indication" field that provides/configures/indicates the indicator) set to a TCI state ID/index, the indicated TCI state - among all the indicated (e.g., M>1 or N>1, or M=2/N=2) TCI states - that corresponds to the indicated (e.g., by the indicator/DCI field(s) such as the TCI field in the DCI received in a CORESET associated/configured with a value of CORESET group index) TCI state ID/index could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the indicated TCI state - among all the indicated (e.g., M>1 or N>1, or M=2/N=2) TCI states - that corresponds to the indicated (e.g., by the indicator/DCI field(s) such as the TCI field in the DCI received in a CORESET associated/configured with the same value of CORESET group index) TCI state ID/index.

Furthermore, when/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESET group index or an UL DCI (e.g., DCI format 0_1 or 0_2) received in a CORESET associated/configured with a value of CORESETGroupIndex, the indicator (and therefore, the corresponding DCI field(s) such as the TCI field that provides/configures/indicates the indicator) set to multiple (e.g., more than one) TCI state IDs/indexes, the indicated TCI states - among all the indicated (e.g., M>1 or N>1, or M=2/N=2) TCI states - that correspond to the indicated (e.g., by the indicator/DCI field(s) such as the TCI field in the DCI received in a CORESET associated/configured with a value of CORESET group index) TCI state IDs/indexes could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the indicated TCI states - among all the indicated (e.g., M>1 or N>1, or M=2/N=2) TCI states - that correspond to the indicated (e.g., by the indicator/DCI field(s) such as the TCI field in the DCI received in a CORESET associated/configured with the same value of CORESET group index) TCI state IDs/indexes; for this example, the indicated TCI states could correspond to the first and second indicated TCI states respectively or the second and first TCI states respectively, depending on, e.g., a fixed relationship specified/defined in the system specification(s) and/or network's configuration(s)/indication(s) via higher layer RRC signaling/parameter and/or MAC CE command and/or dynamic DCI based L1 signaling.

Yet for another example, when/if a UE is provided/indicated/configured by the network, in an UL DCI (e.g., DCI format 0_1 or 0_2) received in a CORESET associated/configured with a value of CORESET group index, the SRS resource set indicator set to "00" (or "01," "10," "11"), the first indicated TCI state - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the first indicated TCI state - among all the indicated (e.g., M>1 or N>1, or M=2/N=2) TCI states; when/if a UE is provided/indicated/configured by the network, in an UL DCI (e.g., DCI format 0_1 or 0_2) received in a CORESET associated/configured with a value of CORESETGroupIndex, the SRS resource set indicator set to "01" (or "00," "10," "11"), the second indicated TCI state - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the second indicated TCI state - among all the indicated (e.g., M>1 or N>1, or M=2/N=2) TCI states.

Furthermore, when/if a UE is provided/indicated/configured by the network, in an UL DCI (e.g., DCI format 0_1 or 0_2) received in a CORESET associated/configured with a value of CORESET group index, the SRS resource set indicator set to "10" (or "00," "01," "11"), the first and second indicated TCI states - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index, respectively; i.e., the DM-RS antenna port(s) for the PDSCH reception(s) scheduled by DCI(s)/PDCCH candidate(s) received in one or more CORESETs configured/associated with the same value of CORESET group index could be quasi co-located with the reference signal(s) provided in the first and second indicated TCI states - among all the indicated (e.g., M>1 or N>1, or

M=2/N=2) TCI states - respectively; when/if a UE is provided/indicated/configured by the network, in an UL DCI (e.g., DCI format 0_1 or 0_2) received in a CORESET configured/associated with a value of CORESETGroupIndex, the SRS resource set indicator set to "11" (or "00," "01," "10"), the second and first indicated TCI states - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index, respectively; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the second and first indicated TCI states - among all the indicated (e.g., M>1 or N>1, or M=2/N=2) TCI states - respectively.

Yet for another example, when/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESET group index, a TCI state (or a TCI state ID/index) provided by a codepoint of the "Transmission configuration indication" (TCI) field, the indicated TCI state could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the indicated TCI state by the TCI state codepoint of the TCI field in the DCI.

Furthermore, when/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a CORESETGroupIndex value or an UL DCI (e.g., DCI format 0_1 or 0_2) received in a CORESET associated/configured with a value of CORESETGroupIndex, multiple (e.g., more than one) TCI states (or TCI state IDs/indexes) by a codepoint of the TCI field, the indicated TCI states could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the indicated TCI states by the TCI state codepoint of the TCI field in the DCI; for this example, the indicated TCI states could correspond to the first and second indicated TCI states respectively or the second and first TCI states respectively, depending on, e.g., a fixed relationship specified/defined in the system specification(s) and/or network's configuration(s)/indication(s) via higher layer RRC signaling/parameter and/or MAC CE command and/or dynamic DCI based L1 signaling.

Alternatively, when/if a UE is provided/indicated/configured by the network, in a DL DCI received in a CORESET configured/associated with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESET group index or an UL DCI (e.g., DCI format 0_1 or 0_2) received in a CORESET configured/associated with a value of CORESET group index, multiple (e.g., more than one) TCI states (or TCI state IDs/indexes) by a codepoint of the TCI field, the UE could use one or more of the indicated TCI states for PDSCH reception(s) scheduled by DCI(s)/PDCCH candidate(s) received in one or more CORESETs configured/associated with the same value of CORESET group index based on an indicator provided/configured/indicated by the network, e.g., via higher layer RRC signaling and/or MAC CE command and/or dynamic DCI based signaling; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in one or more of the indicated TCI states, e.g., by the TCI state codepoint of the TCI field in the DCI according to the indicator; here, the indicator could be defined/specified follow the design examples provided in the present disclosure.

Yet for another example, when the UE is scheduled with one or more PDSCHs by a DCI received in a CORESET configured/associated with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESET group index, the UE could use one or more of the indicated TCI states for PDSCH reception(s) scheduled by DCI(s)/PDCCH candidate(s) received in one or more CORESETs configured/associated with the same value of CORESET group index based on an indicator provided/configured/indicated by the network, e.g., via higher layer RRC signaling and/or MAC CE command and/or dynamic DCI based signaling; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in one or more of the indicated TCI states, e.g., by the TCI state codepoint of the TCI field in the DCI according to the indicator; here, the indicator could be defined/specified follow the design examples provided in the present disclosure.

For instance, when the UE is scheduled with one PDSCH by a DCI received in a CORESET configured/associated with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESET group index, the UE could use the first or second indicated TCI state - among all the indicated (e.g., M>1 or N>1, or M=2/N=2) TCI states - for PDSCH reception(s) scheduled by DCI(s)/PDCCH candidate(s) received in one or more CORESETs configured/associated with the same value of CORESET group index based on the indicator; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the first or second indicated TCI states - among all the indicated (e.g., M>1 or N>1, or M=2/N=2) TCI states - according to the indicator; when the UE is scheduled with multiple PDSCHs by a DCI received in a CORESET configured/associated with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESET group index, the UE could use the first and second indicated TCI states or the second and first indicated TCI states - among all the indicated (e.g., M>1 or N>1, or M=2/N=2) TCI states - for receiving the first and second PDSCH indicated by the TDRA information field respectively based on the indicator; i.e., the DM-RS antenna port(s) for receiving the first and second PDSCHs indicated by the TDRA information field could be quasi co-located with the reference signal(s) provided in the first and second indicated TCI states or the second and first indicated TCI states - among all the indicated (e.g., M>1 or N>1, or M=2/N=2) TCI states - respectively according to the indicator; here, the first and second PDSCHs could be scheduled by DCI(s)/PDCCH candidate(s) received in one or more CORESETs configured/associated with the same value of CORESET group index as that associated/configured with their scheduling DCI.

Yet for another example, when the UE is scheduled with multiple (e.g., two) PDSCHs by a DCI received in a CORESET configured/associated with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESET group index, the UE could use one or more of the indicated TCI states for PDSCH reception(s) scheduled by DCI(s)/PDCCH candidate(s) received in one or more CORESETs configured/associated with the same value of CORESET group index based on an indicator provided/configured/indicated by the network, e.g., via higher layer RRC signaling and/or MAC CE command and/or dynamic DCI based signaling; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in one or more of the indicated TCI states, e.g., by the TCI state codepoint of the TCI field in the DCI according to the indicator; here, the indicator could be defined/specified follow the design examples provided in the present disclosure.

For instance, the UE could use the first or second indicated TCI state (based on the indicator) - among all the indicated (e.g., M>1 or N>1, or M=2/N=2) TCI states - for receiving the first or second PDSCHs indicated by the TDRA information field; i.e., the DM-RS antenna port(s) for the first or second PDSCHs indicated by the TDRA information field could be quasi co-located with the reference signal(s) provided in the first or second indicated TCI states - among all the indicated (e.g., M>1 or N>1, or M=2/N=2) TCI states - according to the indicator; whether the indicated (e.g., the first or second) TCI state may be used for the first or second PDSCHs indicated by the TDRA information filed could be determined according to: (i) a fixed mapping/association relationship in the system specification(s) or (ii) provided/indicated/configured by the network, e.g., via higher layer RRC signaling and/or MAC CE command and/or dynamic DCI based signaling; alternatively, the UE could use the first and second indicated TCI states or the second and first indicated TCI states - among all the indicated (e.g., M>1 or N>1, or M=2/N=2) TCI states - for receiving the first and second PDSCHs indicated by the TDRA information field respectively based on the indicator; i.e., the DM-RS antenna port(s) for receiving the first and second PDSCHs indicated by the TDRA information field could be quasi co-located with the reference signal(s) provided in the first and second indicated TCI states or the second and first indicated TCI states - among all the indicated (e.g., M>1 or N>1, or M=2/N=2) TCI states - respectively according to the indicator. Here, the first and second PDSCHs could be scheduled by DCI(s)/PDCCH candidate(s) received in one or more CORESETs configured/associated with the same value of CORESET group index as that associated/configured with their scheduling DCI.

In a (sDCI based) multi-TRP system, for transmitting PUCCH resource(s), the UE could be indicated/provided/configured by the network, e.g., via higher layer RRC signaling/parameter (e.g., PUCCH-Config) and/or MAC CE command and/or dynamic DCI based L1 signaling, one or more indicators to indicate one or more of the indicated TCI states for PUCCH transmission(s) - i.e., the spatial filter(s) for the PUCCH transmission(s) could be spatially related to the reference signal(s) provided in the indicated (e.g., by the RRC/MAC CE/DCI configured/indicated/provided indicator(s)) one or more of the indicated TCI states. The indicator(s) here could be defined/specified follow the design examples provided in the present disclosure. In the present disclosure, the PUCCH transmission(s) could refer to a PUCCH resource or a group of PUCCH resources or a PUCCH resource group comprising one or more PUCCH resources.

For example, a MAC CE command, e.g., the PUCCH spatial relation activation/deactivation MAC CE, the enhanced PUCCH spatial relation activation/deactivation MAC CE, the TCI states activation/deactivation for UE-specific PDSCH MAC CE, the TCI state indication for UE-specific PDCCH MAC CE or the unified TCI states activation/deactivation for UE-specific PDSCH MAC CE, could include/configure/provide/comprise/indicate the indicator. When/if the indicator is set to "enabled" (or "disabled") or "1" (or "0") or "00" (or "01," "10," "11"), e.g., when/if a UE receives the PUCCH spatial relation activation/deactivation MAC CE (for a PUCCH resource) or the enhanced PUCCH spatial relation activation/deactivation MAC CE (for a PUCCH resource group comprising one or more PUCCH resources) with the indicator provided/indicated/configured therein set to "enabled" (or "disabled") or "1" (or "0") or "00" (or "01," "10," "11"), the first indicated TCI state - among all the indicated (e.g., M>1 or N>1, or M=2/N=2) TCI states - could be used for transmitting the PUCCH resource or the PUCCH resource group; i.e., the spatial filter(s) for transmitting the PUCCH resource or the PUCCH resource group could be spatially related to the reference signal(s) provided in the first indicated TCI state - among all the indicated (e.g., M>1 or N>1, or M=2/N=2) TCI states. Furthermore, when/if the indicator is set to "disabled" (or "enabled") or "0" (or "1") or "01" (or "00," "10," "11"), e.g., when/if a UE receives the PUCCH spatial relation activation/deactivation MAC CE (for a PUCCH resource) or the enhanced PUCCH spatial relation activation/deactivation MAC CE (for a PUCCH resource group comprising one or more PUCCH resources) with the indicator provided/indicated/configured therein set to "disabled" (or "enabled") or "0" (or "1") or "01" (or "00," "10," "11"), the second indicated TCI state - among all the indicated (e.g., M>1 or N>1, or M=2/N=2) TCI states - could be used for transmitting the PUCCH resource or the PUCCH resource group; i.e., the spatial filter(s) for transmitting the PUCCH resource or the PUCCH resource group could be spatially related to the reference signal(s) provided in the second indicated TCI state - among all the indicated (e.g., M>1 or N>1, or M=2/N=2) TCI states.

In addition, when/if the indicator is set to "enabled" (or "disabled") or "1" (or "0") or "10" (or "00," "01," "11"), e.g., when/if a UE receives the PUCCH spatial relation activation/deactivation MAC CE (for a PUCCH resource) or the enhanced PUCCH spatial relation activation/deactivation MAC CE (for a PUCCH resource group comprising one or more PUCCH resources) with the indicator provided/indicated/configured therein set to "enabled" (or "disabled") or "1" (or "0") or "10" (or "00," "01," "11"), the first and second indicated TCI states - among all the indicated (e.g., M>1 or N>1, or M=2/N=2) TCI states - could be respectively used for transmitting the PUCCH resource or the PUCCH resource group; i.e., the spatial filter(s) for transmitting the PUCCH resource or the PUCCH resource group could be spatially related to the reference signal(s) provided in the first and second indicated TCI states - among all the indicated (e.g., M>1 or N>1, or M=2/N=2) TCI states - respectively; when/if the indicator is set to "disabled" (or "enabled") or "0" (or "1") or "11" (or "00," "01," "10"), e.g., when/if a UE receives the PUCCH spatial relation activation/deactivation MAC CE (for a PUCCH resource) or the enhanced PUCCH spatial relation activation/deactivation MAC CE (for a PUCCH resource group comprising one or more PUCCH resources) with the indicator provided/indicated/configured therein set to "disabled" (or "enabled") or "0" (or "1") or "11" (or "00," "01," "10"), the second and first indicated TCI states - among all the indicated (e.g., M>1 or N>1, or M=2/N=2) TCI states - could be respectively used for transmitting the PUCCH resource or the PUCCH resource group; i.e., the spatial filter(s) for transmitting the PUCCH resource or the PUCCH resource group could be spatially related to the reference signal(s) provided in the second and first indicated TCI states - among all the indicated (e.g., M>1 or N>1, or M=2/N=2) TCI states - respectively.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or 00, 01, 10 and 11). One or more CORESETs could be configured/associated with the same value of CORESETGroupIndex. Furthermore, as discussed/described herein in the present disclosure, the indicator for PUCCH transmission(s) could be provided in a higher layer RRC signaling/parameter (e.g., PUCCH-Config) that configures the PUCCH transmission(s), wherein the PUCCH transmission(s) could refer to a PUCCH resource, a group of PUCCH resources or a PUCCH resource group comprising one or more PUCCH resources.

In a (sDCI based) multi-TRP system, for transmitting PUSCH resource(s), the UE could be indicated/provided/configured by the network, e.g., via higher layer RRC signaling/parameter and/or MAC CE command and/or dynamic DCI based L1 signaling, one or more indicators to indicate one or more of the indicated TCI states for PUSCH transmission(s) - i.e., the spatial filter(s) for the PUSCH transmission(s) could be spatially related to the reference signal(s) provided in the indicated (e.g., by the RRC/MAC CE/DCI configured/indicated/provided indicator(s)) one or more of the indicated TCI states. The indicator(s) here could be defined/specified follow the design examples provided in the present disclosure.

For example, a DCI, e.g., an UL DCI with format 0_1 or 0_2, could include/configure/provide/comprise/indicate the indicator; the indicator could correspond to an SRS resource set indicator. When/if a UE is provided/indicated/configured by the network, in an UL DCI (e.g., DCI format 0_1 or 0_2), the SRS resource set indicator set to "00" (or "01," "10," "11"), the first indicated TCI state - among all the indicated (e.g., M>1 or N>1, or M=2/N=2) TCI states - could be used for PUSCH transmission(s); i.e., the spatial filter(s) for transmitting the PUSCH(s) could be spatially related to the reference signal(s) provided in the first indicated TCI state - among all the indicated (e.g., M>1 or N>1, or M=2/N=2) TCI states; when/if a UE is provided/indicated/configured by the network, in an UL DCI (e.g., DCI format 0_1 or 0_2), the SRS resource set indicator set to "01" (or "00," "10," "11"), the second indicated TCI state - among all the indicated (e.g., M>1 or N>1, or M=2/N=2) TCI states - could be used for PUSCH transmission(s); i.e., the spatial filter(s) for transmitting the PUSCH(s) could be spatially related to the reference signal(s) provided in the second indicated TCI state - among all the indicated (e.g., M>1 or N>1, or M=2/N=2) TCI states.

Furthermore, when/if a UE is provided/indicated/configured by the network, in an UL DCI (e.g., DCI format 0_1 or 0_2), the SRS resource set indicator set to "10" (or "00," "01," "11"), the first and second indicated TCI states - among all the indicated (e.g., M>1 or N>1, or M=2/N=2) TCI states - could be used for PUSCH transmission(s), respectively; i.e., the spatial filter(s) for transmitting the PUSCH(s) could be spatially related to the reference signal(s) provided in the first and second indicated TCI states - among all the indicated (e.g., M>1 or N>1, or M=2/N=2) TCI states - respectively; when/if a UE is provided/indicated/configured by the network, in an UL DCI (e.g., DCI format 0_1 or 0_2), the SRS resource set indicator set to "11" (or "00," "01," "10"), the second and first indicated TCI states - among all the indicated (e.g., M>1 or N>1, or M=2/N=2) TCI states - could be used for PUSCH transmission(s), respectively; i.e., the spatial filter(s) for transmitting the PUSCH(s) could be spatially related to the reference signal(s) provided in the second and first indicated TCI states - among all the indicated (e.g., M>1 or N>1, or M=2/N=2) TCI states - respectively.

In one embodiment, the UE could be provided/configured/indicated by the network, in a higher layer parameter, e.g., PDSCH-Config, one or more indicators/parameters to indicate the association between one or more of the indicated TCI states and the corresponding PDSCH reception(s).

In one example, the UE could be provided/configured/indicated by the network, in a higher layer parameter, e.g., PDSCH-Config, a single indicator/parameter to indicate the association between one or more of the indicated TCI states and the corresponding PDSCH reception(s).

For example, for N=2 or M=2, the indicator could be a one-bit indicator with "0" (or "1") indicating that the first indicated TCI state/pair of TCI states could be applied/used for receiving first (or second) PDSCH(s), and with "1" (or "0") indicating that the second indicated TCI state/pair of TCI states could be applied/used for receiving second (or first) PDSCH(s).

For another example, for N=2 or M=2, the indicator could be a one-bit indicator with "0" (or "1") indicating that the first indicated TCI state/pair of TCI states could be applied/used for receiving first PDSCH(s) and the second indicated TCI state/pair of TCI states could be applied/used for receiving second PDSCH(s), and with "1" (or "0") indicating that the first indicated TCI state/pair of TCI states could be applied/used for receiving second PDSCH(s) and the second indicated TCI state/pair of TCI states could be applied/used for receiving first PDSCH(s).

Yet for another example, for N=2 or M=2, the indicator could be a one-bit indicator with "0" (or "1") indicating that the first indicated TCI state/pair of TCI states could be applied/used for receiving first (or second) PDSCH DM-RS(s) in the first (or second) DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first (or second) DM-RS antenna port(s) in the first (or second) DM-RS CDM group indicated by the antenna ports field in the DCI for PDSCH reception(s), and "1" (or "0") indicating that the second indicated TCI state/pair of TCI states could be applied/used for receiving second (or first) PDSCH DM-RS(s) in the second (or first) DM-RS CDM group indicated by the antenna ports field in a DCI (e.g., the scheduling DCI or the beam indication DCI with or without DL assignment) - or equivalently, the RS(s) in the RS set(s) provided in the second indicated TCI state/pair of TCI states could be quasi-co-located (QCL'ed) with second (or first) DM-RS antenna port(s) in the second (or first) DM-RS CDM group indicated by the antenna ports field in the DCI for PDSCH reception(s).

Yet for another example, for N=2 or M=2, the indicator could be a one-bit indicator with "0" (or "1") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s) and the second indicated TCI state/pair of TCI states could be applied/used for receiving second PDSCH DM-RS(s) in the second DM-RS CDM group indicated by the antenna ports field in the DCI - or equivalently, the RS(s) in the RS set(s) provided in the second indicated TCI state/pair of TCI states could be quasi-co-located (QCL'ed) with second DM-RS antenna port(s) in the second DM-RS CDM group indicated by the antenna ports field in the DCI for PDSCH reception(s), and with "1" (or "0") indicating that the first indicated TCI state/pair of TCI states could be applied/used for receiving second PDSCH DM-RS(s) in the second DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with second DM-RS antenna port(s) in the second DM-RS CDM group indicated by the antenna ports field in the DCI for PDSCH reception(s) and the second indicated TCI state/pair of TCI states could be applied/used for receiving first PDSCH DM-RS(s) in the first DM-RS CDM group indicated by the antenna ports field in the DCI - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s).

Yet for another example, for N=2 or M=2, the indicator could be a one-bit indicator with "0" (or "1") indicating that the first indicated TCI state/pair of TCI states could be applied/used for receiving first PDSCH DM-RS(s) (or equivalently, the RS(s) in the RS set(s) provided in the first indicated TCI state/pair of TCI states could be quasi-co-located (QCL'ed) with first DM-RS antenna port(s) for PDSCH reception(s)) and the second indicated TCI state/pair of TCI states could be applied/used for receiving second PDSCH DM-RS(s) (or equivalently, the RS(s) in the RS set(s) provided in the second indicated TCI state/pair of TCI states could be QCL'ed with second DM-RS antenna port(s) for PDSCH reception(s)), and with "1" (or "0") indicating that the first indicated TCI state/pair of TCI states could be applied/used for receiving the second PDSCH DM-RS(s) (or equivalently, the RS(s) in the RS set(s) provided in the first indicated TCI state/pair of TCI states could be QCL'ed with the second DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)).

Yet for another example, for N=2 or M=2, the indicator could be a 2-bit indicator with "00" ("01," "10" or "11") indicating that the first indicated TCI state/pair of TCI states could be applied/used for receiving first (or second) PDSCH(s), with "01" ("00," "10" or "11") indicating that the second indicated TCI state/pair of TCI states could be applied/used for receiving second (or first) PDSCH(s), with "10" ("00," "01" or "11") indicating that the first indicated TCI state/pair of TCI states could be applied/used for receiving first PDSCH(s) and the second indicated TCI state/pair of TCI states could be applied/used for receiving second PDSCH(s), and with "11" ("00," "01" or "10") indicating that the first indicated TCI state/pair of TCI states could be applied/used for receiving second PDSCH(s) and the second indicated TCI state/pair of TCI states could be applied/used for receiving first PDSCH(s). The value(s) "00" or "01" or "10" or "11" of the indicator could also be reserved or set to "reserved."

Yet for another example, for N=2 or M=2, the indicator could be a 2-bit indicator with "00" ("01," "10" or "11") indicating that the first indicated TCI state/pair of TCI states could be applied/used for receiving first (or second) PDSCH DM-RS(s) in the first (or second) DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first (or second) DM-RS antenna port(s) in the first (or second) DM-RS CDM group indicated by the antenna ports field in the DCI for PDSCH reception(s), with "01" ("00," "10" or "11") indicating that the second indicated TCI state/pair of TCI states could be applied/used for receiving second (or first) PDSCH DM-RS(s) in the second (or first) DM-RS CDM group indicated by the antenna ports field in a DCI (e.g., the scheduling DCI or the beam indication DCI with or without DL assignment) - or equivalently, the RS(s) in the RS set(s) provided in the second indicated TCI state/pair of TCI states could be quasi-co-located (QCL'ed) with second (or first) DM-RS antenna port(s) in the second (or first) DM-RS CDM group indicated by the antenna ports field in the DCI for PDSCH reception(s), with "10" ("00," "01" or **"11")** indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s) and the second indicated TCI state/pair of TCI states could be applied/used for receiving second PDSCH DM-RS(s) in the second DM-RS CDM group indicated by the antenna ports field in the DCI - or equivalently, the RS(s) in the RS set(s) provided in the second indicated TCI state/pair of TCI states could be quasi-co-located (QCL'ed) with second DM-RS antenna port(s) in the second DM-RS CDM group indicated by the antenna ports field in the DCI for PDSCH reception(s), and with "11" ("00," "01" or "10") indicating that the first indicated TCI state/pair of TCI states could be applied/used for receiving second PDSCH DM-RS(s) in the second DM-RS CDM group indicated by the antenna ports field in a DCI (e.g.,

the scheduling DCI or the beam indication DCI with or without DL assignment) - or equivalently, the RS(s) in the RS set(s) provided in the first indicated TCI state/pair of TCI states could be quasi-co-located (QCL'ed) with second DM-RS antenna port(s) in the second DM-RS CDM group indicated by the antenna ports field in the DCI for PDSCH reception(s) and the second indicated TCI state/pair of TCI states could be applied/used for receiving first PDSCH DM-RS(s) in the first DM-RS CDM group indicated by the antenna ports field in the DCI - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s). The value(s) "00" or "01" or "10" or "11" of the indicator could also be reserved or set to "reserved."

Yet for another example, for N=2 or M=2, the indicator could be a 2-bit indicator with "00" ("01," "10" or "11") indicating that the first indicated TCI state/pair of TCI states could be applied/used for receiving the first (or second) PDSCH(s), with "01" ("00," "10" or "11") indicating that the second indicated TCI state/pair of TCI states could be applied/used for receiving the second (or first) PDSCH(s), with "10" ("00," "01" or **"11")** indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the second PDSCH DM-RS(s) (or equivalently, the RS(s) in the RS set(s) provided in the second indicated TCI state/pair of TCI states could be QCL'ed with the second DM-RS antenna port(s) for PDSCH reception(s)), and with "11" ("00," "01" or "10") indicating that the first indicated TCI state/pair of TCI states could be applied/used for receiving the second PDSCH DM-RS(s) (or equivalently, the RS(s) in the RS set(s) provided in the first indicated TCI state/pair of TCI states could be QCL'ed with the second DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)). The value(s) "00" or "01" or "10" or "11" of the indicator could also be reserved or set to "reserved."

Yet for another example, for N=2 or M=2, the indicator could be a 2-bit indicator with "00" ("01," "10" or "11") indicating that the first indicated TCI state/pair of TCI states could be applied/used for receiving first (or second) PDSCH DM-RS(s) in the first (or second) DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first (or second) DM-RS antenna port(s) in the first (or second) DM-RS CDM group indicated by the antenna ports field in the DCI for PDSCH reception(s), with "01" ("00," "10" or "11") indicating that the second indicated TCI state/pair of TCI states could be applied/used for receiving second (or first) PDSCH DM-RS(s) in the second (or first) DM-RS CDM group indicated by the antenna ports field in a DCI (e.g., the scheduling DCI or the beam indication DCI with or without DL assignment) - or equivalently, the RS(s) in the RS set(s) provided in the second indicated TCI state/pair of TCI states could be quasi-co-located (QCL'ed) with second (or first) DM-RS antenna port(s) in the second (or first) DM-RS CDM group indicated by the antenna ports field in the DCI for PDSCH reception(s), with "10" ("00," "01" or **"11")** indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the second PDSCH DM-RS(s) (or equivalently, the RS(s) in the RS set(s) provided in the second indicated TCI state/pair of TCI states could be QCL'ed with the second DM-RS antenna port(s) for PDSCH reception(s)), and with "11" ("00," "01" or "10") indicating that the first indicated TCI state/pair of TCI states could be applied/used for receiving the second PDSCH DM-RS(s) (or equivalently, the RS(s) in the RS set(s) provided in the first indicated TCI state/pair of TCI states could be QCL'ed with the second DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)). The value(s) "00" or "01" or "10" or "11" of the indicator could also be reserved or set to "reserved."

The UE could follow (e.g., according to network's configuration/indication via higher layer RRC signaling/parameter and/or MAC CE command and/or dynamic DCI based L1 signaling) one or more of or combination(s) of one or more of the design examples provided in the present disclosure to determine the association between one or more of the indicated TCI states/pairs of TCI states and first (or second) PDSCH(s) and/or first (or second) PDSCH DM-RS(s) in the first (or second) DM-RS CDM group indicated by the antenna ports field in a DCI (e.g., the scheduling DCI or the beam indication DCI with or without DL assignment) and/or first (or second) PDSCH DM-RS(s)/first (or second) DM-RS antenna port(s) for PDSCH reception(s).

In another example, the UE could be provided/configured/indicated by the network, in a higher layer parameter, e.g., PDSCH-Config, more than one (e.g., 2) indicators/parameters - e.g., the first indicator/parameter, the second indicator/parameter and so on - to indicate the association between one or more of the indicated TCI states and the corresponding PDSCH reception(s).

For the first (or second) indicator/parameter, following examples can be provided.

For example, for N=2 or M=2, the first (or second) indicator/parameter could be a one-bit indicator and associated to first PDSCH(s) with "0" (or "1") indicating that the first indicated TCI state/pair of TCI states could be applied/used for receiving first PDSCH(s), and with "1" (or "0") indicating that the second indicated TCI state/pair of TCI states could be applied/used for receiving second PDSCH(s).

For another example, for N=2 or M=2, the first (or second) indicator/parameter could be a one-bit indicator and associated to first PDSCH(s) with "0" (or "1") indicating that the first indicated TCI state/pair of TCI states could be applied/used for receiving first PDSCH(s) and the second indicated TCI state/pair of TCI states could be applied/used for receiving first PDSCH(s), and with "1" (or "0") indicating that the first indicated TCI state/pair of TCI states could be applied/used for receiving first PDSCH(s) and the second indicated TCI state/pair of TCI states could be applied/used for receiving first PDSCH(s).

Yet for another example, for N=2 or M=2, the first (or second) indicator/parameter could be a one-bit indicator and associate to first PDSCH DM-RS(s) in the first DM-RS CDM group indicated by the antenna ports field in a DCI (e.g., the scheduling DCI or the beam indication DCI with or without DL assignment) with "0" (or "1") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s), and "1" (or "0") indicating that the second indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s).

Yet for another example, for N=2 or M=2, the first (or second) indicator/parameter could be a one-bit indicator and associate to first PDSCH DM-RS(s) in the first DM-RS CDM group indicated by the antenna ports field in a DCI (e.g., the scheduling DCI or the beam indication DCI with or without DL assignment) with "0" (or "1") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s) and the second indicated TCI state/pair of TCI states could be applied/used for receiving first PDSCH DM-RS(s) in the first DM-RS CDM group indicated by the antenna ports field in the DCI - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s), and with "1" (or "0") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s) and the second indicated TCI state/pair of TCI states could be applied/used for receiving first PDSCH DM-RS(s) in the first DM-RS CDM group indicated by the antenna ports field in the DCI - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s).

Yet for another example, for N=2 or M=2, the first (or second) indicator/parameter could be a one-bit indicator and associated to first PDSCH DM-RS(s) or first DM-RS antenna port(s) for PDSCH reception(s) with "0" (or "1") indicating that the first indicated TCI state/pair of TCI states could be applied/used for receiving first PDSCH DM-RS(s) (or equivalently, the RS(s) in the RS set(s) provided in the first indicated TCI state/pair of TCI states could be quasi-co-located (QCL'ed) with first DM-RS antenna port(s) for PDSCH reception(s)) and the second indicated TCI state/pair of TCI states could be applied/used for receiving first PDSCH DM-RS(s) (or equivalently, the RS(s) in the RS set(s) provided in the second indicated TCI state/pair of TCI states could be QCL'ed with first DM-RS antenna port(s) for PDSCH reception(s)), and with "1" (or "0") indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)).

Yet for another example, for N=2 or M=2, the first (or second) indicator/parameter could be a 2-bit indicator associated to first PDSCH(s) with "00" **("01,"** "10," or "11") indicating that the first indicated TCI state/pair of TCI states could be applied/used for receiving first PDSCH(s), with "01" ("00," "10," or "11") indicating that the second indicated TCI state/pair of TCI states could be applied/used for receiving first PDSCH(s), with "10" ("00," "01," or "11") indicating that the first indicated TCI state/pair of TCI states could be applied/used for receiving first PDSCH(s) and the second indicated TCI state/pair of TCI states could be applied/used for receiving first PDSCH(s), and with "11" ("00," "01," or "10") indicating that the first indicated TCI state/pair of TCI states could be applied/used for receiving first PDSCH(s) and the second indicated TCI state/pair of TCI states could be applied/used for receiving first PDSCH(s). The value(s) "00" or "01" or "10," or "11" of the indicator could also be reserved or set to "reserved."

Yet for another example, for N=2 or M=2, the first (or second) indicator/parameter could be a 2-bit indicator associate to first PDSCH DM-RS(s) in the first DM-RS CDM group indicated by the antenna ports field in a DCI (e.g., the scheduling DCI or the beam indication DCI with or without DL assignment) with "00" **("01,"** "10," or "11") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s), with "01" ("00," "10," or **"11")** indicating that the second indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s), with "10" ("00," "01," or "11") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s) and the second indicated TCI state/pair of TCI states could be applied/used for receiving first PDSCH DM-RS(s) in the first DM-RS CDM group indicated by the antenna ports field in the DCI - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s), and with "11" ("00," "01," or "10") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s) and the second indicated TCI state/pair of TCI states could be applied/used for receiving first PDSCH DM-RS(s) in the first DM-RS CDM group indicated by the antenna ports field in the DCI - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s). The value(s) "00," "01," "10," or "11" of the indicator could also be reserved or set to "reserved."

Yet for another example, for N=2 or M=2, the first (or second) indicator/parameter could be a 2-bit indicator and associated to first PDSCH(s) and/or first PDSCH DM-RS(s) or first DM-RS antenna port(s) for PDSCH reception(s) with "00" ("01," "10," or "11") indicating that the first indicated TCI state/pair of TCI states could be applied/used for receiving the first PDSCH(s), with "01" ("00," "10," or "11") indicating that the second indicated TCI state/pair of TCI states could be applied/used for receiving the first PDSCH(s), with "10" ("00," "01," or "11") indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)), and with "11" ("00," "01," or "10") indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)). The value(s) "00," "01," "10," or "11" of the indicator could also be reserved or set to "reserved."

Yet for another example, for N=2 or M=2, the first (or second) indicator could be a 2-bit indicator and associated to first PDSCH DM-RS(s) in the first DM-RS CDM group indicated by the antenna ports field in a DCI (e.g., the scheduling DCI or the beam indication DCI with or without DL assignment) and/or first PDSCH DM-RS(s) or first DM-RS antenna port(s) for PDSCH reception(s) with "00" ("01," "10," or "11") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s), with "01" ("00," "10," or "11") indicating that the second indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s), with "10" ("00," "01," or "11") indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)), and with "11" (:"00," "01," or "10") indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)). The value(s) "00," "01," "10," or "11" of the indicator could also be reserved or set to "reserved."

The UE could follow (e.g., according to network's configuration/indication via higher layer RRC signaling/parameter and/or MAC CE command and/or dynamic DCI based L1 signaling) one or more of or combination(s) of one or more of the design examples provided in the present disclosure to determine the association between one or more of the indicated TCI states/pairs of TCI states and first PDSCH(s) and/or first PDSCH DM-RS(s) in the first DM-RS CDM group indicated by the antenna ports field in a DCI (e.g., the scheduling DCI or the beam indication DCI with or without DL assignment) and/or first PDSCH DM-RS(s)/first DM-RS antenna port(s) for PDSCH reception(s).

Furthermore, the second (or first) indicator/parameter could be associated to second PDSCH(s) and/or second PDSCH DM-RS(s) in the second DM-RS CDM group indicated by the antenna ports field in a DCI (e.g., the scheduling DCI or the beam indication DCI with or without DL assignment) and/or second PDSCH DM-RS(s)/second DM-RS antenna port(s) for PDSCH reception(s) as specified herein in the present disclosure, and so on. The UE could follow (e.g., according to network's configuration/indication via higher layer RRC signaling/parameter and/or MAC CE command and/or dynamic DCI based L1 signaling) one or more of or combination(s) of one or more of the design examples provided in the present disclosure to determine the association between one or more of the indicated TCI states/pairs of TCI states and second PDSCH(s) and/or second PDSCH DM-RS(s) in the second DM-RS CDM group indicated by the antenna ports field in a DCI (e.g., the scheduling DCI or the beam indication DCI with or without DL assignment) and/or second PDSCH DM-RS(s)/second DM-RS antenna port(s) for PDSCH reception(s).

The UE could be provided/configured/indicated by the network, e.g., via higher layer RRC signaling/parameter and/or MAC CE command and/or dynamic DCI based L1 signaling, the association/mapping relationship(s) between (i) the first/second indicator/parameter specified herein in the present disclosure and (ii) first/second PDSCH(s) and/or first/second PDSCH DM-RS(s) in the first/second DM-RS CDM group indicated by the antenna ports field in a DCI (e.g., the scheduling DCI or the beam indication DCI with or without DL assignment) and/or first/second PDSCH DM-RS(s) and/or first/second DM-RS antenna port(s) for PDSCH reception(s).

Throughout the present disclosure, unless otherwise specified, the first PDSCH(s) could correspond to all PDSCH(s)/PDSCH reception(s) - e.g., configured by the higher layer parameter PDSCH-Config or the first PDSCH DM-RS(s) or the first DM-RS antenna port(s) for PDSCH reception(s) or the first PDSCH DM-RS CDM group indicated by the antenna ports field in a DCI (e.g., the scheduling DCI or the beam indication DCI with or without DL assignment) or the first DM-RS(s) for PDSCH reception(s) in the first DM-RS CDM group indicated by the antenna ports field in a DCI (e.g., the scheduling DCI or the beam indication DCI with or without DL assignment), and the second PDSCH(s) could correspond to all PDSCH(s)/PDSCH reception(s) - e.g., configured by the higher layer parameter PDSCH-Config or the second PDSCH DM-RS(s) or the second DM-RS antenna port(s) for PDSCH reception(s) or the second PDSCH DM-RS CDM group indicated by the antenna ports field in a DCI (e.g., the scheduling DCI or the beam indication DCI with or without DL assignment) or the second DM-RS(s) for PDSCH reception(s) in the second DM-RS CDM group indicated by the antenna ports field in a DCI (e.g., the scheduling DCI or the beam indication DCI with or without DL assignment).

The UE could be provided/configured/indicated by the network, via an indicator field in a DCI (e.g., the scheduling DCI or the beam indication DCI with or without DL assignment), the association between one or more of the indicated TCI states and PDSCH reception(s). For example, the indicator field could be an existing DCI field in the corresponding DCI and repurposed to indicate/provide/configure the association between the indicated TCI state(s) and the PDSCH reception(s). For another example, the indicator field could be a new DCI field introduced in the corresponding DCI dedicated for indicating/configuring/providing the association between the indicated TCI state(s) and the PDSCH reception(s).

In one example, when/if the DCI indicator/indicator field discussed above is absent or disabled or not provided/configured/indicated/specified/defined in the corresponding DCI (e.g., the scheduling DCI or the beam indication DCI with or without DL assignment), the UE could follow the indicator/parameter provided/indicated/configured in PDSCH-Config described herein in the present disclosure to determine the association between the indicated TCI state(s) and the PDSCH reception(s).

In another example, if the indicator in the DCI (e.g., the scheduling DCI or the beam indication DCI with or without DL assignment) is set to "0," the first indicated TCI state/pair of TCI states could be applied/used for all PDSCH receptions before or after a beam association application time, and if the indicator in the DCI (e.g., the scheduling DCI or the beam indication DCI with or without DL assignment) is set to "1," the second indicated TCI state/pair of TCI states could be applied/used for all PDSCH receptions before or after a beam association application time.

In yet another example, if the indicator in the DCI (e.g., the scheduling DCI or the beam indication DCI with or without DL assignment) is set to "0," the second indicated TCI state/pair of TCI states could be applied/used for all PDSCH receptions before or after a beam association application time, and if the indicator in the DCI (e.g., the scheduling DCI or the beam indication DCI with or without DL assignment) is set to "1," the first indicated TCI state/pair of TCI states could be applied/used for all PDSCH receptions before or after a beam association application time.

In yet another example, if the indicator in the DCI (e.g., the scheduling DCI or the beam indication DCI with or without DL assignment) is set to "0" (or "1"), the first indicated TCI state/pair of TCI states could be applied/used for receiving the first PDSCH(s), and the second indicated TCI state/pair of TCI states could be applied/used for receiving the second PDSCH(s), before or after a beam association application time. If the indicator in the DCI (e.g., the scheduling DCI or the beam indication DCI with or without DL assignment) is set to "1" (or "0"), the first indicated TCI state/pair of TCI states could be applied/used for receiving the second PDSCH(s), and the second indicated TCI state/pair of TCI states could be applied/used for receiving the first PDSCH(s), before or after a beam association application time. The UE could be configured/indicated/provided by the network, e.g., via higher layer RRC signaling/parameter and/or MAC CE command and/or dynamic DCI based L1 signaling, the first and/or second PDSCHs and their corresponding/respective configuration information.

In yet another example, if the indicator in the DCI (e.g., the scheduling DCI or the beam indication DCI with or without DL assignment) is set to "0" (or "1"), the first indicated TCI state/pair of TCI states could be applied/used for all PDSCH receptions before or after a beam association application time, and if the indicator in the DCI (e.g., the scheduling DCI or the beam indication DCI with or without DL assignment) is set to "1" (or "0"), the first indicated TCI state/pair of TCI states could be applied/used for receiving the first (or second) PDSCH(s), and the second indicated TCI state/pair of TCI states could be applied/used for receiving the second (or first) PDSCH(s), before or after a beam association application time. The UE could be configured/indicated/provided by the network, e.g., via higher layer RRC signaling/parameter and/or MAC CE command and/or dynamic DCI based L1 signaling, the first and/or second PDSCHs and their corresponding/respective configuration information.

In yet another example, if the indicator in the DCI (e.g., the scheduling DCI or the beam indication DCI with or without DL assignment) is set to "0" (or "1"), the second indicated TCI state/pair of TCI states could be applied/used for all PDSCH receptions before or after a beam association application time, and if the indicator in the DCI (e.g., the scheduling DCI or the beam indication DCI with or without DL assignment) is set to "1" (or "0"), the first indicated TCI state/pair of TCI states could be applied/used for receiving the first (or second) PDSCH(s), and the second indicated TCI state/pair of TCI states could be applied/used for receiving the second (or first) PDSCH(s), before or after a beam association application time. The UE could be configured/indicated/provided by the network, e.g., via higher layer RRC signaling/parameter and/or MAC CE command and/or dynamic DCI based L1 signaling, the first and/or second PDSCHs and their corresponding/respective configuration information.

In yet another example, if the indicator in the DCI (e.g., the scheduling DCI or the beam indication DCI with or without DL assignment) is set to "0" (or "1"), the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) before or after a beam association application time, and the second indicated TCI state/pair of TCI states could be applied/used for receiving the second PDSCH DM-RS(s) (or equivalently, the RS(s) in the RS set(s) provided in the second indicated TCI state/pair of TCI states could be QCL'ed with the second DM-RS antenna port(s) for PDSCH reception(s)) before or after a beam association application time.

If the indicator in the DCI (e.g., the scheduling DCI or the beam indication DCI with or without DL assignment) is set to "1" (or "0"), the first indicated TCI state/pair of TCI states could be applied/used for receiving the second PDSCH DM-RS(s) (or equivalently, the RS(s) in the RS set(s) provided in the second indicated TCI state/pair of TCI states could be QCL'ed with the second DM-RS antenna port(s) for PDSCH reception(s)) before or after a beam association application time, and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)) before or after a beam association application time.

In yet another example, if the indicator in the DCI (e.g., the scheduling DCI or the beam indication DCI with or without DL assignment) is set to "00" ("01," "10," or "11"), the first indicated TCI state/pair of TCI states could still be applied/used for all PDSCH receptions before or after a beam association application time, if the indicator in the DCI (e.g., the scheduling DCI or the beam indication DCI with or without DL assignment) is set to "01" ("00," "10," or "11"), the second indicated TCI state/pair of TCI states could be applied/used for all PDSCH receptions before or after a beam association application time, if the indicator in the DCI (e.g., the scheduling DCI or the beam indication DCI with or without DL assignment) is set to "10" ("00," "01," or "11"), the first indicated TCI state/pair of TCI states could be applied/used for receiving the first PDSCH(s), and the second indicated TCI state/pair of TCI states could be applied/used for receiving the second PDSCH(s), before or after a beam association application time, and if the indicator in the DCI (e.g., the scheduling DCI or the beam indication DCI with or without DL assignment) is set to "11" ("00," "01," or "10"), the first indicated TCI state/pair of TCI states could be applied/used for receiving the second PDSCH(s), and the second indicated TCI state/pair of TCI states could be applied/used for receiving the first PDSCH(s), before or after a beam association application time.

In yet another example, if the indicator in the DCI (e.g., the scheduling DCI or the beam indication DCI with or without DL assignment) is set to "00" ("01," "10," or "11"), the first indicated TCI state/pair of TCI states could still be applied/used for all PDSCH receptions before or after a beam association application time, if the indicator in the DCI (e.g., the scheduling DCI or the beam indication DCI with or without DL assignment) is set to "01" ("00," "10," or "11"), the second indicated TCI state/pair of TCI states could be applied/used for all PDSCH receptions before or after a beam association application time, if the indicator in the DCI (e.g., the scheduling DCI or the beam indication DCI with or without DL assignment) is set to "10" ("00," "01," or "11"), the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)), and the second indicated TCI state/pair of TCI states could be applied/used for receiving the second PDSCH DM-RS(s) (or equivalently, the RS(s) in the RS set(s) provided in the second indicated TCI state/pair of TCI states could be QCL'ed with the second DM-RS antenna port(s) for PDSCH reception(s)), before or after a beam association application time, and if the indicator in the DCI (e.g., the scheduling DCI or the beam indication DCI with or without DL assignment) is set to "11" ("00," "01," or "10"), the first indicated TCI state/pair of TCI states could be applied/used for receiving the second PDSCH DM-RS(s) (or equivalently, the RS(s) in the RS set(s) provided in the second indicated TCI state/pair of TCI states could be QCL'ed with the second DM-RS antenna port(s) for PDSCH reception(s)), and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)), before or after a beam association application time.

The UE could follow (e.g., according to network's configuration/indication via higher layer RRC signaling/parameter and/or MAC CE command and/or dynamic DCI based L1 signaling) one or more of or combination(s) of one or more of the design examples provided in the present disclosure to determine the association between one or more of the indicated TCI states/pairs of TCI states and first (or second) PDSCH(s) and/or first (or second) PDSCH DM-RS(s) in the first (or second) DM-RS CDM group indicated by the antenna ports field in a DCI (e.g., the scheduling DCI or the beam indication DCI with or without DL assignment) and/or first (or second) PDSCH DM-RS(s)/first (or second) DM-RS antenna port(s) for PDSCH reception(s).

In one example, when/if the DCI field indicator in a DCI (e.g., the scheduling DCI or the beam indication DCI with or without DL assignment) provided in the present disclosure is absent/not configured, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., following those specified in the design examples in the present disclosure.

In one example, when/if the DCI field indicator in a DCI (e.g., the scheduling DCI or the beam indication DCI with or without DL assignment) specified in the present disclosure is set to "disabled" or "off" or "not enabled" or invalid value(s) by the network via higher layer RRC signaling/parameter and/or MAC CE command and/or dynamic DCI based L1 signaling, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., following those specified in the design examples in the present disclosure.

In one example, when/if the DCI field indicator in a DCI (e.g., the scheduling DCI or the beam indication DCI with or without DL assignment) specified herein in the present disclosure is set to a particular value such as "0," "1," "00," "01," "10," "11," or "reserved," the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., following those specified in the design examples in the present disclosure. The UE could be provided/indicated/configured by the network, e.g., via higher layer RRC signaling and/or MAC CE command and/or dynamic DCI based L1 signaling, the particular value(s) of the DCI field indicator.

In one example, the UE could be provided/configured/indicated by the network, e.g., via higher layer RRC signaling/parameter and/or MAC CE command and/or dynamic DCI based signaling, one or more indicator(s)/parameter(s) to turn on/off the DCI signaling based beam(s) association method(s) as specified herein in the present disclosure and/or the RRC signaling based beam(s) association method(s) as specified herein in the present disclosure.

For example, a higher layer parameter "dynamicBeamSwitchingPDSCH" could be provided in a higher layer RRC parameter, e.g., PDSCH-Config/PDCCH-Config/ControlResourceSet; when/if "dynamicBeamSwitchingPDSCH" is set to "enabled" or "on," the UE could follow the DCI field indicator in the DCI (e.g., the scheduling DCI or the beam indication DCI with or without DL assignment) as specified herein in the present disclosure to determine the association between one or more of the indicated TCI states/pairs of TCI states and the PDSCH reception(s) - e.g., following those specified in the design examples in the present disclosure. Otherwise, e.g., when/if "dynamicBeamSwitchingPDSCH" is set to "disabled" or "off," the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., following those specified in the design examples in the present disclosure.

In one example, the UE can be configured with a first list of *DLorJointTCIState* configurations, within the higher layer parameter *PDSCH-Config* for providing a reference signal for the quasi co-location for DM-RS of PDSCH and DM-RS of PDCCH in a CC, for CSI-RS, and to provide a reference, if applicable, for determining UL TX spatial filter for dynamic-grant and configured-grant based PUSCH and PUCCH resource in a CC, and SRS. The UE can also be configured with a second list of *UL-TCIState* configurations, to provide a reference, if applicable, for determining UL TX spatial filter for dynamic-grant and configured-grant based PUSCH and PUCCH resource in a CC, and SRS.

When/if the number of TCI states or configurations configured/provided in the first list or second list is smaller/lower than a threshold, the UE could follow the DCI field indicator in the DCI (e.g., the scheduling DCI or the beam indication DCI with or without DL assignment) as specified herein in the present disclosure to determine the association between one or more of the indicated TCI states/pairs of TCI states and the PDSCH reception(s) - e.g., following those specified in the design examples in the present disclosure. Otherwise, e.g., when/if the number of TCI states or configurations configured/provided in the first list or second list is greater/larger than the threshold, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., following those specified in the design examples in the present disclosure. The UE could be provided/configured/indicated by the network, e.g., via higher layer RRC signaling/parameter and/or MAC CE command and/or dynamic DCI based L1 signaling, the threshold.

In one example, when/if the number of TCI codepoints activated by a beam indication/activation MAC CE, e.g., the unified TCI states activation/deactivation MAC CE, is smaller/lower than a threshold, the UE could follow the DCI field indicator in the DCI (e.g., the scheduling DCI or the beam indication DCI with or without DL assignment) as specified herein in the present disclosure to determine the association between one or more of the indicated TCI states/pairs of TCI states and the PDSCH reception(s) - e.g., following those specified in the design examples in the present disclosure. Otherwise, e.g., when/if the number of TCI codepoints activated by a beam indication/activation MAC CE, e.g., the unified TCI states activation/deactivation MAC CE, is greater/larger than the threshold, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s). The UE could be provided/configured/indicated by the network, e.g., via higher layer RRC signaling/parameter and/or MAC CE command and/or dynamic DCI based L1 signaling, the threshold.

In one example, when/if the beam application time (BAT) provided by, e.g., *BeamAppTime_r*17, is greater/larger than a threshold, the UE could follow the DCI field indicator in the DCI (e.g., the scheduling DCI or the beam indication DCI with or without DL assignment) as specified herein in the present disclosure to determine the association between one or more of the indicated TCI states/pairs of TCI states and the PDSCH reception(s) - e.g., following those specified in the design examples in the present disclosure. Otherwise, e.g., when/if the beam application time (BAT) provided by, e.g., *BeamAppTime_r*17, is lower/smaller than the threshold, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s).

The UE could be provided/configured/indicated by the network, e.g., via higher layer RRC signaling/parameter and/or MAC CE command and/or dynamic DCI based L1 signaling, the threshold. Furthermore, the beam application time is defined as follows: when the UE may transmit the last symbol of a PUCCH with HARQ-ACK information corresponding to the DCI carrying the TCI State indication and without DL assignment, or corresponding to the PDSCH scheduling by the DCI carrying the TCI State indication, and if the indicated TCI State is different from the previously indicated one, the indicated *DLorJointTCIState* or *UL-TCIstate* may be applied starting from the first slot that is at least *BeamAppTime_r*17 symbols after the last symbol of the PUCCH. The first slot and the *BeamAppTime_r*17 symbols are both determined on the carrier with the smallest SCS among the carrier(s) applying the beam indication.

In one example, a UE could report a capability signaling/value, e.g., dynamicDCIswitchingPDSCH, to indicate to the network that the UE is capable of or able to support the dynamic DCI signaling based beam association(s) method(s) - e.g., following those specified in the design examples in the present disclosure. After the UE has reported to the network the capability signaling/value dynamicDCIswitchingPDSCH, the UE could follow the DCI field indicator in the DCI (e.g., the scheduling DCI or the beam indication DCI with or without DL assignment) as specified herein in the present disclosure to determine the association between one or more of the indicated TCI states/pairs of TCI states and the PDSCH reception(s) - e.g., following those specified in the design examples in the present disclosure. Otherwise, e.g., the UE does not report to the network the capability signaling/value dynamicDCIswitchingPDSCH, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., following those specified in the design examples in the present disclosure.

In one example, when/if a DCI (e.g., the scheduling DCI or the beam indication DCI with or without DL assignment) is received in a first CORESET, the UE could follow the DCI field indicator in the DCI (e.g., the scheduling DCI or the beam indication DCI with or without DL assignment) as specified herein in the present disclosure to determine the association between one or more of the indicated TCI states/pairs of TCI states and the PDSCH reception(s) - e.g., following those specified in the design examples in the present disclosure. Otherwise, e.g., when/if the DCI (e.g., the scheduling DCI or the beam indication DCI with or without DL assignment) is received in a second CORESET, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., following those specified in the design examples in the present disclosure.

The UE could be provided/configured/indicated by the network, e.g., via higher layer RRC signaling/parameter and/or MAC CE command and/or dynamic DCI based L1 signaling, configuration information of the first and/or second CORESETs. For example, the first CORESET could correspond to a CORESET with UE specific search space (USS), while the second CORESET could correspond to a CORESET with common search space (CSS). For another example, the first CORESET could be configured/associated with an indicator set to "0" (or "1") in the corresponding ControlResourceSet that configures the first CORESET, while the second CORESET could be configured/associated with the indicator set to "1" (or "0") in the corresponding ControlResourceSet that configures the second CORESET. Yet for another example, the first CORESET could be comprised/included/contained in a CORESET group/pool with the corresponding CORESET group/pool index value set to "0" (or "1"), while the second CORESET could be comprised/included/contained in a CORESET group/pool with the corresponding CORESET group/pool index value set to "1" (or "0").

Under the unified TCI framework, wherein a UE could be provided by the network one or more separate/joint DL or UL TCI state for various DL or UL channels/signals, various design aspects related to configurations of downlink and uplink channels/signals such as PDCCH/PDSCH/PUCCH/PUSCH and uplink power control, especially in a multi-DCI based multi-TRP system or an inter-cell system composed of at least a PCI different from the serving cell PCI, need to be specified.

The present disclosure provides various design aspects/enhancements for DL and UL channels/signals configurations and uplink power control in a multi-DCI based multi-TRP system or an inter-cell system wherein at least a PCI different from the serving cell PCI is deployed under the unified TCI framework.

The unified (master or main) TCI state is TCI state of UE-dedicated reception on PDSCH/PDCCH or dynamic-grant/configured-grant based PUSCH and all of dedicated PUCCH resources. Throughout the present disclosure, the joint (e.g., provided by *DLorJoint-TCIState*), separate DL (e.g., provided by *DLorJoint-TCIState*) and/or separate UL (e.g., provided by *UL-TCIState*) TCI states described/discussed above could also be referred to as unified TCI states, common TCI states, main TCI states and etc. Furthermore, throughout the present disclosure, a TCI state provided by TCI-State_r17 could also correspond to a joint (e.g., provided by *DLorJoint-TCIState*), a separate DL (e.g., provided by *DLorJoint-TCIState*) and/or a separate UL (e.g., provided by *UL-TCIState*) TCI state. In addition, throughout the present disclosure, unless otherwise specified, a MAC CE command for (beam) indication or activation could correspond to a MAC CE command for TCI state(s)/beam(s) indication/activation, e.g., unified TCI states activation/deactivation MAC CE or enhanced unified TCI states activation/deactivation MAC CE.

In the present disclosure, the TCI state/beam indication for the PUSCH(s)/PUCCH(s) repetition in a multi-TRP system is discussed under the unified TCI framework, wherein one or more DL/UL TCI states could be separately/jointly indicated in various channels such as MAC CE and/or DCI (e.g., DCI format 1_1 or 1_2 with or without DL assignment). The UE could transmit the same PUSCH(s)/PUCCH(s) to different TRPs in the multi-TRP system using different time domain resources and/or different frequency domain resources and/or different spatial domain filters.

As illustrated in FIGURE 9, an example of MAC CE based unified TCI state/beam indication for the multi-TRP operation is presented. As illustrated in FIGURE 9, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE commands to indicate one or more beam(s) (i.e., the unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single MAC CE command for TCI state(s)/beam(s) indication/activation to indicate M>1 unified TCI states/beams (e.g., M>1 joint DL and UL TCI states or M>1 separate UL TCI states) for the same PUSCH(s)/PUCCH(s) transmitted to/associated with different TRPs in the multi-TRP system.

The MAC CE for beam indication could include at least a unified TCI state ID. As discussed above, the unified TCI state corresponding to the TCI state ID could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the MAC CE command(s) and the TRPs in the multi-TRP system needs to be specified. There could be various means to associate/map the TCI state(s)/beam(s) indicated in the MAC CE command(s) for beam indication and the TRPs in the multi-TRP system.

For N>1 TCI states/beams indication in a single MAC CE command for TCI state(s)/beam(s) indication/activation, following example can be provided.

In one, the UE could be explicitly indicated by the network, e.g., via higher layer RRC signaling and/or MAC CE command and/or dynamic DCI signaling, the exact association/mapping between the TCI states/beams indicated in the MAC CE command for TCI state(s)/beam(s) indication/activation and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the MAC CE command for TCI state(s)/beam(s) indication/activation could correspond to the first entry/TRP in the list/set/pool of TRP-specific ID/index values, the second TCI state and/or the TCI state with the second lowest TCI state ID value indicated in the MAC CE command for TCI state(s)/beam(s) indication/activation could correspond to the second entry/TRP in the list/set/pool of TRP-specific ID/index values, and so on, and the last TCI state and/or the TCI state with the highest TCI state ID value indicated in the MAC CE command for TCI state(s)/beam(s) indication/activation could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the MAC CE command for TCI state(s)/beam(s) indication/activation could correspond to the first MAC CE(s)/bitmap(s) activated TRP-specific ID/index value, the second TCI state and/or the TCI state with the second lowest TCI state ID value indicated in the MAC CE command for TCI state(s)/beam(s) indication/activation could correspond to the second MAC CE(s)/bitmap(s) activated TRP-specific ID/index value, and so on, and the last TCI state and/or the TCI state with the highest TCI state ID value indicated in the MAC CE command for TCI state(s)/beam(s) indication/activation could correspond to the last MAC CE(s)/bitmap(s) activated TRP-specific ID/index value. Other exact association/mapping relationships between the TCI states/beams indicated in the MAC CE command for TCI state(s)/beam(s) indication/activation and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the TCI states/beams indicated in the MAC CE command for TCI state(s)/beam(s) indication/activation and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the MAC CE command for TCI state(s)/beam(s) indication/activation could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the MAC CE command for TCI state(s)/beam(s) indication/activation could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the MAC CE command for TCI state(s)/beam(s) indication/activation could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the MAC CE command for TCI state(s)/beam(s) indication/activation could correspond to the TRP with the highest/highest MAC CE activated TRP-specific ID/index value such as the highest PCI value and/or the last TRP (e.g., TRP #N), the second TCI state and/or the TCI state with the second lowest TCI state ID value indicated in the MAC CE command for TCI state(s)/beam(s) indication/activation could correspond to the TRP with the second highest/second highest MAC CE activated TRP-specific ID/index value such as the second highest PCI value and/or the second last TRP (e.g., TRP #N-1), and so on, and the last TCI state and/or the TCI state with the highest TCI state ID value indicated in the MAC CE command for TCI state(s)/beam(s) indication/activation could correspond to the TRP with the lowest/lowest MAC CE activated TRP-specific ID/index value such as the lowest PCI value and/or the first TRP (e.g., TRP #1). Other implicit indication methods of the association/mapping between the N>1 TCI states/beams indicated in the MAC CE command for TCI state(s)/beam(s) indication/activation and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the TCI states/beams indicated in the MAC CE command for TCI state(s)/beam(s) indication/activation and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the MAC CE command for TCI state(s)/beam(s) indication/activation could correspond to the first entry/-CORESETPoolIndex value in the list/set/pool of CORESETPoolIndex values, the second TCI state and/or the TCI state with the second lowest TCI state ID value indicated in the MAC CE command for TCI state(s)/beam(s) indication/activation could correspond to the second entry/CORESETPoolIndex value in the list/set/pool of CORESETPoolIndex values, and so on, and the last TCI state and/or the TCI state with the highest TCI state ID value indicated in the MAC CE command for TCI state(s)/beam(s) indication/activation could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the MAC CE command for TCI state(s)/beam(s) indication/activation could correspond to the first MAC CE(s)/bitmap(s) activated CORESETPoolIndex value, the second TCI state and/or the TCI state with the second lowest TCI state ID value indicated in the MAC CE command for TCI state(s)/beam(s) indication/activation could correspond to the second MAC CE(s)/bitmap(s) activated CORESETPoolIndex value, and so on, and the last TCI state and/or the TCI state with the highest TCI state ID value indicated in the MAC CE command for TCI state(s)/beam(s) indication/activation could correspond to the last MAC CE(s)/bitmap(s) activated CORESETPoolIndex value. Other exact association/mapping relationships between the TCI states/beams indicated in the MAC CE command for TCI state(s)/-beam(s) indication/activation and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the TCI states/beams indicated in the MAC CE command for TCI state(s)/beam(s) indication/activation and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the MAC CE command for TCI state(s)/beam(s) indication/activation could correspond to the lowest/lowest MAC CE activated CORESETPoolIndex value such as "0," the second TCI state and/or the TCI state with the second lowest TCI state ID value indicated in the MAC CE command for TCI state(s)/beam(s) indication/activation could correspond to the second lowest/second lowest MAC CE activated CORESETPoolIndex value such as "1," and so on, and the last TCI state and/or the TCI state with the highest TCI state ID value indicated in the MAC CE command for TCI state(s)/beam(s) indication/activation could correspond to the highest/highest MAC CE activated CORESETPoolIndex value such as "N-1."

For another example, the first TCI state and/or the TCI state with the lowest TCI state ID value indicated in the MAC CE command for TCI state(s)/beam(s) indication/activation could correspond to the highest/highest MAC CE activated CORESETPoolIndex value such as "N-1," the second TCI state and/or the TCI state with the second lowest TCI state ID value indicated in the MAC CE command for TCI state(s)/beam(s) indication/activation could correspond to the second highest/second highest MAC CE activated CORESETPoolIndex value such as "N-2," and so on, and the last TCI state and/or the TCI state with the highest TCI state ID value indicated in the MAC CE command for TCI state(s)/beam(s) indication/activation could correspond to the lowest/lowest MAC CE activated CORESETPoolIndex value such as "0." Other implicit indication methods of the association/mapping between the N>1 TCI states/beams indicated in the MAC CE command for TCI state(s)/beam(s) indication/activation and the CORESETPoolIndex values are also possible.

In yet another example, a TCI state, e.g., the higher layer parameter TCI-State, indicated in the MAC CE command for TCI state(s)/beam(s) indication/activation could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the MAC CE command for TCI state(s)/beam(s) indication/activation, e.g., unified TCI states activation/deactivation MAC CE or enhanced unified TCI states activation/deactivation MAC CE could include/-comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 unified TCI states could be associated with the n-th or m-th entity ID/index indicated in the same MAC CE command for TCI state(s)/beam(s) indication/activation, e.g., unified TCI states activation/deactivation MAC CE or enhanced unified TCI states activation/deactivation MAC CE, where n∈{1,..., N} or m∈{1,..., M}.

For instance, the first TCI state in the indicated N=2 or M=2 unified TCI states could be associated with the first entity ID/index such as the first PCI, CORESETPoolIndex value 0 or CORESETGroupIndex value 0 indicated in the same for TCI state(s)/beam(s) indication/activation, e.g., unified TCI states activation/deactivation MAC CE or enhanced unified TCI states activation/deactivation MAC CE, and the second TCI state in the indicated N=2 or M=2 unified TCI states could be associated with the second entity ID/index such as the second PCI, CORESETPoolIndex value 1 or CORESETGroupIndex value 1 indicated in the same MAC CE command for TCI state(s)/beam(s) indication/activation, e.g., unified TCI states activation/deactivation MAC CE or enhanced unified TCI states activation/deactivation MAC CE. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For a list/set/pool of N>1 MAC CE commands for beam indication with each MAC CE command indicating a single TCI state/beam; a unique entity ID/index could be included/incorporated in each MAC CE command for TCI state(s)/beam(s) indication/activation.

In one example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of TRP-specific ID/index values such as PCIs. The first MAC CE command for TCI state(s)/beam(s) indication/activation in the list/set/pool of N>1 MAC CE commands for beam indication and/or the MAC CE command for TCI state(s)/beam(s) indication/activation indicating the lowest entity ID/index value and/or the MAC CE command for TCI state(s)/beam(s) indication/activation indicating the TCI state with the lowest TCI state ID value could correspond to the first entry/TRP in the list/set/pool of TRP-specific ID/index values, the second MAC CE command for TCI state(s)/beam(s) indication/activation in the list/set/pool of N>1 MAC CE commands for beam indication and/or the MAC CE command for TCI state(s)/beam(s) indication/activation indicating the second lowest entity ID/index value and/or the MAC CE command for TCI state(s)/beam(s) indication/activation indicating the TCI state with the second lowest TCI state ID value could correspond to the second entry/TRP in the list/set/pool of TRP-specific ID/index values, and so on, and the last MAC CE command for TCI state(s)/beam(s) indication/activation in the list/set/pool of N>1 MAC CE commands for beam indication and/or the MAC CE command for TCI state(s)/beam(s) indication/activation indicating the highest entity ID/index value and/or the MAC CE command for TCI state(s)/beam(s) indication/activation indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first MAC CE command for TCI state(s)/beam(s) indication/activation in the list/set/pool of N>1 MAC CE commands for beam indication and/or the MAC CE command indicating the lowest entity ID/index value and/or the MAC CE command for TCI state(s)/beam(s) indication/activation indicating the TCI state with the lowest TCI state ID value could correspond to the first MAC CE(s)/bitmap(s) activated TRP-specific ID/index values, the second MAC CE command for TCI state(s)/beam(s) indication/activation in the list/set/pool of N>1 MAC CE commands for beam indication and/or the MAC CE command for TCI state(s)/beam(s) indication/activation indicting the second lowest entity ID/index value and/or the MAC CE command for TCI state(s)/beam(s) indication/activation indicating the TCI state with the second lowest TCI state ID value could correspond to the second MAC CE(s)/bitmap(s) activated TRP-specific ID/index values, and so on, and the last MAC CE command for TCI state(s)/beam(s) indication/activation in the list/set/pool of N>1 MAC CE commands for beam indication and/or the MAC CE command for TCI state(s)/beam(s) indication/activation indicating the highest entity ID/index value and/or the MAC CE command for TCI state(s)/beam(s) indication/activation indicating the TCI state with the highest TCI state ID value could correspond to the last MAC CE(s)/bitmap(s) activated TRP-specific ID/index values. Other exact association/mapping relationships between the MAC CE commands for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the MAC CE commands for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first MAC CE command for TCI state(s)/beam(s) indication/activation in the list/set/pool of N>1 MAC CE commands for beam indication and/or the MAC CE command for TCI state(s)/beam(s) indication/activation indicating the lowest entity ID/index value and/or the MAC CE command for TCI state(s)/beam(s) indication/activation indicating the lowest TCI state ID value could correspond to the TRP with the lowest/lowest MAC CE activated TRP-specific ID/index value such as the lowest PCI value and/or the first TRP (e.g., TRP #1), the second MAC CE command for TCI state(s)/beam(s) indication/activation in the list/set/pool of N>1 MAC CE commands for beam indication and/or the MAC CE command for TCI state(s)/beam(s) indication/activation indicating the second lowest entity ID/index value and/or the MAC CE command for TCI state(s)/beam(s) indication/activation indicating the second lowest TCI state ID value could correspond to the TRP with the second lowest/second lowest MAC CE activated TRP-specific ID/index value such as the second lowest PCI value and/or the second TRP (e.g., TRP #2), and so on, and the last MAC CE command for TCI state(s)/beam(s) indication/activation in the list/set/pool of N>1 MAC CE commands for beam indication and/or the MAC CE command for TCI state(s)/beam(s) indication/activation indicating the highest entity ID/index value and/or the MAC CE command for TCI state(s)/beam(s) indication/activation indicating the highest TCI state ID value could correspond to the TRP with the highest/highest MAC CE activated TRP-specific ID/index value such as the highest PCI value and/or the last TRP (e.g., TRP #N).

For another example, the first MAC CE command for TCI state(s)/beam(s) indication/activation in the list/set/pool of N>1 MAC CE commands for beam indication and/or the MAC CE command for TCI state(s)/beam(s) indication/activation indicating the lowest entity ID/index value and/or the MAC CE command for TCI state(s)/beam(s) indication/activation indicating the lowest TCI state ID value could correspond to the TRP with the highest/highest MAC CE activated TRP-specific ID/index value such as the highest PCI value and/or the last TRP (e.g., TRP #N), the second MAC CE command for TCI state(s)/beam(s) indication/activation in the list/set/pool of N>1 MAC CE commands for beam indication and/or the MAC CE command for TCI state(s)/beam(s) indication/activation indicating the second lowest entity ID/index value and/or the MAC CE command for TCI state(s)/beam(s) indication/activation indicating the second lowest TCI state ID value could correspond to the TRP with the second highest/second highest MAC CE activated TRP-specific ID/index value such as the second highest PCI value and/or the second last TRP (e.g., TRP #N-1), and so on, and the last MAC CE command for TCI state(s)/beam(s) indication/activation in the list/set/pool of N>1 MAC CE commands for beam indication and/or the MAC CE command for TCI state(s)/beam(s) indication/activation indicating the highest entity ID/index value and/or the MAC CE command for TCI state(s)/beam(s) indication/activation indicating the highest TCI state ID value indicated could correspond to the TRP with the lowest/lowest MAC CE activated TRP-specific ID/index value such as the lowest PCI value and/or the first TRP (e.g., TRP #1). Other implicit indication methods of the association/mapping between the N>1 MAC CE commands for beam indication (and therefore, the TCI states/beams indicated therein) and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of CORESETPoolIndex values - e.g., a set of two CORESETPoolIndex values 0 and 1. The first MAC CE command for TCI state(s)/beam(s) indication/activation in the list/set/pool of N>1 MAC CE commands for beam indication and/or the MAC CE command for TCI state(s)/beam(s) indication/activation indicating the lowest entity ID/index value and/or the MAC CE command for TCI state(s)/beam(s) indication/activation indicating the TCI state with the lowest TCI state ID value could correspond to the first entry/CORESETPoolIndex value in the list/set/pool of CORESETPoolIndex values, the second MAC CE command for TCI state(s)/beam(s) indication/activation in the list/set/pool of N>1 MAC CE commands for beam indication and/or the MAC CE command for TCI state(s)/beam(s) indication/activation indicating the second lowest entity ID/index value and/or the MAC CE command for TCI state(s)/beam(s) indication/activation indicating the TCI state with the second lowest TCI state ID value could correspond to the second entry/CORESETPoolIndex value in the list/set/pool of CORESETPoolIndex values, and so on, and the last MAC CE command for TCI state(s)/beam(s) indication/activation in the list/set/pool of N>1 MAC CE commands for beam indication and/or the MAC CE command for TCI state(s)/beam(s) indication/activation indicating the highest entity ID/index value and/or the MAC CE command for TCI state(s)/beam(s) indication/activation indicating the TCI state with the highest TCI state ID value could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first MAC CE command for TCI state(s)/beam(s) indication/activation in the list/set/pool of N>1 MAC CE commands for beam indication and/or the MAC CE command for TCI state(s)/beam(s) indication/activation indicating the lowest entity ID/index value and/or the MAC CE command for TCI state(s)/beam(s) indication/activation indicating the TCI state with the lowest TCI state ID value could correspond to the first MAC CE(s)/bitmap(s) activated CORESETPoolIndex value, the second MAC CE command for TCI state(s)/beam(s) indication/activation in the list/set/pool of N>1 MAC CE commands for beam indication and/or the MAC CE command for TCI state(s)/beam(s) indication/activation indicating the second lowest entity ID/index value and/or the MAC CE command for TCI state(s)/beam(s) indication/activation indicating the TCI state with the second lowest TCI state ID value could correspond to the second MAC CE(s)/bitmap(s) activated CORESETPoolIndex value, and so on, and the last MAC CE command for TCI state(s)/beam(s) indication/activation in the list/set/pool of N>1 MAC CE commands for beam indication and/or the MAC CE command for TCI state(s)/beam(s) indication/activation indicating the highest entity ID/index value and/or the MAC CE command for TCI state(s)/beam(s) indication/activation indicating the TCI state with the highest TCI state ID value could correspond to the last MAC CE(s)/bitmap(s) activated CORESETPoolIndex value. Other exact association/mapping relationships between the MAC CE commands for beam indication (and therefore, the TCI states/beams indicated therein) and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the MAC CE commands for beam indication (and therefore, the TCI states/beams indicated therein) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values.

For example, the first MAC CE command for TCI state(s)/beam(s) indication/activation in the list/set/pool of N>1 MAC CE commands for beam indication and/or the MAC CE command for TCI state(s)/beam(s) indication/activation indicating the lowest entity ID/index value and/or the MAC CE command for TCI state(s)/beam(s) indication/activation indicating the lowest TCI state ID value could correspond to the lowest/lowest MAC CE activated CORESETPoolIndex value, the second MAC CE command for TCI state(s)/beam(s) indication/activation in the list/set/pool of N>1 MAC CE commands for beam indication and/or the MAC CE command for TCI state(s)/beam(s) indication/activation indicating the second lowest entity ID/index value and/or the MAC CE command for TCI state(s)/beam(s) indication/activation indicating the second lowest TCI state ID value could correspond to the second lowest/second lowest MAC CE activated CORESETPoolIndex value, and so on, and the last MAC CE command for TCI state(s)/beam(s) indication/activation in the list/set/pool of N>1 MAC CE commands for beam indication and/or the MAC CE command for TCI state(s)/beam(s) indication/activation indicating the highest entity ID/index value and/or the MAC CE command for TCI state(s)/beam(s) indication/activation indicating the highest TCI state ID value could correspond to the highest/highest MAC CE activated CORESETPoolIndex value.

For another example, the first MAC CE command for TCI state(s)/beam(s) indication/activation in the list/set/pool of N>1 MAC CE commands for beam indication and/or the MAC CE command for TCI state(s)/beam(s) indication/activation indicating the lowest entity ID/index value and/or the MAC CE command for TCI state(s)/beam(s) indication/activation indicating the lowest TCI state ID value could correspond to the highest/highest MAC CE activated CORESETPoolIndex value, the second MAC CE command for TCI state(s)/beam(s) indication/activation in the list/set/pool of N>1 MAC CE commands for beam indication and/or the MAC CE command for TCI state(s)/beam(s) indication/activation indicating the second lowest entity ID/index value and/or the MAC CE command for TCI state(s)/beam(s) indication/activation indicating the second lowest TCI state ID value could correspond to the second highest/second highest MAC CE activated CORESETPoolIndex value, and so on, and the last MAC CE command for TCI state(s)/beam(s) indication/activation in the list set/pool of N>1 MAC CE commands for beam indication and/or the MAC CE command for TCI state(s)/beam(s) indication/activation indicating the highest entity ID/index value and/or the MAC CE command for TCI state(s)/beam(s) indication/activation indicating the highest TCI state ID value indicated could correspond to the lowest/lowest MAC CE activated CORESETPoolIndex value. Other implicit indication methods of the association/mapping between the N>1 MAC CE commands for beam indication (and therefore, the TCI states/beams indicated therein) and the CORESETPoolIndex values are also possible.

In yet another example, a MAC CE command for TCI state(s)/beam(s) indication/activation could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

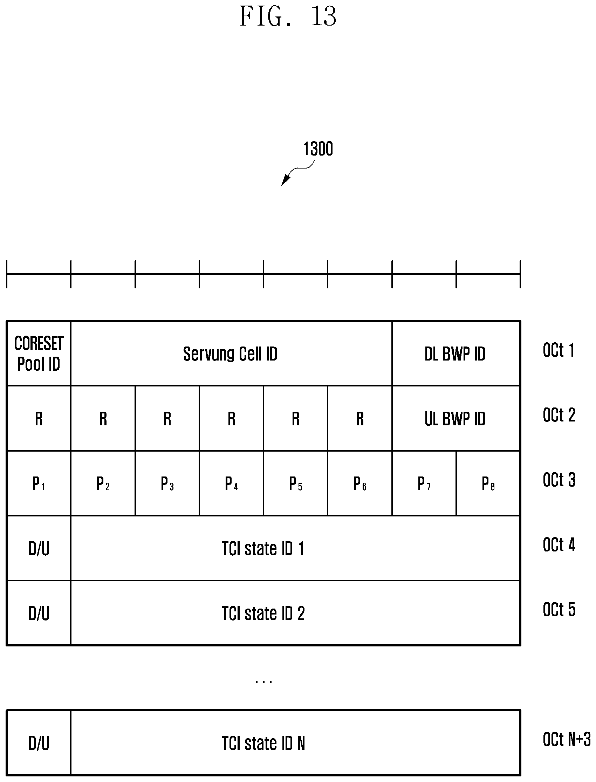

FIGURE 13 illustrates an example of MAC CE command for TCI state(s)/beam(s) indication/activation 1200 according to embodiments of the present disclosure. An embodiment of the MAC CE command for TCI state(s)/beam(s) indication/activation 1200 shown in FIGURE 13 is for illustration

As illustrated in FIGURE 13, an example of the MAC CE command for TCI state(s)/beam(s) indication/activation, e.g., unified TCI states activation/deactivation MAC CE or enhanced unified TCI states activation/deactivation MAC CE, indicating/providing/containing/including/comprising a CORESET pool index/ID or CORESETPoolIndex value, is provided. The MAC CE command for TCI state(s)/beam(s) indication/activation may indicate/update the corresponding TCI state(s) for the TRP(s) associated with the same ID/index value, e.g., the CORESETPoolIndex value, as that indicated in the MAC CE command for TCI state(s)/beam(s) indication/activation.

Or equivalently, the TCI state(s)/pair(s) of TCI states or TCI codepoint(s) activated by the MAC CE command for TCI state(s)/beam(s) indication/activation - wherein a CORESET pool index/ID or CORESETPoolIndex value is provided/indicated/configured - could be for DL/UL channels/signals associated/configured with the same CORESET pool index/ID or CORESETPoolIndex value indicated/provided/configured/included/comprised therein - i.e., in the MAC CE command for TCI state(s)/beam(s) indication/activation, e.g., unified TCI states activation/deactivation MAC CE or enhanced unified TCI states activation/deactivation MAC CE.

In yet another example, a MAC CE command for TCI state(s)/beam(s) indication/activation, e.g., unified TCI states activation/deactivation MAC CE or enhanced unified TCI states activation/deactivation MAC CE could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc.

For this case, the n-th or m-th TCI state (e.g., the n-th or m-th joint DL and UL TCI state or separate DL TCI state or separate UL TCI state) among/within the indicated N>1 or M>1 unified TCI states could be associated with the n-th or m-th entity ID/index indicated in the same MAC CE command for TCI state(s)/beam(s) indication/activation, e.g., unified TCI states activation/deactivation MAC CE or enhanced unified TCI states activation/deactivation MAC CE, where $n \in \{1,..., N\}$ or $m \in \{1,..., M\}$. For instance, the first TCI state in the indicated N=2 or M=2 unified TCI states could be associated with the first entity ID/index such as the first PCI, CORESETPoolIndex value 0 or CORESETGroupIndex value 0 indicated in the same MAC CE command for TCI state(s)/beam(s) indication/activation, e.g., unified TCI states activation/deactivation MAC CE or enhanced unified TCI states activation/deactivation MAC CE, and the second TCI state in the indicated N=2 or M=2 unified TCI states could be associated with the second entity ID/index such as the second PCI, CORESETPoolIndex value 1 or CORESETGroupIndex value 1 indicated in the same for TCI state(s)/beam(s) indication/activation, e.g., unified TCI states activation/deactivation MAC CE or enhanced unified TCI states activation/deactivation MAC CE.

In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

According to the design examples specified herein in the present disclosure, a MAC CE command for TCI state(s)/beam(s) indication/activation, e.g., unified TCI states activation/deactivation MAC CE or enhanced unified TCI states activation/deactivation MAC CE, could be associated/configured with one or more entity IDs, e.g., by providing/containing/including/indicating/configuring/comprising the one or more entity IDs or one or more fields with each field providing/containing/including/indicating/configuring one or more entity IDs, where an entity ID could correspond to a PCI, a PCI index pointing to an entry/PCI in a list of PCIs that are higher layer configured to the UE, a CORESET pool index (e.g., a UE could be provided by the network in PDCCH-Config/PDSCH-Config, two values of CORESETPoolIndex 0 and 1), a CORESET group index (e.g., a UE could be provided by the network in PDCCH-Config/PDSCH-Config, two values of CORESETGroupIndex 0 and 1), a CORESET ID/index, a RS set ID/index, a RS setting ID/index, a RS group ID/index, a RS ID/index, a one-bit indicator (e.g., with the one-bit indicator set to "0" (or "1") indicating the serving cell PCI, and "1" (or "0") indicating a PCI other than the serving cell PCI), or a multi-bit indicator.

For this case, one or more TCI states/pairs of TCI states or one or more TCI codepoints each mapped to one or more TCI states/pairs of TCI states activated/indicated by the MAC CE command, e.g., the unified TCI states activation/deactivation MAC CE or the enhanced unified TCI states activation/deactivation MAC CE, could be associated to the one or more entity IDs, wherein the one or more entity IDs could be associated to the MAC CE command as discussed herein in the present disclosure.

In one example, the MAC CE command for TCI state(s)/beam(s) indication/activation, e.g., the unified TCI states activation/deactivation MAC CE or the enhanced unified TCI states activation/deactivation MAC CE, could indicate/provide/configure/contain/include/comprise an entity ID or a field providing/configuring/indicating/containing/including/comprising an entity ID, where the entity ID could correspond to a PCI, a PCI index pointing to an entry/PCI in a list of PCIs that are higher layer configured to the UE, a CORESET pool index (e.g., a UE could be provided by the network in PDCCH-Config/PDSCH-Config, two values of CORESETPoolIndex 0 and 1), a CORESET group index (e.g., a UE could be provided by the network in PDCCH-Config/PDSCH-Config, two values of CORESETGroupIndex 0 and 1), a CORESET ID/index, a RS set ID/index, a RS setting ID/index, a RS group ID/index, a RS ID/index, a one-bit indicator (e.g., with the one-bit indicator set to "0" (or "1") indicating the serving cell PCI, and "1" (or "0") indicating a PCI other than the serving cell PCI), or a multi-bit indicator. For this case, one or more TCI states/pairs of TCI states or one or more TCI codepoints each mapped to one or more TCI states/pairs of TCI states activated/indicated by/in the MAC CE command could be associated to the entity ID.

For instance, the MAC CE command for TCI state(s)/beam(s) indication/activation, e.g., the unified TCI states activation/deactivation MAC CE or the enhanced unified TCI states activation/deactivation MAC CE, could indicate/provide/configure/contain/include/comprise a CORESETPoolIndex or a field providing/configuring/indicating/containing/including/comprising a CORESETPoolIndex. For this case, if the value of CORESETPoolIndex indicated/provided/configured by/in the MAC CE command is set to "0" (or "1"), the TCI states/pairs of TCI states or the TCI codepoint(s) activated/indicated by/in the MAC CE command could be associated to value "0" (or "1") of CORESETPoolIndex; and if the value of CORESETPoolIndex indicated/provided/configured by/in the MAC CE command is set to "1" (or "0"), the TCI states/pairs of TCI states or the TCI codepoint(s) activated/indicated by/in the MAC CE command could be associated to value "1" (or "0") of CORESETPoolIndex. A UE could be indicated by the network one or more unified TCI states/pairs of TCI states by one or more TCI codepoints of one or more TCI fields in a beam indication DCI (e.g., DCI format 1_1 or 1_2 with or without DL assignment) received in a CORESET configured/associated to a first CORESETPoolIndex (e.g., "0" or "1"), wherein the one or more unified TCI states/pairs of TCI states or the one or more TCI codepoints could be associated to the first CORESETPoolIndex or a second CORESETPoolIndex (e.g., "0" or "1") different from the first CORESETPoolIndex according to those specified herein in the present disclosure.

In another example, one or more reserved fields (e.g., "R" fields) in the MAC CE command for TCI state(s)/beam(s) indication/activation, e.g., the unified TCI states activation/deactivation MAC CE or the enhanced unified TCI states activation/deactivation MAC CE, could be used to indicate/provide/configure/contain/include/comprise an entity ID, where the entity ID could correspond to a PCI, a PCI index pointing to an entry/PCI in a list of PCIs that are higher layer configured to the UE, a CORESET pool index (e.g., a UE could be provided by the network in PDCCH-Config/PDSCH-Config, two values of CORESETPoolIndex 0 and 1), a CORESET group index (e.g., a UE could be provided by the network in PDCCH-Config/PDSCH-Config, two values of CORESETGroupIndex 0 and 1), a CORESET ID/index, a RS set ID/index, a RS setting ID/index, a RS group ID/index, a RS ID/index, a one-bit indicator (e.g., with the one-bit indicator set to "0" (or "1") indicating the serving cell PCI, and "1" (or "0") indicating a PCI other than the serving cell PCI), or a multi-bit indicator.

For this case, one or more TCI states/pairs of TCI states or one or more TCI codepoints each mapped to one or more TCI states/pairs of TCI states activated/indicated by/in the MAC CE command could be associated to the entity ID. For instance, a reserved field (e.g., an "R" field) in the MAC CE command for TCI state(s)/beam(s) indication/activation, e.g., the unified TCI states activation/deactivation MAC CE or the enhanced unified TCI states activation/deactivation MAC CE, could be used to indicate/provide/configure/contain/include/comprise a CORESETPoolIndex. For this case, if the value of CORESETPoolIndex indicated/provided/configured by the reserved ("R") field in the MAC CE command is set to "0" (or "1"), the TCI states/pairs of TCI states or the TCI codepoint(s) activated/indicated by/in the MAC CE command could be associated to value "0" (or "1") of CORESETPoolIndex; and if the value of CORESETPoolIndex indicated/provided/configured by the reserved ("R") field in the MAC CE command is set to "1" (or "0"), the TCI states/pairs of TCI states or the TCI codepoint(s) activated/indicated by/in the MAC CE command could be associated to value "1" (or "0") of CORESETPoolIndex.

A UE could be indicated by the network one or more unified TCI states/pairs of TCI states by one or more TCI codepoints of one or more TCI fields in a beam indication DCI (e.g., DCI format 1_1 or 1_2 with or without DL assignment) received in a CORESET configured/associated to a first CORESETPoolIndex (e.g., "0" or "1"), wherein the one or more unified TCI states/pairs of TCI states or the one or more TCI codepoints could be associated to the first CORESETPoolIndex or a second CORESETPoolIndex (e.g., "0" or "1") different from the first CORESETPoolIndex according to those specified herein in the present disclosure.

In yet another example, the MAC CE command for TCI state(s)/beam(s) indication/activation, e.g., the unified TCI states activation/deactivation MAC CE or the enhanced unified TCI states activation/deactivation MAC CE, could indicate/provide/configure/contain/include/comprise a set of entity IDs or one or more fields providing/configuring/indicating/containing/including/comprising a set of entity IDs, where each entity ID could correspond to a PCI, a PCI index pointing to an entry/PCI in a list of PCIs that are higher layer configured to the UE, a CORESET pool index (e.g., a UE could be provided by the network in PDCCH-Config/PDSCH-Config, two values of CORESETPoolIndex 0 and 1), a CORESET group index (e.g., a UE could be provided by the network in PDCCH-Config/PDSCH-Config, two values of CORESETGroupIndex 0 and 1), a CORESET ID/index, a RS set ID/index, a RS setting ID/index, a RS group ID/index, a RS ID/index, a one-bit indicator (e.g., with the one-bit indicator set to "0" (or "1") indicating the serving cell PCI, and "1" (or "0") indicating a PCI other than the serving cell PCI), or a multi-bit indicator.

For this case, one or more TCI states/pairs of TCI states or one or more TCI codepoints each mapped to one or more TCI states/pairs of TCI states activated/indicated by/in the MAC CE command could be (one-to-one) associated/-mapped to the entity IDs in the set. For example, the first TCI state/pair of TCI states or the first TCI codepoint activated/indicated by/in the MAC CE command could be associated/mapped to the first (or last) entity ID in the set, the second TCI state/pair of TCI states or the second TCI codepoint activated/indicated by/in the MAC CE command could be associated/mapped to the second (or second last) entity ID in the set, and so on. For another example, the first TCI state/pair of TCI states or the first TCI codepoint activated/indicated by/in the MAC CE command could be mapped/associated to the lowest (or highest) entity ID in the set, the second TCI state/pair of TCI states or the second TCI codepoint activated/indicated by/in the MAC CE command could be mapped/associated to the second lowest (or second highest) entity ID in the set, and so on.

Yet for another example, the UE could be indicated/configured/provided by the network, e.g., via higher layer RRC signaling/parameter and/or MAC CE command and/or dynamic DCI based L1 signaling, the association/mapping between the TCI states/pairs of TCI states or the TCI codepoints activated/indicated by/in the MAC CE command and the entity IDs in the set. For instance, the MAC CE command for TCI state(s)/beam(s) indication/activation, e.g., the unified TCI states activation/deactivation MAC CE or the enhanced unified TCI states activation/deactivation MAC CE, could indicate/provide/configure/contain/include/comprise a set of CORESETPoolIndex values or one or more fields providing/configuring/indicating/containing/including/comprising a set of CORESETPoolIndex values. For this case, the first TCI state/pair of TCI states or the first TCI codepoint activated/indicated by/in the MAC CE command could be mapped/associated to the first CORESETPoolIndex value (e.g., either "0" or "1") in the set, the second TCI state/pair of TCI states or the second TCI codepoint activated/indicated by/in the MAC CE command could be mapped/associated to the second CORESETPoolIndex value (e.g., either "0" or "1") in the set and so on.

Alternatively, the first TCI state/pair of TCI states or the first TCI codepoint activated/indicated by/in the MAC CE command could be mapped/associated to the lowest (or highest) CORESETPoolIndex value (e.g., "0" (or "1")) in the set, the second TCI state/pair of TCI states or the second TCI codepoint activated/indicated by/in the MAC CE command could be mapped/associated to the second lowest (or second highest) CORESETPoolIndex value (e.g., "1" (or "0")) in the set and so on. A UE could be indicated by the network one or more unified TCI states/pairs of TCI states by one or more TCI codepoints of one or more TCI fields in a beam indication DCI (e.g., DCI format 1_1 or 1_2 with or without DL assignment) received in a CORESET configured/associated to a first CORESETPoolIndex (e.g., "0" or "1"), wherein the one or more unified TCI states/pairs of TCI states or the one or more TCI codepoints could be associated to the first CORESETPoolIndex or a second CORESETPoolIndex (e.g., "0" or "1") different from the first CORESETPoolIndex according to those specified herein in the present disclosure.

In yet another example, one or more reserved field (e.g., "R" fields) in the MAC CE command for TCI state(s)/beam(s) indication/activation, e.g., the unified TCI states activation/deactivation MAC CE or the enhanced unified TCI states activation/deactivation MAC CE, could be used to indicate/provide/configure/contain/include/comprise a set of entity ID, where each entity ID could correspond to a PCI, a PCI index pointing to an entry/PCI in a list of PCIs that are higher layer configured to the UE, a CORESET pool index (e.g., a UE could be provided by the network in PDCCH-Config/PDSCH-Config, two values of CORESETPoolIndex 0 and 1), a CORESET group index (e.g., a UE could be provided by the network in PDCCH-Config/PDSCH-Config, two values of CORESETGroupIndex 0 and 1), a CORESET ID/index, a RS set ID/index, a RS setting ID/index, a RS group ID/index, a RS ID/index, a one-bit indicator (e.g., with the one-bit indicator set to "0" (or "1") indicating the serving cell PCI, and "1" (or "0") indicating a PCI other than the serving cell PCI), or a multi-bit indicator.

For this case, one or more TCI states/pairs of TCI states or one or more TCI codepoints each mapped to one or more TCI states/pairs of TCI states activated/indicated by/in the MAC CE command could be (one-to-one) associated/-mapped to the entity IDs in the set. For example, the first TCI state/pair of TCI states or the first TCI codepoint activated/indicated by/in the MAC CE command could be associated/mapped to the first (or last) entity ID in the set, the second TCI state/pair of TCI states or the second TCI codepoint activated/indicated by/in the MAC CE command could be associated/mapped to the second (or second last) entity ID in the set, and so on. For another example, the first TCI state/pair of TCI states or the first TCI codepoint activated/indicated by/in the MAC CE command could be mapped/associated to the lowest (or highest) entity ID in the set, the second TCI state/pair of TCI states or the second TCI codepoint activated/indicated by/in the MAC CE command could be mapped/associated to the second lowest (or second highest) entity ID in the set, and so on.

Yet for another example, the UE could be indicated/configured/provided by the network, e.g., via higher layer RRC signaling/parameter and/or MAC CE command and/or dynamic DCI based L1 signaling, the association/mapping between the TCI states/pairs of TCI states or the TCI codepoints activated/indicated by/in the MAC CE command and the entity IDs in the set. For instance, one or more reserved fields (e.g., "R" fields) in the MAC CE command for TCI state(s)/beam(s) indication/activation, e.g., the unified TCI states activation/deactivation MAC CE or the enhanced unified TCI states activation/deactivation MAC CE, could be used to indicate/provide/configure/contain/include/comprise a set of CORESETPoolIndex values. For this case, the first TCI state/pair of TCI states or the first TCI codepoint activated/indicated by/in the MAC CE command could be mapped/associated to the first CORESETPoolIndex value (e.g., either "0" or "1") in the set, the second TCI state/pair of TCI states or the second TCI codepoint activated/indicated by/in the MAC CE command could be mapped/associated to the second CORESETPoolIndex value (e.g., either "0" or "1") in the set and so on.

Alternatively, the first TCI state/pair of TCI states or the first TCI codepoint activated/indicated by/in the MAC CE command could be mapped/associated to the lowest (or highest) CORESETPoolIndex value (e.g., "0" (or "1")) in the set, the second TCI state/pair of TCI states or the second TCI codepoint activated/indicated by/in the MAC CE command could be mapped/associated to the second lowest (or second highest) CORESETPoolIndex value (e.g., "1" (or "0")) in the set and so on. A UE could be indicated by the network one or more unified TCI states/pairs of TCI states by one or more TCI codepoints of one or more TCI fields in a beam indication DCI (e.g., DCI format 1_1 or 1_2 with or without DL assignment) received in a CORESET configured/associated to a first CORESETPoolIndex (e.g., "0" or "1"), wherein the one or more unified TCI states/pairs of TCI states or the one or more TCI codepoints could be associated to the first CORESETPoolIndex or a second CORESETPoolIndex (e.g., "0" or "1") different from the first CORESETPoolIndex according to those specified herein in the present disclosure.

In yet another example, the MAC CE command for TCI state(s)/beam(s) indication/activation, e.g., the unified TCI states activation/deactivation MAC CE or the enhanced unified TCI states activation/deactivation MAC CE, could contain/provide/include/configure/indicate/comprise one or more subsets of TCI states/pairs of TCI states or one or more subsets of TCI codepoints. Each subset of TCI states/pairs of TCI states or TCI codepoints could be associated/mapped to one or more entity IDs, where an entity ID could correspond to a PCI, a PCI index pointing to an entry/PCI in a list of PCIs that are higher layer configured to the UE, a CORESET pool index (e.g., a UE could be provided by the network in PDCCH-Config/PDSCH-Config, two values of CORESETPoolIndex 0 and 1), a CORESET group index (e.g., a UE could be provided by the network in PDCCH-Config/PDSCH-Config, two values of CORESETGroupIndex 0 and 1), a CORESET ID/index, a RS set ID/index, a RS setting ID/index, a RS group ID/index, a RS ID/index, a one-bit indicator (e.g., with the one-bit indicator set to "0" (or "1") indicating the serving cell PCI, and "1" (or "0") indicating a PCI other than the serving cell PCI), or a multi-bit indicator. For example, the MAC CE command could contain/provide/include/indicate/configure/comprise a first subset of TCI states/pairs of TCI states or TCI codepoints and a second subset of TCI states/pairs of TCI states or TCI codepoints. The first subset could contain/provide/indicate/include/comprise $N1 \geq 1$ TCI states/pairs of TCI states or TCI codepoints, while the second subset could contain/provide/indicate/include/comprise $N2 \geq 1$ TCI states/pairs of TCI states or TCI codepoints.

For example, the N1 TCI states/pairs of TCI states or TCI codepoints could correspond to the first half (e.g., the first Ntot/2) of the total TCI states/pairs of TCI states or TCI codepoints activated/indicated by/in the MAC CE command, while the N2 TCI states/pairs of TCI states or TCI codepoints could correspond to the second/last half (e.g., the second/last Ntot/2) of the total TCI states/pairs of TCI states or TCI codepoints activated/indicated by/in the MAC CE command, where Ntot represents the number of total TCI states/pairs of TCI states or TCI codepoints activated/indicated by/in the MAC CE command.

For another example, the UE could be indicated/provided/configured by the network, e.g., via higher layer RRC signaling/parameter and/or MAC CE command and/or dynamic DCI based L1 signaling, the first subset of N1 TCI states/pairs of TCI states or TCI codepoints and/or the second subset of N2 TCI states/pairs of TCI states or TCI codepoints, out of the total TCI states/pairs of TCI states or TCI codepoints activated/indicated in/by the MAC CE command.

As discussed herein in the present disclosure, the first and/or second subsets of TCI states/pairs of TCI states or TCI codepoints could be associated/mapped to one or more entity IDs specified herein in the present disclosure.

For example, the first subset of TCI states/pairs of TCI states or TCI codepoints could be associated/mapped to CORESET pool index value or CORESETPoolIndex "0" (or "1"), while the second subset of TCI states/pairs of TCI states or TCI codepoints could be associated/mapped to CORESET pool index value or CORESETPoolIndex "1" (or "0"). Alternatively, the first subset of TCI states/pairs of TCI states or TCI codepoints could be associated/mapped to CORESET pool index value or CORESETPoolIndex "0" (or "1"), while the second subset of TCI states/pairs of TCI states or TCI codepoints could be associated/mapped to both CORESET pool index values or CORESETPoolIndex "0" and "1"; for this case, the first (or second) TCI state/pair of TCI states of a TCI codepoint in the second subset could be associated/mapped to CORESET pool index value or CORESETPoolIndex "0," while the second (or first) TCI state/pair of TCI states of a TCI codepoint in the second subset could be associated/mapped to CORESET pool index value or CORESETPoolIndex "1."

Optionally, the second subset of TCI states/pairs of TCI states or TCI codepoints could be associated/mapped to CORESET pool index value or CORESETPoolIndex "0" (or "1"), while the first subset of TCI states/pairs of TCI states or TCI codepoints could be associated/mapped to both CORESET pool index values or CORESETPoolIndex "0" and "1"; for this case, the first (or second) TCI state/pair of TCI states of a TCI codepoint in the first subset could be associated/mapped to CORESET pool index value or CORESETPoolIndex "0," while the second (or first) TCI state/pair of TCI states of a TCI codepoint in the first subset could be associated/mapped to CORESET pool index value or CORESETPoolIndex "1."

For another example, the first (or second) subset of TCI states/pairs of TCI states or TCI codepoints could be associated/mapped to the serving cell PCI or a PCI index pointing to the serving cell PCI in a list of PCIs that are configured to the UE, while the second (or first) subset of TCI states/pairs of TCI states or TCI codepoints could be associated/mapped to a PCI other than the serving cell PCI or a PCI index pointing to a PCI other than the serving cell PCI in a list of PCIs that are configured to the UE. Alternatively, the first subset of TCI states/pairs of TCI states or TCI codepoints could be associated/mapped to the serving cell PCI or a PCI index pointing to the serving cell PCI in a list of PCIs that are configured to the UE (or a PCI other than the serving cell PCI or a PCI index pointing to a PCI other than the serving cell PCI in a list of PCIs that are higher layer configured to the UE), while the second subset of TCI states/pairs of TCI states or TCI codepoints could be associated/mapped to both the serving cell PCI (or a PCI index pointing to the serving cell PCI in a list of PCIs that are higher layer configured to the UE) and a PCI other than the serving cell PCI (or a PCI index pointing to a PCI other than the serving cell PCI in a list of PCIs that are higher layer configured to the UE); for this case, the first (or second) TCI state/pair of TCI states of a TCI codepoint in the second subset could be associated/mapped to the serving cell PCI or a PCI index pointing to the serving cell PCI in a list of PCIs that are configured to the UE, while the second (or first) TCI state/pair of TCI states of a TCI codepoint in the second subset could be associated/mapped to the PCI other than the serving cell PCI or the PCI index pointing to the PCI other than the serving cell PCI in a list of PCIs that are higher layer configured to the UE.

Optionally, the second subset of TCI states/pairs of TCI states or TCI codepoints could be associated/mapped to the serving cell PCI or a PCI index pointing to the serving cell PCI in a list of PCIs that are configured to the UE (or a PCI other than the serving cell PCI or a PCI index pointing to a PCI other than the serving cell PCI in a list of PCIs that are higher layer configured to the UE), while the first subset of TCI states/pairs of TCI states or TCI codepoints could be associated/mapped to both the serving cell PCI (or a PCI index pointing to the serving cell PCI in a list of PCIs that are higher layer configured to the UE) and a PCI other than the serving cell PCI (or a PCI index pointing to a PCI other than the serving cell PCI in a list of PCIs that are higher layer configured to the UE); for this case, the first (or second) TCI state/pair of TCI states of a TCI codepoint in the first subset could be associated/mapped to the serving cell PCI or a PCI index pointing to the serving cell PCI in a list of PCIs that are configured to the UE, while the second (or first) TCI state/pair of TCI states of a TCI codepoint in the first subset could be associated/mapped to the PCI other than the serving cell PCI or the PCI index pointing to the PCI other than the serving cell PCI in a list of PCIs that are higher layer configured to the UE.

Yet for another example, the first (or second) subset of TCI states/pairs of TCI states or TCI codepoints could be associated/mapped to a first entity ID, while the second (or first) subset of TCI states/pairs of TCI states or TCI codepoints could be associated/mapped to a second entity ID, wherein the first entity ID or the second entity ID could correspond to a PCI, a PCI index pointing to an entry/PCI in a list of PCIs that are higher layer configured to the UE, a CORESET pool index (e.g., a UE could be provided by the network in PDCCH-Config/PDSCH-Config, two values of CORESETPoolIndex 0 and 1), a CORESET group index (e.g., a UE could be provided by the network in PDCCH-Config/PDSCH-Config, two values of CORESETGroupIndex 0 and 1), a CORESET ID/index, a RS set ID/index, a RS setting ID/index, a RS group ID/index, a RS ID/index, a one-bit indicator (e.g., with the one-bit indicator set to "0" (or "1") indicating the serving cell PCI, and "1" (or "0") indicating a PCI other than the serving cell PCI), or a multi-bit indicator.

Alternatively, the first subset of TCI states/pairs of TCI states or TCI codepoints could be associated/mapped to a first set of entity IDs, while the second subset of TCI states/pairs of TCI states or TCI codepoints could be associated/mapped to a second set of entity IDs; each entity ID in the first set or each entity ID in the second set could correspond to a PCI, a PCI index pointing to an entry/PCI in a list of PCIs that are higher layer configured to the UE, a CORESET pool index (e.g., a UE could be provided by the network in PDCCH-Config/PDSCH-Config, two values of CORESETPoolIndex 0 and 1), a CORESET group index (e.g., a UE could be provided by the network in PDCCH-Config/PDSCH-Config, two values of CORESETGroupIndex 0 and 1), a CORESET ID/index, a RS set ID/index, a RS setting ID/index, a RS group ID/index, a RS ID/index, a one-bit indicator (e.g., with the one-bit indicator set to "0" (or "1") indicating the serving cell PCI, and "1" (or "0") indicating a PCI other than the serving cell PCI), or a multi-bit indicator; for this case, the first (or second) TCI state/pair of TCI states of a TCI codepoint in the first subset could be associated/mapped to the first (or second) entity ID or the lowest/smallest (or highest/largest) entity ID in the first set, while the second (or first) TCI state/pair of TCI states of a TCI codepoint in the first subset could be associated/mapped to the second (or first) entity ID or the highest/largest (or lowest/smallest) entity ID in the first set; furthermore, the first (or second) TCI state/pair of TCI states of a TCI codepoint in the second subset could be associated/mapped to the first (or second) entity ID or the lowest/smallest (or highest/largest) entity ID in the second set, while the second (or first) TCI state/pair of TCI states of a TCI codepoint in the second subset could be associated/mapped to the second (or first) entity ID or the highest/largest (or lowest/smallest) entity ID in the second set.

The UE could be indicated/provided/configured by the network, e.g., via higher layer RRC signaling/parameter and/or MAC CE command and/or dynamic DCI based L1 signaling, the first entity ID, the second entity ID, the first set of entity IDs and/or the second set of entity IDs. Optionally, the UE could be indicated/provided/configured by the network, e.g., via higher layer RRC signaling and/or MAC CE command and/or dynamic DCI based L1 signaling, a set of entity IDs, wherein the first entity ID could correspond to the first (or second or last) or the lowest/smallest (or highest/largest) entity ID in the set, while the second entity ID could correspond to the second/last (or first) or the highest/largest (or lowest/smallest) entity ID in the set.

Yet for another example, the MAC CE command for TCI state(s)/beam(s) indication/activation, e.g., the unified TCI states activation/deactivation MAC CE or the enhanced unified TCI states activation/deactivation MAC CE, could contain/provide/include/configure/indicate/comprise a set of two CORESET pool index/CORESETPoolIndex values via one or more new fields or one or more reserved fields ("R" fields) as specified herein in the present disclosure. The two CORESETPoolIndex values in the set could be identical to or different from each other.

In one example, the first subset of TCI states/pairs of TCI states or TCI codepoints could be associated to the first (or second) CORESET pool index value in the set, and the second subset of TCI states/pairs of TCI states or TCI codepoints could be associated to the second (or first) CORESET pool index value in the set. In another example, the first subset of TCI states/pairs of TCI states or TCI codepoints could be associated to the lowest/smallest (highest/largest) CORESETPoolIndex value (e.g., "0") in the set, and the second subset of TCI states/pairs of TCI states or TCI codepoints could be associated to the highest/largest (or lowest/smallest) CORESETPoolIndex value (e.g., "1") in the set. In yet another example, the UE could be configured/indicated/provided by the network, e.g., via higher layer RRC signaling and/or MAC CE command and/or dynamic DCI based signaling, the association/mapping relationship between the CORESET pool index/CORESETPoolIndex values in the set and the subsets of TCI states/pairs of TCI states or TCI codepoints.

Yet for another example, the MAC CE command for TCI state(s)/beam(s) indication/activation, e.g., the unified TCI states activation/deactivation MAC CE or the enhanced unified TCI states activation/deactivation MAC CE, could contain/provide/include/configure/indicate/comprise a set of two PCIs/PCI indexes via one or more new fields or one or more reserved fields ("R" fields) as specified herein in the present disclosure. The two PCIs/PCI indexes in the set could be identical to or different from each other. In one example, the first subset of TCI states/pairs of TCI states or TCI codepoints could be associated to the first (or second) PCI or PCI index pointing to a PCI in a list of PCIs that are configured to the UE in the set, and the second subset of TCI states/pairs of TCI states or TCI codepoints could be associated to the second (or first) PCI or PCI index pointing to a PCI in a list of PCIs that are configured to the UE in the set.

In another example, the first subset of TCI states/pairs of TCI states or TCI codepoints could be associated to the lowest/smallest (highest/largest) PCI or PCI index pointing to a PCI in a list of PCIs that are configured to the UE in the set, and the second subset of TCI states/pairs of TCI states or TCI codepoints could be associated to the highest/largest (or lowest/smallest) PCI or PCI index pointing to a PCI in a list of PCIs that are configured to the UE in the set. In yet another example, the first subset of TCI states/pairs of TCI states or TCI codepoints could be associated to the PCI index pointing to the first (or second) PCI in a list of PCIs that are configured to the UE in the set, and the second subset of TCI states/pairs of TCI states or TCI codepoints could be associated to the PCI index pointing to the second (or first) PCI in a list of PCIs that are configured to the UE in the set.

In yet another example, the first subset of TCI states/pairs of TCI states or TCI codepoints could be associated to the PCI index pointing to the lowest/smallest (highest/largest) PCI in a list of PCIs that are configured to the UE in the set, and the second subset of TCI states/pairs of TCI states or TCI codepoints could be associated to the PCI index pointing to the highest/largest (or lowest/smallest) PCI in a list of PCIs that are configured to the UE in the set. In yet another example, the first subset of TCI states/pairs of TCI states or TCI codepoints could be associated to the serving cell PCI or the PCI index pointing to the serving cell PCI in a list of PCIs in the set, and the second subset of TCI states/pairs of TCI states or TCI codepoints could be associated to the PCI other than the serving cell PCI or the PCI index pointing to the PCI other than the serving cell PCI in a list of PCIs that are configured to the UE in the set. In yet another example, the UE could be configured/indicated/provided by the network, e.g., via higher layer RRC signaling and/or MAC CE command and/or dynamic DCI based signaling, the association/mapping relationship between the PCIs/PCI indexes in the set and the subsets of TCI states/pairs of TCI states or TCI codepoints.

Yet for another example, the MAC CE command for TCI state(s)/beam(s) indication/activation, e.g., the unified TCI states activation/deactivation MAC CE or the enhanced unified TCI states activation/deactivation MAC CE, could contain/provide/include/configure/indicate/comprise a set of two entity IDs via one or more new fields or one or more reserved fields ("R" fields) as specified herein in the present disclosure, where each entity ID could correspond to a PCI, a PCI index pointing to an entry/PCI in a list of PCIs that are higher layer configured to the UE, a CORESET pool index (e.g., a UE could be provided by the network in PDCCH-Config/PDSCH-Config, two values of CORESETPoolIndex 0 and 1), a CORESET group index (e.g., a UE could be provided by the network in PDCCH-Config/PDSCH-Config, two values of CORESETGroupIndex 0 and 1), a CORESET ID/index, a RS set ID/index, a RS setting ID/index, a RS group ID/index, a RS ID/index, a one-bit indicator (e.g., with the one-bit indicator set to "0" (or "1") indicating the serving cell PCI, and "1" (or "0") indicating a PCI other than the serving cell PCI), or a multi-bit indicator. The two entity IDs in the set could be identical to or different from each other.

In one example, the first subset of TCI states/pairs of TCI states or TCI codepoints could be associated to the first (or second) entity ID in the set, and the second subset of TCI states/pairs of TCI states or TCI codepoints could be associated to the second (or first) entity ID in the set. In another example, the first subset of TCI states/pairs of TCI states or TCI codepoints could be associated to the lowest/smallest (highest/largest) entity ID in the set, and the second subset of TCI states/pairs of TCI states or TCI codepoints could be associated to the highest/largest (or lowest/smallest) entity ID in the set. In yet another example, the UE could be configured/indicated/provided by the network, e.g., via higher layer RRC signaling and/or MAC CE command and/or dynamic DCI based signaling, the association/mapping relationship between the entity IDs in the set and the subsets of TCI states/pairs of TCI states or TCI codepoints.

Yet for another example, the MAC CE command for TCI state(s)/beam(s) indication/activation, e.g., the unified TCI states activation/deactivation MAC CE or the enhanced unified TCI states activation/deactivation MAC CE, could contain/provide/include/configure/indicate/comprise a first CORESET pool index/CORESETPoolIndex value (e.g., either "0" or "1") via one or more new fields or one or more reserved fields ("R" fields) as specified herein in the present disclosure. In one example, the first subset of TCI states/pairs of TCI states or TCI codepoints could be associated to the first CORESET pool index/CORESETPoolIndex value, while the second subset of TCI states/pairs of TCI states or TCI codepoints could be associated to a CORESET pool index/CORESETPoolIndex value identical to or different from the first CORESET pool index/CORESETPoolIndex value. In another example, the second subset of TCI states/pairs of TCI states or TCI codepoints could be associated to the first CORESET pool index/CORESETPoolIndex value, while the first subset of TCI states/pairs of TCI states or TCI codepoints could be associated to a CORESET pool index/CORESETPoolIndex value identical to or different from the first CORESET pool index/CORESETPoolIndex value.

In yet another example, the UE could be indicated/configured/provided by the network, e.g., via higher layer RRC signaling/parameter and/or MAC CE command and/or dynamic DCI based L1 signaling, the association/mapping relationship between (1) the first and/or second subsets of TCI states/pairs of TCI states or TCI codepoints and (2) the first CORESET pool index/CORESETPoolIndex value (or a CORESET pool index/CORESETPoolIndex value other than the first CORESET pool index/CORESETPoolIndex value).

Yet for another example, the MAC CE command for TCI state(s)/beam(s) indication/activation, e.g., the unified TCI states activation/deactivation MAC CE or the enhanced unified TCI states activation/deactivation MAC CE, could contain/provide/include/configure/indicate/comprise a first PCI/PCI index (e.g., the serving cell PCI or a PCI index pointing to the serving cell PCI in a list of PCIs that are configured to the UE or a PCI other than the serving cell PCI or a PCI index pointing to a PCI other than the serving cell PCI in a list of PCIs) via one or more new fields or one or more reserved fields ("R" fields) as specified herein in the present disclosure.

In one example, the first subset of TCI states/pairs of TCI states or TCI codepoints could be associated to the first PCI/PCI index, while the second subset of TCI states/pairs of TCI states or TCI codepoints could be associated to a PCI/PCI index identical to or different from the first PCI/PCI index. In another example, the second subset of TCI states/pairs of TCI states or TCI codepoints could be associated to the first PCI/PCI index, while the first subset of TCI states/pairs of TCI states or TCI codepoints could be associated to a PCI/PCI index identical to or different from the first PCI/PCI index. In yet another example, the UE could be indicated/configured/provided by the network, e.g., via higher layer RRC signaling/parameter and/or MAC CE command and/or dynamic DCI based L1 signaling, the association/mapping relationship between (1) the first and/or second subsets of TCI states/pairs of TCI states or TCI codepoints and (2) the first PCI/PCI index (or a PCI/PCI index other than the first PCI/PCI index).

Yet for another example, the MAC CE command for TCI state(s)/beam(s) indication/activation, e.g., the unified TCI states activation/deactivation MAC CE or the enhanced unified TCI states activation/deactivation MAC CE, could contain/provide/include/configure/indicate/comprise a first entity ID via one or more new fields or one or more reserved fields ("R" fields) as specified herein in the present disclosure, wherein the first entity ID could correspond to a PCI, a PCI index pointing to an entry/PCI in a list of PCIs that are higher layer configured to the UE, a CORESET pool index (e.g., a UE could be provided by the network in PDCCH-Config/PDSCH-Config, two values of CORESETPoolIndex 0 and 1), a CORESET group index (e.g., a UE could be provided by the network in PDCCH-Config/PDSCH-Config, two values of CORESETGroupIndex 0 and 1), a CORESET ID/index, a RS set ID/index, a RS setting ID/index, a RS group ID/index, a RS ID/index, a one-bit indicator (e.g., with the one-bit indicator set to "0" (or "1") indicating the serving cell PCI, and "1" (or "0") indicating a PCI other than the serving cell PCI), or a multi-bit indicator.

In one example, the first subset of TCI states/pairs of TCI states or TCI codepoints could be associated to the first entity ID, while the second subset of TCI states/pairs of TCI states or TCI codepoints could be associated to a second entity ID identical to or different from the first CORESET pool index/CORESETPoolIndex value. In another example, the second subset of TCI states/pairs of TCI states or TCI codepoints could be associated to the first entity ID, while the first subset of TCI states/pairs of TCI states or TCI codepoints could be associated to a second entity ID identical to or different from the first entity ID.

In yet another example, the UE could be indicated/configured/provided by the network, e.g., via higher layer RRC signaling/parameter and/or MAC CE command and/or dynamic DCI based L1 signaling, the association/mapping relationship between (1) the first and/or second subsets of TCI states/pairs of TCI states or TCI codepoints and (2) the first entity ID (or the second entity ID). Here, the second entity ID could correspond to a PCI, a PCI index pointing to an entry/PCI in a list of PCIs that are higher layer configured to the UE, a CORESET pool index (e.g., a UE could be provided by the network in PDCCH-Config/PDSCH-Config, two values of CORESETPoolIndex 0 and 1), a CORESET group index (e.g., a UE could be provided by the network in PDCCH-Config/PDSCH-Config, two values of CORESETGroupIndex 0 and 1), a CORESET ID/index, a RS set ID/index, a RS setting ID/index, a RS group ID/index, a RS ID/index, a one-bit indicator (e.g., with the one-bit indicator set to "0" (or "1") indicating the serving cell PCI, and "1" (or "0") indicating a PCI other than the serving cell PCI), or a multi-bit indicator, and could be indicated/configured/provided by the network, e.g., via higher layer RRC signaling/parameter and/or MAC CE command and/or dynamic DCI based L1 signaling.

As illustrated in FIGURE 10, an example of DCI based unified TCI state/beam indication for the multi-TRP operation is presented. As illustrated in FIGURE 10, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more DCIs (e.g., DCI format 1_1 or 1_2 with or without DL assignment) to indicate one or more beam(s) (i.e., the unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI (e.g., DCI format 1_1 or 1_2 with or without DL assignment) to indicate M>1 unified TCI states/beams (e.g., M>1 joint DL and UL TCI states or M>1 separate UL TCI states) for the same PUSCH(s)/PUCCH(s) transmitted to/associated with different TRPs in the multi-TRP system.

As described above, a DCI used to indicate to the UE a beam (i.e., a TCI state and/or a TCI state ID) for the transmission/reception of a PDCCH or a PDSCH could be at least one of the following examples.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet in another example, a custom/purpose designed DCI format could be used to indicate to the UE a beam (i.e., a TCI state and/or a TCI state ID) for the transmission/reception of a PDCCH or a PDSCH.

Furthermore, the unified TCI state indicated in the DCI for beam indication could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the DCI(s) and the TRPs in the multi-TRP system needs to be specified. There could be various means to associate/map the TCI state(s)/beam(s) indicated in the DCI(s) and the TRPs in the multi-TRP system.

For N>1 TCI states/beams indication in a single DCI, following examples can be provided.

In one example, the UE could be explicitly indicated by the network, e.g., via higher layer RRC signaling and/or MAC CE command and/or dynamic DCI signaling, the exact association/mapping between the TCI states/beams indicated in the DCI and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values. For another example, the UE could be first higher layer configured by the network a list/set/pool of TRP-specific ID/index values such as PCIs.

The UE could then receive from the network one or more MAC CE activation commands/bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the TCI states/beams indicated in the DCI for beam indication and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the TCI states/beams indicated in the DCI for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the DCI for beam indication could correspond to the TRP with the highest/highest MAC CE activated TRP-specific ID/index value such as PCI value, the second TCI state and/or the TCI state with the second lowest TCI state ID value indicated in the DCI for beam indication could correspond to the TRP with the second highest/second highest MAC CE activated TRP-specific ID/index value such as PCI value, and so on, and the last TCI state and/or the TCI state with the highest TCI state ID value indicated in the DCI for beam indication could correspond to the TRP with the lowest/lowest MAC CE activated TRP-specific ID/index value such as PCI value. Other implicit indication methods of the association/mapping between the N>1 TCI states/beams indicated in the DCI and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the TCI states/beams indicated in the DCI for beam indication and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value. Other exact association/mapping relationships between the TCI states/beams indicated in the DCI for beam indication and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the TCI states/beams indicated in the DCI for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the DCI for beam indication could correspond to the lowest/lowest MAC CE activated CORESETPoolIndex value such as "0," the second TCI state and/or the TCI state with the second lowest TCI state ID value indicated in the DCI for beam indication could correspond to the second lowest/second lowest MAC CE activated CORESETPoolIndex value such as "1," and so on, and the last TCI state and/or the TCI state with the highest TCI state ID value indicated in the DCI for beam indication could correspond to the highest/highest MAC CE activated CORESETPoolIndex value such as "N-1."

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N>1 TCI states/beams indicated in the DCI for beam indication and the CORESETPoolIndex values are also possible.

In yet another example, a TCI state, e.g., the higher layer parameter TCI-State, indicated in the DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the DCI (e.g., DCI format 1_1 or 1_2 with or without DL assignment) for unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 unified TCI states could be associated with the n-th or m-th entity ID/index indicated in the same DCI (e.g., DCI format 1_1 or 1_2 with or without DL assignment) for unified TCI state/beam indication, where $n \in \{1,..., N\}$ or $m \in \{1,..., M\}$.

For one instance, the first TCI state in the indicated N=2 or M=2 unified TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for unified TCI state/beam indication, and the second TCI state in the indicated N=2 or M=2 unified TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For N>1 DCIs with each DCI indicating a single TCI state/beam, following examples can be provided.

In one example, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein) and the TRPs in the multi-TRP system. For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values. Other exact association/mapping relationships between the DCIs for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCIs for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N).

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as PCI value, the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as PCI value, and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as PCI value. Other implicit indication methods of the association/mapping between the N>1 DCIs for beam indication (and therefore, the TCI states/beams indicated therein) and the TRPs in the multi-TRP system are also possible.

In yet another example, a DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication may indicate/update the corresponding TCI state(s) for the TRP(s) associated with the same ID/index value, e.g., the CORESETPoolIndex value, as that indicated in the DCI for beam indication.

In yet another example, a DCI (e.g., DCI format 1_1 or 1_2 with or without DL assignment) for unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc.

For this case, the n-th or m-th TCI state (e.g., the n-th or m-th joint DL and UL TCI state or separate DL TCI state or separate UL TCI state) among/within the indicated N>1 or M>1 unified TCI states could be associated with the n-th or m-th entity ID/index indicated in the same DCI (e.g., DCI format 1_1 or 1_2 with or without DL assignment) for unified TCI state/beam indication, where $n \in \{1,...,N\}$ or $m \in \{1,...,M\}$. For instance, the first TCI state in the indicated N=2 or M=2 unified TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for unified TCI state/beam indication, and the second TCI state in the indicated N=2 or M=2 unified TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for unified TCI state/beam indication.

In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

As illustrated in FIGURE 11, an example of DCI based TCI state/beam indication (with MAC CE activated TCI states) for the multi-TRP operation is presented. As illustrated in FIGURE 11, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE activation commands activating one or more TCI states from the higher layer configured list/pool of TCI states, e.g., up to eight TCI states could be activated by a MAC CE activation command. The UE could receive from the network one or more DCIs to indicate one or more beam(s) (i.e., the unified TCI state(s)) from the MAC CE activated TCI state(s)/beam(s) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI to indicate M'>1 unified TCI states/beams (e.g., M'>1 joint DL and UL TCI states or M'>1 separate UL TCI states) from the MAC CE activated TCI states/beams for the same PUSCH(s)/PUCCH(s) transmitted to/associated with different TRPs in the multi-TRP system.

As described above, a DCI used to indicate to the UE a beam (i.e., a TCI state and/or a TCI state ID) for the transmission/reception of a PDCCH or a PDSCH could be at least one of the following examples.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet in another example, a custom/purpose designed DCI format could be used to indicate to the UE a beam (i.e., a TCI state and/or a TCI state ID) for the transmission/reception of a PDCCH or a PDSCH.

Furthermore, the unified TCI state indicated in the DCI for beam indication could be at least one of: (1) a DL TCI state; (2) an UL TCI state; (3) a joint DL and UL TCI state; and (4) separate DL TCI state and UL TCI state.

The association/mapping between the DCI(s) indicated TCI state(s)/beam(s) - from the MAC CE activated TCI state(s)/beam(s) - and the TRPs in the multi-TRP system needs to be specified. There could be various means to associate/map the DCI(s) indicated TCI state(s)/beam(s) - from the MAC CE activated TCI state(s)/beam(s) - and the TRPs in the multi-TRP system.

For N'>1 TCI states/beams indication in a single DCI, following examples can be provided.

In one example, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the DCI indicated TCI states/beams (selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCI indicated TCI states/beams (selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N').

For another example, the first TCI state and/or the TCI state with the lowest TCI state ID value indicated in the DCI for beam indication could correspond to the TRP with the highest/highest MAC CE activated TRP-specific ID/index value such as the highest PCI value and/or the last TRP (e.g., TRP #N'), the second TCI state and/or the TCI state with the second lowest TCI state ID value indicated in the DCI for beam indication could correspond to the TRP with the second highest/second highest MAC CE activated TRP-specific ID/index value such as the second highest PCI value and/or the second last TRP (e.g., TRP #N'-1), and so on, and the last TCI state and/or the TCI state with the highest TCI state ID value indicated in the DCI for beam indication could correspond to the TRP with the lowest/lowest MAC CE activated TRP-specific ID/index value such as the lowest PCI value and/or the first TRP (e.g., TRP #1). Other implicit indication methods of the association/mapping between the N'>1 DCI indicated TCI states/beams (selected from the MAC CE activated TCI states/beams) and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value. Other exact association/mapping relationships between the DCI indicated TCI states/beams (selected from the MAC CE activated TCI states/beams) and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the DCI indicated TCI states/beams (selected from the MAC CE activated TCI states/beams) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values.

For example, the first TCI state and/or the TCI state with the lowest TCI state ID value indicated in the DCI for beam indication could correspond to the lowest/lowest MAC CE activated CORESETPoolIndex value such as "0," the second TCI state and/or the TCI state with the second lowest TCI state ID value indicated in the DCI for beam indication could correspond to the second lowest/second lowest MAC CE activated CORESETPoolIndex value such as "1," and so on, and the last TCI state and/or the TCI state with the highest TCI state ID value indicated in the DCI for beam indication could correspond to the highest/highest MAC CE activated CORESETPoolIndex value such as "N-1."

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N'>1 DCI indicated TCI states/beams (selected from the MAC CE activated TCI states/beams) and the CORESETPoolIndex values are also possible.

In yet another example, a TCI state (selected from the MAC CE activated TCI states/beams), e.g., the higher layer parameter TCI-State, indicated in the DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the DCI (e.g., DCI format 1_1 or 1_2 with or without DL assignment) for unified TCI state/beam indication could include/comprise/incorporate at least one (e.g., N'>1 or M'>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n'-th or m'-th TCI state (e.g., the n'-th or m'-th joint DL and UL TCI state or separate DL TCI state or separate UL TCI state) among/within the indicated N'>1 or M'>1 unified TCI states (selected from the MAC CE activated TCI states/beams) could be associated with the n'-th or m'-th entity ID/index indicated in the same DCI (e.g., DCI format 1_1 or 1_2 with or without DL assignment) for unified TCI state/beam indication, where n'$\in$ {1,..., N'} or m'E {1,..., M'}.

For one instance, the first TCI state in the indicated N'=2 or M'=2 unified TCI states selected from the MAC CE activated TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for unified TCI state/beam indication, and the second TCI state in the indicated N'=2 or M'=2 unified TCI states selected from the MAC CE activated TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For N'>1 DCIs with each DCI indicating a single TCI state/beam, following examples can be provided.

In one example, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein - selected from the MAC CE activated TCI states/beams) and the TRPs in the multi-TRP system. For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values.

Other exact association/mapping relationships between the DCIs for beam indication (and therefore, the TCI states/beams indicated therein - selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCIs for beam indication (and therefore, the TCI states/beams indicated therein - selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N').

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as the highest PCI value and/or the last TRP (e.g., TRP #N'), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as the second highest PCI value and/or the second last TRP (e.g., TRP #N'-1), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as the lowest PCI value and/or the first TRP (e.g., TRP #1).

Other implicit indication methods of the association/mapping between the N'>1 DCIs for beam indication (and therefore, the TCI states/beams indicated therein - selected from the MAC CE activated TCI states/beams) and the TRPs in the multi-TRP system are also possible.

In yet another example, a DCI for beam indication (indicating the TCI state(s)/beam(s) selected from the MAC CE activated TCI states/beams) could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps.

For yet another example, this ID/index value could be a CORESETPoolIndex value. The DCI for beam indication (indicating the TCI state(s)/beam(s) selected from the MAC CE activated TCI states/beams) may indicate/update the corresponding TCI state(s) for the TRP(s) associated with the same ID/index value, e.g., the CORESETPoolIndex value, as that indicated in the DCI for beam indication (indicating the TCI state(s)/beam(s) selected from the MAC CE activated TCI states/beams).

In yet another example, a DCI (e.g., DCI format 1_1 or 1_2 with or without DL assignment) for unified TCI state/beam indication could include/comprise/incorporate at least one (e.g., N'>1 or M'>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n'-th or m'-th TCI state (e.g., the n'-th or m'-th joint DL and UL TCI state or separate DL TCI state or separate UL TCI state) among/within the indicated N'>1 or M'>1 unified TCI states (selected from the MAC CE activated TCI states/beams) could be associated with the n'-th or m'-th entity ID/index indicated in the same DCI (e.g., DCI format 1_1 or 1_2 with or without DL assignment) for unified TCI state/beam indication, where $n' \in \{1,..., N'\}$ or $m' E \{1,..., M'\}$.

For instance, the first TCI state in the indicated N'=2 or M'=2 unified TCI states selected from the MAC CE activated TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for unified TCI state/beam indication, and the second TCI state in the indicated N'=2 or M'=2 unified TCI states selected from the MAC CE activated TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

In a multi-DCI based multi-TRP system, one or more CORESETs could be configured with a same pool index, denoted by CORESETPoolIndex. The CORESETs configured with the same CORESETPoolIndex value could be associated with the same TRP in a multi-TRP system. In the present disclosure, the UE could be provided by PDCCH-Config multiple (e.g., two) CORESETPoolIndex values (e.g., 0 and 1). The association of a CORESET and a CORESETPoolIndex value could be via indicating the explicit CORESETPoolIndex value (e.g., either 0 or 1) in the parameter, e.g., the higher layer parameter ControlResourceSet, configuring the CORESET.

As discussed above, the UE could be provided by the network N>1 or M>1 MAC CEs or DCIs (e.g., DCI format 1_1 or 1_2 with or without DL assignment) each indicating at least one joint DL and UL unified TCI state or separate UL unified TCI state or separate DL unified TCI state through the higher layer parameter TCI-State_r17 for UE-dedicated reception on PDSCH/PDCCH or dynamic-grant/configured-grant based PUSCH and all of dedicated PUCCH resources and associated with a CORESETPoolIndex value (e.g., either 0 or 1). For this case, DM-RS antenna ports for PDCCH receptions in one or more CORESETs associated with a CORESETPoolIndex value may or may not be quasi co-located with the reference signal(s) provided in the corresponding unified TCI state(s) (e.g., a joint DL and UL TCI state or separate UL TCI state or separate DL TCI state) indicated via the MAC CE or DCI (out of the N>1 or M>1 MAC CEs or DCIs for unified TCI state indication/update) associated with the same CORESETPoolIndex value. In the present disclosure, the control resource set(s) - associated with a CORESETPoolIndex value - whose QCL assumption(s) follow that provided in the corresponding unified TCI state(s) or sharing the corresponding unified TCI state(s) indicated via the MAC CE or DCI for unified TCI state indication/update associated with the same CORESETPoolIndex value is referred to as Type-I CORESET(s), while the control resource set(s) - associated with a CORESETPoolIndex value - whose QCL assumption(s) does not follow that provided in the corresponding unified TCI state or not sharing the corresponding unified TCI state indicated via the MAC CE or DCI for unified TCI state indication/update associated with the same CORESETPoolIndex value is referred to as Type-II CORESET(s).

Furthermore, a Type-I CORESET or a Type-II CORESET could correspond to one or more of: (1) "CORESET A": a CORESET other than CORESET with index 0 (or CORESET #0) associated with only UE-dedicated PDCCH reception(s) in a CC, comprising, e.g., CORESET(s) associated with USS set(s) or Type3-PDCCH CSS set(s); (2) "CORESET B": a CORESET other than CORESET #0 associated with only non-UE-dedicated PDCCH reception(s) in a CC, comprising, e.g., CORESET(s) associated with all types of CSS sets such as Type0/0A/1/2/3-PDCCH CSS sets or CSS sets other than Type3-PDCCH CSS set(s) such as Type0/0A/1/2-PDCCH CSS sets; (3) "CORESET C": a CORESET other than CORESET #0 associated with both UE-dedicated and non-UE-dedicated PDCCH receptions in a CC; and (4) CORESET #0, i.e., CORESET with index 0.

The UE could be provided/configured with "useIndicatedR17TCIState" for one or more of the Type-I CORESETs. For instance, the UE could be provided/configured with "useIndicatedR17TCIstate" set to "enabled" in the parameter, e.g., the higher layer parameter ControlResourceSet, that configures the corresponding Type-I CORESET(s).

In the present disclosure, the indicated unified TCI state n or m could correspond to the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID indicated via MAC CE n (or m) or DCI n (or m) - out of the total N>1 or M>1 MAC CEs or DCIs for unified TCI state indication - associated with CORESETPoolIndex value n - 1 (or m - 1), where n∈{1,..., N} and m∈{1,..., M}.

In a multi-DCI based multi-TRP system, wherein a UE could be provided/configured/indicated by the network, e.g., in PDCCH-Config/PDSCH-Config/ControlResourceSet, one or more (e.g., 2) CORESET pool index/CORESETPoolIndex values (e.g., "0" and/or "1"), the UE could be indicated/signaled by the network, e.g., by one or more TCI codepoints of one or more TCI fields in a beam indication DCI received in a CORESET associated/configured with a first CORESETPoolIndex value, one or more unified TCI states associated with a second CORESETPoolIndex value providing reference signal(s) for the quasi co-location for DM-RS of PDSCH associated with the second CORESETPoolIndex value (e.g., scheduled by PDCCH(s) received in CORESET(s) associated/configured with the second CORESETPoolIndex value or higher layer configured/linked with the second CORESETPoolIndex value) and DM-RS of PDCCH associated with the second CORESETPoolIndex value (e.g., received in CORESET(s) associated/configured with the second CORESETPoolIndex value) in a CC, for CSI-RS associated with the second CORESETPoolIndex value (e.g., triggered by PDCCH(s) received in CORESET(s) associated/configured with the second CORESETPoolIndex value or higher layer configured/linked with the second CORESETPoolIndex value), and to provide a reference, if applicable, for determining UL TX spatial filter for dynamic-grant and configured-grant based PUSCH associated with the second CORESETPoolIndex value (e.g., scheduled by PDCCH(s) received in CORESET(s) associated/configured with the second CORESETPoolIndex value or higher layer configured/linked with the second CORESETPoolIndex value) and PUCCH resource associated with the second CORESETPoolIndex value (e.g., scheduled by PDCCH(s) received in CORESET(s) associated/configured with the second CORESETPoolIndex value or higher layer configured/linked with the second CORESETPoolIndex value) in a CC, and SRS associated with the second CORESETPoolIndex value (e.g., triggered by PDCCH(s) received in CORESET(s) associated/configured with the second CORESETPoolIndex value or higher layer configured/linked with the second CORESETPoolIndex value).

The first CORESETPoolIndex value and/or the second CORESETPoolIndex value as defined above could be "0" or "1." Furthermore, the first CORESETPoolIndex value could be identical to or different from the second CORESETPoolIndex value. The UE could determine the association between the indicated one or more unified TCI states and the second CORESETPoolIndex value following one or more of the design examples specified herein in the present disclosure. For instance, the indicated one or more unified TCI states could be mapped to a TCI codepoint activated/-provided by a MAC CE for TCI state(s)/beam(s) indication/activation with the second CORESETPoolIndex provided/-configured/indicated therein.

Hence, in the multi-DCI based multi-TRP system, for CORESETPoolIndex value n - 1 (or m - 1) where n∈{1,..., N} and m∈{1,..., M}.

In one embodiment for PDCCH, following examples can be provided.

In one example, DM-RS antenna ports for PDCCH receptions in respective CORESETs associated with CORESETPoolIndex value n - 1 (or m - 1) are quasi co-located with reference signals provided in the indicated Rel. 17 unified TCI state - e.g., indicated Rel. 17 unified TCI state n (or m) provided by TCI-State_r17 - associated with CORESETPoolIndex value n - 1 (or m - 1).

In another example, DM-RS antenna ports for PDCCH receptions in Type-I CORESETs associated with CORESETPoolIndex value n - 1 (or m - 1) are quasi co-located with reference signals provided in the indicated Rel. 17 unified TCI state - e.g., indicated Rel. 17 unified TCI state n (or m) provided by TCI-State_r17 - associated with CORESETPoolIndex value n - 1 (or m - 1); DM-RS antenna ports for PDCCH receptions in Type-II CORESETs associated with CORESETPoolIndex value n - 1 (or m - 1) could be quasi co-located with reference signals provided in an indicated Rel. 15/16 TCI state - e.g., indicated TCI state n (or m) provided by TCI-State - associated with CORESETPoolIndex value n - 1 (or m - 1).

In one embodiment for PDSCH, following examples can be provided.

In one example, DM-RS antenna ports for PDSCH receptions scheduled by PDCCH(s) received in respective CORESETs associated with CORESETPoolIndex value n - 1 (or m - 1) are quasi co-located with reference signals provided in the indicated unified TCI state - e.g., indicated unified TCI state n (or m) provided by TCI-Stater_17 - associated with CORESETPoolIndex value n - 1 (or m - 1).

In another example, DM-RS antenna ports for PDSCH receptions scheduled by PDCCH(s) received in Type-I CORESETs associated with CORESETPoolIndex value n - 1 (or m - 1) are quasi co-located with reference signals provided in the indicated unified TCI state - e.g., indicated unified TCI state n (or m) provided by TCI-Stater_17 - associated with CORESETPoolIndex value n - 1 (or m - 1); DM-RS antenna ports for PDSCH receptions scheduled by PDCCH(s) received in Type-II CORESETs associated with CORESETPoolIndex value n - 1 (or m - 1) could be quasi co-located with reference signals provided in an indicated Rel. 15/16 TCI state - e.g., indicated TCI state n (or m) provided by TCI-State - associated with CORESETPoolIndex value n - 1 (or m - 1).

In one embodiment for PUCCH, following examples can be provided.

In one example, spatial filters for transmitting all PUCCH(s) associated with PDCCH(s) received in respective CORESETs associated with CORESETPoolIndex value n - 1 (or m - 1) are spatially related to reference signals provided in the indicated unified TCI state - e.g., indicated unified TCI state n (or m) provided by TCI-Stater_17 - associated with CORESETPoolIndex value n - 1 (or m - 1).

In another example, spatial filters for transmitting all PUCCH(s) associated with PDCCH(s) received in Type-I CORESETs associated with CORESETPoolIndex value n - 1 (or m - 1) are spatially related to reference signals provided in the indicated unified TCI state - e.g., indicated unified TCI state n (or m) provided by TCI-State_r17 - associated with CORESETPoolIndex value n - 1 (or m - 1); spatial filters for transmitting all PUCCH(s) associated with PDCCH(s) received in Type-II CORESETs associated with CORESETPoolIndex value n - 1 (or m - 1) could be spatially related to reference signals provided in an indicated Rel. 15/16 spatial relation information for PUCCH - e.g., indicated spatial relation information for PUCCH n (or m) provided by PUCCH-SpatialRelationInfo - associated with CORESETPoolIndex value n - 1 (or m - 1).

The indicated spatial relation information n (or m) for PUCCH provided by PUCCH-SpatialRelationInfo - associated with CORESETPoolIndex value n - 1 (or m - 1). For example, the UE could use/apply the unified TCI state(s) indicated/provided by one or more TCI codepoints of one or more TCI fields in the beam indication DCI received in a CORESET associated/configured with a value of CORESET pool index or CORESETPoolIndex - e.g., 0 (or 1) for N=2 or M=2 - to transmit PUCCH(s)/PUCCH resource(s) that is indicated by PDCCH(s)/PDCCH candidate(s) received in Type-I CORESET(s) associated/configured with the same value of CORESET pool index or CORESETPoolIndex - e.g., 0 (or 1) for N=2 or M=2; i.e., the UL TX spatial filters for transmitting PUCCH(s)/PUCCH resource(s) that is indicated by PDCCH(s)/PDCCH candidate(s) received in Type-I CORESET(s) associated/configured with a value of CORESET pool index or CORESETPoolIndex - e.g., 0 (or 1) for N=2 or M=2 - could be determined by/spatially related to the reference signal(s)/reference signal set(s) provided/indicated in the unified TCI state(s) indicated/provided by one or more TCI codepoints of one or more TCI fields in the beam indication DCI received in a CORESET associated/configured with the same value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to transmit PUCCH(s)/PUCCH resource(s) that is indicated by PDCCH(s)/PDCCH candidate(s) received in Type-I CORESET(s) associated/configured with value 0 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to transmit PUCCH(s)/PUCCH resource(s) that is indicated by PDCCH(s)/PDCCH candidate(s) received in Type-I CORESET(s) associated/configured with value 1 of CORESET pool index or CORESETPoolIndex; i.e., the UL TX spatial filters for transmitting PUCCH(s)/PUCCH resource(s) that is indicated by PDCCH(s)/PDCCH candidate(s) received in Type-I CORESET(s) associated/configured with value 0 of CORESET pool index or CORESETPoolIndex could be determined by/spatially related to the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the UL TX spatial filters for transmitting PUCCH(s)/PUCCH resource(s) that is indicated by PDCCH(s)/PDCCH candidate(s) received in Type-I CORESET(s) associated/configured with value 1 of CORESET pool index or CORESETPoolIndex could be determined by/spatially related to the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2.

In yet another example, UL TX spatial filters for transmitting one or more PUCCHs/PUCCH resources associated with/indicated by PDCCH(s)/PDCCH candidate(s) received in Type-I CORESETs associated/configured with CORESETPoolIndex value n - 1 (or m - 1) could be determined by/spatially related to reference signals provided in an indicated unified TCI state - e.g., the indicated unified TCI state n' (or m') provided by TCI-Stater_17 or DLorJointTCI-State or ULTCI-State - associated with CORESETPoolIndex value n' - 1 (or m' - 1); while, UL TX spatial filters for transmitting one or more PUCCHs/PUCCH resources associated with/indicated by PDCCH(s)/PDCCH candidate(s) received in Type-II CORESETs associated/configured with CORESETPoolIndex value n - 1 (or m - 1) could be determined by/spatially related to reference signals provided in an indicated Rel. 15/16 spatial relation information for PUCCH - e.g., the indicated spatial relation information n' (or m') for PUCCH provided by PUCCH-SpatialRelationInfo - associated with CORESETPoolIndex value n' - 1 (or m' - 1), wherein the value of n could be the same as or different from the value of n' and/or the value of m could be the same as or different from the value of m'; for this case, the UE could be indicated/provided/configured by the network, e.g., via higher layer RRC signaling/parameter and/or MAC CE command and/or dynamic DCI based L1 signaling, the mapping/association relationship between n and n', and/or, m and m'.

For example, the UE could use/apply the unified TCI state(s) indicated/provided by one or more TCI codepoints - e.g., associated with a first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2 - to transmit PUCCH(s)/PUCCH resource(s) that is indicated by PDCCH(s)/PDCCH candidate(s) received in Type-I CORESET(s) associated/configured with the first value of CORESET pool index or CORESETPoolIndex - e.g., 1 (or 0) for N=2 or M=2; i.e., the UL TX spatial filters for transmitting PUCCH(s)/PUCCH resource(s) that is indicated by PDCCH(s)/PDCCH candidate(s) received in Type-I CORESET(s) associated/configured with a first value of CORESET pool index or CORESETPoolIndex - e.g., 1 (or 0) for N=2 or M=2 - could be determined by/spatially related to the reference signal(s)/reference signal set(s) provided/indicated in the unified TCI state(s) indicated/provided by one or more TCI codepoints - e.g., associated with the first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to transmit PUCCH(s)/PUCCH resource(s) that is indicated by PDCCH(s)/PDCCH candidate(s) received in Type-I CORESET(s) associated/configured with value 1 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to transmit PUCCH(s)/PUCCH resource(s) that is indicated by PDCCH(s)/PDCCH candidate(s) received in Type-I CORESET(s) associated/configured with value 0 of CORESET pool index or CORESETPoolIndex; i.e., the UL TX spatial filters for transmitting PUCCH(s)/PUCCH resource(s) that is indicated by PDCCH(s)/PDCCH candidate(s) received in Type-I CORESET(s) associated/configured with value 1 of CORESET pool index or CORESETPoolIndex could be determined by/spatially related to the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the UL TX spatial filters for transmitting PUCCH(s)/PUCCH resource(s) that is indicated by PDCCH(s)/PDCCH candidate(s) received in Type-I CORESET(s) associated/configured with value 0 of CORESET pool index or CORESETPoolIndex could be determined by/spatially related to the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2. The first value of CORESET pool index/CORESETPoolIndex could be the same as or different from the second value of CORESET pool index/CORESETPoolIndex.

For PUSCH (e.g., In one example, spatial filters for transmitting dynamic-grant/configured-grant PUSCH(s) associated with PDCCH(s) received in respective CORESETs associated with CORESETPoolIndex value n - 1 (or m - 1) are spatially related to reference signals provided in the indicated unified TCI state - e.g., indicated unified TCI state n (or m) provided by TCI-State_r17 - associated with CORESETPoolIndex value n - 1 (or m - 1).

In one example, UL TX spatial filters for transmitting one or more PUSCHs scheduled by PDCCH(s)/PDCCH candidate(s) received in respective CORESETs associated/configured with CORESETPoolIndex value n - 1 (or m - 1) could be determined by/spatially related to reference signals provided in an indicated unified TCI state - e.g., the indicated unified TCI state n (or m) provided by TCI-Stater_17 or DLorJointTCI-State or ULTCI-State - associated with CORESETPoolIndex value n - 1 (or m - 1).

For example, the UE could use/apply the unified TCI state(s) indicated/provided by one or more TCI codepoints of one or more TCI fields in the beam indication DCI received in a CORESET associated/configured with a value of CORESET pool index or CORESETPoolIndex - e.g., 0 (or 1) for N=2 or M=2 - to transmit PUSCH(s) that is scheduled by PDCCH(s)/PDCCH candidate(s) received in CORESET(s) associated/configured with the same value of CORESET pool index or CORESETPoolIndex - e.g., 0 (or 1) for N=2 or M=2; i.e., the UL TX spatial filters for transmitting PUSCH(s) that is scheduled by PDCCH(s)/PDCCH candidate(s) received in CORESET(s) associated/configured with a value of CORESET pool index or CORESETPoolIndex - e.g., 0 (or 1) for N=2 or M=2 - could be determined by/spatially related to the reference signal(s)/reference signal set(s) provided/indicated in the unified TCI state(s) indicated/provided by one or more TCI codepoints of one or more TCI fields in the beam indication DCI received in a CORESET associated/configured with the same value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to transmit PUSCH(s) that is scheduled by PDCCH(s)/PDCCH candidate(s) received in CORESET(s) associated/configured with value 0 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to transmit PUSCH(s) that is scheduled by PDCCH(s)/PDCCH candidate(s) received in CORESET(s) associated/configured with value 1 of CORESET pool index or CORESETPoolIndex; i.e., the UL TX spatial filters for transmitting PUSCH(s) that is scheduled by PDCCH(s)/PDCCH candidate(s) received in CORESET(s) associated/configured with value 0 of CORESET pool index or CORESETPoolIndex could be determined by/spatially related to the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the UL TX spatial filters for transmitting PUSCH(s) that is scheduled by PDCCH(s)/PDCCH candidate(s) received in CORESET(s) associated/configured with value 1 of CORESET pool index or CORESETPoolIndex could be determined by/spatially related to the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2.

In another example, spatial filters for transmitting dynamic-grant/configured-grant PUSCH(s) associated with PDCCH(s) received in Type-I CORESETs associated with CORESETPoolIndex value n - 1 (or m - 1) are spatially related to reference signals provided in the indicated unified TCI state - e.g., indicated unified TCI state n (or m) provided by TCI-State_r17 - associated with CORESETPoolIndex value n - 1 (or m - 1); spatial filters for transmitting dynamic-grant/configured-grant PUSCH(s) associated with PDCCH(s) received in Type-II CORESETs associated with CORESETPoolIndex value n - 1 (or m - 1) could be spatially related to reference signals provided in an indicated Rel. 15/16 spatial relation information for a SRS resource - e.g., indicated spatial relation information for SRS resource n (or m) provided by SRS-SpatialRelationInfo - associated with CORESETPoolIndex value n - 1 (or m - 1).

In another example, UL TX spatial filters for transmitting one or more PUSCHs scheduled by PDCCH(s)/PDCCH candidate(s) received in respective CORESETs associated/configured with CORESETPoolIndex value n - 1 (or m - 1) could be determined by/spatially related to reference signals provided in an indicated unified TCI state - e.g., the indicated unified TCI state n' (or m') provided by TCI-Stater_17 or DLorJointTCI-State or ULTCI-State - associated with CORESETPoolIndex value n' - 1 (or m' - 1), wherein the value of n could be the same as or different from the value of n' and/or the value of m could be the same as or different from the value of m'; for this case, the UE could be indicated/provided/configured by the network, e.g., via higher layer RRC signaling/parameter and/or MAC CE command and/or dynamic DCI based L1 signaling, the mapping/association relationship between n and n', and/or, m and m'. For example, the UE could use/apply the unified TCI state(s) indicated/provided by one or more TCI codepoints - e.g., associated with a first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2 - to transmit PUSCH(s) that is scheduled by PDCCH(s)/PDCCH candidate(s) received in CORESET(s) associated/configured with the first value of CORESET pool index or CORESETPoolIndex - e.g., 1 (or 0) for N=2 or M=2; i.e., the UL TX spatial filters for transmitting PUSCH(s) that is scheduled by PDCCH(s)/PDCCH candidate(s) received in CORESET(s) associated/configured with a first value of CORESET pool index or CORESETPoolIndex - e.g., 1 (or 0) for N=2 or M=2 - could be determined by/spatially related to the reference signal(s)/reference signal set(s) provided/indicated in the unified TCI state(s) indicated/provided by one or more TCI codepoints - e.g., associated with the first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to transmit PUSCH(s) that is scheduled by PDCCH(s)/PDCCH candidate(s) received in CORESET(s) associated/configured with value 1 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to transmit PUSCH(s) that is scheduled by PDCCH(s)/PDCCH candidate(s) received in CORESET(s) associated/configured with value 0 of CORESET pool index or CORESETPoolIndex; i.e., the UL TX spatial filters for transmitting PUSCH(s) that is scheduled by PDCCH(s)/PDCCH candidate(s) received in CORESET(s) associated/configured with value 1 of CORESET pool index or CORESETPoolIndex could be determined by/spatially related to the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the UL TX spatial filters for transmitting PUSCH(s) that is scheduled by PDCCH(s)/PDCCH candidate(s) received in CORESET(s) associated/configured with value 0 of CORESET pool index or CORESETPoolIndex could be determined by/spatially related to the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2. The first value of CORESET pool index/CORESETPoolIndex could be the same as or different from the second value of CORESET pool index/CORESETPoolIndex.

In yet another example, UL TX spatial filters for transmitting one or more PUSCHs scheduled by PDCCH(s)/PDCCH candidate(s) received in Type-I CORESETs associated/configured with CORESETPoolIndex value n - 1 (or m - 1) could be determined by/spatially related to reference signals provided in an indicated unified TCI state - e.g., the indicated unified TCI state n (or m) provided by TCI-Stater_17 or DLorJointTCI-State or ULTCI-State - associated with CORESETPoolIndex value n - 1 (or m - 1); while, UL TX spatial filters for transmitting one or more PUSCHs scheduled by PDCCH(s)/PDCCH candidate(s) received in Type-II CORESETs associated/configured with CORESETPoolIndex value n - 1 (or m - 1) could be determined by/spatially related to reference signals provided in an indicated Rel. 15/16 spatial relation information for PUSCH - e.g., the indicated spatial relation information n (or m) for PUSCH provided by PUSCH-SpatialRelationInfo - associated with CORESETPoolIndex value n - 1 (or m - 1).

For example, the UE could use/apply the unified TCI state(s) indicated/provided by one or more TCI codepoints of one or more TCI fields in the beam indication DCI received in a CORESET associated/configured with a value of CORESET pool index or CORESETPoolIndex - e.g., 0 (or 1) for N=2 or M=2 - to transmit PUSCH(s) that is scheduled by PDCCH(s)/PDCCH candidate(s) received in Type-I CORESET(s) associated/configured with the same value of CORESET pool index or CORESETPoolIndex - e.g., 0 (or 1) for N=2 or M=2; i.e., the UL TX spatial filters for transmitting PUSCH(s) that is scheduled by PDCCH(s)/PDCCH candidate(s) received in Type-I CORESET(s) associated/configured with a value of CORESET pool index or CORESETPoolIndex - e.g., 0 (or 1) for N=2 or M=2 - could be determined by/spatially related to the reference signal(s)/reference signal set(s) provided/indicated in the unified TCI state(s) indicated/provided by one or more TCI codepoints of one or more TCI fields in the beam indication DCI received in a CORESET associated/configured with the same value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to transmit PUSCH(s) that is scheduled by PDCCH(s)/PDCCH candidate(s) received in Type-I CORESET(s) associated/configured with value 0 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to transmit PUSCH(s) that is scheduled by PDCCH(s)/PDCCH candidate(s) received in Type-I CORESET(s) associated/configured with value 1 of CORESET pool index or CORESETPoolIndex; i.e., the UL TX spatial filters for transmitting PUSCH(s) that is scheduled by PDCCH(s)/PDCCH candidate(s) received in Type-I CORESET(s) associated/configured with value 0 of CORESET pool index or CORESETPoolIndex could be determined by/spatially related to the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the UL TX spatial filters for transmitting PUSCH(s) that is scheduled by PDCCH(s)/PDCCH candidate(s) received in Type-I CORESET(s) associated/configured with value 1 of CORESET pool index or CORESETPoolIndex could be determined by/spatially related to the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2.

In yet another example, UL TX spatial filters for transmitting one or more PUSCHs scheduled by PDCCH(s)/PDCCH candidate(s) received in Type-I CORESETs associated/configured with CORESETPoolIndex value n - 1 (or m - 1) could be determined by/spatially related to reference signals provided in an indicated unified TCI state - e.g., the indicated unified TCI state n' (or m') provided by TCI-Stater_17 or DLorJointTCI-State or ULTCI-State - associated with CORESETPoolIndex value n' - 1 (or m' - 1); while, UL TX spatial filters for transmitting one or more PUSCHs scheduled by PDCCH(s)/PDCCH candidate(s) received in Type-II CORESETs associated/configured with CORESETPoolIndex value n - 1 (or m - 1) could be determined by/spatially related to reference signals provided in an indicated Rel. 15/16 spatial relation information for PUSCH - e.g., the indicated spatial relation information n' (or m') for PUSCH provided by PUSCH-SpatialRelationInfo - associated with CORESETPoolIndex value n' - 1 (or m' - 1), wherein the value of n could be the same as or different from the value of n' and/or the value of m could be the same as or different from the value of m'; for this case, the UE could be indicated/provided/configured by the network, e.g., via higher layer RRC signaling/parameter and/or MAC CE command and/or dynamic DCI based L1 signaling, the mapping/association relationship between n and n', and/or, m and m'.

For example, the UE could use/apply the unified TCI state(s) indicated/provided by one or more TCI codepoints - e.g., associated with a first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2 - to transmit PUSCH(s) that is scheduled by PDCCH(s)/PDCCH candidate(s) received in Type-I CORESET(s) associated/configured with the first value of CORESET pool index or CORESETPoolIndex - e.g., 1 (or 0) for N=2 or M=2; i.e., the UL TX spatial filters for transmitting PUSCH(s) that is scheduled by PDCCH(s)/PDCCH candidate(s) received in Type-I CORESET(s) associated/configured with a first value of CORESET pool index or CORESETPoolIndex - e.g., 1 (or 0) for N=2 or M=2 - could be determined by/spatially related to the reference signal(s)/reference signal set(s) provided/indicated in the unified TCI state(s) indicated/provided by one or more TCI codepoints - e.g., associated with the first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to transmit PUSCH(s) that is scheduled by PDCCH(s)/PDCCH candidate(s) received in Type-I CORESET(s) associated/configured with value 1 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to transmit PUSCH(s) that is scheduled by PDCCH(s)/PDCCH candidate(s) received in Type-I CORESET(s) associated/configured with value 0 of CORESET pool index or CORESETPoolIndex; i.e., the UL TX spatial filters for transmitting PUSCH(s) that is scheduled by PDCCH(s)/PDCCH candidate(s) received in Type-I CORESET(s) associated/configured with value 1 of CORESET pool index or CORESETPoolIndex could be determined by/spatially related to the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the UL TX spatial filters for transmitting PUSCH(s) that is scheduled by PDCCH(s)/PDCCH candidate(s) received in Type-I CORESET(s) associated/configured with value 0 of CORESET pool index or CORESETPoolIndex could be determined by/spatially related to the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2. The first value of CORESET pool index/CORESETPoolIndex could be the same as or different from the second value of CORESET pool index/CORESETPoolIndex.

For CSI-RS, e.g., periodic/semi-persistent/aperiodic CSI-RS, following examples can be provided.

In one example, a NZP CSI-RS resource set provided by the higher layer parameter nzp-CSI-RS-ResourceSet could be configured/associated with a higher layer indicator/parameter denoted by "followUnifiedTCIStateCORESETPoolIndex" and/or a higher layer indicator/parameter denoted by "followUnifiedTCIState"; or equivalently, the indicator/parameter "followUnifiedTCIStateCORESETPoolIndex" and/or the indicator/parameter "followUnifiedTCIState" could be configured/provided/indicated in nzp-CSI-RS-ResourceSet that configures the corresponding NZP CSI-RS resource set, and therefore, the NZP CSI-RS resource(s) configured/provided therein. When/if the value of "followUnifiedTCIStateCORESETPoolIndex" in nzp-CSI-RS-ResourceSet is set to n - 1 (or m - 1) and/or "followUnifiedTCIState" in nzp-CSI-RS-ResourceSet is configured/set to "enabled" for a NZP CSI-RS resource set, the NZP CSI-RS resources configured in the corresponding NZP CSI-RS resource set could share/follow an indicated unified TCI state - e.g., the indicated unified TCI state n (or m) provided by TCI-State_r17 or DLorJointTCI-State or ULTCI-State - associated with CORESETPoolIndex value n - 1 (or m - 1).

For example, for N=2 or M=2, when/if "followUnifiedTCIStateCORESETPoolIndex" in nzp-CSI-RS-Resource-Set is set to "enabled" or 0 (or 1) and/or "followUnifiedTCIState" in nzp-CSI-RS-ResourceSet is configured/set to "enabled" for a NZP CSI-RS resource set, the NZP CSI-RS resources configured in the corresponding NZP CSI-RS resource set could share/follow the indicated unified TCI state provided by TCI-State_r17 or DLorJointTCIState or ULTCI-State associated with CORESETPoolIndex value 0 (or 1). Otherwise, e.g., when/if "followUnifiedTCIStateCORESETPoolIndex" in nzp-CSI-RS-ResourceSet is set to "disabled" or 1 (or 0) and/or "followUnifiedTCIState" in nzp-CSI-RS-ResourceSet is configured/set to "enabled" for a NZP CSI-RS resource set, the NZP CSI-RS resources configured in the corresponding NZP CSI-RS resource set could share/follow the indicated unified TCI state provided by TCI-State_r17 or DLorJointTCIState or ULTCIState associated with CORESETPoolIndex value 1 (or 0).

For another example, the UE could use/apply the unified TCI state(s) indicated/provided by one or more TCI codepoints of one or more TCI fields in the beam indication DCI received in a CORESET associated/configured with a value of CORESET pool index or CORESETPoolIndex - e.g., 0 (or 1) for N=2 or M=2 - to receive CSI-RS(s) in the NZP CSI-RS resource set with the indicator/parameter "followUnifiedTCISstate" in the corresponding nzp-CSI-RS-ResourceSet configured/set to "enabled" and/or the indicator/parameter "followUnifiedTCIStateCORESETPoolIndex" in the corresponding nzp-CSI-RS-ResourceSet set to the same value as the CORESET pool index or CORESETPoolIndex - e.g., 0 (or 1) for N=2 or M=2; i.e., the CSI-RS(s) in the NZP CSI-RS resource set with the indicator/parameter "followUnifiedTCISstate" in the corresponding nzp-CSI-RS-ResourceSet configured/set to "enabled" and/or the indicator/parameter "followUnifiedTCIStateCORESETPoolIndex" in the corresponding nzp-CSI-RS-ResourceSet set to a value of CORESET pool index or CORESETPoolIndex - e.g., 0 (or 1) for N=2 or M=2 - could be quasi co-located with the reference signal(s)/reference signal set(s) provided/indicated in the unified TCI state(s) indicated/provided by one or more TCI codepoints of one or more TCI fields in the beam indication DCI received in a CORESET associated/configured with the same value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to receive CSI-RS(s) in the NZP CSI-RS resource set with the indicator/parameter "followUnifiedTCIstate" in the corresponding nzp-CSI-RS-ResourceSet configured/set to "enabled" and/or the indicator/parameter "followUnifiedTCIStateCORESETPoolIndex" in the corresponding nzp-CSI-RS-ResourceSet set to value 0 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to receive CSI-RS(s) in the NZP CSI-RS resource set with the indicator/parameter "followUnifiedTCIstate" in the corresponding nzp-CSI-RS-ResourceSet configured/set to "enabled" and/or the indicator/parameter "followUnifiedTCIStateCORESETPoolIndex" in the corresponding nzp-CSI-RS-ResourceSet set to value 1 of CORESET pool index or CORESETPoolIndex; i.e., the CSI-RS(s) in the NZP CSI-RS resource set with the indicator/parameter "followUnifiedTCISstate" in the corresponding nzp-CSI-RS-ResourceSet configured/set to "enabled" and/or the indicator/parameter "followUnifiedTCIStateCORESETPoolIndex" in the corresponding nzp-CSI-RS-ResourceSet set to value 0 of CORESET pool index or CORESETPoolIndex could be quasi co-located with the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the CSI-RS(s) in the NZP CSI-RS resource set with the indicator/parameter "followUnifiedTCISstate" in the corresponding nzp-CSI-RS-ResourceSet configured/set to "enabled" and/or the indicator/parameter "followUnifiedTCIStateCORESETPoolIndex" in the corresponding nzp-CSI-RS-ResourceSet set to value 1 of CORESET pool index or CORESETPoolIndex could be quasi co-located with the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2.

In another example, a NZP CSI-RS resource set provided by the higher layer parameter nzp-CSI-RS-ResourceSet could be configured/associated with a higher layer indicator/parameter denoted by "followUnifiedTCIStateCORESETPoolIndex" and/or a higher layer indicator/parameter denoted by "followUnifiedTCIState"; or equivalently, the indicator/parameter "followUnifiedTCIStateCORESETPoolIndex" and/or the indicator/parameter "followUnifiedTCIState" could be configured/provided/indicated in nzp-CSI-RS-ResourceSet that configures the corresponding NZP CSI-RS resource set, and therefore, the NZP CSI-RS resource(s) configured/provided therein. When/if the value of "followUnifiedTCIStateCORESETPoolIndex" in nzp-CSI-RS-ResourceSet is set to n - 1 (or m - 1) and/or "followUnifiedTCIState" in nzp-CSI-RS-ResourceSet is configured/set to "enabled" for a NZP CSI-RS resource set, the NZP CSI-RS resources configured in the corresponding NZP CSI-RS resource set could share/follow an indicated unified TCI state - e.g., the indicated unified TCI state n' (or m') provided by TCI-State_r17 or DLorJointTCI-State or ULTCI-State - associated with CORESETPoolIndex value n' - 1 (or m' - 1), wherein the value of n could be the same as or different from the value of n' and/or the value of m could be the same as or different from the value of m'; for this case, the UE could be indicated/provided/configured by the network, e.g., via higher layer RRC signaling/parameter and/or MAC CE command and/or dynamic DCI based L1 signaling, the mapping/association relationship between n and n', and/or, m and m'.

For example, the UE could use/apply the unified TCI state(s) indicated/provided by one or more TCI codepoints - e.g., associated with a first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2 - to receive CSI-RS(s) in the NZP CSI-RS resource set with the indicator/parameter "followUnifiedTCISstate" in the corresponding nzp-CSI-RS-ResourceSet configured/set to "enabled" and/or the indicator/parameter "followUnifiedTCIStateCORESETPoolIndex" in the corresponding nzp-CSI-RS-ResourceSet set to the first value of CORESET pool index or CORESETPoolIndex - e.g., 1 (or 0) for N=2 or M=2; i.e., the CSI-RS(s) in the NZP CSI-RS resource set with the indicator/parameter "followUnifiedTCISstate" in the corresponding nzp-CSI-RS-ResourceSet configured/set to "enabled" and/or the indicator/parameter "followUnifiedTCIStateCORESETPoolIndex" in the corresponding nzp-CSI-RS-ResourceSet set to a first value of CORESET pool index or CORESETPoolIndex - e.g., 1 (or 0) for N=2 or M=2 - could be quasi co-located with the reference signal(s)/reference signal set(s) provided/indicated in the unified TCI state(s) indicated/provided by one or more TCI codepoints - e.g., associated with the first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to receive CSI-RS(s) in the NZP CSI-RS resource set with the indicator/parameter "followUnifiedTCISstate" in the corresponding nzp-CSI-RS-ResourceSet configured/set to "enabled" and/or the indicator/parameter "followUnifiedTCIStateCORESETPoolIndex" in the corresponding nzp-CSI-RS-ResourceSet set to value 1 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to receive CSI-RS(s) in the NZP CSI-RS resource set with the indicator/parameter "followUnifiedTCIstate" in the corresponding nzp-CSI-RS-ResourceSet configured/set to "enabled" and/or the indicator/parameter "followUnifiedTCIStateCORESETPoolIndex" in the corresponding nzp-CSI-RS-ResourceSet set to value 0 of CORESET pool index or CORESETPoolIndex; i.e., the CSI-RS(s) in the NZP CSI-RS resource set with the indicator/parameter "followUnifiedTCISstate" in the corresponding nzp-CSI-RS-ResourceSet configured/set to "enabled" and/or the indicator/parameter "followUnifiedTCIStateCORESETPoolIndex" in the corresponding nzp-CSI-RS-ResourceSet set to value 1 of CORESET pool index or CORESETPoolIndex could be quasi co-located with the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the CSI-RS(s) in the NZP CSI-RS resource set with the indicator/parameter "followUnifiedTCISstate" in the corresponding nzp-CSI-RS-ResourceSet configured/set to "enabled" and/or the indicator/parameter "followUnifiedTCIStateCORESETPoolIndex" in the corresponding nzp-CSI-RS-ResourceSet set to value 0 of CORESET pool index or CORESETPoolIndex could be quasi co-located with the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2. The first value of CORESET pool index/CORESETPoolIndex could be the same as or different from the second value of CORESET pool index/CORESETPoolIndex.

In yet another example, a NZP CSI-RS resource provided by the higher layer parameter NZP-CSI-RS-Resource could be configured with "useIndicatedr17TCIStateCORESETPoolIndex." If the value of "useIndicatedr17TCIStateCORESETPoolIndex" is set to n - 1 (or m - 1) for a NZP CSI-RS resource, the NZP CSI-RS resource may share the indicated unified TCI state - e.g., indicated unified TCI state n (or m) provided by TCI-State_r17 - associated with CORESETPoolIndex value n - 1 (or m - 1). Alternatively, for N=2 or M=2, if "useIndicatedr17TCIStateCORESETPoolIndex" is set to "enabled" for a NZP CSI-RS resource, the NZP CSI-RS resource may share the indicated unified TCI state provided by TCI-State_r17 associated with CORESETPoolIndex value 0 (or 1). Otherwise, the NZP CSI-RS resource may share the indicated unified TCI state provided by TCI-State_r17 associated with CORESETPoolIndex value 1 (or 0).

In yet another example, In one example, a NZP CSI-RS resource set provided by the higher layer parameter nzp-CSI-RS-ResourceSet could be configured with "useIndicatedr17TCIStateCORESETPoolIndex." If the value of "useIndicatedr17TCIStateCORESETPoolIndex" is set to n - 1 (or m - 1) for a NZP CSI-RS resource set, the NZP CSI-RS resources configured in the corresponding NZP CSI-RS resource set may share the indicated Rel .17 unified TCI state - e.g., indicated unified TCI state n (or m) provided by TCI-State_r17 - associated with CORESETPoolIndex value n - 1 (or m - 1). Alternatively, for N=2 or M=2, if "useIndicatedr17TCIStateCORESETPoolIndex" is set to "enabled" for a NZP CSI-RS resource set, the NZP CSI-RS resources configured in the corresponding NZP CSI-RS resource set may share the indicated Rel .17 unified TCI state provided by TCI-State_r17 associated with CORESETPoolIndex value 0 (or 1). Otherwise, the NZP CSI-RS resources configured in the corresponding NZP CSI-RS resource set may share the indicated Rel .17 unified TCI state provided by TCI-State_r17 associated with CORESETPoolIndex value 1 (or 0).

In another example, a NZP CSI-RS resource provided by the higher layer parameter NZP-CSI-RS-Resource could be configured with "useIndicatedr17TCIStateCORESETPoolIndex." If the value of "useIndicatedr17TCIStateCORESETPoolIndex" is set to n - 1 (or m - 1) for a NZP CSI-RS resource, the NZP CSI-RS resource may share the indicated Rel .17 unified TCI state - e.g., indicated unified TCI state n (or m) provided by TCI-State_r17 - associated with CORESETPoolIndex value n - 1 (or m - 1). Alternatively, for N=2 or M=2, if "useIndicatedr17TCIStateCORESETPoolIndex" is set to "enabled" for a NZP CSI-RS resource, the NZP CSI-RS resource may share the indicated Rel .17 unified TCI state provided by TCI-State_r17 associated with CORESETPoolIndex value 0 (or 1). Otherwise, the NZP CSI-RS resource may share the indicated Rel .17 unified TCI state provided by TCI-State_r17 associated with CORESETPoolIndex value 1 (or 0).

In yet another example, a NZP CSI-RS resource set provided by the higher layer parameter nzp-CSI-RS-ResourceSet could be configured with N>1 (or M>1) "useIndicatedr17TCIStateCORESETPoolIndex" fields each associated with at least one NZP CSI-RS resource configured in the NZP CSI-RS resource set. If the value of a "useIndicatedr17TCIStateCORESETPoolIndex" field indicated in a NZP CSI-RS resource set is set to n - 1 (or m - 1), the NZP CSI-RS resource(s) associated with the "useIndicatedr17TCIStateCORESETPoolIndex" field may share the indicated Rel .17 unified TCI state - e.g., indicated unified TCI state n (or m) provided by TCI-State_r17 - associated with CORESETPoolIndex value n - 1 (or m - 1).

Alternatively, for N=2 or M=2, if a "useIndicatedr17TCIStateCORESETPoolIndex" field in a NZP CSI-RS resource set is set to "enabled," the NZP CSI-RS resource(s) associated with the "useIndicatedr17TCIStateCORESETPoolIndex" field may share the indicated unified TCI state - e.g., indicated unified TCI state n (or m) provided by TCI-State_r17 - associated with CORESETPoolIndex value n - 1 (or m - 1). Alternatively, for N=2 or M=2, if a "useIndicatedr17TCIStateCORESETPoolIndex" field in a NZP CSI-RS resource set is set to "enabled," the NZP CSI-RS resource(s) associated with the "useIndicatedr17TCIStateCORESETPoolIndex" field may share the indicated Rel .17 unified TCI state provided by TCI-State_r17 associated with CORESETPoolIndex value 0 (or 1). Otherwise, the corresponding NZP CSI-RS resource may share the indicated Rel .17 unified TCI state provided by TCI-State_r17 associated with CORESETPoolIndex value 1 (or 0).

In yet another example, aperiodic CSI-RS resources that are triggered by PDCCH(s) received in respective CORESETs associated/configured with CORESETPoolIndex value n - 1 (or m - 1) could be quasi co-located with reference signals provided in an indicated unified TCI state - e.g., the indicated unified TCI state n (or m) provided by TCI-State_r17 or DLorJointTCI-State or ULTCI-State - associated with CORESETPoolIndex value n - 1 (or m - 1). For example, the UE could use/apply the unified TCI state(s) indicated/provided by one or more TCI codepoints of one or more TCI fields in the beam indication DCI received in a CORESET associated/configured with a value of CORESET pool index or CORESETPoolIndex - e.g., 0 (or 1) for N=2 or M=2 - to receive aperiodic CSI-RS(s) that is triggered by PDCCH(s)/PDCCH candidate(s) received in CORESET(s) associated/configured with the same value of CORESET pool index or CORESETPoolIndex - e.g., 0 (or 1) for N=2 or M=2; i.e., the aperiodic CSI-RS resource(s) that is triggered by PDCCH(s)/PDCCH candidate(s) received in CORESET(s) associated/configured with a value of CORESET pool index or CORESETPoolIndex - e.g., 0 (or 1) for N=2 or M=2 - could be quasi co-located with the reference signal(s)/reference signal set(s) provided/indicated in the unified TCI state(s) indicated/provided by one or more TCI codepoints of one or more TCI fields in the beam indication DCI received in a CORESET associated/configured with the same value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to receive aperiodic CSI-RS(s) that is triggered by PDCCH(s)/PDCCH candidate(s) received in CORESET(s) associated/configured with value 0 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to receive aperiodic CSI-RS(s) that is triggered by PDCCH(s)/PDCCH candidate(s) received in CORESET(s) associated/configured with value 1 of CORESET pool index or CORESETPoolIndex; i.e., the aperiodic CSI-RS resource(s) that is triggered by PDCCH(s)/PDCCH candidate(s) received in CORESET(s) associated/configured with value 0 of CORESET pool index or CORESETPoolIndex could be quasi co-located with the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the aperiodic CSI-RS resource(s) that is triggered by PDCCH(s)/PDCCH candidate(s) received in CORESET(s) associated/configured with value 1 of CORESET pool index or CORESETPoolIndex could be quasi co-located with the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2.

In yet another example, aperiodic CSI-RS resources that are triggered by PDCCH(s)/PDCCH candidate(s) received in respective CORESETs associated/configured with CORESETPoolIndex value n - 1 (or m - 1) could be quasi co-located with reference signals provided in an indicated unified TCI state - e.g., the indicated unified TCI state n' (or m') provided by TCI-State_r17 or DLorJointTCI-State or ULTCI-State - associated with CORESETPoolIndex value n' - 1 (or m' - 1), wherein the value of n could be the same as or different from the value of n' and/or the value of m could be the same as or different from the value of m'; for this case, the UE could be indicated/provided/configured by the network, e.g., via higher layer RRC signaling/parameter and/or MAC CE command and/or dynamic DCI based L1 signaling, the mapping/association relationship between n and n', and/or, m and m'.

For example, the UE could use/apply the unified TCI state(s) indicated/provided by one or more TCI codepoints - e.g., associated with a first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2 - to receive aperiodic CSI-RS(s) that is triggered by PDCCH(s)/PDCCH candidate(s) received in CORESET(s) associated/configured with the first value of CORESET pool index or CORESETPoolIndex - e.g., 1 (or 0) for N=2 or M=2; i.e., the aperiodic CSI-RS resource(s) that is triggered by PDCCH(s)/PDCCH candidate(s) received in CORESET(s) associated/configured with a first value of CORESET pool index or CORESETPoolIndex - e.g., 1 (or 0) for N=2 or M=2 - could be quasi co-located with the reference signal(s)/reference signal set(s) provided/indicated in the unified TCI state(s) indicated/provided by one or more TCI codepoints - e.g., associated with the first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to receive aperiodic CSI-RS(s) that is triggered by PDCCH(s)/PDCCH candidate(s) received in CORESET(s) associated/configured with value 1 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to receive aperiodic CSI-RS(s) that is triggered by PDCCH(s)/PDCCH candidate(s) received in CORESET(s) associated/configured with value 0 of CORESET pool index or CORESETPoolIndex; i.e., the aperiodic CSI-RS resource(s) that is triggered by PDCCH(s)/PDCCH candidate(s) received in CORESET(s) associated/configured with value 1 of CORESET pool index or CORESETPoolIndex could be quasi co-located with the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the aperiodic CSI-RS resource(s) that is triggered by PDCCH(s)/PDCCH candidate(s) received in CORESET(s) associated/configured with value 0 of CORESET pool index or CORESETPoolIndex could be quasi co-located with the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2. The first value of CORESET pool index/CORESETPoolIndex could be the same as or different from the second value of CORESET pool index/CORESETPoolIndex.

In yet another example, aperiodic CSI-RS resources that are triggered by PDCCH(s)/PDCCH candidate(s) received in Type-I CORESETs - as described/specified herein in the present disclosure - associated/configured with CORESETPoolIndex value n - 1 (or m - 1) could be quasi co-located with reference signals provided in an indicated unified TCI state - e.g., the indicated unified TCI state n (or m) provided by TCI-State_r17 or DLorJointTCI-State or ULTCI-State - associated with CORESETPoolIndex value n - 1 (or m - 1); while, aperiodic CSI-RS resources that are triggered by PDCCH(s)/PDCCH candidate(s) received in Type-II CORESETs - as described/specified herein in the present disclosure - associated/configured with CORESETPoolIndex value n - 1 (or m - 1) could be quasi co-located with reference signals provided in an indicated Rel. 15/16 TCI state - e.g., an indicated TCI state n (or m) provided by TCI-State - associated with CORESETPoolIndex value n - 1 (or m - 1).

For example, the UE could use/apply the unified TCI state(s) indicated/provided by one or more TCI codepoints of one or more TCI fields in the beam indication DCI received in a CORESET associated/configured with a value of CORESET pool index or CORESETPoolIndex - e.g., 0 (or 1) for N=2 or M=2 - to receive aperiodic CSI-RS(s) that is triggered by PDCCH(s)/PDCCH candidate(s) received in Type-I CORESET(s) associated/configured with the same value of CORESET pool index or CORESETPoolIndex - e.g., 0 (or 1) for N=2 or M=2; i.e., the aperiodic CSI-RS resource(s) that is triggered by PDCCH(s)/PDCCH candidate(s) received in Type-I CORESET(s) associated/configured with a value of CORESET pool index or CORESETPoolIndex - e.g., 0 (or 1) for N=2 or M=2 - could be quasi co-located with the reference signal(s)/reference signal set(s) provided/indicated in the unified TCI state(s) indicated/provided by one or more TCI codepoints of one or more TCI fields in the beam indication DCI received in a CORESET associated/configured with the same value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to receive aperiodic CSI-RS(s) that is triggered by PDCCH(s)/PDCCH candidate(s) received in Type-I CORESET(s) associated/configured with value 0 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to receive aperiodic CSI-RS(s) that is triggered by PDCCH(s)/PDCCH candidate(s) received in Type-I CORESET(s) associated/configured with value 1 of CORESET pool index or CORESETPoolIndex; i.e., the aperiodic CSI-RS resource(s) that is triggered by PDCCH(s)/PDCCH candidate(s) received in Type-I CORESET(s) associated/configured with value 0 of CORESET pool index or CORESETPoolIndex could be quasi co-located with the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the aperiodic CSI-RS resource(s) that is triggered by PDCCH(s)/PDCCH candidate(s) received in Type-I CORESET(s) associated/configured with value 1 of CORESET pool index or CORESETPoolIndex could be quasi co-located with the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2.

In yet another example, aperiodic CSI-RS resources that are triggered by PDCCH(s)/PDCCH candidate(s) received in Type-I CORESETs - as described/specified herein in the present disclosure - associated/configured with CORESETPoolIndex value n - 1 (or m - 1) could be quasi co-located with reference signals provided in an indicated unified TCI state - e.g., the indicated unified TCI state n' (or m') provided by TCI-State_r17 or DLorJointTCI-State or ULTCI-State - associated with CORESETPoolIndex value n' - 1 (or m' - 1); while, aperiodic CSI-RS resources that are triggered by PDCCH(s)/PDCCH candidate(s) received in Type-II CORESETs - as described/specified herein in the present disclosure - associated/configured with CORESETPoolIndex value n - 1 (or m - 1) could be quasi co-located with reference signals provided in an indicated Rel. 15/16 TCI state - e.g., an indicated TCI state n' (or m') provided by TCI-State - associated with CORESETPoolIndex value n' - 1 (or m' - 1), wherein the value of n could be the same as or different from the value of n' and/or the value of m could be the same as or different from the value of m'; for this case, the UE could be indicated/provided/configured by the network, e.g., via higher layer RRC signaling/parameter and/or MAC CE command and/or dynamic DCI based L1 signaling, the mapping/association relationship between n and n', and/or, m and m'.

For example, the UE could use/apply the unified TCI state(s) indicated/provided by one or more TCI codepoints - e.g., associated with a first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2 - to receive aperiodic CSI-RS(s) that is triggered by PDCCH(s)/PDCCH candidate(s) received in Type-I CORESET(s) associated/configured with the first value of CORESET pool index or CORESETPoolIndex - e.g., 1 (or 0) for N=2 or M=2; i.e., the aperiodic CSI-RS resource(s) that is triggered by PDCCH(s)/PDCCH candidate(s) received in Type-I CORESET(s) associated/configured with a first value of CORESET pool index or CORESETPoolIndex - e.g., 1 (or 0) for N=2 or M=2 - could be quasi co-located with the reference signal(s)/reference signal set(s) provided/indicated in the unified TCI state(s) indicated/provided by one or more TCI codepoints - e.g., associated with the first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to receive aperiodic CSI-RS(s) that is triggered by PDCCH(s)/PDCCH candidate(s) received in Type-I CORESET(s) associated/configured with value 1 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to receive aperiodic CSI-RS(s) that is triggered by PDCCH(s)/PDCCH candidate(s) received in Type-I CORESET(s) associated/configured with value 0 of CORESET pool index or CORESETPoolIndex; i.e., the aperiodic CSI-RS resource(s) that is triggered by PDCCH(s)/PDCCH candidate(s) received in Type-I CORESET(s) associated/configured with value 1 of CORESET pool index or CORESETPoolIndex could be quasi co-located with the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the aperiodic CSI-RS resource(s) that is triggered by PDCCH(s)/PDCCH candidate(s) received in Type-I CORESET(s) associated/configured with value 0 of CORESET pool index or CORESETPoolIndex could be quasi co-located with the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2. The first value of CORESET pool index/CORESETPoolIndex could be the same as or different from the second value of CORESET pool index/CORESETPoolIndex.

In yet another example, the UE could be configured/provided/indicated by the network, e.g., via higher layer RRC signaling and/or MAC CE command and/or dynamic DCI based L1 signaling, a first set/group of NZP CSI-RS resources and/or a second set/group of NZP CSI-RS resources for channel/interference measurement and/or CSI acquisition, wherein the first set/group of NZP CSI-RS resources and the second set/group of NZP CSI-RS resources could be configured/provided in a CSI resource setting, a CSI-RS resource set or a trigger state. Furthermore, the first set/group of NZP CSI-RS resources could be associated with value 0 (or 1) of CORESET pool index or CORESETPoolIndex - e.g., based on a fixed rule in the system specifications and/or by providing/indicating/configuring the corresponding value of CORESET pool index/CORESETPoolIndex in the higher layer parameter that configures the first set/group of NZP CSI-RS resources, and the second set/group of NZP CSI-RS resources could be associated with value 1 (or 0) of CORESET pool index or CORESETPoolIndex - e.g., based on a fixed rule in the system specifications and/or by providing/indicating/configuring the corresponding value of CORESET pool index/CORESETPoolIndex in the higher layer parameter that configures the second set/group of NZP CSI-RS resources.

For example, when/if the first set/group of NZP CSI-RS resources is configured with "followUnifiedTCIState" - e.g., set to "enabled," the NZP CSI-RS resources configured in the first set/group could share/follow the indicated unified TCI state provided by TCI-State_r17 or DLorJointTCIState or ULTCI-State associated with CORESETPoolIndex value 0 (or 1). When/if the second set/group of NZP CSI-RS resources is configured with "followUnifiedTCIState" - e.g., set to "enabled," the NZP CSI-RS resources configured in the second set/group could share/follow the indicated unified TCI state provided by TCI-State_17 or DLorJointTCIState or ULTCIState associated with CORESETPoolIndex value 1 (or 0). For another example, the UE could use/apply the unified TCI state(s) indicated/provided by one or more TCI codepoints of one or more TCI fields in the beam indication DCI received in a CORESET associated/configured with a value of CORESET pool index or CORESETPoolIndex - e.g., 0 (or 1) for N=2 or M=2 - to receive CSI-RS(s) in a set/group of NZP CSI-RS resources - e.g., the first (or second) set/group of NZP CSI-RS resources - associated with the same value of CORESET pool index or CORESETPoolIndex - e.g., 0 (or 1) for N=2 or M=2, where the the set/group of NZP CSI-RS resources could be higher layer configured with "followUnifiedTCIstate" - e.g., set to "enabled"; i.e., the CSI-RS(s) in a set/group of NZP CSI-RS resources - e.g., the first (or second) set/group of NZP CSI-RS resources - associated with a value of CORESET pool index or CORESETPoolIndex - e.g., 0 (or 1) for N=2 or M=2 - could be quasi co-located with the reference signal(s)/reference signal set(s) provided/indicated in the unified TCI state(s) indicated/provided by one or more TCI codepoints of one or more TCI fields in the beam indication DCI received in a CORESET associated/configured with the same value of CORESET pool index or CORESETPoolIndex associated to the set/group of NZP CSI-RS resources - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to receive CSI-RS(s) in first set/group of NZP CSI-RS resources configured with the higher layer parameter "followUnifiedTCIsstate" - e.g., set to "enabled," and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to receive CSI-RS(s) in the second set/group of NZP CSI-RS resources configured with the higher layer parameter "followUnifiedTCIsstate" - e.g., set to "enabled"; i.e., the CSI-RS(s) in the first set/group of NZP CSI-RS resources configured with the higher layer parameter "followUnifiedTCIsstate" - e.g., set to "enabled" - could be quasi co-located with the reference signal(s)/reference signal set(s) provided/indicated in the first (or second) unified TCI state(s) indicated/provided by a TCI codepoint of a TCI field in the beam indication DCI received in a CORESET associated/-configured with a value of CORESET pool index or CORESETPoolIndex - e.g., 0 (or 1) for N=2 or M=2, and the CSI-RS(s) in the second set/group of NZP CSI-RS resources configured with the higher layer parameter "followUnifiedTCIsstate" - e.g., set to "enabled" - could be quasi co-located with the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2.

In one embodiment for SRS, following examples can be provided.

In one example, an SRS resource set provided by the higher layer parameter SRS-ResourceSet could be configured/associated with a higher layer indicator/parameter denoted by "followUnifiedTCIStateCORESETPoolIndex" and/or a higher layer indicator/parameter denoted by "followUnifiedTCIState"; or equivalently, the indicator/parameter "followUnifiedTCIStateCORESETPoolIndex" and/or the indicator/parameter "followUnifiedTCIState" could be configured/provided/indicated in SRS-ResourceSet that configures the corresponding SRS resource set, and therefore, the SRS resource(s) configured/provided therein. When/if the value of "followUnifiedTCIStateCORESETPoolIndex" in SRS-ResourceSet is set to n - 1 (or m - 1) and/or "followUnifiedTCIState" in SRS-ResourceSet is configured/set to "enabled" for a SRS resource set, the SRS resources configured in the corresponding SRS resource set could share/follow an indicated unified TCI state - e.g., the indicated unified TCI state n (or m) provided by TCI-State_r17 or DLorJointTCI-State or ULTCI-State - associated with CORESETPoolIndex value n - 1 (or m - 1).

For example, for N=2 or M=2, when/if "followUnifiedTCIStateCORESETPoolIndex" in SRS-ResourceSet is set to "enabled" or 0 (or 1) and/or "followUnifiedTCIState" in SRS-ResourceSet is configured/set to "enabled" for a SRS resource set, the SRS resources configured in the corresponding SRS resource set could share/follow the indicated unified TCI state provided by TCI-State_17 or DLorJointTCIState or ULTCI-State associated with CORESETPoolIndex value 0 (or 1). Otherwise, e.g., when/if "followUnifiedTCIStateCORESETPoolIndex" in SRS-ResourceSet is set to "disabled" or 1 (or 0) and/or "followUnifiedTCIState" in SRS-ResourceSet is configured/set to "enabled" for a SRS resource set, the SRS resources configured in the corresponding SRS resource set could share/follow the indicated unified TCI state provided by TCI-State_r17 or DLorJointTCIState or ULTCIState associated with CORESETPoolIndex value 1 (or 0).

For another example, the UE could use/apply the unified TCI state(s) indicated/provided by one or more TCI codepoints of one or more TCI fields in the beam indication DCI received in a CORESET associated/configured with a value of CORESET pool index or CORESETPoolIndex - e.g., 0 (or 1) for N=2 or M=2 - to transmit SRS(s) in the SRS resource set with the indicator/parameter "followUnifiedTCIsstate" in the corresponding SRS-ResourceSet configured/set to "enabled" and/or the indicator/parameter "followUnifiedTCIStateCORESETPoolIndex" in the corresponding SRS-ResourceSet set to the same value as the CORESET pool index or CORESETPoolIndex - e.g., 0 (or 1) for N=2 or M=2; i.e., the UL TX spatial filter(s) for transmitting the SRS(s) in the SRS resource set with the indicator/parameter "followUnifiedTCIsstate" in the corresponding SRS-ResourceSet configured/set to "enabled" and/or the indicator/parameter "followUnifiedTCIStateCORESETPoolIndex" in the corresponding SRS-ResourceSet set to a value of CORESET pool index or CORESETPoolIndex - e.g., 0 (or 1) for N=2 or M=2 - could be determined by or spatially related to the reference signal(s)/reference signal set(s) provided/indicated in the unified TCI state(s) indicated/provided by one or more TCI codepoints of one or more TCI fields in the beam indication DCI received in a CORESET associated/configured with the same value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to transmit SRS(s) in the SRS resource set with the indicator/parameter "followUnifiedTCIsstate" in the corresponding SRS-ResourceSet configured/set to "enabled" and/or the indicator/parameter "followUnifiedTCIStateCORESETPoolIndex" in the corresponding SRS-ResourceSet set to value 0 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to transmit SRS(s) in the SRS resource set with the indicator/parameter "followUnifiedTCIsstate" in the corresponding SRS-ResourceSet configured/set to "enabled" and/or the indicator/parameter "followUnifiedTCIStateCORESETPoolIndex" in the corresponding SRS-ResourceSet set to value 1 of CORESET pool index or CORESETPoolIndex; i.e., the UL TX spatial filter(s) for transmitting the SRS(s) in the SRS resource set with the indicator/parameter "followUnifiedTCIsstate" in the corresponding SRS-ResourceSet configured/set to "enabled" and/or the indicator/parameter "followUnifiedTCIStateCORESETPoolIndex" in the corresponding SRS-ResourceSet set to value 0 of CORESET pool index or CORESETPoolIndex could be determined by or spatially related to the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the UL TX spatial filter(s) for transmitting the SRS(s) in the SRS resource set with the indicator/parameter "followUnifiedTCIsstate" in the corresponding SRS-ResourceSet configured/set to "enabled" and/or the indicator/parameter "followUnifiedTCIStateCORESETPoolIndex" in the corresponding SRS-ResourceSet set to value 1 of CORESET pool index or CORESETPoolIndex could be determined by or spatially related to the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2.

In another example, an SRS set provided by the higher layer parameter SRS-ResourceSet could be configured/associated with a higher layer indicator/parameter denoted by "followUnifiedTCIStateCORESETPoolIndex" and/or a higher layer indicator/parameter denoted by "followUnifiedTCIState"; or equivalently, the indicator/parameter "followUnifiedTCIStateCORESETPoolIndex" and/or the indicator/parameter "followUnifiedTCIState" could be configured/provided/indicated in SRS-ResourceSet that configures the corresponding SRS resource set, and therefore, the SRS resource(s) configured/provided therein. When/if the value of "followUnifiedTCIStateCORESETPoolIndex" in SRS-ResourceSet is set to n - 1 (or m - 1) and/or "followUnifiedTCIState" in SRS-ResourceSet is configured/set to "enabled" for a SRS resource set, the SRS resources configured in the corresponding SRS resource set could share/follow an indicated unified TCI state - e.g., the indicated unified TCI state n' (or m') provided by TCI-State_r17 or DLorJointTCI-State or ULTCI-State - associated with CORESETPoolIndex value n' - 1 (or m' - 1), wherein the value of n could be the same as or different from the value of n' and/or the value of m could be the same as or different from the value of m'; for this case, the UE could be indicated/provided/configured by the network, e.g., via higher layer RRC signaling/parameter and/or MAC CE command and/or dynamic DCI based L1 signaling, the mapping/association relationship between n and n', and/or, m and m'.

For example, the UE could use/apply the unified TCI state(s) indicated/provided by one or more TCI codepoints - e.g., associated with a first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2 - to transmit SRS(s) in the SRS resource set with the indicator/parameter "followUnifiedTCIsstate" in the corresponding SRS-ResourceSet configured/set to "enabled" and/or the indicator/parameter "followUnifiedTCIStateCORESETPoolIndex" in the corresponding SRS-ResourceSet set to the first value of CORESET pool index or CORESETPoolIndex - e.g., 1 (or 0) for N=2 or M=2; i.e., the UL TX spatial filter(s) for transmitting the SRS(s) in the SRS resource set with the indicator/parameter "followUnifiedTCISstate" in the corresponding SRS-ResourceSet configured/set to "enabled" and/or the indicator/parameter "followUnifiedTCIStateCORESETPoolIndex" in the corresponding SRS-ResourceSet set to a first value of CORESET pool index or CORESETPoolIndex - e.g., 1 (or 0) for N=2 or M=2 - could be determined by or spatially related to the reference signal(s)/reference signal set(s) provided/indicated in the unified TCI state(s) indicated/provided by one or more TCI codepoints - e.g., associated with the first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to transmit SRS(s) in the SRS resource set with the indicator/parameter "followUnifiedTCISstate" in the corresponding SRS-ResourceSet configured/set to "enabled" and/or the indicator/parameter "followUnifiedTCIStateCORESETPoolIndex" in the corresponding SRS-ResourceSet set to value 1 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to transmit SRS(s) in the SRS resource set with the indicator/parameter "followUnifiedTCISstate" in the corresponding SRS-ResourceSet configured/set to "enabled" and/or the indicator/parameter "followUnifiedTCIStateCORESETPoolIndex" in the corresponding SRS-ResourceSet set to value 0 of CORESET pool index or CORESETPoolIndex; i.e., the UL TX spatial filter(s) for transmitting the SRS(s) in the SRS resource set with the indicator/parameter "followUnifiedTCISstate" in the corresponding nzp-CSI-RS-ResourceSet configured/set to "enabled" and/or the indicator/parameter "followUnifiedTCIStateCORESETPoolIndex" in the corresponding SRS-ResourceSet set to value 1 of CORESET pool index or CORESETPoolIndex could be determined by or spatially related to the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the UL TX spatial filter(s) for transmitting the SRS(s) in the SRS resource set with the indicator/parameter "followUnifiedTCISstate" in the corresponding SRS-ResourceSet configured/set to "enabled" and/or the indicator/parameter "followUnifiedTCIStateCORESETPoolIndex" in the corresponding SRS-ResourceSet set to value 0 of CORESET pool index or CORESETPoolIndex could be determined by or spatially related to the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2. The first value of CORESET pool index/CORESETPoolIndex could be the same as or different from the second value of CORESET pool index/CORESETPoolIndex.

In yet another embodiment for SRS, following examples can be provided.

In one example, an SRS resource set provided by the higher layer parameter SRS-ResourceSet could be configured with "useIndicatedr17TCIStateCORESETPoolIndex." If the value of "useIndicatedr17TCIStateCORESETPoolIndex" is set to n - 1 (or m - 1) for a SRS resource set, the SRS resources configured in the corresponding SRS resource set may share the indicated Rel .17 unified TCI state - e.g., indicated unified TCI state n (or m) provided by TCI-State_r17 - associated with CORESETPoolIndex value n - 1 (or m - 1). Alternatively, for N=2 or M=2, if "useIndicatedr17TCIStateCORESETPoolIndex" is set to "enabled" for a SRS resource set, the SRS resources configured in the corresponding SRS resource set may share the indicated Rel .17 unified TCI state provided by TCI-State_r17 associated with CORESETPoolIndex value 0 (or 1). Otherwise, the SRS resources configured in the corresponding SRS resource set may share the indicated Rel .17 unified TCI state provided by TCI-State_r17 associated with CORESETPoolIndex value 1 (or 0).

In another example, an SRS resource provided by the higher layer parameter SRS-Resource could be configured with "useIndicatedr17TCIStateCORESETPoolIndex." If the value of "useIndicatedr17TCIStateCORESETPoolIndex" is set to n - 1 (or m - 1) for a SRS resource, the SRS resource may share the indicated Rel .17 unified TCI state - e.g., indicated unified TCI state n (or m) provided by TCI-State_r17 - associated with CORESETPoolIndex value n - 1 (or m - 1). Alternatively, for N=2 or M=2, if "useIndicatedr17TCIStateCORESETPoolIndex" is set to "enabled" for a SRS resource, the SRS resource may share the indicated Rel .17 unified TCI state provided by TCI-State_r17 associated with CORESETPoolIndex value 0 (or 1). Otherwise, the SRS resource may share the indicated Rel .17 unified TCI state provided by TCI-State_r17 associated with CORESETPoolIndex value 1 (or 0).

In yet another example, an SRS resource set provided by the higher layer parameter SRS-ResourceSet could be configured with N>1 (or M>1) "useIndicatedr17TCIStateCORESETPoolIndex" fields each associated with at least one SRS resource configured in the SRS resource set. If the value of a "useIndicatedr17TCIStateCORESETPoolIndex" field indicated in an SRS resource set is set to n - 1 (or m - 1), the SRS resource(s) associated with the "useIndicatedr17TCIStateCORESETPoolIndex" field may share the indicated Rel .17 unified TCI state - e.g., indicated unified TCI state n (or m) provided by TCI-State_r17 - associated with CORESETPoolIndex value n - 1 (or m - 1).

Alternatively, for N=2 or M=2, if a "useIndicatedr17TCIStateCORESETPoolIndex" field in an SRS resource set is set to "enabled," the SRS resource(s) associated with the "useIndicatedr17TCIStateCORESETPoolIndex" field may share the indicated Rel .17 unified TCI state provided by TCI-State_r17 associated with CORESETPoolIndex value 0 (or 1). Otherwise, the corresponding SRS resource may share the indicated Rel .17 unified TCI state provided by TCI-State_r17 associated with CORESETPoolIndex value 1 (or 0)

An inter-cell system comprising at least one PCI different from the serving cell PCI, the UE could be higher layer configured/provided by the network, e.g., via higher layer RRC signaling, a list/set/pool of PCIs including at least a PCI different from the serving cell PCI. Each entry, and the corresponding PCI value, in the list/set/pool of PCIs could be associated with at least one CORESETPoolIndex value. For example, PCI index n (or m) pointing/corresponding to the n-th (or m-th) entry in the list/set/pool of N>1 (or M>1) PCIs could be associated with CORESETPoolIndex value n - 1 (or m - 1), where n∈{1,.., N} and m∈{1,..., M}. For this case, the QCL assumptions for downlink channels/signals such as PDCCH/PDSCH/CSI-RS and spatial relation settings/configurations for uplink channels/signals such as PUCCH/-PUSCH/SRS could follow those specified in the above discussed design examples for the multi-DCI based multi-TRP operation through the association between CORESETPoolIndex values and PCIs/PCI indexes.

Optionally, in the inter-cell system comprising at least one PCI different from the serving cell PCI, for PCI index n (or m), and therefore the corresponding PCI value in the list/set/pool of PCIs higher layer configured to the UE, where n∈{1,..., N} and m∈{1,..., M}.

In one embodiment for PDCCH, following examples can be provided.

In one example, DM-RS antenna ports for PDCCH receptions in respective CORESETs associated with PCI index n (or m) are quasi co-located with reference signals provided in the indicated unified TCI state - e.g., indicated unified TCI state n (or m) provided by TCI-State_r17 - associated with PCI index n (or m).

In another example, DM-RS antenna ports for PDCCH receptions in Type-I CORESETs associated with PCI index n (or m) are quasi co-located with reference signals provided in the indicated unified TCI state - e.g., indicated unified TCI state n (or m) provided by TCI-State_r17 - associated with PCI index n (or m); DM-RS antenna ports for PDCCH receptions in Type-II CORESETs associated with PCI index n (or m) could be quasi co-located with reference signals provided in an indicated Rel. 15/16 TCI state - e.g., indicated TCI state n (or m) provided by TCI-State - associated with PCI index n (or m).

In one embodiment for PDSCH, following examples can be provided.

In one example, DM-RS antenna ports for PDSCH receptions scheduled by PDCCH(s) received in respective CORESETs associated with PCI index n (or m) are quasi co-located with reference signals provided in the indicated unified TCI state - e.g., indicated unified TCI state n (or m) provided by TCI-State_r17 - associated with PCI index n (or m).

In another example, DM-RS antenna ports for PDSCH receptions scheduled by PDCCH(s) received in Type-I CORESETs associated with PCI index n (or m) are quasi co-located with reference signals provided in the indicated unified TCI state - e.g., indicated unified TCI state n (or m) provided by TCI-State_r17 - associated with PCI index n (or m); DM-RS antenna ports for PDSCH receptions scheduled by PDCCH(s) received in Type-II CORESETs associated with PCI index n (or m) could be quasi co-located with reference signals provided in an indicated Rel. 15/16 TCI state - e.g., indicated TCI state n (or m) provided by TCI-State - associated with PCI index n (or m).

In one embodiment for PUCCH, following examples can be provided.

In one example, spatial filters for transmitting all PUCCH(s) associated with PDCCH(s) received in respective CORESETs associated with PCI index n (or m) are spatially related to reference signals provided in the indicated unified TCI state - e.g., indicated unified TCI state n (or m) provided by TCI-State_r17 - associated with PCI index n (or m).

In another example, spatial filters for transmitting all PUCCH(s) associated with PDCCH(s) received in Type-I CORESETs associated with PCI index n (or m) are spatially related to reference signals provided in the indicated unified TCI state - e.g., indicated unified TCI state n (or m) provided by TCI-State_r17 - associated with PCI index n (or m); spatial filters for transmitting all PUCCH(s) associated with PDCCH(s) received in Type-II CORESETs associated with PCI index n (or m) could be spatially related to reference signals provided in an indicated Rel. 15/16 spatial relation information for PUCCH - e.g., indicated spatial relation information for PUCCH n (or m) provided by PUCCH-SpatialRelationInfo - associated with PCI index n (or m).

In one embodiment for PUSCH, following examples can be provided.

In one example, spatial filters for transmitting dynamic-grant/configured-grant PUSCH(s) associated with PDCCH(s) received in respective CORESETs associated with PCI index n (or m) are spatially related to reference signals provided in the indicated unified TCI state - e.g., indicated unified TCI state n (or m) provided by TCI-State_r17 - associated with PCI index n (or m).

In another example, spatial filters for transmitting dynamic-grant/configured-grant PUSCH(s) associated with PDCCH(s) received in Type-I CORESETs associated with PCI index n (or m) are spatially related to reference signals provided in the indicated unified TCI state - e.g., indicated unified TCI state n (or m) provided by TCI-State_r17 - associated with PCI index n (or m); spatial filters for transmitting dynamic-grant/configured-grant PUSCH(s) associated with PDCCH(s) received in Type-II CORESETs associated with PCI index n (or m) could be spatially related to reference signals provided in an indicated Rel. 15/16 spatial relation information for a SRS resource - e.g., indicated spatial relation information for SRS resource n (or m) provided by SRS-SpatialRelationInfo - associated with PCI index n (or m).

In one embodiment for CSI-RS, following examples can be provided.

In one example, a NZP CSI-RS resource set provided by the higher layer parameter nzp-CSI-RS-ResourceSet could be configured with "useIndicatedr17TCIStatePCIindex." If the value of "useIndicatedr17TCIStatePCIindex" is set to n (or m) for a NZP CSI-RS resource set, the NZP CSI-RS resources configured in the corresponding NZP CSI-RS resource set may share the indicated Rel .17 unified TCI state - e.g., indicated unified TCI state n (or m) provided by TCI-State_r17 - associated with PCI index n (or m).

Alternatively, a NZP CSI-RS resource set provided by the higher layer parameter nzp-CSI-RS-ResourceSet could be configured with "useIndicatedr17TCIStatePCI." If the value of "useIndicatedr17TCIStatePCI" is set to a specific PCI value for a NZP CSI-RS resource set, the NZP CSI-RS resources configured in the corresponding NZP CSI-RS resource set may share the indicated Rel .17 unified TCI state provided by TCI-State_r17 associated with the PCI value. For N=2 or M=2, if "useIndicatedr17TCIStatePCIindex"/"useIndicatedr17TCIStatePCI" is set to "enabled" for a NZP CSI-RS resource set, the NZP CSI-RS resources configured in the corresponding NZP CSI-RS resource set may share the indicated Rel .17 unified TCI state provided by TCI-State_r17 associated with PCI index 1 (or 2) or the serving cell PCI. Otherwise, the NZP CSI-RS resources configured in the corresponding NZP CSI-RS resource set may share the indicated Rel .17 unified TCI state provided by TCI-State_r17 associated with PCI index 2 (or 1) or a PCI different from the serving cell PCI.

In another example, a NZP CSI-RS resource provided by the higher layer parameter NZP-CSI-RS-Resource could be configured with "useIndicatedr17TCIStatePCIindex." If the value of "useIndicatedr17TCIStatePCIindex" is set to n (or m) for a NZP CSI-RS resource, the NZP CSI-RS resource may share the indicated Rel .17 unified TCI state - e.g., indicated unified TCI state n (or m) provided by TCI-State_r17 - associated with PCI index n (or m). Alternatively, a NZP CSI-RS resource provided by the higher layer parameter NZP-CSI-RS-Resource could be configured with "useIndicatedr17TCIStatePCI." If the value of "useIndicatedr17TCIStatePCI" is set to a specific PCI value for a NZP CSI-RS resource, the NZP CSI-RS resource may share the indicated Rel .17 unified TCI state provided by TCI-State_r17 associated with the PCI value. For N=2 or M=2, if "useIndicatedr17TCIStatePCIindex"/"useIndicatedr17TCIStatePCI" is set to "enabled" for a NZP CSI-RS resource, the NZP CSI-RS resource may share the indicated Rel .17 unified TCI state provided by TCI-State_r17 associated with PCI index 0 (or 1) or the serving cell PCI. Otherwise, the NZP CSI-RS resource may share the indicated Rel .17 unified TCI state provided by TCI-State_r17 associated with PCI index 1 (or 0) or a PCI different from the serving cell PCI.

In yet another example, a NZP CSI-RS resource set provided by the higher layer parameter nzp-CSI-RS-ResourceSet could be configured with N>1 (or M>1) "useIndicatedr17TCIStatePCIindex" fields each associated with at least one NZP CSI-RS resource configured in the NZP CSI-RS resource set. If the value of a "useIndicatedr17TCIStatePCIindex" field indicated in a NZP CSI-RS resource set is set to n (or m), the NZP CSI-RS resource(s) associated with the "useIndicatedr17TCIStatePCIindex" field may share the indicated Rel .17 unified TCI state - e.g., indicated unified TCI state n (or m) provided by TCI-State_r17 - associated with PCI index n (or m).

Alternatively, a NZP CSI-RS resource set provided by the higher layer parameter nzp-CSI-RS-ResourceSet could be configured with N>1 (or M>1) "useIndicatedr17TCIStatePCI" fields each associated with at least one NZP CSI-RS resource configured in the NZP CSI-RS resource set. If the value of a "useIndicatedr17TCIStatePCI" field indicated in a NZP CSI-RS resource set is set to a specific PCI value, the NZP CSI-RS resource(s) associated with the "useIndicatedr17TCIStatePCI" field may share the indicated Rel .17 unified TCI state provided by TCI-State_r17 associated with the PCI value. For N=2 or M=2, if a "useIndicatedr17TCIStatePCIindex"/"useIndicatedr17TCIStatePCI" field in a NZP CSI-RS resource set is set to "enabled," the NZP CSI-RS resource(s) associated with the "useIndicatedr17TCIStatePCIindex"/"useIndicatedr17TCIStatePCIindex" field may share the indicated Rel .17 unified TCI state provided by TCI-State_r17 associated with PCI index 0 (or 1) or the serving cell PCI. Otherwise, the corresponding NZP CSI-RS resource may share the indicated Rel .17 unified TCI state provided by TCI-State_r17 associated with PCI index 1 (or 0) or a PCI different from the serving cell PCI.

In one embodiment for SRS, following examples can be provided.

In one example, an SRS resource set provided by the higher layer parameter SRS-ResourceSet could be configured with "useIndicatedr17TCIStatePCIindex." If the value of "useIndicatedr17TCIStatePCIindex" is set to n (or m) for a SRS resource set, the SRS resources configured in the corresponding SRS resource set may share the indicated Rel .17 unified TCI state - e.g., indicated unified TCI state n (or m) provided by TCI-State_r17 - associated with PCI index n (or m). Alternatively, an SRS resource set provided by the higher layer parameter SRS-ResourceSet could be configured with "useIndicatedr17TCIStatePCI." If the value of "useIndicatedr17TCIStatePCI" is set to a specific PCI value for a SRS resource set, the SRS resources configured in the corresponding SRS resource set may share the indicated Rel .17 unified TCI state provided by TCI-State_r17 associated with the PCI value. For N=2 or M=2, if "useIndicatedr17TCIStatePCIindex"/"useIndicatedr17TCIStatePCI" is set to "enabled" for a SRS resource set, the SRS resources configured in the corresponding SRS resource set may share the indicated Rel .17 unified TCI state provided by TCI-State_r17 associated with PCI index 1 (or 2) or the serving cell PCI. Otherwise, the SRS resources configured in the corresponding SRS resource set may share the indicated Rel .17 unified TCI state provided by TCI-State_r17 associated with PCI index 2 (or 1) or a PCI different from the serving cell PCI.

In another example, an SRS resource provided by the higher layer parameter SRS-Resource could be configured with "useIndicatedr17TCIStatePCIindex." If the value of "useIndicatedr17TCIStatePCIindex" is set to n (or m) for a SRS resource, the SRS resource may share the indicated Rel .17 unified TCI state - e.g., indicated unified TCI state n (or m) provided by TCI-State_r17 - associated with PCI index n (or m). Alternatively, an SRS resource provided by the higher layer parameter SRS-Resource could be configured with "useIndicatedr17TCIStatePCI." If the value of "useIndicatedr17TCIStatePCI" is set to a specific PCI value for a SRS resource, the SRS resource may share the indicated Rel .17 unified TCI state provided by TCI-State_r17 associated with the PCI value. For N=2 or M=2, if "useIndicatedr17TCIStatePCIindex"/"useIndicatedr17TCIStatePCI" is set to "enabled" for a SRS resource, the SRS resource may share the indicated Rel .17 unified TCI state provided by TCI-State_r17 associated with PCI index 0 (or 1) or the serving cell PCI. Otherwise, the SRS resource may share the indicated Rel .17 unified TCI state provided by TCI-State_r17 associated with PCI index 1 (or 0) or a PCI different from the serving cell PCI.

In yet another example, an SRS resource set provided by the higher layer parameter SRS-ResourceSet could be configured with N>1 (or M>1) "useIndicatedr17TCIStatePCIindex" fields each associated with at least one SRS resource configured in the SRS resource set. If the value of a "useIndicatedr17TCIStatePCIindex" field indicated in an SRS resource set is set to n (or m), the SRS resource(s) associated with the "useIndicatedr17TCIStatePCIindex" field may share the indicated Rel .17 unified TCI state - e.g., indicated unified TCI state n (or m) provided by TCI-State_r17 - associated with PCI index n (or m).

Alternatively, an SRS resource set provided by the higher layer parameter SRS-ResourceSet could be configured with N>1 (or M>1) "useIndicatedr17TCIStatePCI" fields each associated with at least one SRS resource configured in the SRS resource set. If the value of a "useIndicatedr17TCIStatePCI" field indicated in an SRS resource set is set to a specific PCI value, the SRS resource(s) associated with the "useIndicatedr17TCIStatePCI" field may share the indicated Rel .17 unified TCI state provided by TCI-State_r17 associated with the PCI value. For N=2 or M=2, if a "useIndicatedr17TCIStatePCIindex"/"useIndicatedr17TCIStatePCI" field in an SRS resource set is set to "enabled," the SRS resource(s) associated with the "useIndicatedr17TCIStatePCIindex"/"useIndicatedr17TCIStatePCIindex" field may share the indicated Rel .17 unified TCI state provided by TCI-State_r17 associated with PCI index 0 (or 1) or the serving cell PCI. Otherwise, the corresponding SRS resource may share the indicated Rel .17 unified TCI state provided by TCI-State_r17 associated with PCI index 1 (or 0) or a PCI different from the serving cell PCI.

In one embodiment, uplink power control for PUSCH under the unified TCI framework is provided for a multi-DCI based multi-TRP system and/or an inter-cell system comprising at least one PCI different from the serving cell PCI.

If a UE transmits a PUSCH on active UL BWP b of carrier $f$ of cell c using parameter set configuration with index j and PUSCH power control adjustment state with index 1, the UE determines the PUSCH transmission power $P_{PUSCH,b,f,c}$ $(i, j, q_{d,}\ l)$ in PUSCH transmission occasion i as:

$$P_{PUSCH,b,f,c}\ (i, j, q_{d,}\ l) = \min \left\{ \begin{array}{l} P_{CMAX,b,f,c}(i), \\ P_{O\_PUSCH,b,f,c}(j) + 10\log_{10}(2^{\mu} \cdot M_{RB,b,f,c}^{PUSCH}(i)) + \alpha_{b,f,c}(j) \cdot PL_{b,f,c}(q_d) + \Delta_{TF,b,f,c}(i) + f_{b,f,c}(i,\ l) \end{array} \right\}$$

[dBm] where in the present disclosure, a cell could correspond to a TRP associated with a CORESETPoolIndex value in a multi-DCI based multi-TRP system or a PCI in an inter-cell system, and (1) $P_{CMAX,b,f,c}(i)$ is the UE configured maximum output power defined in the 3GPP TS 38.101 for carrier f of cell c in PUSCH transmission occasion i; and (2) $P_{O\_PUSCH,b,f,c}$ $(j)$ is a parameter composed of the sum of a component $P_{O\_NOMIMAL.PUSCH,f,c}(j)$ and a component $P_{O\_UE\_PUSCH,b,f,c}(j)$ where $j \in \{0, 1, ... ,J-1\}$

For a PUSCH (re)transmission configured by the higher layer parameter ConfiguredGrantConfig, j=1, $P_{O\_NOMIMAL,PUSCH,f,c}(1)$ is provided by the higher layer parameter p0-NominalWithoutGrant, or $P_{O\_NOMIMAL,PUSCH,f,c}(1)$ = $P_{O\_NOMIMAL,PUSCH,f,c}(0)$ if p0-NominalWithoutGrant is not provided, $P_{O\_NOMIMAL,PUSCH,f,c}(1)$ is provided by $p_0$ indicated in p0-Alpha-CLID-PUSCH-set associated with the indicated unified TCI state c, which could be further associated with CORESETPoolIndex value c-1 and/or PCI index c, where c∈{1,..., N} or {1,..., M}.

$P_{O\_UE\_PUSCH,b,f,c}(1)$ is provided by $p_0$ indicated in p0-Alpha-CLID-PUSCH-set associated with the indicated unified TCI state c, which could be further associated with CORESETPoolIndex value c-1 and/or PCI index c, where c∈{1,..., N} or {1,..., M}.

For $j \in \{2, ... , J-1\}=S_J$, a $P_{O\_NOMINAL,PUSCH,f,c}(j)$ value, applicable for all $j \in S_j$, is provided by p0-NominalWithGrant, or $P_{O\_NOMINAL,PUSCH,f,c}(j)$ = $P_{O\_NOMINAL,PUSCH,f,c}(0)$ if p0-NominalWithGrant is not provided, for each carrier f of cell c. Furthermore, the UE could determine $P_{O\_UE\_PUSCH,f,c}(j)$ according to $p_0$ indicated in p0-Alpha-CLID-PUSCH-set associated with the indicated unified TCI state c, which could be further associated with CORESETPoolIndex value c-1 and/or PCI index c, where $c \in \{1,..., N\}$ or $\{1,..., M\}$.

For $\alpha_{b,f,c}(j)$: (1) for j=1, $\alpha_{b,f,c}(1)$ is provided by alpha indicated in p0-Alpha-CLID-PUSCH-set associated with the indicated unified TCI state c, which could be further associated with CORESETPoolIndex value c-1 and/or PCI index c, where $c \in \{1,..., N\}$ or $\{1,..., M\}$; and (2) for $j \in S_J$, the UE could determine a set of $\alpha_{b,f,c}(j)$ values from p0-Alpha-CLID-PUSCH-set associated with the indicated unified TCI state c, which could be further associated with CORESETPoolIndex value c-1 and/or PCI index c, where $c \in \{1,..., N\}$ or $\{1,..., M\}$.

For a DL pathloss estimate $PL_{b,f,c}(q_d)$ in dB calculated by the UE using RS index $q_d$ for the active DL BWP of carrier f of cell c, the UE could determine RS resource index $q_d$ providing a periodic RS resource configured with qcl-Type set to "typeD" in the indicated unified TCI state c, which could be further associated with CORESETPoolIndex value c-1 and/or PCI index c, where $c \in \{1,..., N\}$ or $\{1,..., M\}$.

For the PUSCH power control adjustment state $f_{b,f,c}(i,l)$ defined in the 3GPP TS 38.213 for active BWP b of carrier f of cell c in PUSCH transmission occasion i, the UE could determine the value $l \in \{0,1\}$ from p0-Alpha-CLID-PUSCH-set associated with the indicated unified TCI state c, which could be further associated with CORESETPoolIndex value c-1 and/or PCI index c, where $c \in \{1,..., N\}$ or $\{1,..., M\}$.

If the UE transmits a PUSCH associated with the RS resource index $q_d$ providing a periodic RS resource configured with qcl-Type set to "typeD" in the indicated unified TCI state c, the UE applies the $P_{O\_UE\_PUSCH,b,f,c}(j)$ value associated with the indicated unified TCI state c, the $\alpha_{b,f,c}(j)$ value associated with the indicated unified TCI state c, and $f_{b,f,c}(i,l)$ with the 1 value associated the indicated unified TCI state c for determining $P_{PUSCH,b,f,c}(i,j,q_d,l)$, wherein the indicated unified TCI state c could be further associated with CORESETPoolIndex value c-1 and/or PCI index c, where $c \in \{1,..., N\}$ or $\{1,..., M\}$.

In another example, UL TX spatial filter(s) for transmitting aperiodic SRS resources that are triggered by PDCCH(s) received in respective CORESETs associated/configured with CORESETPoolIndex value n - 1 (or m - 1) could be determined by or spatially related to reference signals provided in an indicated unified TCI state - e.g., the indicated unified TCI state n (or m) provided by TCI-State_r17 or DLorJointTCI-State or ULTCI-State - associated with CORESETPoolIndex value n - 1 (or m - 1). For example, the UE could use/apply the unified TCI state(s) indicated/provided by one or more TCI codepoints of one or more TCI fields in the beam indication DCI received in a CORESET associated/configured with a value of CORESET pool index or CORESETPoolIndex - e.g., 0 (or 1) for N=2 or M=2 - to transmit aperiodic SRS(s) that is triggered by PDCCH(s)/PDCCH candidate(s) received in CORESET(s) associated/configured with the same value of CORESET pool index or CORESETPoolIndex - e.g., 0 (or 1) for N=2 or M=2; i.e., the UL TX spatial filter(s) for transmitting the aperiodic SRS resource(s) that is triggered by PDCCH(s)/PDCCH candidate(s) received in CORESET(s) associated/configured with a value of CORESET pool index or CORESETPoolIndex - e.g., 0 (or 1) for N=2 or M=2 - could be determined by or spatially related to the reference signal(s)/reference signal set(s) provided/indicated in the unified TCI state(s) indicated/provided by one or more TCI codepoints of one or more TCI fields in the beam indication DCI received in a CORESET associated/configured with the same value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to transmit aperiodic SRS(s) that is triggered by PDCCH(s)/PDCCH candidate(s) received in CORESET(s) associated/configured with value 0 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to transmit aperiodic SRS(s) that is triggered by PDCCH(s)/PDCCH candidate(s) received in CORESET(s) associated/configured with value 1 of CORESET pool index or CORESETPoolIndex; i.e., the UL TX spatial filter(s) for transmitting the aperiodic SRS resource(s) that is triggered by PDCCH(s)/PDCCH candidate(s) received in CORESET(s) associated/configured with value 0 of CORESET pool index or CORESETPoolIndex could be determined by or spatially related to the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the UL TX filter(s) for transmitting the aperiodic SRS resource(s) that is triggered by PDCCH(s)/PDCCH candidate(s) received in CORESET(s) associated/configured with value 1 of CORESET pool index or CORESETPoolIndex could be determined by or spatially related to the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2.

In yet another example, UL TX spatial filter(s) for transmitting aperiodic SRS resources that are triggered by PDCCH(s)/PDCCH candidate(s) received in respective CORESETs associated/configured with CORESETPoolIndex value n - 1 (or m - 1) could be determined by or spatially related to reference signals provided in an indicated unified TCI state - e.g., the indicated unified TCI state n' (or m') provided by TCI-State_r17 or DLorJointTCI-State or ULTCI-State - associated with CORESETPoolIndex value n' - 1 (or m' - 1), wherein the value of n could be the same as or different from the value of n' and/or the value of m could be the same as or different from the value of m'; for this case, the UE could be indicated/provided/configured by the network, e.g., via higher layer RRC signaling/parameter and/or MAC CE command and/or dynamic DCI based L1 signaling, the mapping/association relationship between n and n', and/or, m and m'.

For example, the UE could use/apply the unified TCI state(s) indicated/provided by one or more TCI codepoints - e.g., associated with a first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2 - to transmit aperiodic SRS(s) that is triggered by PDCCH(s)/PDCCH candidate(s) received in CORESET(s) associated/configured with the first value of CORESET pool index or CORESETPoolIndex - e.g., 1 (or 0) for N=2 or M=2; i.e., the UL TX spatial filter(s) for transmitting aperiodic SRS resource(s) that is triggered by PDCCH(s)/PDCCH candidate(s) received in CORESET(s) associated/configured with a first value of CORESET pool index or CORESETPoolIndex - e.g., 1 (or 0) for N=2 or M=2 - could be determined by or spatially related to the reference signal(s)/reference signal set(s) provided/indicated in the unified TCI state(s) indicated/provided by one or more TCI codepoints - e.g., associated with the first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to transmit aperiodic SRS(s) that is triggered by PDCCH(s)/PDCCH candidate(s) received in CORESET(s) associated/configured with value 1 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to transmit aperiodic SRS(s) that is triggered by PDCCH(s)/PDCCH candidate(s) received in CORESET(s) associated/configured with value 0 of CORESET pool index or CORESETPoolIndex; i.e., the UL TX spatial filter(s) for transmitting the aperiodic SRS resource(s) that is triggered by PDCCH(s)/PDCCH candidate(s) received in CORESET(s) associated/configured with value 1 of CORESET pool index or CORESETPoolIndex could be determined by or spatially related to the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the UL TX spatial filter(s) for transmitting the aperiodic SRS resource(s) that is triggered by PDCCH(s)/PDCCH candidate(s) received in CORESET(s) associated/configured with value 0 of CORESET pool index or CORESETPoolIndex could be determined by or spatially related to the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2. The first value of CORESET pool index/CORESETPoolIndex could be the same as or different from the second value of CORESET pool index/CORESETPoolIndex.

In yet another example, UL TX spatial filter(s) for transmitting aperiodic SRS resources that are triggered by PDCCH(s)/PDCCH candidate(s) received in Type-I CORESETs - as described/specified herein in the present disclosure - associated/configured with CORESETPoolIndex value n - 1 (or m - 1) could be determined by or spatially related to reference signals provided in an indicated unified TCI state - e.g., the indicated unified TCI state n (or m) provided by TCI-State_r17 or DLorJointTCI-State or ULTCI-State - associated with CORESETPoolIndex value n - 1 (or m - 1); while, UL TX spatial filter(s) for transmitting aperiodic SRS resources that are triggered by PDCCH(s)/PDCCH candidate(s) received in Type-II CORESETs - as described/specified herein in the present disclosure - associated/configured with CORESETPoolIndex value n - 1 (or m - 1) could be determined by or spatially related to reference signals provided in an indicated Rel. 15/16 TCI state - e.g., an indicated TCI state n (or m) provided by TCI-State - associated with CORESETPoolIndex value n - 1 (or m - 1).

For example, the UE could use/apply the unified TCI state(s) indicated/provided by one or more TCI codepoints of one or more TCI fields in the beam indication DCI received in a CORESET associated/configured with a value of CORESET pool index or CORESETPoolIndex - e.g., 0 (or 1) for N=2 or M=2 - to transmit aperiodic SRS(s) that is triggered by PDCCH(s)/PDCCH candidate(s) received in Type-I CORESET(s) associated/configured with the same value of CORESET pool index or CORESETPoolIndex - e.g., 0 (or 1) for N=2 or M=2; i.e., the UL TX spatial filter(s) for transmitting the aperiodic SRS resource(s) that is triggered by PDCCH(s)/PDCCH candidate(s) received in Type-I CORESET(s) associated/configured with a value of CORESET pool index or CORESETPoolIndex - e.g., 0 (or 1) for N=2 or M=2 - could be determined by or spatially related to the reference signal(s)/reference signal set(s) provided/indicated in the unified TCI state(s) indicated/provided by one or more TCI codepoints of one or more TCI fields in the beam indication DCI received in a CORESET associated/configured with the same value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to transmit aperiodic SRS(s) that is triggered by PDCCH(s)/PDCCH candidate(s) received in Type-I CORESET(s) associated/configured with value 0 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to transmit aperiodic SRS(s) that is triggered by PDCCH(s)/PDCCH candidate(s) received in Type-I CORESET(s) associated/configured with value 1 of CORESET pool index or CORESETPoolIndex; i.e., the UL TX spatial filter(s) for transmitting the aperiodic SRS resource(s) that is triggered by PDCCH(s)/PDCCH candidate(s) received in Type-I CORESET(s) associated/configured with value 0 of CORESET pool index or CORESETPoolIndex could be determined by or spatially related to the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the UL TX spatial filter(s) for transmitting the aperiodic SRS resource(s) that is triggered by PDCCH(s)/PDCCH candidate(s) received in Type-I CORESET(s) associated/configured with value 1 of CORESET pool index or CORESETPoolIndex could be determined by or spatially related to the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2.

In yet another example, UL TX spatial filter(s) for transmitting aperiodic SRS resources that are triggered by PDCCH(s)/PDCCH candidate(s) received in Type-I CORESETs - as described/specified herein in the present disclosure - associated/configured with CORESETPoolIndex value n - 1 (or m - 1) could be determined by or spatially related to reference signals provided in an indicated unified TCI state - e.g., the indicated unified TCI state n' (or m') provided by TCI-State_r17 or DLorJointTCI-State or ULTCI-State - associated with CORESETPoolIndex value n' - 1 (or m' - 1); while, UL TX spatial filter(s) for transmitting aperiodic SRS resources that are triggered by PDCCH(s)/PDCCH candidate(s) received in Type-II CORESETs - as described/specified herein in the present disclosure - associated/configured with CORESETPoolIndex value n - 1 (or m - 1) could be determined by or spatially related to reference signals provided in an indicated Rel. 15/16 TCI state - e.g., an indicated TCI state n' (or m') provided by TCI-State - associated with CORESETPoolIndex value n' - 1 (or m' - 1), wherein the value of n could be the same as or different from the value of n' and/or the value of m could be the same as or different from the value of m'; for this case, the UE could be indicated/provided/configured by the network, e.g., via higher layer RRC signaling/parameter and/or MAC CE command and/or dynamic DCI based L1 signaling, the mapping/association relationship between n and n', and/or, m and m'.

For example, the UE could use/apply the unified TCI state(s) indicated/provided by one or more TCI codepoints - e.g., associated with a first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2 - to transmit aperiodic SRS(s) that is triggered by PDCCH(s)/PDCCH candidate(s) received in Type-I CORESET(s) associated/configured with the first value of CORESET pool index or CORESETPoolIndex - e.g., 1 (or 0) for N=2 or M=2; i.e., the UL TX spatial filter(s) for transmitting the aperiodic SRS resource(s) that is triggered by PDCCH(s)/PDCCH candidate(s) received in Type-I CORESET(s) associated/configured with a first value of CORESET pool index or CORESETPoolIndex - e.g., 1 (or 0) for N=2 or M=2 - could be determined by or spatially related to the reference signal(s)/reference signal set(s) provided/indicated in the unified TCI state(s) indicated/provided by one or more TCI codepoints - e.g., associated with the first value of CORESET pool index or CORESETPoolIndex, e.g., 1 (or 0) for N=2 or M=2, via the MAC CE activation command such as unified TCI states activation/deactivation MAC CE or enhanced unified TCI states activation/deactivation MAC CE - of one or more TCI fields in the beam indication DCI received in a CORESET associated/configured with a second value of CORESET pool index or CORESETPoolIndex - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to transmit aperiodic SRS(s) that is triggered by PDCCH(s)/PDCCH candidate(s) received in Type-I CORESET(s) associated/configured with value 1 of CORESET pool index or CORESETPoolIndex, and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to transmit aperiodic SRS(s) that is triggered by PDCCH(s)/PDCCH candidate(s) received in Type-I CORESET(s) associated/configured with value 0 of CORESET pool index or CORESETPoolIndex; i.e., the UL TX spatial filter(s) for transmitting the aperiodic SRS resource(s) that is triggered by PDCCH(s)/PDCCH candidate(s) received in Type-I CORESET(s) associated/configured with value 1 of CORESET pool index or CORESETPoolIndex could be determined by or spatially related to the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the UL TX spatial filter(s) for transmitting the aperiodic SRS resource(s) that is triggered by PDCCH(s)/PDCCH candidate(s) received in Type-I CORESET(s) associated/configured with value 0 of CORESET pool index or CORESETPoolIndex could be determined by or spatially related to the reference signal(s)/reference signal set(s) provided/indicated in the second (or first) unified TCI state(s) indicated/provided by the TCI codepoint of the TCI field in the beam indication DCI received in the CORESET associated/configured with a value of CORESET pool index or CORESETPoolIndex - e.g., 0 (or 1) for N=2 or M=2. The first value of CORESET pool index/CORESETPoolIndex could be the same as or different from the second value of CORESET pool index/CORESETPoolIndex.

In yet another example, the UE could be configured/provided/indicated by the network, e.g., via higher layer RRC signaling and/or MAC CE command and/or dynamic DCI based L1 signaling, a first set/group of SRS resources and/or a second set/group of SRS resources, wherein the first set/group of SRS resources and the second set/group of SRS resources could be configured/provided in an SRS resource setting, an SRS resource set or a trigger state. Furthermore, the first set/group of SRS resources could be associated with value 0 (or 1) of CORESET pool index or CORESETPoolIndex - e.g., based on a fixed rule in the system specifications and/or by providing/indicating/configuring the corresponding value of CORESET pool index/CORESETPoolIndex in the higher layer parameter that configures the first set/group of SRS resources, and the second set/group of SRS resources could be associated with value 1 (or 0) of CORESET pool index or CORESETPoolIndex - e.g., based on a fixed rule in the system specifications and/or by providing/indicating/configuring the corresponding value of CORESET pool index/CORESETPoolIndex in the higher layer parameter that configures the second set/group of SRS resources.

For example, when/if the first set/group of SRS resources is configured with "followUnifiedTCIState" - e.g., set to "enabled," the SRS resources configured in the first set/group could share/follow the indicated unified TCI state provided by TCI-State_r17 or DLorJointTCIState or ULTCI-State associated with CORESETPoolIndex value 0 (or 1). When/if the second set/group of SRS resources is configured with "followUnifiedTCIState" - e.g., set to "enabled," the SRS resources configured in the second set/group could share/follow the indicated unified TCI state provided by TCI-State_r17 or DLorJointTCIState or ULTCIState associated with CORESETPoolIndex value 1 (or 0).

For another example, the UE could use/apply the unified TCI state(s) indicated/provided by one or more TCI codepoints of one or more TCI fields in the beam indication DCI received in a CORESET associated/configured with a value of CORESET pool index or CORESETPoolIndex - e.g., 0 (or 1) for N=2 or M=2 - to transmit SRS(s) in a set/group of SRS resources - e.g., the first (or second) set/group of SRS resources - associated with the same value of CORESET pool index or CORESETPoolIndex - e.g., 0 (or 1) for N=2 or M=2, where the the set/group of SRS resources could be higher layer configured with "followUnifiedTCIstate" - e.g., set to "enabled"; i.e., the UL TX spatial filer(s) for transmitting the SRS(s) in a set/group of SRS resources - e.g., the first (or second) set/group of SRS resources - associated with a value of CORESET pool index or CORESETPoolIndex - e.g., 0 (or 1) for N=2 or M=2 - could be determined by or spatially related to the reference signal(s)/reference signal set(s) provided/indicated in the unified TCI state(s) indicated/provided by one or more TCI codepoints of one or more TCI fields in the beam indication DCI received in a CORESET associated/configured with the same value of CORESET pool index or CORESETPoolIndex associated to the set/group of NZP CSI-RS resources - e.g., 0 (or 1) for N=2 or M=2.

For another example, the UE could use/apply the first (or second) unified TCI state(s) indicated/provided by a TCI codepoint in a TCI field in the beam indication DCI received in a CORESET associated/configured with a value of CORESET pool index or CORESETPoolIndex - e.g., 0 or 1 for N=2 or M=2 - to transmit SRS(s) in first set/group of SRS resources configured with the higher layer parameter "followUnifiedTCIsstate" - e.g., set to "enabled," and the second (or first) unified TCI state(s) indicated/provided by the TCI codepoint in the TCI field in the beam indication DCI received in the CORESET associated/configured with a value of CORESET pool index or CORESETPoolIndex - e.g., 0 or 1 for N=2 or M=2 - to transmit SRS(s) in the second set/group of SRS resources configured with the higher layer parameter "followUnifiedTCIsstate" - e.g., set to "enabled"; i.e., the UL TX spatial filter(s) for transmitting the SRS(s) in the first set/group of SRS resources configured with the higher layer parameter "followUnifiedTCIsstate" - e.g., set to "enabled" - could be determined by or spatially related to the reference signal(s)/reference signal set(s) provided/indicated in the first (or second) unified TCI state(s) indicated/provided by a TCI codepoint of a TCI field in the beam indication DCI received in a CORESET associated/configured with a value of CORESET pool index or CORESETPoolIndex - e.g., 0 (or 1) for N=2 or M=2, and the UL TX spatial filter(s) for transmitting the SRS(s) in the second set/group of SRS resources configured with the higher layer parameter "followUnifiedTCIsstate" - e.g., set to "enabled" - could be determined by or spatially related to the reference signal(s)/reference signal set(s) provided/indicated in the second (or first) unified TCI state(s) indicated/-

provided by the TCI codepoint of the TCI field in the beam indication DCI received in the CORESET associated/configured with a value of CORESET pool index or CORESETPoolIndex - e.g., 0 (or 1) for N=2 or M=2.

For semi-persistent scheduling (SPS) PDSCH transmission(s), the UE could be first higher layer provided/-configured/indicated by the network, e.g., in the higher layer parameter (e.g., SPS-Config) that configures the corresponding SPS PDSCH transmission(s), a value of CORESET pool index/CORESETPoolIndex (e.g., 0 or 1). The UE could follow the design examples specified herein in the present disclosure (e.g., replacing PDCCH(s)/PDCCH(s) received in CORESET(s) associated/configured with a value of CORESETPoolIndex with SPS PDSCH transmission(s) associated/configured with a value of CORESETPoolIndex) to determine the association between the indicated TCI state(s) and the SPS PDSCH transmission(s) via their association with the corresponding CORESETPoolIndex value(s). The UE could then use/apply the indicated TCI state(s) to receive the corresponding SPS PDSCH(s).

For semi-persistent scheduling (SPS) PDSCH reception(s), following examples can be provided.

In one example, the UE could be first higher layer provided/configured/indicated by the network, e.g., in the higher layer parameter (e.g., SPS-Config) that configures the corresponding SPS PDSCH(s), a value of CORESET pool index/CORESETPoolIndex (e.g., 0 or 1). The UE could follow the design examples specified herein in the present disclosure (e.g., by replacing PDCCH(s)/PDCCH(s) received in CORESET(s) associated/configured with a value of CORESETPoolIndex with SPS PDSCH reception(s) associated/configured with a value of CORESETPoolIndex) to determine the association between the indicated TCI state(s) and the SPS PDSCH reception(s) via their association with the corresponding CORESETPoolIndex value(s). The UE could then use/apply the indicated TCI state(s) to receive the corresponding SPS PDSCH(s).

In another example, the UE could (always) use/apply the unified TCI state(s) indicated/provided by one or more TCI codepoints of one or more TCI fields in the beam indication DCI received in a CORESET associated/configured with value 0 of CORESET pool index/CORESETPoolIndex to receive the SPS PDSCH(s).

In yet another example, the UE could (always) use/apply the unified TCI state(s) indicated/provided by one or more TCI codepoints of one or more TCI fields in the beam indication DCI received in a CORESET associated/configured with value 1 of CORESET pool index/CORESETPoolIndex to receive the SPS PDSCH(s).

In yet another example, the UE could (always) use/apply the unified TCI states indicated/provided by one or more TCI codepoints of one or more TCI fields in the beam indication DCIs received in CORESETs associated/configured with values 0 and 1 of CORESET pool indexes/CORESETPoolIndex to respectively receive the SPS PDSCH(s).

For periodic PUCCH transmission(s), following examples can be provided.

In one example, the UE could be first higher layer provided/configured/indicated by the network, e.g., in the higher layer parameter (e.g., PUCCH-Config) that configures the corresponding periodic PUCCH(s), a value of CORESET pool index/CORESETPoolIndex (e.g., 0 or 1). The UE could follow the design examples specified herein in the present disclosure (e.g., by replacing PDCCH(s)/PDCCH(s) received in CORESET(s) associated/configured with a value of CORESETPoolIndex with periodic PUCCH transmission(s) associated/configured with a value of CORESETPoolIndex) to determine the association between the indicated TCI state(s) and the periodic PUCCH transmission(s) via their association with the corresponding CORESETPoolIndex value(s). The UE could then use/apply the indicated TCI state(s) to transmit the corresponding periodic PUCCH(s).

In another example, the UE could (always) use/apply the unified TCI state(s) indicated/provided by one or more TCI codepoints of one or more TCI fields in the beam indication DCI received in a CORESET associated/configured with value 0 of CORESET pool index/CORESETPoolIndex to transmit the periodic PUCCH(s).

In yet another example, the UE could (always) use/apply the unified TCI state(s) indicated/provided by one or more TCI codepoints of one or more TCI fields in the beam indication DCI received in a CORESET associated/configured with value 1 of CORESET pool index/CORESETPoolIndex to transmit the periodic PUCCH(s).

In yet another example, the UE could (always) use/apply the unified TCI states indicated/provided by one or more TCI codepoints of one or more TCI fields in the beam indication DCIs received in CORESETs associated/configured with values 0 and 1 of CORESET pool indexes/CORESETPoolIndex to respectively transmit the periodic PUCCH(s).

For configured-grant (CG) PUSCH transmission(s) - e.g., type1 CG-PUSCH (uplink grant is configured via RRC) or type2 CG-PUSCH (uplink grant is provided via the PDCCH addressed to CS-RNTI), following examples can be provided.

In one example, the UE could be first higher layer provided/configured/indicated by the network, e.g., in the higher layer parameter (e.g., ConfiguredGrantConfig) that configures the corresponding CG-PUSCH(s), a value of CORESET pool index/CORESETPoolIndex (e.g., 0 or 1). The UE could follow the design examples specified herein in the present disclosure (e.g., by replacing PDCCH(s)/PDCCH(s) received in CORESET(s) associated/configured with a value of CORESETPoolIndex with CG-PUSCH transmission(s) associated/configured with a value of CORESETPoolIndex) to determine the association between the indicated TCI state(s) and the CG-PUSCH transmission(s) via their association with the corresponding CORESETPoolIndex value(s). The UE could then use/apply the indicated TCI state(s) to transmit the corresponding CG-PUSCH(s).

In another example, the UE could (always) use/apply the unified TCI state(s) indicated/provided by one or more TCI codepoints of one or more TCI fields in the beam indication DCI received in a CORESET associated/configured with value 0 of CORESET pool index/CORESETPoolIndex to transmit the CG-PUSCH(s).

In yet another example, the UE could (always) use/apply the unified TCI state(s) indicated/provided by one or more TCI codepoints of one or more TCI fields in the beam indication DCI received in a CORESET associated/configured with value 1 of CORESET pool index/CORESETPoolIndex to transmit the CG-PUSCH(s).

In yet another example, the UE could (always) use/apply the unified TCI states indicated/provided by one or more TCI codepoints of one or more TCI fields in the beam indication DCIs received in CORESETs associated/configured with values 0 and 1 of CORESET pool indexes/CORESETPoolIndex to respectively transmit the CG-PUSCH(s).

The design examples specified herein in the present disclosure could be applied to an inter-cell system - wherein one or more PCIs other than the serving cell PCI can be configured - via the association between CORESETPoolIndex value(s) and PCI(s)/PCI index(es).

Under the Rel. 17 unified TCI framework, wherein a UE could be provided by the network one or more separate/joint DL or UL TCI state for various DL or UL channels/signals, various design aspects related to beam indication for control resource sets (CORESETs) especially CORESET with index 0 need to be specified.

This disclosure considers various design aspects/enhancements related to beam indication for CORESETs in a multi-TRP system or an inter-cell system wherein at least a PCI different from the serving cell PCI is deployed under the Rel. 17 unified TCI framework.

The unified (master or main) TCI state is TCI state of UE-dedicated reception on PDSCH/PDCCH or dynamic-grant/configured-grant based PUSCH and all of dedicated PUCCH resources.

In this disclosure, the TCI state/beam indication for the PUSCH(s)/PUCCH(s) repetition in a multi-TRP system is discussed under the Rel. 17 unified TCI framework, wherein one or more DL/UL TCI states could be separately/jointly indicated in various channels such as MAC CE and/or DCI (e.g., DCI format 1_1 or 1_2 with or without DL assignment). The UE could transmit the same PUSCH(s)/PUCCH(s) to different TRPs in the multi-TRP system using different time domain resources and/or different frequency domain resources and/or different spatial domain filters.

As illustrated in FIGURE 9, an example of MAC CE based Rel. 17 unified TCI state/beam indication for the multi-TRP operation is presented. As illustrated in FIGURE 9, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE commands to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single MAC CE command for beam indication to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system.

The MAC CE for beam indication could include at least a Rel. 17 unified TCI state ID. As discussed above, the Rel.17 unified TCI state corresponding to the TCI state ID could be at least one of: (1) A DL TCI state; (2) An UL TCI state; (3) A joint DL and UL TCI state; and (4) separate DL TCI state and UL TCI state.

The association/mapping between the TCI state(s)/beam(s) indicated in the MAC CE command(s) and the TRPs in the multi-TRP system needs to be specified. There could be various means to associate/map the TCI state(s)/beam(s) indicated in the MAC CE command(s) for beam indication and the TRPs in the multi-TRP system. For N>1 TCI states/beams indication in a single MAC CE command for beam indication, following examples can be provided.

In one example, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the MAC CE command for beam indication could correspond to the first entry/TRP in the list/set/pool of TRP-specific ID/index values, the second TCI state and/or the TCI state with the second lowest TCI state ID value indicated in the MAC CE command for beam indication could correspond to the second entry/TRP in the list/set/pool of TRP-specific ID/index values, and so on, and the last TCI state and/or the TCI state with the highest TCI state ID value indicated in the MAC CE command for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the MAC CE command for beam indication could correspond to the first MAC CE(s)/bitmap(s) activated TRP-specific ID/index value, the second TCI state and/or the TCI state with the second lowest TCI state ID value indicated in the MAC CE command for beam indication could correspond to the second MAC CE(s)/bitmap(s) activated TRP-specific ID/index value, and so on, and the last TCI state and/or the TCI state with the highest TCI state ID value indicated in the MAC CE command for beam indication could correspond to the last MAC CE(s)/bitmap(s) activated TRP-specific ID/index value.

Other exact association/mapping relationships between the TCI states/beams indicated in the MAC CE command for beam indication and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the TCI states/beams indicated in the MAC CE command for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the MAC CE command for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the MAC CE command for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the MAC CE command for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the MAC CE command for beam indication could correspond to the TRP with the highest/highest MAC CE activated TRP-specific ID/index value such as the highest PCI value and/or the last TRP (e.g., TRP #N), the second TCI state and/or the TCI state with the second lowest TCI state ID value indicated in the MAC CE command for beam indication could correspond to the TRP with the second highest/second highest MAC CE activated TRP-specific ID/index value such as the second highest PCI value and/or the second last TRP (e.g., TRP #N-1), and so on, and the last TCI state and/or the TCI state with the highest TCI state ID value indicated in the MAC CE command for beam indication could correspond to the TRP with the lowest/lowest MAC CE activated TRP-specific ID/index value such as the lowest PCI value and/or the first TRP (e.g., TRP #1). Other implicit indication methods of the association/mapping between the N>1 TCI states/beams indicated in the MAC CE command for beam indication and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the MAC CE command for beam indication could correspond to the first entry/CORESETPoolIndex value in the list/set/pool of CORESETPoolIndex values, the second TCI state and/or the TCI state with the second lowest TCI state ID value indicated in the MAC CE command for beam indication could correspond to the second entry/CORESETPoolIndex value in the list/set/pool of CORESETPoolIndex values, and so on, and the last TCI state and/or the TCI state with the highest TCI state ID value indicated in the MAC CE command for beam indication could correspond to the last entry/CORESETPoolIndex value in the list/set/pool of CORESETPoolIndex values. For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values.

The first TCI state and/or the TCI state with the lowest TCI state ID value indicated in the MAC CE command for beam indication could correspond to the first MAC CE(s)/bitmap(s) activated CORESETPoolIndex value, the second TCI state and/or the TCI state with the second lowest TCI state ID value indicated in the MAC CE command for beam indication could correspond to the second MAC CE(s)/bitmap(s) activated CORESETPoolIndex value, and so on, and the last TCI state and/or the TCI state with the highest TCI state ID value indicated in the MAC CE command for beam indication could correspond to the last MAC CE(s)/bitmap(s) activated CORESETPoolIndex value. Other exact association/mapping relationships between the TCI states/beams indicated in the MAC CE command for beam indication and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the TCI states/beams indicated in the MAC CE command for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values.

For example, the first TCI state and/or the TCI state with the lowest TCI state ID value indicated in the MAC CE command for beam indication could correspond to the lowest/lowest MAC CE activated CORESETPoolIndex value such as "0," the second TCI state and/or the TCI state with the second lowest TCI state ID value indicated in the MAC CE command for beam indication could correspond to the second lowest/second lowest MAC CE activated CORESETPoolIndex value such as "1," and so on, and the last TCI state and/or the TCI state with the highest TCI state ID value indicated in the MAC CE command for beam indication could correspond to the highest/highest MAC CE activated CORESETPoolIndex value such as "N-1."

For another example, the first TCI state and/or the TCI state with the lowest TCI state ID value indicated in the MAC CE command for beam indication could correspond to the highest/highest MAC CE activated CORESETPoolIndex value such as "N-1," the second TCI state and/or the TCI state with the second lowest TCI state ID value indicated in the MAC CE command for beam indication could correspond to the second highest/second highest MAC CE activated CORESETPoolIndex value such as "N-2," and so on, and the last TCI state and/or the TCI state with the highest TCI state ID value indicated in the MAC CE command for beam indication could correspond to the lowest/lowest MAC CE activated CORESETPoolIndex value such as "0." Other implicit indication methods of the association/mapping between the N>1 TCI states/beams indicated in the MAC CE command for beam indication and the CORESETPoolIndex values are also possible.

In yet another example, a TCI state, e.g., the higher layer parameter TCI-State, indicated in the MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the MAC CE command for Rel. 17 unified TCI state/beam indication could include/-comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same MAC CE command for Rel. 17 unified TCI state/beam indication, where $n \in \{1,..., N\}$ or $m \in \{1,..., M\}$.

For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same MAC CE command for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same MAC CE command for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For a list/set/pool of N>1 MAC CE commands for beam indication with each MAC CE command indicating a single TCI state/beam; a unique entity ID/index could be included/incorporated in each MAC CE command for beam indication:

In one example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of TRP-specific ID/index values such as PCIs. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/TRP in the list/set/pool of TRP-specific ID/index values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/TRP in the list/set/pool of TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/TRP in the list/set/pool of TRP-specific ID/index values. For another example, the UE could be first higher layer configured by the network a list/set/pool of TRP-specific ID/index values such as PCIs.

The UE could then receive from the network one or more MAC CE activation commands/bitmaps to activate one or more TRP-specific ID/index values from the higher layer configured list/set/pool of TRP-specific ID/index values. The first MAC CE command for beam indication in the list/set/pool of N>1 MAC CE commands for beam indication and/or the MAC CE command indicating the lowest entity ID/index value and/or the MAC CE command for beam indication indicating the TCI state with the lowest TCI state ID value could correspond to the first MAC CE(s)/bitmap(s) activated TRP-specific ID/index values, the second MAC CE command for beam indication in the list/set/pool of N>1 MAC CE commands for beam indication and/or the MAC CE command for beam indication indicting the second lowest entity ID/index value and/or the MAC CE command for beam indication indicating the TCI state with the second lowest TCI state ID value could correspond to the second MAC CE(s)/bitmap(s) activated TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated TRP-specific ID/index values. Other exact association/mapping relationships between the MAC CE commands for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the MAC CE commands for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the lowest/lowest MAC CE activated TRP-specific ID/index value such as the lowest PCI value and/or the first TRP (e.g., TRP #1), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the TRP with the highest/highest MAC CE activated TRP-specific ID/index value such as the highest PCI value and/or the last TRP (e.g., TRP #N).

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the highest/highest MAC CE activated TRP-specific ID/index value such as the highest PCI value and/or the last TRP (e.g., TRP #N), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second highest/second highest MAC CE activated TRP-specific ID/index value such as the second highest PCI value and/or the second last TRP (e.g., TRP #N-1), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the TRP with the lowest/lowest MAC CE activated TRP-specific ID/index value such as the lowest PCI value and/or the first TRP (e.g., TRP #1). Other implicit indication methods of the association/mapping between the N>1 MAC CE commands for beam indication (and therefore, the TCI states/beams indicated therein) and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of CORESETPoolIndex values - e.g., a set of two CORESETPoolIndex values 0 and 1. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/CORESETPoolIndex value in the list/set/pool of CORESETPoolIndex values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/CORESETPoolIndex value in the list/set/pool of CORESETPoolIndex values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first MAC CE(s)/bitmap(s) activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second MAC CE(s)/bitmap(s) activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated CORESETPoolIndex value. Other exact association/mapping relationships between the MAC CE commands for beam indication (and therefore, the TCI states/beams indicated therein) and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the MAC CE commands for beam indication (and therefore, the TCI states/beams indicated therein) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values.

For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the lowest/lowest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second lowest/second lowest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the highest/highest MAC CE activated CORESETPoolIndex value.

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the highest/highest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second highest/second highest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the lowest/lowest MAC CE activated CORESETPoolIndex value. Other implicit indication methods of the association/mapping between the N>1 MAC CE commands for beam indication (and therefore, the TCI states/beams indicated therein) and the CORESETPoolIndex values are also possible.

In yet another example, a MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The MAC CE command for beam indication would indicate/update the corresponding TCI state(s) for the TRP(s) associated with the same ID/index value, e.g., the CORESETPoolIndex value, as that indicated in the MAC CE command for beam indication.

In yet another example, a MAC CE command for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same MAC CE command for Rel. 17 unified TCI state/beam indication, where n∈{1,..., N} or m∈{1,..., M}.

For one instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same MAC CE command for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same MAC CE command for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

In FIGURE 10, an example of DCI based Rel. 17 unified TCI state/beam indication for the multi-TRP operation is presented. As illustrated in FIGURE 10, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more DCIs (e.g., DCI format 1_1 or 1_2 with or without DL assignment) to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI (e.g., DCI format 1_1 or 1_2 with or without DL assignment) to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system.

As described above, a DCI used to indicate to the UE a beam (i.e., a TCI state and/or a TCI state ID) for the transmission/reception of a PDCCH or a PDSCH could be at least one of the following.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet in another example, a custom/purpose designed DCI format could be used to indicate to the UE a beam (i.e., a TCI state and/or a TCI state ID) for the transmission/reception of a PDCCH or a PDSCH

Furthermore, the Rel. 17 unified TCI state indicated in the DCI for beam indication could be at least one of: (1) a DL TCI state; (2) an UL TCI state; (3) a joint DL and UL TCI state; and (4) separate DL TCI state and UL TCI state.

In yet another example, the DCI (e.g., DCI format 1_1 or 1_2 with or without DL assignment) for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same DCI (e.g., DCI format 1_1 or 1_2 with or without DL assignment) for Rel. 17 unified TCI state/beam indication, where n∈{1,..., N} or m∈{1,..., M}.

For one instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For N>1 DCIs with each DCI indicating a single TCI state/beam, following examples can be provided.

In yet another example, a DCI (e.g., DCI format 1_1 or 1_2 with or without DL assignment) for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same DCI (e.g., DCI format 1_1 or 1_2 with or without DL assignment) for Rel. 17 unified TCI state/beam indication, where $n \in \{1,..., N\}$ or $m \in \{1,..., M\}$.

For one instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

In FIGURE 11, an example of Rel. 17 DCI based TCI state/beam indication (with MAC CE activated TCI states) for the multi-TRP operation is presented. As illustrated in FIGURE 11, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE activation commands activating one or more TCI states from the higher layer configured list/pool of TCI states, e.g., up to eight TCI states could be activated by a MAC CE activation command. The UE could receive from the network one or more DCIs to indicate one or more beam(s) (i.e., the Rel. 17 unified TCI state(s)) from the MAC CE activated TCI state(s)/beam(s) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI to indicate M'>1 Rel. 17 unified TCI states/beams (e.g., M'>1 joint DL and UL TCI states or M'>1 separate UL TCI states) from the MAC CE activated TCI states/beams for the same PUSCH(s)/PUCCH(s) transmitted to/associated with different TRPs in the multi-TRP system.

As described above, a DCI used to indicate to the UE a beam (i.e., a TCI state and/or a TCI state ID) for the transmission/reception of a PDCCH or a PDSCH could be at least one of the following.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet in another example, a custom/purpose designed DCI format could be used to indicate to the UE a beam (i.e., a TCI state and/or a TCI state ID) for the transmission/reception of a PDCCH or a PDSCH.

Furthermore, the Rel. 17 unified TCI state indicated in the DCI for beam indication could be at least one of: (1) a DL TCI state; (2) an UL TCI state; (3) a joint DL and UL TCI state; and (4) separate DL TCI state and UL TCI state.

In yet another example, the DCI (e.g., DCI format 1_1 or 1_2 with or without DL assignment) for Rel. 17 unified TCI state/beam indication could include/comprise/incorporate at least one (e.g., N'>1 or M'>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n'-th or m'-th TCI state (e.g., the n'-th or m'-th joint DL and UL TCI state or separate DL TCI state or separate UL TCI state) among/within the indicated N'>1 or M'>1 Rel. 17 unified TCI states (selected from the MAC CE activated TCI states/beams) could be associated with the n'-th or m'-th entity ID/index indicated in the same DCI (e.g., DCI format 1_1 or 1_2 with or without DL assignment) for Rel. 17 unified TCI state/beam indication, where n'∈{1,..., N'} or m'∈ {1,..., M'}.

For one instance, the first TCI state in the indicated N'=2 or M'=2 Rel. 17 unified TCI states selected from the MAC CE activated TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N'=2 or M'=2 Rel. 17 unified TCI states selected from the MAC CE activated TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

In yet another example, a DCI (e.g., DCI format 1_1 or 1_2 with or without DL assignment) for Rel. 17 unified TCI state/beam indication could include/comprise/incorporate at least one (e.g., N'>1 or M'>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n'-th or m'-th TCI state (e.g., the n'-th or m'-th joint DL and UL TCI state or separate DL TCI state or separate UL TCI state) among/within the indicated N'>1 or M'>1 Rel. 17 unified TCI states (selected from the MAC CE activated TCI states/beams) could be associated with the n'-th or m'-th entity ID/index indicated in the same DCI (e.g., DCI format 1_1 or 1_2 with or without DL assignment) for Rel. 17 unified TCI state/beam indication, where n'∈{1,..., N'} or m'∈{1,..., M'}.

For one instance, the first TCI state in the indicated N'=2 or M'=2 Rel. 17 unified TCI states selected from the MAC CE activated TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N'=2 or M'=2 Rel. 17 unified TCI states selected from the MAC CE activated TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

In a single-DCI (sDCI) based multi-TRP system, if a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate DL Rel. 17 unified TCI states and separate UL Rel. 17 unified TCI states via MAC CE or DCI (e.g., DCI format 1_1 or 1_2 with or without DL assignment) based signaling.

In one example, a DM-RS antenna port for PDCCH receptions in a CORESET associated only with USS sets, and a DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in one or more of the indicated Rel. 17 unified TCI states.

For example, the DM-RS antenna port for PDCCH receptions in the CORESET associated only with USS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID; alternatively, the DM-RS antenna port for PDCCH receptions in the CORESET associated only with USS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

For another example, the UE could be provided by the network, e.g., via higher layer RRC signalling/parameter and/or MAC CE command and/or dynamic DCI based L1 signaling, an index corresponding/pointing to a TCI state among/within the indicated M>1 or N>1 Rel. 17 unified TCI states for a CORESET associated only with USS sets. If the UE is provided by the network, e.g., via higher layer RRC signalling/parameter and/or MAC CE command and/or dynamic DCI based L1 signaling, a TCI state index m (m∈{1,..., M}) or n (n∈{1,..., N}) for the CORESET, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

Yet for another example, the UE could be provided by the network, e.g., via higher layer RRC signalling and/or MAC CE command and/or dynamic DCI based L1 signaling, a higher layer parameter useIndicatedr17TCIState or a TCI state ID for a CORESET associated only with USS sets. If the useIndicatedr17TCIstate is enabled or the TCI state ID corresponds/points to the indicated Rel. 17 unified TCI state(s), the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions are quasi co-located with or spatially related to reference signals provided in one or more of the indicated Rel. 17 unified TCI states.

For this case, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID; alternatively, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

Yet for another example, the UE could be provided by the network, e.g., via higher layer RRC signalling/parameter and/or MAC CE command and/or dynamic DCI based L1 signaling, a higher layer parameter useIndicatedr17TCIState or a TCI state ID for a CORESET associated only with USS sets. Furthermore, the UE could also be provided by the network, e.g., via higher layer RRC signalling/parameter and/or MAC CE command and/or dynamic DCI based L1 signaling, an index corresponding/pointing to a TCI state among/within the indicated M>1 or N>1 Rel. 17 unified TCI states for the CORESET. If the useIndicatedr17TCIstate is enabled or the TCI state ID corresponds/points to the indicated Rel. 17 unified TCI state(s), the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions are quasi co-located with or spatially related to reference signals provided in one or more of the indicated Rel. 17 unified TCI states. For this case, if the UE is provided by the network, e.g., via higher layer RRC signalling/parameter and/or MAC CE command and/or dynamic DCI based L1 signaling, a TCI state index m ($m \in \{1,..., M\}$) or n ($n \in \{1,..., N\}$) for the CORESET, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

Yet for another example, the DM-RS antenna port for PDCCH receptions in the CORESET associated only with USS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in one or more of the indicated Rel. 17 unified TCI states if the CORESET and the one or more of the indicated Rel. 17 unified TCI states are associated with a same entity ID/index. In the present disclosure, the entity ID/index could correspond to a PCI value, a PCI index corresponding/pointing to a PCI value in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. The association between a CORESET and an entity ID/index could be via indicating/including the entity ID/index in the parameter, e.g., the higher layer parameter ControlResourceSet, that configures the CORESET. The association between a Rel. 17 unified TCI state and an entity ID/index could follow those specified in the above discussed design examples in the present disclosure.

In another example, a DM-RS antenna port for PDCCH receptions in a CORESET associated only with CSS sets such as Type0/0A/1/2/3-PDCCH CSS sets, and a DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in one or more of the indicated Rel. 17 unified TCI states.

For example, the DM-RS antenna port for PDCCH receptions in the CORESET associated only with CSS sets such as Type0/0A/1/2/3-PDCCH CSS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID; alternatively, the DM-RS antenna port for PDCCH receptions in the CORESET associated only with CSS sets such as Type0/0A/1/2/3-PDCCH CSS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

For another example, the UE could be provided by the network, e.g., via higher layer RRC signalling/parameter and/or MAC CE command and/or dynamic DCI based L1 signaling, an index corresponding/pointing to a TCI state among/within the indicated M>1 or N>1 Rel. 17 unified TCI states for a CORESET associated only with CSS sets such as Type0/0A/1/2/3-PDCCH CSS sets. If the UE is provided by the network, e.g., via higher layer RRC signalling/parameter and/or MAC CE command and/or dynamic DCI based L1 signaling, a TCI state index m ($m \in \{1,..., M\}$) or n ($n \in \{1,..., N\}$) for the CORESET, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

Yet for another example, the UE could be provided by the network, e.g., via higher layer RRC signalling/parameter and/or MAC CE command and/or dynamic DCI based L1 signaling, a higher layer parameter useIndicatedr17TCIState or a TCI state ID for a CORESET associated only with CSS sets such as Type0/0A/1/2/3-PDCCH CSS sets. If the useIndicatedr17TCIstate is enabled or the TCI state ID corresponds/points to the indicated Rel. 17 unified TCI state(s), the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/-PUSCH transmissions are quasi co-located with or spatially related to reference signals provided in one or more of the indicated Rel. 17 unified TCI states.

For this case, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID; alternatively, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

Yet for another example, the UE could be provided by the network, e.g., via higher layer RRC signalling/parameter and/or MAC CE command and/or dynamic DCI based L1 signaling, a higher layer parameter useIndicatedr17TCIState or a TCI state ID for a CORESET associated only with CSS sets such as Type0/0A/1/2/3-PDCCH CSS sets. Furthermore, the UE could also be provided by the network, e.g., via higher layer RRC signalling/parameter and/or MAC CE command and/or dynamic DCI based L1 signaling, an index corresponding/pointing to a TCI state among/within the indicated M>1 or N>1 Rel. 17 unified TCI states for the CORESET. If the useIndicatedr17TCIstate is enabled or the TCI state ID corresponds/points to the indicated Rel. 17 unified TCI state(s), the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in one or more of the indicated Rel. 17 unified TCI states.

For this case, if the UE is provided by the network, e.g., via higher layer RRC signalling/parameter and/or MAC CE command and/or dynamic DCI based L1 signaling, a TCI state index m (m∈{1,..., M}) or n (n∈{1,..., N}) for the CORESET, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/-PUSCH transmissions could be quasi co-located with or spatially related to reference signals provided in the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

Yet for another example, the DM-RS antenna port for PDCCH receptions in the CORESET associated only with CSS sets such as Type0/0A/1/2/3-PDCCH CSS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in one or more of the indicated Rel. 17 unified TCI states if the CORESET and the one or more of the indicated Rel. 17 unified TCI states are associated with a same entity ID/index. In the present disclosure, the entity ID/index could correspond to a PCI value, a PCI index corresponding/pointing to a PCI value in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. The association between a CORESET and an entity ID/index could be via indicating/including the entity ID/index in the parameter, e.g., the higher layer parameter ControlResourceSet, that configures the CORESET. The association between a Rel. 17 unified TCI state and an entity ID/index could follow those specified in the above discussed design examples in the present disclosure.

In some cases, e.g., configured/indicated by the network, for Type3-PDCCH CSS sets, following examples can be provided.

Io on example, if the Type-3 PDCCH CSS sets are configured for a PCell or PSCell, the QCL assumptions for the DM-RS antenna port for PDCCH receptions in the CORESET associated with the Type3-PDCCH CSS sets, and the DM-RS antenna port for PDSCH receptions scheduled by DCI formats provided by PDCCH receptions in the CORESET, or the spatial relation assumptions for respective PUCCH/PUSCH transmissions could follow those specified in examples in the present disclosure.

In one example, if the Type-3 PDCCH CSS sets are configured for a SCell, the QCL assumptions for the DM-RS antenna port for PDCCH receptions in the CORESET associated with the Type3-PDCCH CSS sets, and the DM-RS antenna port for PDSCH receptions scheduled by DCI formats provided by PDCCH receptions in the CORESET, or the spatial relation assumptions for respective PUCCH/PUSCH transmissions could follow those specified in the example in the present disclosure.

Regardless of whether the Type-3 PDCCH CSS sets are configured for a PCell or PSCell or a SCell, the QCL assumptions for the DM-RS antenna port for PDCCH receptions in the CORESET associated with the Type3-PDCCH CSS sets, and the DM-RS antenna port for PDSCH receptions scheduled by DCI formats provided by PDCCH receptions in the CORESET, or the spatial relation assumptions for respective PUCCH/PUSCH transmissions could follow those specified in the example in the present disclosure.

In yet another example, a DM-RS antenna port for PDCCH receptions in a CORESET associated with both USS sets and CSS sets such as Type0/0A/1/2/3-PDCCH CSS sets, and a DM-RS antenna port for PDSCH receptions scheduled by DCI formats provided by PDCCH receptions in the CORESET, or a spatial filter for respective PUCCH/-PUSCH transmissions could be quasi co-located with or spatially related to reference signals provided in one or more of the indicated Rel. 17 unified TCI states.

For example, the DM-RS antenna port for PDCCH receptions in the CORESET associated with both USS sets and CSS sets such as Type0/0A/1/2/3-PDCCH CSS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID; alternatively, the DM-RS antenna port for PDCCH receptions in the CORESET associated with both USS sets and CSS sets such as Type0/0A/1/2/3-PDCCH CSS sets, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

For another example, the UE could be provided by the network, e.g., via higher layer RRC signalling/parameter and/or MAC CE command and/or dynamic DCI based L1 signaling, an index corresponding/pointing to a TCI state among/within the indicated M>1 or N>1 Rel. 17 unified TCI states for a CORESET associated with both USS sets and CSS sets such as Type0/0A/1/2/3-PDCCH CSS sets. If the UE is provided by the network, e.g., via higher layer RRC signalling/parameter and/or MAC CE command and/or dynamic DCI based L1 signaling, a TCI state index m (m∈{1,..., M}) or n (n∈{1,...,N}) for the CORESET, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

Yet for another example, the UE could be provided by the network, e.g., via higher layer RRC signalling/parameter and/or MAC CE command and/or dynamic DCI based L1 signaling, a higher layer parameter useIndicatedr17TCIState or a TCI state ID for a CORESET associated with both USS sets and CSS sets such as Type0/0A/1/2/3-PDCCH CSS sets. If the useIndicatedr17TCIstate is enabled or the TCI state ID corresponds/points to the indicated Rel. 17 unified TCI state(s), the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions are quasi co-located with or spatially related to reference signals provided in one or more of the indicated Rel. 17 unified TCI states.

For this case, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID; alternatively, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

Yet for another example, the UE could be provided by the network, e.g., via higher layer RRC signalling/parameter and/or MAC CE command and/or dynamic DCI based L1 signaling, a higher layer parameter useIndicatedr17TCIState or a TCI state ID for a CORESET associated with both USS sets and CSS sets such as Type0/0A/1/2/3-PDCCH CSS sets. Furthermore, the UE could also be provided by the network, e.g., via higher layer RRC signalling/parameter and/or MAC CE command and/or dynamic DCI based L1 signaling, an index corresponding/pointing to a TCI state among/within the indicated M>1 or N>1 Rel. 17 unified TCI states for the CORESET. If the useIndicatedr17TCIstate is enabled or the TCI state ID corresponds/points to the indicated Rel. 17 unified TCI state(s), the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions are quasi co-located with or spatially related to reference signals provided in one or more of the indicated Rel. 17 unified TCI states.

For this case, if the UE is provided by the network, e.g., via higher layer RRC signalling/parameter and/or MAC CE command and/or dynamic DCI based L1 signaling, a TCI state index m (m∈{1,..., M}) or n (n∈{1,...,N}) for the CORESET, the DM-RS antenna port for PDCCH receptions in the CORESET, and the DM-RS antenna port for PDSCH receptions scheduled by DCI formats provided by PDCCH receptions in the CORESET, or a spatial filter for respective PUCCH/PUSCH transmissions could be quasi co-located with or spatially related to reference signals provided in the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

Yet for another example, the DM-RS antenna port for PDCCH receptions in the CORESET associated with both USS sets and CSS sets such as Type0/0A/1/2/3-PDCCH CSS sets, and the DM-RS antenna port for PDSCH receptions scheduled by DCI formats provided by PDCCH receptions in the CORESET, or a spatial filter for respective PUCCH/-PUSCH transmissions could be quasi co-located with or spatially related to reference signals provided in one or more of the indicated Rel. 17 unified TCI states if the CORESET and the one or more of the indicated Rel. 17 unified TCI states are associated with a same entity ID/index. In the present disclosure, the entity ID/index could correspond to a PCI value, a PCI index corresponding/pointing to a PCI value in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. The association between a CORESET and an entity ID/index could be via indicating/including the entity ID/index in the parameter, e.g., the higher layer parameter ControlResourceSet, that configures the CORESET. The association between a Rel. 17 unified TCI state and an entity ID/index could follow those specified in the above discussed design examples in the present disclosure.

As CORESET with index 0 could be associated with only USS sets, only CSS sets or both USS and CSS sets, the QCL assumptions for the DM-RS antenna port for PDCCH receptions in the CORESET with index 0, and the DM-RS antenna port for PDSCH receptions scheduled by DCI formats provided by PDCCH receptions in the CORESET with index 0, or the spatial relation assumptions for respective PUCCH/PUSCH transmissions could follow those specified in examples disclosed in the present disclosure. For some cases, e.g., configured/indicated by the network, the QCL assumptions for the DM-RS antenna port for PDCCH receptions in the CORESET with index 0, and the DM-RS antenna port for PDSCH receptions scheduled by DCI formats provided by PDCCH receptions in the CORESET with index 0, or the spatial relation assumptions for PUCCH/PUSCH transmissions could only follow those specified in examples disclosed in the present disclosure, whether the QCL assumptions for the DM-RS antenna port for PDCCH receptions in the CORESET with index 0 shall follow one or more of the indicated Rel. 17 unified TCI states is higher layer configured, e.g., via higher layer RRC configuration, by the network.

In a multi-DCI (mDCI) based multi-TRP system, a UE could be provided with PDCCH-Config that contains two different CORESETPoolIndex values in CORESETs. For this case, a UE could be configured with the higher layer parameter TCI-State_r17 and provided by the network, via MAC CE or DCI (e.g., DCI format 1_1 or 1_2 with or without DL assignment) based signaling, M0>1 joint DL and UL Rel. 17 unified TCI states or M0>1 separate UL Rel. 17 unified TCI states or a first combination of M0>1 joint DL and UL Rel. 17 unified TCI states and separate UL Rel. 17 unified TCI states or N0>1 separate DL Rel. 17 unified TCI states or a second combination of N0>1 joint DL and UL Rel. 17 unified TCI states and separate DL Rel. 17 unified TCI states or a third combination of N0>1 joint DL and UL Rel. 17 unified TCI states, separate DL Rel. 17 unified TCI states and separate UL Rel. 17 unified TCI states associated with associated with CORESETPoolIndex value 0, and M1>1 joint DL and UL Rel. 17 unified TCI states or M1>1 separate UL Rel. 17 unified TCI states or a first combination of M1>1 joint DL and UL Rel. 17 unified TCI states and separate UL Rel. 17 unified TCI states or N1>1 separate DL Rel. 17 unified TCI states or a second combination of N1>1 joint DL and UL Rel. 17 unified TCI states and separate DL Rel. 17 unified TCI states or a third combination of N1>1 joint DL and UL Rel. 17 unified TCI states, separate DL Rel. 17 unified TCI states and separate UL Rel. 17 unified TCI states associated with associated with CORESETPoolIndex value 1.

The association between one or more indicated Rel. 17 unified TCI states and CORESETPoolIndex values could follow those specified in the above discussed design examples. Hence, a DM-RS antenna port for PDCCH receptions in a CORESET configured with a CORESETPoolIndex value (e.g., 0 or 1), and a DM-RS antenna port for PDSCH receptions scheduled by DCI formats provided by PDCCH receptions in the CORESET, or a spatial filter for respective PUCCH/-PUSCH transmissions could be quasi co-located with or spatially related to reference signals provided in one or more of the indicated Rel. 17 unified TCI states associated with the same CORESETPoolIndex value; the CORESET could be associated with only USS sets, only CSS sets or both USS and CSS sets; for a same CORESETPoolIndex value, the detailed beam indication methods for PDCCH receptions in the CORESET (and therefore, the corresponding PDSCH receptions and PUCCH/PUSCH transmissions), could follow those specified for the sDCI based multi-TRP system, as disclosed in the present disclosure.

As discussed above, in the present disclosure, a UE could be indicated/provided/configured by the network, e.g., via one or more TCI fields in a DCI (e.g., DCI format 1_1 or 1_2 with or without DL assignment) or a MAC CE, one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources in a multi-TRP system, wherein each indicated TCI state (or pair of TCI states) could correspond to a joint DL and UL TCI state (e.g., provided by higher layer parameter DLorJointTCI-State) and/or a separate DL TCI state (e.g., provided by higher layer parameter DLorJointTCI-State) and/or a separate UL TCI state (e.g., provided by higher layer parameter UL-TCIState).

In a (sDCI based) multi-TRP system, for PDCCH reception(s) in a CORESET, following examples can be provided.

In one example, the UE could be indicated/provided/configured by the network, e.g., via higher layer RRC signaling/parameter, an indicator to indicate one or more of the indicated TCI states for PDCCH reception(s) - i.e., the DM-RS antenna port(s) for the PDCCH reception(s) could be quasi co-located with the reference signal(s) provided in the indicated (e.g., by the RRC configured/indicated/provided indicator) one or more of the indicated TCI states. For example, the higher layer parameter PDCCH-Config/PDSCH-Config or ControlResourceSet that configures a CORESET could include/configure/provide/comprise/indicate the indicator. When/if a UE receives a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) in a CORESET associated/configured with the indicator set to "enabled" (or "disabled") or "1" (or "0") or "00" (or "01," "10," "11"), the first indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the first indicated TCI state - among all the indicated (e.g., M>1 or N>1, or M=2/N=2) TCI states.

Furthermore, when/if a UE receives a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) in a CORESET associated/configured with the indicator set to "disabled" (or "enabled") or "0" (or "1") or "01" (or "00," "10," "11"), the second indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the second indicated TCI state - among all the indicated (e.g., M>1 or N>1, or M=2/N=2) TCI states. In addition, when/if a UE receives a beam indication DCI (e.g., DCI format 1_1 or 1_2 with or without DL assignment having one or more TCI fields to indicate one or more (e.g., M>1 or **N>1,** or M=2/N=2) TCI states/pairs of TCI states for UE-dedicated reception on PDSCH/PDCCH or dynamic-grant/configured-grant based PUSCH and all of dedicated PUCCH resources) in a CORESET associated/configured with the indicator set to "enabled" (or "disabled") or "1" (or "0") or "10" (or "00," "01," "11"), the first and second indicated TCI states - among all the indicated (e.g., M>1 or **N>1,** or M=2/N=2) TCI states - could be (respectively) used for PDCCH reception(s) in a CORESET, or none of the indicated TCI states would be used for the PDCCH reception(s); i.e., the DM-RS antenna port(s) for the PDCCH reception(s) in a CORESET could be quasi co-located with the reference signals (respectively) provided in the first and second indicated TCI states - among all the indicated (e.g., M>1 or N>1, or M=2/N=2) TCI states.

And, when/if a UE receives a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) in a CORESET associated/configured with the indicator set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for PDCCH reception(s) in a CORESET, or none of the indicated TCI states would be used for the PDCCH reception(s); i.e., the DM-RS antenna port(s) for the PDCCH reception(s) in a CORESET could be quasi co-located with the reference signals (respectively) provided in the second and first indicated TCI states - among all the indicated (e.g., M>1 or N>1, or M=2/N=2) TCI states. As discussed above, a UE could receive one or more (e.g., 2) PDCCH candidates associated with search space set(s) configured with searchSpaceLinking.

For this case, when/if a UE receives a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) in a CORESET associated/configured with the indicator set to "enabled" (or "disabled") or "1" (or "0") or "10" (or "00," "01," "11"), the first and second indicated TCI states - among all the indicated (e.g., M>1 or N>1, or M=2/N=2) TCI states - could be (respectively) used for receiving the first and second PDCCH candidates (or the second and first PDCCH candidates, depending on network's configuration/indication via RRC signaling/parameter and/or MAC CE command and/or dynamic DCI based L1 signaling) associated with search space set(s) configured with higher layer parameter searchSpaceLinking, or none of the indicated TCI states would be used for receiving the first and/or second PDCCH candidates; i.e., the DM-RS antenna port(s) for receiving the first and second (or the second and first depending on network's configuration/indication via RRC signaling/parameter and/or MAC CE command and/or dynamic DCI based signaling) PDCCH candidates associated with search space set(s) configured with higher layer parameter searchSpaceLinking could be quasi co-located with the reference signals (respectively) provided in the first and second indicated TCI states - among all the indicated (e.g., M>1 or N>1, or M=2/N=2) TCI states.

And, when/if a UE receives a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) in a CORESET associated/configured with the indicator set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for receiving the first and second PDCCH candidates (or the second and first PDCCH candidates, depending on network's configuration/indication via RRC signaling/parameter and/or MAC CE command and/or dynamic DCI based L1 signaling) associated with search space set(s) configured with higher layer parameter searchSpaceLinking, or none of the indicated TCI states would be used for receiving the first and/or second PDCCH candidates; i.e., the DM-RS antenna port(s) for receiving the first and second (or the second and first depending on network's configuration/indication via RRC signaling/parameter and/or MAC CE command and/or dynamic DCI based signaling) PDCCH candidates associated with search space set(s) configured with higher layer parameter searchSpaceLinking could be quasi co-located with the reference signals (respectively) provided in the second and first indicated TCI states - among all the indicated (e.g., M>1 or N>1, or M=2/N=2) TCI states.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or "00," "01," "10" and "11"). One or more CORESETs could be configured/associated with the same value of CORESETGroupIndex. Moreover, the UE could receive the second (or first) PDCCH candidate associated with a search space set configured with higher layer parameter searchSpaceLinking later in time than the first (or second) PDCCH candidate associated with a search space set configured with higher layer parameter searchSpaceLinking.

In another example, the UE could be indicated/provided/configured by the network, e.g., via higher layer RRC signaling/parameter, an indicator to indicate one or more of the indicated TCI states for PDCCH reception(s) - i.e., the DM-RS antenna port(s) for the PDCCH reception(s) could be quasi co-located with the reference signal(s) provided in the indicated (e.g., by the RRC configured/indicated/provided indicator) one or more of the indicated TCI states. For example, the higher layer parameter PDCCH-Config/PDSCH-Config or ControlResourceSet that configures a CORESET could include/configure/provide/comprise/indicate the indicator. When/if a UE receives a PDCCH candidate in a CORESET associated/configured with the indicator set to "enabled" (or "disabled") or "1" (or "0") or "00" (or "01," "10," "11"), the first indicated TCI state - among all the indicated (e.g., M>1 or N>1, or M=2/N=2) TCI states - could be used for receiving the PDCCH candidate; i.e., the DM-RS antenna port(s) for receiving the PDCCH candidate could be quasi co-located with the reference signal(s) provided in the first indicated TCI state - among all the indicated (e.g., M>1 or N>1, or M=2/N=2) TCI states.

Furthermore, when/if a UE receives a PDCCH candidate in a CORESET associated/configured with the indicator set to "disabled" (or "enabled") or "0" (or "1") or "01" (or "00," "10," "11"), the second indicated TCI state - among all the indicated (e.g., M>1 or N>1, or M=2/N=2) TCI states - could be used for receiving the PDCCH candidate; i.e., the DM-RS antenna port(s) for receiving the PDCCH candidate could be quasi co-located with the reference signal(s) provided in the second indicated TCI state - among all the indicated (e.g., M>1 or N>1, or M=2/N=2) TCI states.

In addition, when/if a UE receives a PDCCH candidate in a CORESET associated/configured with the indicator set to "enabled" (or "disabled") or "1" (or "0") or "10" (or "00," "01," "11"), the first and second indicated TCI states - among all the indicated (e.g., M>1 or N>1, or M=2/N=2) TCI states - could be (respectively) used for receiving the PDCCH candidate in a CORESET, or none of the indicated TCI states would be used for receiving the PDCCH candidate; i.e., the DM-RS antenna port(s) for receiving the PDCCH candidate in a CORESET could be quasi co-located with the reference signals (respectively) provided in the first and second indicated TCI states - among all the indicated (e.g., M>1 or N>1, or M=2/N=2) TCI states. And, when/if a UE receives a PDCCH candidate in a CORESET associated/configured with the indicator set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for receiving the PDCCH candidate in a CORESET, or none of the indicated TCI states would be used for receiving the PDCCH candidate; i.e., the DM-RS antenna port(s) for receiving the PDCCH candidate in a CORESET could be quasi co-located with the reference signals (respectively) provided in the second and first indicated TCI states - among all the indicated (e.g., M>1 or N>1, or M=2/N=2) TCI states.

As discussed above, a UE could receive one or more (e.g., 2) PDCCH candidates associated with search space set(s) configured with searchSpaceLinking. For this case, when/if a UE receives the one or more (e.g., 2) PDCCH candidates in their respective CORESETs associated/configured with the indicators set to "enabled" (or "disabled") or "1" (or "0") or "10" (or "00," "01," "11"), the first and second indicated TCI states - among all the indicated (e.g., M>1 or N>1, or M=2/N=2) TCI states - could be (respectively) used for receiving the first and second PDCCH candidates (or the second and first PDCCH candidates, depending on network's configuration/indication via higher layer RRC signaling/parameter and/or MAC CE command and/or dynamic DCI based signaling) associated with search space set(s) configured with higher layer parameter searchSpaceLinking, or none of the indicated TCI states would be used for receiving the first and/or second PDCCH candidates; i.e., the DM-RS antenna port(s) for receiving the first and second (or the second and first depending on network's configuration/indication via RRC signaling/parameter and/or MAC CE command and/or dynamic DCI based signaling) PDCCH candidates associated with search space set(s) configured with higher layer parameter searchSpaceLinking could be quasi co-located with the reference signals (respectively) provided in the first and second indicated TCI states - among all the indicated (e.g., M>1 or N>1, or M=2/N=2) TCI states.

And, when/if a UE receives the one or more (e.g., 2) PDCCH candidates in their respective CORESETs associated/configured with the indicators set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for receiving the first and second PDCCH candidates (or the second and first PDCCH candidates, depending on network's configuration/indication via higher layer RRC signaling/parameter and/or MAC CE command and/or dynamic DCI based signaling) associated with search space set(s) configured with higher layer parameter searchSpaceLinking, or none of the indicated TCI states would be used for receiving the first and/or second PDCCH candidates; i.e., the DM-RS antenna port(s) for receiving the first and second (or the second and first depending on network's configuration/indication via RRC signaling/parameter and/or MAC CE command and/or dynamic DCI based signaling) PDCCH candidates associated with search space set(s) configured with higher layer parameter searchSpaceLinking could be quasi co-located with the reference signals (respectively) provided in the second and first indicated TCI states - among all the indicated (e.g., M>1 or N>1, or M=2/N=2) TCI states.

Alternatively, when/if a UE receives a PDCCH candidate in a CORESET associated/configured with the indicator set to a TCI state index/ID, the indicated TCI state - among all the indicated (e.g., M>1 or N>1, or M=2/N=2) TCI states - corresponding to the indicated (e.g., by the RRC indicated/configured/provided indicator) TCI state index/ID could be used for receiving the PDCCH candidate; i.e., the DM-RS antenna port(s) for receiving the PDCCH candidate could be quasi co-located with the reference signal(s) provided in the indicated TCI state - among all the indicated (e.g., M>1 or N>1, or M=2/N=2) TCI states - corresponding to the indicated (e.g., by the RRC indicated/configured/provided indicator) TCI state index/ID; and, when/if a UE receives a PDCCH candidate in a CORESET associated/configured with the indicator set to multiple (e.g., 2) TCI state indexes/IDs, the indicated (e.g., the first and second, or the second and first) TCI states - among all the indicated (e.g., M>1 or N>1, or M=2/N=2) TCI states - corresponding to the indicated (e.g., by the RRC indicated/configured/provided indicator) TCI state indexes/IDs could be used for receiving the PDCCH candidate in a CORESET; i.e., the DM-RS antenna port(s) for receiving the PDCCH candidate in a CORESET could be quasi co-located with the reference signals provided in the indicated (e.g., the first and second, or the second and first) TCI states - among all the indicated (e.g., M>1 or N>1, or M=2/N=2) TCI states - corresponding to the indicated (e.g., by the RRC indicated/configured/provided indicator) TCI state indexes/IDs.

As discussed above, a UE could receive one or more (e.g., 2) PDCCH candidates associated with search space set(s) configured with searchSpaceLinking. For this case, when/if a UE receives the one or more (e.g., 2) PDCCH candidates in their respective CORESETs associated/configured with the indicator set to multiple (e.g., 2) TCI state indexes/IDs, the indicated (e.g., the first and second, or the second and first) TCI states - among all the indicated (e.g., M>1 or N>1, or M=2/N=2) TCI states - corresponding to the indicated (e.g., by the RRC indicated/configured/provided indicator) TCI state indexes/IDs could be used for receiving the first and second PDCCH candidates (or the second and first PDCCH candidates, depending on network's configuration/indication via higher layer RRC signaling/parameter and/or MAC CE command and/or dynamic DCI based L1 signaling) associated with search space set(s) configured with higher layer parameter searchSpaceLinking; i.e., the DM-RS antenna port(s) for receiving the first and second (or the second and first depending on network's configuration/indication via higher layer RRC signaling/parameter and/or MAC CE command and/or dynamic DCI based L1 signaling) PDCCH candidates associated with search space set(s) configured with higher layer parameter searchSpaceLinking could be quasi co-located with the reference signals provided in the indicated (e.g., the first and second, or the second and first) TCI states - among all the indicated (e.g., M>1 or N>1, or M=2/N=2) TCI states - corresponding to the indicated (e.g., by the RRC indicated/configured/provided indicator) TCI state indexes/IDs.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or "00," "01," "10" and "11"). One or more CORESETs could be configured/associated with the same value of CORESETGroupIndex. Moreover, the UE could receive the second (or first) PDCCH candidate associated with a search space set configured with higher layer parameter searchSpaceLinking later in time than the first (or second) PDCCH candidate associated with a search space set configured with higher layer parameter searchSpaceLinking.

In yet another example, the UE could be indicated/provided/configured by the network, e.g., via higher layer RRC signaling/parameter, an indicator to indicate one or more of the indicated TCI states for PDCCH reception(s) - i.e., the DM-RS antenna port(s) for the PDCCH reception(s) could be quasi co-located with the reference signal(s) provided in the indicated (e.g., by the RRC configured/indicated/provided indicator) one or more of the indicated TCI states. For example, the higher layer parameter PDCCH-Config/PDSCH-Config or ControlResourceSet that configures a CORESET could include/configure/provide/comprise/indicate the indicator. When/if a UE receives a PDCCH candidate in a CORESET associated/configured with the indicator set to "enabled" (or "disabled") or "1" (or "0") or "00" (or "01," "10," "11"), the first/second or the m-th (or n-th) indicated TCI state - among all the indicated (e.g., M>1 or N>1, or M=2/N=2) TCI states - in a beam indication DCI received in a CORESET associated/configured with the same indicator set to "enabled" (or "disabled") or "1" (or "0") or "00" (or "01," "10," "11") could be used for receiving the PDCCH candidate; i.e., the DM-RS antenna port(s) for receiving the PDCCH candidate could be quasi co-located with the reference signal(s) provided in the first/second or the m-th (n-th) indicated TCI state - among all the indicated (e.g., M>1 or N>1, or M=2/N=2) TCI states - in the beam indication DCI, wherein the PDCCH candidate and the beam indication DCI could be received in CORESET(s) associated/configured with the same indicator set to "enabled" (or "disabled") or "1" (or "0") or "00" (or "01," "10," "11"). The value(s) of m or n could be fixed in the system specifications; alternatively, the UE could be configured/indicated/provided by the network, e.g., via higher layer RRC signaling/parameter and/or MAC CE command and/or dynamic DCI based L1 signaling, the value(s) of m or n, wherein m∈{1,..., M} and n∈{1,..., N}.

Furthermore, when/if a UE receives a PDCCH candidate in a CORESET associated/configured with the indicator set to "disabled" (or "enabled") or "0" (or "1") or "01" (or "00," "10," "11"), the first/second or the m'-th (or n'-th) indicated TCI state - among all the indicated (e.g., M>1 or N>1, or M=2/N=2) TCI states - in a beam indication DCI received in a CORESET associated/configured with the same indicator set to "disabled" (or "enabled") or "0" (or "1") or "01" (or "00," "10," "11") could be used for receiving the PDCCH candidate; i.e., the DM-RS antenna port(s) for receiving the PDCCH candidate could be quasi co-located with the reference signal(s) provided in the first/second or the m'-th (n'-th) indicated TCI state - among all the indicated (e.g., M>1 or N>1, or M=2/N=2) TCI states - in the beam indication DCI, wherein the PDCCH candidate and the beam indication DCI could be received in CORESET(s) associated/configured with the same indicator set to "disabled" (or "enabled") or "0" (or "1") or "01" (or "00," "10," "11"). The value(s) of m' or n' could be fixed in the system specifications; alternatively, the UE could be configured/indicated/provided by the network, e.g., via higher layer RRC signaling/parameter and/or MAC CE command and/or dynamic DCI based L1 signaling, the value(s) of m' or n', wherein m'∈{1,..., M} and n'∈{1,..., N}.

In addition, when/if a UE receives a PDCCH candidate in a CORESET associated/configured with the indicator set to "enabled" (or "disabled") or "1" (or "0") or "10" (or "00," "01," "11"), the first and second indicated TCI states - among all the indicated (e.g., M>1 or N>1, or M=2/N=2) TCI states - in a beam indication DCI received in a CORESET associated/configured with the same indicator set to "enabled" (or "disabled") or "1" (or "0") or "10" (or "00," "01," "11") could be (respectively) used for receiving the PDCCH candidate in a CORESET, or none of the indicated TCI states would be used for receiving the PDCCH candidate; i.e., the DM-RS antenna port(s) for receiving the PDCCH candidate in a CORESET could be quasi co-located with the reference signals (respectively) provided in the first and second indicated TCI states - among all the indicated (e.g., M>1 or N>1, or M=2/N=2) TCI states - in the beam indication DCI, wherein the PDCCH candidate in a CORESET and the beam indication DCI could be received in CORESET(s) associated/configured with the same indicator set to "enabled" (or "disabled") or "1" (or "0") or "10" (or "00," "01," "11").

And, when/if a UE receives a PDCCH candidate in a CORESET associated/configured with the indicator set to "disabled" (or "enabled") or "0" (or "1") or "11" (or "00," "01," "10"), the second and first indicated TCI states - among all the indicated (e.g., M>1 or N>1, or M=2/N=2) TCI states - in a beam indication DCI received in a CORESET associated/configured with the same indicator set to 'disabled' (or "enabled") or "0" (or "1") or "11" (or "00," "01," "10") could be (respectively) used for receiving the PDCCH candidate in a CORESET, or none of the indicated TCI states would be used for receiving the PDCCH candidate; i.e., the DM-RS antenna port(s) for receiving the PDCCH candidate in a CORESET could be quasi co-located with the reference signals (respectively) provided in the second and first indicated TCI states - among all the indicated (e.g., M>1 or N>1, or M=2/N=2) TCI states - in the beam indication DCI, wherein the PDCCH candidate in a CORESET and the beam indication DCI could be received in CORESET(s) associated/configured with the same indicator set to "disabled" (or "enabled") or "0" (or "1") or "11" (or "00," "01," "10").

As discussed above, a UE could receive one or more (e.g., 2) PDCCH candidates associated with search space set(s) configured with searchSpaceLinking. For this case, when/if a UE receives the one or more (e.g., 2) PDCCH candidates in their respective CORESETs associated/configured with the indicator set to "enabled" (or "disabled") or "1" (or "0") or "10" (or "00," "01," "11"), the first and second indicated TCI states - among all the indicated (e.g., M>1 or N>1, or M=2/N=2) TCI states - in a beam indication DCI received in a CORESET associated/configured with the same indicator set to "enabled" (or "disabled") or "1" (or "0") or "10" (or "00," "01," "11") could be (respectively) used for receiving the first and second PDCCH candidates (or the second and first PDCCH candidates, depending on network's indication/configuration via higher layer RRC signaling/parameter and/or MAC CE command and/or dynamic DCI based L1 signaling) associated with search space set(s) configured with higher layer parameter searchSpaceLinking, or none of the indicated TCI states would be used for receiving the first and/or second PDCCH candidates; i.e., the DM-RS antenna port(s) for receiving the first and second (or the second and first depending on network's indication/configuration via higher layer RRC signaling/parameter and/or MAC CE command and/or dynamic DCI based L1 signaling) PDCCH candidates associated with search space set(s) configured with higher layer parameter searchSpaceLinking could be quasi co-located with the reference signals (respectively) provided in the first and second indicated TCI states - among all the indicated (e.g., M>1 or N>1, or M=2/N=2) TCI states - in the beam indication DCI, wherein the first and/or second PDCCH candidates and the beam indication DCI could be received in CORESET(s) associated/configured with the same indicator set to "enabled" (or "disabled") or "1" (or "0") or "10" (or "00," "01," "11").

And, when/if a UE receives the one or more (e.g., 2) PDCCH candidates in their respective CORESETs associated/configured with the indicator set to "disabled" (or "enabled") or "0" (or "1") or "11" (or "00," "01," "10"), the second and first indicated TCI states - among all the indicated (e.g., M>1 or N>1, or M=2/N=2) TCI states - in a beam indication DCI received in a CORESET associated/configured with the same indicator set to "disabled" (or "enabled") or "0" (or "1") or "11" (or "00," "01," "10") could be (respectively) used for receiving the first and second PDCCH candidates (or the second and first PDCCH candidates, depending on network's indication/configuration via higher layer RRC signaling/-parameter and/or MAC CE command and/or dynamic DCI based L1 signaling) associated with search space set(s) configured with higher layer parameter searchSpaceLinking, or none of the indicated TCI states would be used for receiving the first and/or second PDCCH candidates; i.e., the DM-RS antenna port(s) for receiving the first and second (or the second and first depending on network's indication/configuration via higher layer RRC signaling/parameter and/or MAC CE command and/or dynamic DCI based L1 signaling) PDCCH candidates associated with search space set(s) configured with higher layer parameter searchSpaceLinking could be quasi co-located with the reference signals (respectively) provided in the second and first indicated TCI states - among all the indicated (e.g., M>1 or N>1, or M=2/N=2) TCI states - in the beam indication DCI, wherein the first and/or second PDCCH candidates and the beam indication DCI could be received in CORESET(s) associated/configured with the same indicator set to "disabled" (or "enabled") or "0" (or "1") or "11" (or "00," "01," "10").

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or "00," "01," "10" and "11"). One or more CORESETs could be configured/associated with the same value of CORESETGroupIndex. Moreover, the UE could receive the second (or first) PDCCH candidate associated with a search space set configured with higher layer parameter searchSpaceLinking later in time than the first (or second) PDCCH candidate associated with a search space set configured with higher layer parameter searchSpaceLinking.

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), an indicator to indicate one or more of the indicated TCI states for PDCCH reception(s) - i.e., the DM-RS antenna port(s) for the PDCCH reception(s) could be quasi co-located with the reference signal(s) provided in the indicated (e.g., by the indicator provided/indicated/configured in the MAC CE) one or more of the indicated TCI states.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For example, when/if the UE receives from the network the MAC CE command with the indicator provided/indicated/configured therein set to "enabled" (or "disabled") or "1" (or "0") or "00" ("01," "10," "11"), the first indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the first indicated TCI state - among all the indicated (e.g., M>1 or N>1, or M=2/N=2) TCI states. Furthermore, when/if the UE receives from the network the MAC CE command with the indicator provided/indicated/-configured therein set to "disabled" (or "enabled") or "0" (or "1") or "01" ("00," "10," "11"), the second indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the second indicated TCI state - among all the indicated (e.g., M>1 or N>1, or M=2/N=2) TCI states.

In addition, when/if the UE receives from the network the MAC CE command with the indicator provided/indicated/configured therein set to "enabled" (or "disabled") or "1" (or "0") or "10" ("00," "01," "11"), the first and second indicated TCI states - among all the indicated (e.g., M>1 or N>1, or M=2/N=2) TCI states - could be (respectively) used for PDCCH reception(s) in a CORESET, or none of the indicated TCI states would be used for the PDCCH reception(s); i.e., the DM-RS antenna port(s) for the PDCCH reception(s) in a CORESET could be quasi co-located with the reference signals (respectively) provided in the first and second indicated TCI states - among all the indicated (e.g., M>1 or N>1, or M=2/N=2) TCI states. And, when/if the UE receives from the network the MAC CE command with the indicator provided/indicated/configured therein set to "disabled" (or "enabled") or "0" (or "1") or "11" ("00," "01," "10"), the second and first indicated TCI states - among all the indicated (e.g., M>1 or N>1, or M=2/N=2) TCI states - could be (respectively) used for PDCCH reception(s) in a CORESET, or none of the indicated TCI states would be used for the PDCCH reception(s); i.e., the DM-RS antenna port(s) for the PDCCH reception(s) in a CORESET could be quasi co-located with the reference signals (respectively) provided in the second and first indicated TCI states - among all the indicated (e.g.,

M>1 or N>1, or M=2/N=2) TCI states.

For another example, when/if the UE receives from the network the MAC CE command with the indicator provided/indicated/configured therein set to a TCI state ID/index, the indicated TCI state corresponding to the TCI state ID/index could be used for PDCCH reception(s); and, when/if the UE receives from the network the MAC CE command with the indicator provided/indicated/configured therein set to multiple (e.g., 2) TCI state IDs/indexes, the indicated (e.g., the first and second, or the second and first) TCI states corresponding to the indicated (e.g., by the MAC CE indicated/configured/provided indicator) TCI state indexes/IDs could be used for PDCCH reception(s) in a CORESET; i.e., the DM-RS antenna port(s) for the PDCCH reception(s) in a CORESET could be quasi co-located with the reference signals (respectively) provided in the indicated (e.g., the first and second, or the second and first) TCI states - among all the indicated (e.g., M>1 or N>1, or M=2/N=2) TCI states - corresponding to the indicated (e.g., by the MAC CE indicated/configured/provided indicator) TCI state indexes/IDs.

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), one or more indicators each associated/configured to/for an activated TCI codepoint in the MAC CE command; each indicator could indicate one or more of the TCI states of the corresponding TCI codepoint for PDCCH reception(s) - e.g., when the corresponding TCI codepoint is indicated in the beam indication DCI. That is, the DM-RS antenna port(s) for the PDCCH reception(s) could be quasi co-located with the reference signal(s) provided in the indicated (e.g., by an indicator provided/indicated/configured in the MAC CE command) one or more of the indicated TCI states.

In the present disclosure, each indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For example, when/if the indicator associated/configured to/for the TCI codepoint indicated in the beam indication DCI is set to "enabled" (or "disabled") or "1" (or "0") or "00" (or "01," "10," "11") - the indicator is provided/indicated/configured in the MAC CE command, the first indicated TCI state - among all the indicated (e.g., M>1 or N>1, or M=2/N=2) TCI states of the TCI codepoint indicated in the beam indication DCI - could be used for PDCCH reception(s). Furthermore, when/if the indicator associated/configured to/for the TCI codepoint indicated in the beam indication DCI is set to "disabled" (or "enabled") or "0" (or "1") or "01" (or "00," "10," "11") - the indicator is provided/indicated/configured in the MAC CE command, the second indicated TCI state - among all the indicated (e.g., M>1 or N>1, or M=2/N=2) TCI states of the TCI codepoint indicated in the beam indication DCI - could be used for PDCCH reception(s).

In addition, when/if the indicator associated/configured to/for the TCI codepoint indicated in the beam indication DCI is set to "enabled" (or "disabled") or "1" (or "0") or "10" (or "00," "01," "11") - the indicator is provided/indicated/configured in the MAC CE command, the first and second indicated TCI states - among all the indicated (e.g., M>1 or N>1, or M=2/N=2) TCI states of the TCI codepoint indicated in the beam indication DCI - could be (respectively) used for PDCCH reception(s) in a CORESET, or none of the indicated TCI states of the TCI codepoint indicated in the beam indication DCI would be used for the PDCCH reception(s); and, when/if the indicator associated/configured to/for the TCI codepoint indicated in the beam indication DCI is set to "disabled" (or "enabled") or "0" (or "1") or "11" (or "00," "01," "10") - the indicator is provided/indicated/configured in the MAC CE command, the second and first indicated TCI states - among all the indicated (e.g., M>1 or N>1, or M=2/N=2) TCI states of the TCI codepoint indicated in the beam indication DCI - could be (respectively) used for PDCCH reception(s) in a CORESET, or none of the indicated TCI states of the TCI codepoint indicated in the beam indication DCI would be used for the PDCCH reception(s).

For another example, when/if the indicator associated/configured to/for the TCI codepoint indicated in the beam indication DCI is set to a TCI state ID/index - the indicator is provided/indicated/configured in the MAC CE command, the indicated TCI state - among all the indicated (e.g., M>1 or N>1, or M=2/N=2) TCI states of the TCI codepoint indicated in the beam indication DCI - corresponding to the TCI state ID/index could be used for PDCCH reception(s); and, when/if the indicator associated/configured to/for the TCI codepoint indicated in the beam indication DCI is set to multiple (e.g., 2) TCI state IDs/indexes - the indicator is provided/indicated/configured in the MAC CE command, the indicated (e.g., the first and second, or the second and first) TCI states - among all the indicated (e.g., M>1 or N>1, or M=2/N=2) TCI states of the TCI codepoint indicated in the beam indication DCI - corresponding to the indicated (e.g., by an indicator configured/indicated/provided in the MAC CE command) TCI state IDs/indexes could be used for PDCCH reception(s) in a CORESET.

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), an indicator to indicate one or more of the indicated TCI states for PDCCH reception(s) in one or more CORESETs associated/configured with a (or the same) value of CORESET group index - i.e., the DM-RS antenna port(s) for the PDCCH reception(s) in one or more CORESETs associated/configured with a (or the same) value of CORESET group index could be quasi co-located with the reference signal(s) provided in the indicated (e.g., by the indicator in the MAC CE command configured/associated with the same value of CORESET group index) one or more of the indicated TCI states.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. Furthermore, as discussed above, the MAC CE command could be configured/associated with the CORESETGroupIndex value. For instance, the MAC CE command/format could contain/provide/indicate/comprise one or more fields indicating/providing a value of CORESETGroupIndex. For example, when/if the UE receives from the network the MAC CE command configured/associated with a CORESETGroupIndex value with the indicator provided/indicated/configured therein set to "enabled" (or "disabled") or "1" (or "0") or "00" (or "01," "10," "11"), the first indicated TCI state - among all the indicated (e.g., M>1 or N>1, or M=2/N=2) TCI states - could be used for PDCCH reception(s) in one or more CORESETs associated/configured with a (or the same) CORESETGroupIndex value; i.e., the DM-RS antenna port(s) for the PDCCH reception(s) in one or more CORESETs associated/configured with a (or the same) CORESET group index value could be quasi co-located with the reference signal(s) provided in the first indicated TCI state - among all the indicated (e.g., M>1 or N>1, or M=2/N=2) TCI states.

Furthermore, when/if the UE receives from the network the MAC CE command configured/associated with a CORESETGroupIndex value with the indicator provided/indicated/configured therein set to "disabled" (or "enabled") or "0" (or "1") or "01" (or "00," "10," "11"), the second indicated TCI state - among all the indicated (e.g., M>1 or N>1, or M=2/N=2) TCI states - could be used for PDCCH reception(s) in one or more CORESETs associated/configured with a (or the same) CORESETGroupIndex value; i.e., the DM-RS antenna port(s) for the PDCCH reception(s) in one or more CORESETs associated/configured with a (or the same) CORESETGroupIndex value could be quasi co-located with the reference signal(s) provided in the second indicated TCI state - among all the indicated (e.g., M>1 or N>1, or M=2/N=2) TCI states.

In addition, when/if the UE receives from the network the MAC CE command configured/associated with a CORESETGroupIndex value with the indicator provided/indicated/configured therein set to "enabled" (or "disabled") or "1" (or "0") or "10" (or "00," "01," "11"), the first and second indicated TCI states - among all the indicated (e.g., M>1 or N>1, or M=2/N=2) TCI states - could be (respectively) used for PDCCH reception(s) in a CORESET associated/configured with a (or the same) CORESETGroupIndex value, or none of the indicated TCI states would be used for PDCCH reception(s) in a CORESET associated/configured with a (or the same) CORESETGroupIndex value; i.e., the DM-RS antenna port(s) for the PDCCH reception(s) in a CORESET associated/configured with a (or the same) CORESET group index value could be quasi co-located with the reference signals (respectively) provided in the first and second indicated TCI states - among all the indicated (e.g., M>1 or N>1, or M=2/N=2) TCI states; and, when/if the UE receives from the network the MAC CE command configured/associated with a CORESETGroupIndex value with the indicator provided/indicated/configured therein set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for PDCCH reception(s) in a CORESET associated/configured with a (or the same) CORESETGroupIndex value, or none of the indicated TCI states would be used for PDCCH reception(s) in a CORESET associated/configured with a (or the same) CORESETGroupIndex value; i.e., the DM-RS antenna port(s) for the PDCCH reception(s) in a CORESET associated/configured with a (or the same) CORESET group index value could be quasi co-located with the reference signals (respectively) provided in the second and first indicated TCI states - among all the indicated (e.g., M>1 or N>1, or M=2/N=2) TCI states.

For another example, when/if the UE receives from the network the MAC CE command configured/associated with a CORESETGroupIndex value with the indicator provided/indicated/configured therein set to a TCI state ID/index, the indicated TCI state corresponding to the TCI state ID/index could be used for PDCCH reception(s) in one or more CORESETs configured/associated with a (or the same) value of CORESETGroupIndex; and, when/if the UE receives from the network the MAC CE command configured/associated with a CORESETGroupIndex value with the indicator provided/indicated/configured therein set to multiple (e.g., 2) TCI state IDs/indexes, the indicated (e.g., the first and second, or the second and first) TCI states corresponding to the TCI state IDs/indexes could be used for PDCCH reception(s) in one or more CORESETs configured/associated with a (or the same) value of CORESETGroupIndex.

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), one or more indicators each associated/configured to/for an activated TCI codepoint in the MAC CE command; each indicator could indicate one or more of the TCI states of the corresponding TCI codepoint for PDCCH reception(s) in one or more CORESETs associated with a (or the same) value of CORESET group index - e.g., when the corresponding TCI codepoint is indicated in the beam indication DCI. That is, the DM-RS antenna port(s) for the PDCCH reception(s) in one or more CORESETs configured/associated with a (or the same) value of CORESET group index could be quasi co-located with the reference signal(s) provided in the indicated (e.g., by an indicator in the MAC CE command configured/associated with the same value of CORESETGroupIndex value) one or more of the indicated TCI states. In the present disclosure, each indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc.

Furthermore, as discussed above, the MAC CE command could be configured/associated with the CORESETGroupIndex value. For instance, the MAC CE command/format could contain/provide/indicate/comprise one or more fields indicating/providing a value of CORESETGroupIndex. For example, when/if the indicator associated/configured to/for the TCI codepoint indicated in the beam indication DCI is set to "enabled" (or "disabled") or "1" (or "0") or "00" (or "01," "10," "11") - the indicator is provided/indicated/configured in the MAC CE command configured/associated with a value of CORESETGroupIndex, the first indicated TCI state - among all the indicated (e.g., M>1 or N>1, or M=2/N=2) TCI states of the TCI codepoint indicated in the beam indication DCI - could be used for PDCCH reception(s) in one or more CORESETs associated/configured with the same value of CORESETGroupIndex; i.e., the DM-RS antenna port(s) for the PDCCH reception(s) in one or more CORESETs associated/configured with the same CORESET group index value could be quasi co-located with the reference signal(s) provided in the first indicated TCI state - among all the indicated (e.g., M>1 or N>1, or M=2/N=2) TCI states. Furthermore, when/if the indicator associated/configured to/for the TCI codepoint indicated in the beam indication DCI is set to "disabled" (or "enabled") or "0" (or "1") or "01" (or "00," "10," "11") - the indicator is provided/indicated/configured in the MAC CE command associated/configured with a value of CORESETGroupIndex, the second indicated TCI state - among all the indicated (e.g., M>1 or N>1, or M=2/N=2) TCI states of the TCI codepoint indicated in the beam indication DCI - could be used for PDCCH reception(s) in one or more CORESETs configured/associated with the same value of CORESETGroupIndex; i.e., the DM-RS antenna port(s) for the PDCCH reception(s) in one or more CORESETs associated/configured with a (or the same) CORESET group index value could be quasi co-located with the reference signal(s) provided in the second indicated TCI state - among all the indicated (e.g., M>1 or N>1, or M=2/N=2) TCI states.

In addition, when/if the indicator associated/configured to/for the TCI codepoint indicated in the beam indication DCI is set to "enabled" (or "disabled") or "1" (or "0") or "10" (or "00," "01," "11") - the indicator is provided/indicated/configured in the MAC CE command configured/associated with a value of CORESETGroupIndex, the first and second indicated TCI states - among all the indicated (e.g., M>1 or N>1, or M=2/N=2) TCI states of the TCI codepoint indicated in the beam indication DCI - could be (respectively) used for PDCCH reception(s) in a CORESET associated/configured with the same value of CORESETGroupIndex, or none of the indicated TCI states would be used for PDCCH reception(s) in a CORESET associated/configured with the same value of CORESETGroupIndex; i.e., the DM-RS antenna port(s) for the PDCCH reception(s) in a CORESET associated/configured with the same CORESET group index value could be quasi co-located with the reference signals (respectively) provided in the first and second indicated TCI states - among all the indicated (e.g., M>1 or N>1, or M=2/N=2) TCI states.

Furthermore, when/if the indicator associated/configured to/for the TCI codepoint indicated in the beam indication DCI is set to "disabled" (or "enabled") or "0" (or "1") or "11" (or "00," "01," "10") - the indicator is provided/indicated/configured in the MAC CE command associated/configured with a value of CORESETGroupIndex, the second and first indicated TCI states - among all the indicated (e.g., M>1 or N>1, or M=2/N=2) TCI states of the TCI codepoint indicated in the beam indication DCI - could be (respectively) used for PDCCH reception(s) in a CORESET configured/associated with the same value of CORESETGroupIndex, or none of the indicated TCI states would be used for PDCCH reception(s) in a CORESET configured/associated with the same value of CORESET group index; i.e., the DM-RS antenna port(s) for the PDCCH reception(s) in a CORESET associated/configured with a (or the same) CORESET group index value could be quasi co-located with the reference signals provided in the second and first indicated TCI states - among all the indicated (e.g., M>1 or N>1, or M=2/N=2) TCI states.

For another example, when/if the indicator associated/configured to/for the TCI codepoint indicated in the beam indication DCI is set to a TCI state ID/index - the indicator is provided/indicated/configured in the MAC CE command configured/associated with a value of CORESET group index, the indicated TCI state - among all the indicated (e.g., M>1 or N>1, or M=2/N=2) TCI states of the TCI codepoint indicated in the beam indication DCI - corresponding to the TCI state ID/index could be used for PDCCH reception(s) in one or more CORESETs associated/configured with the same value of CORESETGroupIndex; and, when/if the indicator associated/configured to/for the TCI codepoint indicated in the beam indication DCI is set to multiple (e.g., 2) TCI state IDs/indexes - the indicator is provided/indicated/configured in the MAC CE command configured/associated with a value of CORESET group index, the indicated TCI states - among all the indicated (e.g., M>1 or N>1, or M=2/N=2) TCI states of the TCI codepoint indicated in the beam indication DCI - corresponding to the indicated TCI state IDs/indexes could be used for PDCCH reception(s) in a CORESET associated/configured with the same value of CORESETGroupIndex.

In yet another example, the UE could be indicated/provided/configured by the network, e.g., in a DCI or via dynamic DCI based L1 signaling, an indicator to indicate one or more of the indicated TCI states for PDCCH reception(s) - i.e., the DM-RS antenna port(s) for the PDCCH reception(s) could be quasi co-located with the reference signal(s) provided in the indicated (e.g., by the indicator in the DCI) one or more of the indicated TCI states. For example, a new DCI field, denoted by "TCI state(s) indication" field, could be introduced in a DCI format (e.g., in DCI format 1_1, 1_2, 0_1, 0_2 or etc.), and used to provide the indicator. For another example, one or more bits/codepoints of one or more existing DCI fields - e.g., the "transmission configuration indication" field(s) or the 'SRS resource set indicator' field(s) - in a DCI format (e.g., DCI format 1_1, 1_2, 0_1, 0_2 or etc.) could be repurposed/used to provide the indicator.

For instance, the indicator could be provided in a beam indication DCI (e.g., DCI format 1_1 or 1_2 with or without DL assignment); alternatively, the indicator could be provided in an uplink DCI (e.g., DCI format 0_1 or 0_2 with or without UL assignment). Furthermore, in the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and **1,** or "00," "01," "10" and "11"). One or more CORESETs could be configured/associated with the same value of CORESETGroupIndex.

For example, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "enabled" (or "disabled") or "1" (or "0") or "00" (or "01," "10," "11"), the first indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the first indicated TCI state - among all the indicated (e.g., M>1 or N>1, or M=2/N=2) TCI states.

Furthermore, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "disabled" (or "enabled") or "0" (or "1") or "01" (or "00," "10," "11"), the second indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the second indicated TCI state - among all the indicated (e.g., M>1 or N>1, or M=2/N=2) TCI states.

In addition, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "enabled" (or "disabled") or "1" (or "0") or "10" (or "00," "01," "11"), the first and second indicated TCI states - among all the indicated (e.g., M>1 or N>1, or M=2/N=2) TCI states - could be (respectively) used for PDCCH reception(s) in a CORESET, none of the indicated TCI states would be used for the PDCCH reception(s); i.e., the DM-RS antenna port(s) for the PDCCH reception(s) in a CORESET could be quasi co-located with the reference signals (respectively) provided in the first and second indicated TCI states - among all the indicated (e.g., M>1 or N>1, or M=2/N=2) TCI states; and, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for PDCCH reception(s) in a CORESET, or none of the indicated TCI states would be used for the PDCCH reception(s); i.e., the DM-RS antenna port(s) for the PDCCH reception(s) in a CORESET could be quasi co-located with the reference signals (respectively) provided in the second and first indicated TCI states - among all the indicated (e.g., M>1 or N>1, or M=2/N=2) TCI states.

For another example, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to a TCI state ID/index, the indicated TCI state - among all the indicated (e.g., M>1 or N>1, or M=2/N=2) TCI states - that corresponds to the indicated (e.g., by the indicator/DCI field(s) in the DCI) TCI state ID/index could be used for PDCCH reception(s); i.e., the DM-RS antenna port(s) for the PDCCH reception(s) could be quasi co-located with the reference signal(s) provided in the indicated TCI state - among all the indicated (e.g., M>1 or N>1, or M=2/N=2) TCI states - that corresponds to the indicated (e.g., by the indicator/DCI field(s) in the DCI) TCI state ID/index.

And, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or

N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to multiple (e.g., 2) TCI state IDs/indexes, the indicated (e.g., the first and second, or the second and first) TCI states - among all the indicated (e.g., M>1 or N>1, or M=2/N=2) TCI states - that correspond to the indicated (e.g., by the indicator/DCI field(s) in the DCI) TCI state IDs/indexes could be used for PDCCH reception(s) in a CORESET; i.e., the DM-RS antenna port(s) for the PDCCH reception(s) in a CORESET could be quasi co-located with the reference signals provided in the indicated (e.g., the first and second, or the second and first) TCI states - among all the indicated (e.g., M>1 or N>1, or M=2/N=2) TCI states - that correspond to the indicated (e.g., by the indicator/DCI field(s) in the DCI) TCI state IDs/indexes.

Yet for another example, when/if a UE is provided/indicated/configured by the network, in an UL DCI (e.g., DCI format 0_1 or 0_2), the SRS resource set indicator set to "00" (or "01," "10," "11"), the first indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the first indicated TCI state - among all the indicated (e.g., M>1 or N>1, or M=2/N=2) TCI states.

Furthermore, when/if a UE is provided/indicated/configured by the network, in an UL DCI (e.g., DCI format 0_1 or 0_2), the SRS resource set indicator set to "01" (or "00," "10," "11"), the second indicated TCI state - among all the indicated (e.g., M>1 or N>1, or M=2/N=2) TCI states - could be used for PDCCH reception(s); i.e., the DM-RS antenna port(s) for the PDCCH reception(s) could be quasi co-located with the reference signal(s) provided in the second indicated TCI state - among all the indicated (e.g., M>1 or N>1, or M=2/N=2) TCI states. In addition, when/if a UE is provided/indicated/configured by the network, in an UL DCI (e.g., DCI format 0_1 or 0_2), the SRS resource set indicator set to "10" (or "00," "01," "11"), the first and second indicated TCI states - among all the indicated (e.g., M>1 or N>1, or M=2/N=2) TCI states - could be (respectively) used for PDCCH reception(s) in a CORESET, or none of the indicated TCI states would be used for the PDCCH reception(s); i.e., the DM-RS antenna port(s) for the PDCCH reception(s) in a CORESET could be quasi co-located with the reference signals (respectively) provided in the first and second indicated TCI states - among all the indicated (e.g., M>1 or N>1, or M=2/N=2) TCI states. And, when/if a UE is provided/indicated/configured by the network, in an UL DCI (e.g., DCI format 0_1 or 0_2), the SRS resource set indicator set to "11" (or "00," "01," "10"), the second and first indicated TCI states - among all the indicated (e.g., M>1 or N>1, or M=2/N=2) TCI states - could be (respectively) used for PDCCH reception(s) in a CORESET, or none of the indicated TCI states would be used for the PDCCH reception(s); i.e., the DM-RS antenna port(s) for the PDCCH reception(s) in a CORESET could be quasi co-located with the reference signals (respectively) provided in the second and first indicated TCI states - among all the indicated (e.g., M>1 or N>1, or M=2/N=2) TCI states.

In yet another example, the UE could be indicated/provided/configured by the network, e.g., in a DCI or via dynamic DCI based L1 signaling received in a CORESET associated/configured with a value of CORESET group index, an indicator to indicate one or more of the indicated TCI states for PDCCH reception(s) in one or more CORESETs associated/configured with a (or the same) value of CORESET group index - i.e., the DM-RS antenna port(s) for the PDCCH reception(s) in one or more CORESETs associated/configured with a value of CORESETGroupIndex could be quasi co-located with the reference signal(s) provided in the indicated (e.g., by the indicator in the DCI received in a CORESET associated/configured with a (or the same) value of CORESETGroupIndex) one or more of the indicated TCI states. For example, a new DCI field, denoted by "TCI state(s) indication" field, could be introduced in a DCI format (e.g., in DCI format 1_1, 1_2, 0_1, 0_2 or etc.), and used to provide the indicator.

For another example, one or more bits/codepoints of one or more existing DCI fields - e.g., the "transmission configuration indication" field(s) or the 'SRS resource set indicator' field(s) - in a DCI format (e.g., DCI format 1_1, 1_2, 0_1, 0_2 or etc.) could be repurposed/used to provide the indicator. For instance, the indicator could be provided in a beam indication DCI (e.g., DCI format 1_1 or 1_2 with or without DL assignment); alternatively, the indicator could be provided in an uplink DCI (e.g., DCI format 0_1 or 0_2 with or without UL assignment). Furthermore, in the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or "00," "01," "10" and "11"). One or more CORESETs could be configured/associated with the same value of CORESETGroupIndex.

For example, when/if a UE is provided/indicated/configured by the network, in a DL DCI received in a CORESET associated with a value of CORESETGroupIndex, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "enabled" (or "disabled") or "1" (or "0") or "00" (or "01," "10," "11"), the first indicated TCI state - among all the indicated (e.g., M>1 or N>1, or M=2/N=2) TCI states - could be used for PDCCH reception(s) in one or more CORESETs associated/configured with a (or the same) value of CORESETGroupIndex; i.e., the DM-RS antenna port(s) for the PDCCH reception(s) in one or more CORESETs associated/configured with a value of CORESET group index could be quasi co-located with the reference signal(s) provided in the first indicated TCI state - among all the indicated (e.g., M>1 or N>1, or M=2/N=2) TCI states.

Furthermore, when/if a UE is provided/indicated/configured by the network, in a DL DCI received in a CORESET associated/configured with a value of CORESETGroupIndex, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "disabled" (or "enabled") or "0" (or "1") or "01" (or "00," "10," "11"), the second indicated TCI state - among all the indicated (e.g., M>1 or N>1, or M=2/N=2) TCI states - could be used for PDCCH reception(s) in one or more CORESETs associated/configured with a (or the same) value of CORESET group index; i.e., the DM-RS antenna port(s) for the PDCCH reception(s) in one or more CORESETs associated/configured with a value of CORESETGroupIndex could be quasi co-located with the reference signal(s) provided in the second indicated TCI state - among all the indicated (e.g., M>1 or N>1, or M=2/N=2) TCI states.

In addition, when/if a UE is provided/indicated/configured by the network, in a DL DCI received in a CORESET associated with a value of CORESETGroupIndex, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "enabled" (or "disabled") or "1" (or "0") or "10" (or "00," "01," "11"), the first and second indicated TCI states - among all the indicated (e.g., M>1 or N>1, or M=2/N=2) TCI states - could be (respectively) used for PDCCH reception(s) in a CORESET associated/configured with a (or the same) value of CORESETGroupIndex, or none of the indicated TCI states would be used for the PDCCH reception(s) in a CORESET associated/configured with a (or the same) value of CORESETGroupIndex; i.e., the DM-RS antenna port(s) for the PDCCH reception(s) in a CORESET associated/configured with a value of CORESET group index could be quasi co-located with the reference signals (respectively) provided in the first and second indicated TCI states - among all the indicated (e.g., M>1 or N>1, or M=2/N=2) TCI states.

And, when/if a UE is provided/indicated/configured by the network, in a DL DCI received in a CORESET associated with a value of CORESETGroupIndex, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "disabled" (or "enabled") or "0" (or "1") or "11" (or "00," "01," "10"), the second and first indicated TCI states - among all the indicated (e.g., M>1 or N>1, or M=2/N=2) TCI states - could be (respectively) used for PDCCH reception(s) in a CORESET associated/configured with a (or the same) value of CORESETGroupIndex, or none of the indicated TCI states would be used for the PDCCH reception(s) in a CORESET associated/configured with a (or the same) value of CORESETGroupIndex; i.e., the DM-RS antenna port(s) for the PDCCH reception(s) in a CORESET associated/configured with a value of CORESET group index could be quasi co-located with the reference signals (respectively) provided in the second and first indicated TCI states - among all the indicated (e.g., M>1 or N>1, or M=2/N=2) TCI states.

For another example, when/if a UE is provided/indicated/configured by the network, in a DL DCI received in a CORESET configured/associated with a value of CORESETGroupIndex, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to a TCI state ID/index, the indicated TCI state - among all the indicated (e.g., M>1 or N>1, or M=2/N=2) TCI states - that corresponds to the indicated (e.g., by the indicator/DCI field(s) in the DCI) TCI state ID/index could be used for PDCCH reception(s) in one or more CORESETs associated/configured with a (or the same) value of CORESETGroupIndex; i.e., the DM-RS antenna port(s) for the PDCCH reception(s) in one or more CORESETs associated/configured with a value of CORESETGroupIndex could be quasi co-located with the reference signal(s) provided in the indicated TCI state - among all the indicated (e.g., M>1 or N>1, or M=2/N=2) TCI states - that corresponds to the indicated (e.g., by the indicator/DCI field(s) in the DCI) TCI state ID/index.

And, when/if a UE is provided/indicated/configured by the network, in a DL DCI received in a CORESET configured/associated with a value of CORESETGroupIndex, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to multiple (e.g., 2) TCI state IDs/indexes, the indicated (e.g., the first and second, or the second and first) TCI states - among all the indicated (e.g., M>1 or N>1, or M=2/N=2) TCI states - that correspond to the indicated (e.g., by the indicator/DCI field(s) in the DCI) TCI state IDs/indexes could be used for PDCCH reception(s) in a CORESET associated/configured with a (or the same) value of CORESETGroupIndex; i.e., the DM-RS antenna port(s) for the PDCCH reception(s) in a CORESET associated/configured with a value of CORESETGroupIndex could be quasi co-located with the reference signals (respectively) provided in the indicated (e.g., the first and second, or the second and first) TCI states - among all the indicated (e.g., M>1 or N>1, or M=2/N=2) TCI states - that correspond to the indicated (e.g., by the indicator/DCI field(s) in the DCI) TCI state IDs/indexes.

Yet for another example, when/if a UE is provided/indicated/configured by the network, in an UL DCI (e.g., DCI format 0_1 or 0_2) received in a CORESET configured/associated with a value of CORESET group index, the SRS resource set indicator set to "00" (or "01," "10," "11"), the first indicated TCI state - among all the indicated (e.g., M>1 or N>1, or M=2/N=2) TCI states - could be used for PDCCH reception(s) in one or more CORESETs associated/configured with a (or the same) value of CORESET group index; i.e., the DM-RS antenna port(s) for the PDCCH reception(s) in one or more CORESETs associated/configured with a value of CORESETGroupIndex could be quasi co-located with the reference signal(s) provided in the first indicated TCI state - among all the indicated (e.g., M>1 or N>1, or M=2/N=2) TCI states.

Furthermore, when/if a UE is provided/indicated/configured by the network, in an UL DCI (e.g., DCI format 0_1 or 0_2) received in a CORESET associated/configured with a value of CORESET group index, the SRS resource set indicator set to "01" (or "00," "10," "11"), the second indicated TCI state - among all the indicated (e.g., M>1 or N>1, or M=2/N=2) TCI states - could be used for PDCCH reception(s) in one or more CORESETs associated/configured with a (or the same) value of CORESET group index; i.e., the DM-RS antenna port(s) for the PDCCH reception(s) in one or more CORESETs associated/configured with a value of CORESETGroupIndex could be quasi co-located with the reference signal(s) provided in the second indicated TCI state - among all the indicated (e.g., M>1 or N>1, or M=2/N=2) TCI states. In addition, when/if a UE is provided/indicated/configured by the network, in an UL DCI (e.g., DCI format 0_1 or 0_2) received in a CORESET configured/associated with a value of CORESET group index, the SRS resource set indicator set to "10" (or "00," "01," "11"), the first and second indicated TCI states - among all the indicated (e.g., M>1 or N>1, or M=2/N=2) TCI states - could be (respectively) used for PDCCH reception(s) in a CORESET associated/configured with a (or the same) value of CORESET group index, or none of the indicated TCI states would be used for PDCCH reception(s) in a CORESET associated/configured with a (or the same) value of CORESETGroupIndex; i.e., the DM-RS antenna port(s) for the PDCCH reception(s) in a CORESET associated/configured with a value of CORESETGroupIndex could be quasi co-located with the reference signals (respectively) provided in the first and second indicated TCI states - among all the indicated (e.g., M>1 or N>1, or M=2/N=2) TCI states.

And, when/if a UE is provided/indicated/configured by the network, in an UL DCI (e.g., DCI format 0_1 or 0_2) received in a CORESET configured/associated with a value of CORESET group index, the SRS resource set indicator set to "11" (or "00," "01," "10"), the second and first indicated TCI states - among all the indicated (e.g., M>1 or N>1, or M=2/N=2) TCI states - could be (respectively) used for PDCCH reception(s) in a CORESET associated/configured with a (or the same) value of CORESET group index, or none of the indicated TCI states would be used for PDCCH reception(s) in a CORESET associated/configured with a (or the same) value of CORESETGroupIndex; i.e., the DM-RS antenna port(s) for the PDCCH reception(s) in a CORESET associated/configured with a value of CORESETGroupIndex could be quasi co-located with the reference signals (respectively) provided in the second and first indicated TCI states - among all the indicated (e.g., M>1 or N>1, or M=2/N=2) TCI states.

In a (sDCI based) multi-TRP system, for PDSCH reception(s), following examples can be provided.

In one example, the UE could be indicated/provided/configured by the network, e.g., via higher layer RRC signaling/parameter, an indicator to indicate one or more of the indicated TCI states for PDSCH reception(s) - i.e., the DM-RS antenna port(s) for the PDSCH reception(s) could be quasi co-located with the reference signal(s) provided in the indicated (e.g., by the RRC configured/indicated/provided indicator) one or more of the indicated TCI states. For example, the higher layer parameter PDCCH-Config/PDSCH-Config or ControlResourceSet that configures a CORESET could include/configure/provide/comprise/indicate the indicator. When/if the indicator is set to "enabled" (or "disabled") or "1" (or "0") or "00" (or "01," "10," "11"), e.g., when/if a UE receives a DCI - e.g., that schedules the PDSCH, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) - e.g., that schedules the PDSCH, in a CORESET associated/configured with the indicator set to "enabled" (or "disabled") or "1" (or "0") or "00" (or "01," "10," "11"), the first indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the first indicated TCI state - among all the indicated (e.g., M>1 or N>1, or M=2/N=2) TCI states.

Furthermore, when/if the indicator is set to "disabled" (or "enabled") or "0" (or "1") or "01" (or "00," "10," "11"), e.g., when/if a UE receives a DCI - e.g., that schedules the PDSCH, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) - e.g., that schedules the PDSCH, in a CORESET associated/configured with the indicator set to "disabled" (or "enabled") or "0" (or "1") or "01" (or "00," "10," "11"), the second indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the second indicated TCI state - among all the indicated (e.g., M>1 or N>1, or M=2/N=2) TCI states.

In addition, when/if the indicator is set to "enabled" (or "disabled") or "1" (or "0") or "10" (or "00," "01," "11"), e.g., when/if a UE receives a DCI - e.g., that schedules the PDSCH, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) - e.g., that schedules the PDSCH, in a CORESET associated/configured with the indicator set to "enabled" (or "disabled") or "1" (or "0") or "10" (or "00," "01," "11"), the first and second indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the first and second indicated TCI states - among all the indicated (e.g., M>1 or N>1, or M=2/N=2) TCI states - respectively; when/if the indicator is set to "disabled" (or "enabled") or "0" (or "1") or "11" (or "00," "01," "10"), e.g., when/if a UE receives a DCI - e.g., that schedules the PDSCH, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) - e.g., that schedules the PDSCH, in a CORESET associated/configured with the indicator set to "disabled" (or "enabled") or "0" (or "1") or "11" (or "00," "01," "10"), the second and first indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the second and first indicated TCI states - among all the indicated (e.g., M>1 or N>1, or M=2/N=2) TCI states - respectively.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or 00, 01, 10 and 11). One or more CORESETs could be configured/associated with the same value of CORESETGroupIndex.

In another example, the UE could be indicated/provided/configured by the network, e.g., via higher layer RRC signaling/parameter, an indicator to indicate one or more of the indicated TCI states for PDSCH reception(s) - i.e., the DM-RS antenna port(s) for the PDSCH reception(s) could be quasi co-located with the reference signal(s) provided in the indicated (e.g., by the RRC configured/indicated/provided indicator) one or more of the indicated TCI states. For example, the higher layer parameter PDCCH-Config/PDSCH-Config or ControlResourceSet that configures a CORESET could include/configure/provide/comprise/indicate the indicator. When/if the indicator is set to "enabled" (or "disabled") or "1" (or "0") or "00" (or "01," "10," "11"), the TCI state for receiving the PDSCH could follow the TCI state used for receiving the PDCCH, e.g., the TCI state used for receiving a DCI - e.g., that schedules the PDSCH, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) - e.g., that schedules the PDSCH; here, the TCI state could correspond to the first or second indicated TCI state - among all the indicated (e.g., M>1 or N>1, or M=2/N=2) TCI states; i.e., the DM-RS antenna port(s) for the PDSCH reception(s) could be quasi co-located with the reference signal(s) provided in the TCI state (e.g., the first or second indicated TCI state - among all the indicated (e.g., M>1 or N>1, or M=2/N=2) TCI states), with which the DM-RS antenna port(s) for the PDCCH reception(s) is quasi co-located.

Furthermore, when/if the indicator is set to "enabled" (or "disabled") or "1" (or "0") or "10" (or "00," "01," "11"), the first and second indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the first and second indicated TCI states - among all the indicated (e.g., M>1 or N>1, or M=2/N=2) TCI states - respectively; when/if the indicator is set to "enabled" (or "disabled") or "1" (or "0") or "11" (or "00," "01," "10"), the second and first indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the second and first indicated TCI states - among all the indicated (e.g., M>1 or N>1, or M=2/N=2) TCI states - respectively. In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or 00, 01, 10 and 11). One or more CORESETs could be configured/associated with the same value of CORESETGroupIndex.

In yet another example, the UE could be indicated/provided/configured by the network, e.g., via higher layer RRC signaling/parameter, an indicator to indicate one or more of the indicated TCI states for PDSCH reception(s) - i.e., the DM-RS antenna port(s) for the PDSCH reception(s) could be quasi co-located with the reference signal(s) provided in the indicated (e.g., by the RRC configured/indicated/provided indicator) one or more of the indicated TCI states. For example, the higher layer parameter PDCCH-Config/PDSCH-Config or ControlResourceSet that configures a CORESET could include/configure/provide/comprise/indicate the indicator. When/if the indicator is set to "enabled" (or "disabled") or "1" (or "0") or "00" (or "01," "10," "11"), the TCI state for receiving the PDSCH could follow the TCI state used for receiving the PDCCH(s) in one or more CORESETs associated/configured with CORESETGroupIndex value k (e.g., k=0 or 1, or k= "00," "01," "10" or "11"), e.g., the TCI state used for receiving a DCI - e.g., that schedules the PDSCH - in a CORESET associated/configured with CORESETGroupIndex value k (e.g., k=0 or 1, or k= "00," "01," "10" or "11"), e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) - e.g., that schedules the PDSCH - received in a CORESET associated/configured with CORESETGroupIndex value k (e.g., k=0 or 1, or k= "00," "01," "10" or "11"); here, the TCI state could correspond to the first or second indicated TCI state - among all the indicated (e.g., M>1 or N>1, or M=2/N=2) TCI states, and the value k could be determined according to (i) fixed in the system specification(s) or (2) indicated/configured/provided by the network, e.g., via higher layer RRC signaling and/or MAC CE command and/or dynamic DCI based L1 signaling; i.e., the DM-RS antenna port(s) for the PDSCH reception(s) could be quasi co-located with the reference signal(s) provided in the TCI state (e.g., the first or second indicated TCI state - among all the indicated (e.g., M>1 or N>1, or M=2/N=2) TCI states), with which the DM-RS antenna port(s) for the PDCCH reception(s) in one or more CORESETs associated/configured with CORESETGroupIndex value k (e.g., k=0 or 1, or k= "00," "01," "10" or "11") is quasi co-located, where the value k could be determined according to (i) fixed in the system specification(s) or (2) indicated/configured/provided by the network, e.g., via higher layer RRC signaling and/or MAC CE command and/or dynamic DCI based L1 signaling.

Furthermore, when/if the indicator is set to "enabled" (or "disabled") or "1" (or "0") or "10" (or "00," "01," "11"), the first and second indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the first and second indicated TCI states - among all the indicated (e.g., M>1 or N>1, or M=2/N=2) TCI states - respectively; when/if the indicator is set to "enabled" (or "disabled") or "1" (or "0") or "11" (or "00," "01," "10"), the second and first indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the second and first indicated TCI states - among all the indicated (e.g., M>1 or N>1, or M=2/N=2) TCI states - respectively.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or 00, 01, 10 and 11). One or more CORESETs could be configured/associated with the same value of CORESETGroupIndex.

In yet another example, the UE could be indicated/provided/configured by the network, e.g., via higher layer RRC signaling/parameter and/or MAC CE command and/or dynamic DCI based L1 signaling, an indicator to indicate one or more of the indicated TCI states for PDSCH reception(s) - i.e., the DM-RS antenna port(s) for the PDSCH reception(s) could be quasi co-located with the reference signal(s) provided in the indicated (e.g., by the RRC/MAC CE/DCI configured/indicated/provided indicator) one or more of the indicated TCI states. For example, the higher layer parameter PDCCH-Config/PDSCH-Config or ControlResourceSet that configures a CORESET or a MAC CE command or a DCI format (e.g., DCI format 0_1, 0_2, 1_1, 1_2 or etc.) could include/configure/provide/comprise/indicate the indicator. When/if the indicator is set to "enabled" (or "disabled") or "1" (or "0") or "00" (or "01," "10," "11"), the first indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the first indicated TCI state - among all the indicated (e.g., M>1 or N>1, or M=2/N=2) TCI states; when/if the indicator is set to "disabled" (or "enabled") or "0" (or "1") or "01" (or "00," "10," "11"), the second indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the second indicated TCI state - among all the indicated (e.g., M>1 or N>1, or M=2/N=2) TCI states.

Furthermore, when/if the indicator is set to "enabled" (or "disabled") or "1" (or "0") or "10" (or "00," "01," "11"), the first and second indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the first and second indicated TCI states - among all the indicated (e.g., M>1 or N>1, or M=2/N=2) TCI states - respectively; when/if the indicator is set to "enabled" (or "disabled") or "1" (or "0") or "11" (or "00," "01," "10"), the second and first indicated TCI states - among all the indicated (e.g., M>1 or N>1, or M=2/N=2) TCI states - could be respectively used for PDSCH reception(s); i.e., the DM-RS antenna port(s) for the PDSCH reception(s) could be quasi co-located with the reference signal(s) provided in both the second and first indicated TCI states - among all the indicated (e.g., M>1 or N>1, or M=2/N=2) TCI states - respectively.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or 00, 01, 10 and 11). One or more CORESETs could be configured/associated with the same value of CORESETGroupIndex.

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), an indicator to indicate one or more of the indicated TCI states for PDSCH reception(s) - i.e., the DM-RS antenna port(s) for the PDSCH reception(s) could be quasi co-located with the reference signal(s) provided in the indicated (e.g., by the indicator provided/indicated/configured in the MAC CE) one or more of the indicated TCI states. In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc.

For example, when/if the UE receives from the network the MAC CE command with the indicator provided/indicated/configured therein set to "enabled" (or "disabled") or "1" (or "0"), the first indicated TCI state - among all the indicated (e.g., M>1 or N>1, or M=2/N=2) TCI states - could be used for PDSCH reception(s). Furthermore, when/if the UE receives from the network the MAC CE command with the indicator provided/indicated/configured therein set to "disabled" (or "enabled") or "0" (or "1"), the second indicated TCI state - among all the indicated (e.g., M>1 or N>1, or M=2/N=2) TCI states - could be used for PDSCH reception(s). For another example, when/if the UE receives from the network the MAC CE command with the indicator provided/indicated/configured therein set to a TCI state ID/index, the indicated TCI state corresponding to the TCI state ID/index could be used for PDSCH reception(s).

In yet another example, a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), one or more indicators each associated/configured to/for an activated TCI codepoint in the MAC CE command; each indicator could indicate one or more of the TCI states of the corresponding TCI codepoint for PDSCH reception(s) - e.g., when the corresponding TCI codepoint is indicated in the beam indication DCI. That is, the DM-RS antenna port(s) for the PDSCH reception(s) could be quasi co-located with the reference signal(s) provided in the indicated (e.g., by an indicator provided/configured/indicated in the MAC CE command) one or more of the indicated TCI states.

In the present disclosure, each indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For example, when/if the indicator associated/configured to/for the TCI codepoint indicated in the beam indication DCI is set to "enabled" (or "disabled") or "1" (or "0") - the indicator is provided/indicated/configured in the MAC CE command, the first indicated TCI state - among all the indicated (e.g., M>1 or N>1, or M=2/N=2) TCI states of the TCI codepoint indicated in the beam indication DCI - could be used for PDSCH reception(s).

Furthermore, when/if the indicator associated/configured to/for the TCI codepoint indicated in the beam indication DCI is set to "disabled" (or "enabled") or "0" (or "1") - the indicator is provided/indicated/configured in the MAC CE command, the second indicated TCI state - among all the indicated (e.g., M>1 or N>1, or M=2/N=2) TCI states of the TCI codepoint indicated in the beam indication DCI - could be used for PDSCH reception(s). For another example, when/if the indicator associated/configured to/for the TCI codepoint indicated in the beam indication DCI is set to a TCI state ID/index - the indicator is provided/indicated/configured in the MAC CE command, the indicated TCI state - among all the indicated (e.g., M>1 or N>1, or M=2/N=2) TCI states of the TCI codepoint indicated in the beam indication DCI - corresponding to the TCI state ID/index could be used for PDSCH reception(s).

In yet another example), a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), an indicator to indicate one or more of the indicated TCI states for receiving PDSCH(s) scheduled by DCI(s)/PDCCH candidate(s) received in one or more CORESETs associated/configured with a (or the same) value of CORESET group index - i.e., the DM-RS antenna port(s) for receiving PDSCH(s) scheduled by DCI(s)/PDCCH candidate(s) received in one or more CORESETs associated/configured with a (or the same) value of CORESET group index could be quasi co-located with the reference signal(s) provided in the indicated (e.g., by the indicator in the MAC CE command configured/associated with the same value of CORESET group index) one or more of the indicated TCI states.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. Furthermore, as discussed above, the MAC CE command could be configured/associated with the CORESETGroupIndex value. For instance, the MAC CE command/format could contain/provide/indicate/comprise one or more fields indicating/providing a value of CORESETGroupIndex. For example, when/if the UE receives from the network the MAC CE command configured/associated with a CORESETGroupIndex value with the indicator provided/indicated/configured therein set to "enabled" (or "disabled") or "1" (or "0"), the first indicated TCI state - among all the indicated (e.g., M>1 or N>1, or M=2/N=2) TCI states - could be used for receiving PDSCH(s) scheduled by DCI(s)/PDCCH candidate(s) received in one or more CORESETs associated/configured with a (or the same) CORESETGroupIndex value.

Furthermore, when/if the UE receives from the network the MAC CE command configured/associated with a CORESETGroupIndex value with the indicator provided/indicated/configured therein set to "disabled" (or "enabled") or "0" (or "1"), the second indicated TCI state - among all the indicated (e.g., M>1 or N>1, or M=2/N=2) TCI states - could be used for receiving PDSCH(s) scheduled by DCI(s)/PDCCH candidate(s) received in one or more CORESETs associated/configured with a (or the same) CORESETGroupIndex value. For another example, when/if the UE receives from the network the MAC CE command configured/associated with a CORESETGroupIndex value with the indicator provided/indicated/configured therein set to a TCI state ID/index, the indicated TCI state corresponding to the TCI state ID/index could be used for receiving PDSCH(s) scheduled by DCI(s)/PDCCH candidate(s) received in one or more CORESETs configured/associated with a (or the same) value of CORESETGroupIndex.

In yet another example), a UE could be provided/configured/indicated by the network, e.g., in a MAC CE command (e.g., in a TCI states activation/deactivation for UE-specific PDSCH MAC CE or a TCI state indication for UE-specific PDCCH MAC CE or a unified TCI states activation/deactivation for UE-specific PDSCH MAC CE), one or more indicators each associated/configured to/for an activated TCI codepoint in the MAC CE command; each indicator could indicate one or more of the TCI states of the corresponding TCI codepoint for receiving PDSCH(s) scheduled by DCI(s)/PDCCH candidate(s) received in one or more CORESETs associated with a (or the same) value of CORESET group index - e.g., when the corresponding TCI codepoint is indicated in the beam indication DCI.

That is, the DM-RS antenna port(s) for receiving the PDSCH(s) scheduled by DCI(s)/PDCCH candidate(s) received in one or more CORESETs configured/associated with a (or the same) value of CORESET group index could be quasi co-located with the reference signal(s) provided in the indicated (e.g., by an indicator in the MAC CE command configured/associated with the same value of CORESETGroupIndex value) one or more of the indicated TCI states. In the present disclosure, each indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. Furthermore, as discussed above, the MAC CE command could be configured/associated with the CORESETGroupIndex value.

For one instance, the MAC CE command/format could contain/provide/indicate/comprise one or more fields indicating/providing a value of CORESETGroupIndex. For example, when/if the indicator associated/configured to/for the TCI codepoint indicated in the beam indication DCI is set to "enabled" (or "disabled") or "1" (or "0") - the indicator is provided/indicated/configured in the MAC CE command configured/associated with a value of CORESETGroupIndex, the first indicated TCI state - among all the indicated (e.g., M>1 or N>1, or M=2/N=2) TCI states of the TCI codepoint indicated in the beam indication DCI - could be used for receiving PDSCH(s) scheduled by DCI(s)/PDCCH candidate(s) received in one or more CORESETs associated/configured with the same value of CORESETGroupIndex.

Furthermore, when/if the indicator associated/configured to/for the TCI codepoint indicated in the beam indication DCI is set to "disabled" (or "enabled") or "0" (or "1") - the indicator is provided/indicated/configured in the MAC CE command associated/configured with a value of CORESETGroupIndex, the second indicated TCI state - among all the indicated (e.g., M>1 or N>1, or M=2/N=2) TCI states of the TCI codepoint indicated in the beam indication DCI - could be used for receiving PDSCH(s) scheduled by DCI(s)/PDCCH candidate(s) received in one or more CORESETs configured/associated with the same value of CORESETGroupIndex. For another example, when/if the indicator associated/configured to/for the TCI codepoint indicated in the beam indication DCI is set to a TCI state ID/index - the indicator is provided/indicated/configured in the MAC CE command configured/associated with a value of CORESET group index, the indicated TCI state - among all the indicated (e.g., M>1 or N>1, or M=2/N=2) TCI states of the TCI codepoint indicated in the beam indication DCI - corresponding to the TCI state ID/index could be used for receiving PDSCH(s) scheduled by DCI(s)/PDCCH candidate(s) received in one or more CORESETs associated/configured with the same value of CORESETGroupIndex.

In yet another example, the UE could be indicated/provided/configured by the network, e.g., in a DCI or via dynamic DCI based L1 signaling, an indicator to indicate one or more of the indicated TCI states for PDSCH reception(s) - i.e., the DM-RS antenna port(s) for the PDSCH reception(s) could be quasi co-located with the reference signal(s) provided in the indicated (e.g., by the indicator in the DCI) one or more of the indicated TCI states. For example, a new DCI field, denoted by "TCI state(s) indication" field, could be introduced in a DCI format (e.g., in DCI format 1_1, 1_2, 0_1, 0_2 or etc.), and used to provide the indicator. For another example, one or more bits/codepoints of one or more existing DCI fields - e.g., the "transmission configuration indication" field(s) or the 'SRS resource set indicator' field(s) or the "time-domain resource allocation" (TDRA) field(s) or the "frequency-domain resource allocation" (FDRA) field(s) - in a DCI format (e.g., DCI format 1_1, 1_2, 0_1, 0_2 or etc.) could be repurposed/used to provide the indicator.

For one instance, the indicator could be provided in a beam indication DCI (e.g., DCI format 1_1 or 1_2 with or without DL assignment); alternatively, the indicator could be provided in an uplink DCI (e.g., DCI format 0_1 or 0_2 with or without UL assignment). In addition, the DCI that provides/indicates/configures the indicator could schedule the PDSCH(s) or not. Furthermore, in the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or "00," "01," "10" or "11"). One or more CORESETs could be configured/associated with the same value of CORESETGroupIndex.

For example, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "enabled" (or "disabled") or "1" (or "0") or "00" (or "01," "10," "11"), the first indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the first indicated TCI state - among all the indicated (e.g., M>1 or N>1, or M=2/N=2) TCI states.

Furthermore, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "disabled" (or "enabled") or "0" (or "1") or "01" (or "00," "10," "11"), the second indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the second indicated TCI state - among all the indicated (e.g., M>1 or N>1, or M=2/N=2) TCI states.

When/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "enabled" (or "disabled") or "1" (or "0") or "10" (or "00," "01," "11"), the first and second indicated TCI states - among all the indicated (e.g., M>1 or N>1, or M=2/N=2) TCI states - could be used for PDSCH reception(s), respectively; i.e., the DM-RS antenna port(s) for the PDSCH reception(s) could be quasi co-located with the reference signal(s) provided in the first and second indicated TCI states - among all the indicated (e.g., M>1 or N>1,

or M=2/N=2) TCI states - respectively; when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s)) set to "disabled" (or "enabled") or "0" (or "1") or "11" (or "00," "01," "10"), the second and first indicated TCI states - among all the indicated (e.g., M>1 or N>1, or M=2/N=2) TCI states - could be used for PDSCH reception(s), respectively; i.e., the DM-RS antenna port(s) for the PDSCH reception(s) could be quasi co-located with the reference signal(s) provided in the second and first indicated TCI states - among all the indicated (e.g., M>1 or N>1, or M=2/N=2) TCI states - respectively. The DCI that provides/configures/indicates the indicator could be with or without DL assignment, or could schedule the corresponding PDSCH(s) or not.

For another example, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s) such as the "transmission configuration indication" field that provides/configures/indicates the indicator) set to a TCI state ID/index, the indicated TCI state - among all the indicated (e.g., M>1 or N>1, or M=2/N=2) TCI states - that corresponds to the indicated (e.g., by the indicator/DCI field(s) such as the TCI field in the DCI) TCI state ID/index could be used for PDSCH reception(s); i.e., the DM-RS antenna port(s) for the PDSCH reception(s) could be quasi co-located with the reference signal(s) provided in the indicated TCI state - among all the indicated (e.g., M>1 or N>1, or M=2/N=2) TCI states - that corresponds to the indicated (e.g., by the indicator/DCI field(s) such as the TCI field in the DCI) TCI state ID/index.

Furthermore, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), the indicator (and therefore, the corresponding DCI field(s) such as the TCI field that provides/configures/indicates the indicator) set to multiple (e.g., more than one) TCI state IDs/indexes, the indicated TCI states - among all the indicated (e.g., M>1 or N>1, or M=2/N=2) TCI states - that correspond to the indicated (e.g., by the indicator/DCI field(s) such as the TCI field in the DCI) TCI state IDs/indexes could be used for PDSCH reception(s); i.e., the DM-RS antenna port(s) for the PDSCH reception(s) could be quasi co-located with the reference signal(s) provided in the indicated TCI states - among all the indicated (e.g., M>1 or N>1, or M=2/N=2) TCI states - that correspond to the indicated (e.g., by the indicator/DCI field(s) such as the TCI field in the DCI) TCI state IDs/indexes; for this example, the indicated TCI states could correspond to the first and second indicated TCI states respectively or the second and first TCI states respectively, depending on, e.g., a fixed relationship specified/defined in the system specification(s) and/or network's configuration(s)/indication(s) via higher layer RRC signaling/parameter and/or MAC CE command and/or dynamic DCI based L1 signaling. The DCI that provides/configures/indicates the indicator could be with or without DL assignment, or could schedule the corresponding PDSCH(s) or not.

Yet for another example, when/if a UE is provided/indicated/configured by the network, in an UL DCI (e.g., DCI format 0_1 or 0_2), the SRS resource set indicator set to "00" (or "01," "10," "11"), the first indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the first indicated TCI state - among all the indicated (e.g., M>1 or N>1, or M=2/N=2) TCI states; when/if a UE is provided/indicated/configured by the network, in an UL DCI (e.g., DCI format 0_1 or 0_2), the SRS resource set indicator set to "01" (or "00," "10," "11"), the second indicated TCI state - among all the indicated (e.g., M>1 or N>1, or M=2/N=2) TCI states - could be used for PDSCH reception(s); i.e., the DM-RS antenna port(s) for the PDSCH reception(s) could be quasi co-located with the reference signal(s) provided in the second indicated TCI state - among all the indicated (e.g., M>1 or N>1, or M=2/N=2) TCI states.

Furthermore, when/if a UE is provided/indicated/configured by the network, in an UL DCI (e.g., DCI format 0_1 or 0_2), the SRS resource set indicator set to "10" (or "00," "01," "11"), the first and second indicated TCI states - among all the indicated (e.g., M>1 or N>1, or M=2/N=2) TCI states - could be used for PDSCH reception(s), respectively; i.e., the DM-RS antenna port(s) for the PDSCH reception(s) could be quasi co-located with the reference signal(s) provided in the first and second indicated TCI states - among all the indicated (e.g., M>1 or N>1, or M=2/N=2) TCI states - respectively; when/if a UE is provided/indicated/configured by the network, in an UL DCI (e.g., DCI format 0_1 or 0_2), the SRS resource set indicator set to "11" (or "00," "01," "10"), the second and first indicated TCI states - among all the indicated (e.g., M>1 or N>1, or M=2/N=2) TCI states - could be used for PDSCH reception(s), respectively; i.e., the DM-RS antenna port(s) for the PDSCH reception(s) could be quasi co-located with the reference signal(s) provided in the second and first indicated TCI states - among all the indicated (e.g., M>1 or N>1, or M=2/N=2) TCI states - respectively.

Yet for another example, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), a TCI state (or a TCI state ID/index) provided by a codepoint of the "transmission configuration indication" (TCI) field, the indicated TCI state could be used for PDSCH reception(s); i.e., the DM-RS antenna port(s) for the PDSCH reception(s) could be quasi co-located with the reference signal(s) provided in the indicated TCI state by the TCI state codepoint of the TCI field in the DCI.

Furthermore, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), multiple (e.g., more than one) TCI states (or TCI state IDs/indexes) by a codepoint of the TCI field, the indicated TCI states could be used for PDSCH reception(s); i.e., the DM-RS antenna port(s) for the PDSCH reception(s) could be quasi co-located with the reference signal(s) provided in the indicated TCI states by the TCI state codepoint of the TCI field in the DCI; for this example, the indicated TCI states could correspond to the first and second indicated TCI states respectively or the second and first TCI states respectively, depending on, e.g., a fixed relationship specified/defined in the system specification(s) and/or network's configuration(s)/indication(s) via higher layer RRC signaling/parameter and/or MAC CE command and/or dynamic DCI based L1 signaling.

Alternatively, when/if a UE is provided/indicated/configured by the network, in a DL DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) or an UL DCI (e.g., DCI format 0_1 or 0_2), multiple (e.g., more than one) TCI states (or TCI state IDs/indexes) by a codepoint of the TCI field, the UE could use one or more of the indicated TCI states for PDSCH reception(s) based on an indicator provided/configured/indicated by the network, e.g., via higher layer RRC signaling and/or MAC CE command and/or dynamic DCI based signaling; i.e., the DM-RS antenna port(s) for the PDSCH reception(s) could be quasi co-located with the reference signal(s) provided in one or more of the indicated TCI states, e.g., by the TCI state codepoint of the TCI field in the DCI according to the indicator; here, the indicator could be defined/specified follow the design examples in the present disclosure). The DCI that provides/-configures/indicates the indicator could be with or without DL assignment, or could schedule the corresponding PDSCH(s) or not.

Yet for another example, when the UE is scheduled with one or more PDSCHs by a DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources), the UE could use one or more of the indicated TCI states for PDSCH reception(s) based on an indicator provided/configured/indicated by the network, e.g., via higher layer RRC signaling and/or MAC CE command and/or dynamic DCI based signaling; i.e., the DM-RS antenna port(s) for the PDSCH reception(s) could be quasi co-located with the reference signal(s) provided in one or more of the indicated TCI states, e.g., by the TCI state codepoint of the TCI field in the DCI according to the indicator; here, the indicator could be defined/specified follow the design examples in the present disclosure).

For instance, when the UE is scheduled with one PDSCH by a DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources), the UE could use the first or second indicated TCI state - among all the indicated (e.g., M>1 or N>1, or M=2/N=2) TCI states - for PDSCH reception(s) based on the indicator; i.e., the DM-RS antenna port(s) for the PDSCH reception(s) could be quasi co-located with the reference signal(s) provided in the first or second indicated TCI states - among all the indicated (e.g., M>1 or N>1, or M=2/N=2) TCI states - according to the indicator; when the UE is scheduled with multiple PDSCHs by a DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources), the UE could use the first and second indicated TCI states or the second and first indicated TCI states - among all the indicated (e.g., M>1 or N>1, or M=2/N=2) TCI states - for receiving the first and second PDSCH indicated by the TDRA information field respectively based on the indicator; i.e., the DM-RS antenna port(s) for receiving the first and second PDSCHs indicated by the TDRA information field could be quasi co-located with the reference signal(s) provided in the first and second indicated TCI states or the second and first indicated TCI states - among all the indicated (e.g., M>1 or N>1, or M=2/N=2) TCI states - respectively according to the indicator.

Yet for another example, when the UE is scheduled with multiple (e.g., two) PDSCHs by a DCI, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources), the UE could use one or more of the indicated TCI states for PDSCH reception(s) based on an indicator provided/configured/indicated by the network, e.g., via higher layer RRC signaling and/or MAC CE command and/or dynamic DCI based signaling; i.e., the DM-RS antenna port(s) for the PDSCH reception(s) could be quasi co-located with the reference signal(s) provided in one or more of the indicated TCI states, e.g., by the TCI state codepoint of the TCI field in the DCI according to the indicator; here, the indicator could be defined/specified follow the design examples in the present disclosure).

For instance, the UE could use the first or second indicated TCI state (based on the indicator) - among all the indicated (e.g., M>1 or N>1, or M=2/N=2) TCI states - for receiving the first or second PDSCHs indicated by the TDRA information field; i.e., the DM-RS antenna port(s) for the first or second PDSCHs indicated by the TDRA information field could be quasi co-located with the reference signal(s) provided in the first or second indicated TCI states - among all the indicated (e.g., M>1 or N>1, or M=2/N=2) TCI states - according to the indicator; whether the indicated (e.g., the first or second) TCI state should be used for the first or second PDSCHs indicated by the TDRA information filed could be determined according to: (i) a fixed mapping/association relationship in the system specification(s) or (ii) provided/indicated/configured by the network, e.g., via higher layer RRC signaling and/or MAC CE command and/or dynamic DCI based signaling; alternatively, the UE could use the first and second indicated TCI states or the second and first indicated TCI states - among all the indicated (e.g., M>1 or N>1, or M=2/N=2) TCI states - for receiving the first and second PDSCHs indicated by the TDRA information field respectively based on the indicator; i.e., the DM-RS antenna port(s) for receiving the first and second PDSCHs indicated by the TDRA information field could be quasi co-located with the reference signal(s) provided in the first and second indicated TCI states or the second and first indicated TCI states - among all the indicated (e.g., M>1 or N>1, or M=2/N=2) TCI states - respectively according to the indicator.

In yet another example, the UE could be indicated/provided/configured by the network, e.g., in a DCI or via dynamic DCI based L1 signaling received in a CORESET associated/configured with a value of CORESET group index, an indicator to indicate one or more of the indicated TCI states for receiving PDSCH(s) scheduled by DCI(s)/PDCCH candidate(s) received in one or more CORESETs configured/associated with the same value of CORESET group index - i.e., the DM-RS antenna port(s) for the PDSCH reception(s) scheduled by DCI(s)/PDCCH candidate(s) received in one or more CORESETs configured/associated with the a value of CORESET group index could be quasi co-located with the reference signal(s) provided in the indicated (e.g., by the indicator in the DCI received in a CORESET associated/configured with the same value of CORESETGroupIndex) one or more of the indicated TCI states. For example, a new DCI field, denoted by "TCI state(s) indication" field, could be introduced in a DCI format (e.g., in DCI format 1_1, 1_2, 0_1, 0_2 or etc.), and used to provide the indicator.

For another example, one or more bits/codepoints of one or more existing DCI fields - e.g., the "transmission configuration indication" field(s) or the "SRS resource set indicator" field(s) or the "time-domain resource allocation" (TDRA) field(s) or the "frequency-domain resource allocation" (FDRA) field(s) - in a DCI format (e.g., DCI format 1_1, 1_2, 0_1, 0_2 or etc.) could be repurposed/used to provide the indicator. For instance, the indicator could be provided in a beam indication DCI (e.g., DCI format 1_1 or 1_2 with or without DL assignment); alternatively, the indicator could be provided in an uplink DCI (e.g., DCI format 0_1 or 0_2 with or without UL assignment). Furthermore, in the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc.

For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or "00," "01," "10" or "11"). One or more CORESETs could be configured/associated with the same value of CORESETGroupIndex.

For example, when/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "enabled" (or "disabled") or "1" (or "0") or "00" (or "01," "10," "11"), the first indicated TCI state - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the first indicated TCI state - among all the indicated (e.g., M>1 or N>1, or M=2/N=2) TCI states.

Furthermore, when/if a UE is provided/indicated/configured by the network, in a DL DCI received in a CORESET associated/configured with a value of CORESETGroupIndex, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "disabled" (or "enabled") or "0" (or "1") or "01" (or "00," "10," "11"), the second indicated TCI state - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the second indicated TCI state - among all the indicated (e.g., M>1 or N>1, or M=2/N=2) TCI states.

When/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESETGroupIndex or an UL DCI (e.g., DCI format 0_1 or 0_2) received in a CORESET associated/configured with a value of CORESETGroupIndex, the indicator (and therefore, the corresponding DCI field(s)) set to "enabled" (or "disabled") or "1" (or "0") or "10" (or "00," "01," "11"), the first and second indicated TCI states - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index, respectively; i.e., the DM-RS antenna port(s) for the PDSCH reception(s) scheduled by DCI(s)/PDCCH candidate(s) received in one or more CORESETs configured/associated with the same value of CORESET group index could be quasi co-located with the reference signal(s) provided in the first and second indicated TCI states - among all the indicated (e.g., M>1 or N>1, or M=2/N=2) TCI states - respectively; when/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESET group index, the indicator (and therefore, the corresponding DCI field(s)) set to "disabled" (or "enabled") or "0" (or "1") or "11" (or "00," "01," "10"), the second and first indicated TCI states - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index, respectively; i.e., the DM-RS antenna port(s) for the PDSCH reception(s) scheduled by DCI(s)/PDCCH candidate(s) received in one or more CORESETs configured/associated with the same value of CORESET group index could be quasi co-located with the reference signal(s) provided in the second and first indicated TCI states - among all the indicated (e.g., M>1 or N>1, or M=2/N=2) TCI states - respectively.

For another example, when/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESET group index, the indicator (and therefore, the corresponding DCI field(s) such as the "transmission configuration indication" field that provides/configures/indicates the indicator) set to a TCI state ID/index, the indicated TCI state - among all the indicated (e.g., M>1 or N>1, or M=2/N=2) TCI states - that corresponds to the indicated (e.g., by the indicator/DCI field(s) such as the TCI field in the DCI received in a CORESET associated/configured with a value of CORESET group index) TCI state ID/index could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the indicated TCI state - among all the indicated (e.g., M>1 or N>1, or M=2/N=2) TCI states - that corresponds to the indicated (e.g., by the indicator/DCI field(s) such as the TCI field in the DCI received in a CORESET associated/configured with the same value of CORESET group index) TCI state ID/index.

Furthermore, when/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESET group index or an UL DCI (e.g., DCI format 0_1 or 0_2) received in a CORESET associated/configured with a value of CORESETGroupIndex, the indicator (and therefore, the corresponding DCI field(s) such as the TCI field that provides/-configures/indicates the indicator) set to multiple (e.g., more than one) TCI state IDs/indexes, the indicated TCI states - among all the indicated (e.g., M>1 or N>1, or M=2/N=2) TCI states - that correspond to the indicated (e.g., by the indicator/DCI field(s) such as the TCI field in the DCI received in a CORESET associated/configured with a value of CORESET group index) TCI state IDs/indexes could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the indicated TCI states - among all the indicated (e.g., M>1 or N>1, or M=2/N=2) TCI states - that correspond to the indicated (e.g., by the indicator/DCI field(s) such as the TCI field in the DCI received in a CORESET associated/configured with the same value of CORESET group index) TCI state IDs/indexes; for this example, the indicated TCI states could correspond to the first and second indicated TCI states respectively or the second and first TCI states respectively, depending on, e.g., a fixed relationship specified/defined in the system specification(s) and/or network's configuration(s)/indication(s) via higher layer RRC signaling/parameter and/or MAC CE command and/or dynamic DCI based L1 signaling.

Yet for another example, when/if a UE is provided/indicated/configured by the network, in an UL DCI (e.g., DCI format 0_1 or 0_2) received in a CORESET associated/configured with a value of CORESET group index, the SRS resource set indicator set to "00" (or "01," "10," "11"), the first indicated TCI state - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the first indicated TCI state - among all the indicated (e.g., M>1 or N>1, or M=2/N=2) TCI states; when/if a UE is provided/indicated/configured by the network, in an UL DCI (e.g., DCI format 0_1 or 0_2) received in a CORESET associated/configured with a value of CORESETGroupIndex, the SRS resource set indicator set to "01" (or "00," "10," "11"), the second indicated TCI state - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the second indicated TCI state - among all the indicated (e.g., M>1 or N>1, or M=2/N=2) TCI states.

Furthermore, when/if a UE is provided/indicated/configured by the network, in an UL DCI (e.g., DCI format 0_1 or 0_2) received in a CORESET associated/configured with a value of CORESET group index, the SRS resource set indicator set to "10" (or "00," "01," "11"), the first and second indicated TCI states - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index, respectively; i.e., the DM-RS antenna port(s) for the PDSCH reception(s) scheduled by DCI(s)/PDCCH candidate(s) received in one or more CORESETs configured/associated with the same value of CORESET group index could be quasi co-located with the reference signal(s) provided in the first and second indicated TCI states - among all the indicated (e.g., M>1 or N>1, or M=2/N=2) TCI states - respectively; when/if a UE is provided/indicated/configured by the network, in an UL DCI (e.g., DCI format 0_1 or 0_2) received in a CORESET configured/associated with a value of CORESETGroupIndex, the SRS resource set indicator set to "11" (or "00," "01," "10"), the second and first indicated TCI states - among all the indicated (e.g., M>1 or N>1, or M=2/N=2) TCI states - could be used for PDSCH reception(s) scheduled by DCI(s)/PDCCH candidate(s) received in one or more CORESETs configured/associated with the same value of CORESET group index, respectively; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the second and first indicated TCI states - among all the indicated (e.g., M>1 or N>1, or M=2/N=2) TCI states - respectively.

Yet for another example, when/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a value of CORESETGroupIndex or an UL DCI (e.g., DCI format 0_1 or 0_2) received in a CORESET associated/configured with a value of CORESET group index, a TCI state (or a TCI state ID/index) provided by a codepoint of the "transmission configuration indication" (TCI) field, the indicated TCI state could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the indicated TCI state by the TCI state codepoint of the TCI field in the DCI.

Furthermore, when/if a UE is provided/indicated/configured by the network, in a DL DCI received in a CORESET associated/configured with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET associated/configured with a CORESETGroupIndex value or an UL DCI (e.g., DCI format 0_1 or 0_2) received in a CORESET associated/configured with a value of CORESETGroupIndex, multiple (e.g., more than one) TCI states (or TCI state IDs/indexes) by a codepoint of the TCI field, the indicated TCI states could be used for PDSCH reception(s) scheduled by DCI(s)/PDCCH candidate(s) received in one or more CORESETs configured/associated with the same value of CORESET group index; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the indicated TCI states by the TCI state codepoint of the TCI field in the DCI; for this example, the indicated TCI states could correspond to the first and second indicated TCI states respectively or the second and first TCI states respectively, depending on, e.g., a fixed relationship specified/defined in the system specification(s) and/or network's configuration(s)/indication(s) via higher layer RRC signaling/parameter and/or MAC CE command and/or dynamic DCI based L1 signaling.

Alternatively, when/if a UE is provided/indicated/configured by the network, in a DL DCI received in a CORESET configured/associated with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESET group index or an UL DCI (e.g., DCI format 0_1 or 0_2) received in a CORESET configured/associated with a value of CORESET group index, multiple (e.g., more than one) TCI states (or TCI state IDs/indexes) by a codepoint of the TCI field, the UE could use one or more of the indicated TCI states for PDSCH reception(s) scheduled by DCI(s)/PDCCH candidate(s) received in one or more CORESETs configured/associated with the same value of CORESET group index based on an indicator provided/configured/indicated by the network, e.g., via higher layer RRC signaling and/or MAC CE command and/or dynamic DCI based signaling; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in one or more of the indicated TCI states, e.g., by the TCI state codepoint of the TCI field in the DCI according to the indicator; here, the indicator could be defined/specified follow the design examples in the present disclosure).

Yet for another example, when the UE is scheduled with one or more PDSCHs by a DCI received in a CORESET configured/associated with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESET group index, the UE could use one or more of the indicated TCI states for PDSCH reception(s) scheduled by DCI(s)/PDCCH candidate(s) received in one or more CORESETs configured/associated with the same value of CORESET group index based on an indicator provided/configured/indicated by the network, e.g., via higher layer RRC signaling and/or MAC CE command and/or dynamic DCI based signaling; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in one or more of the indicated TCI states, e.g., by the TCI state codepoint of the TCI field in the DCI according to the indicator; here, the indicator could be defined/specified follow the design examples in the present disclosure).

For instance, when the UE is scheduled with one PDSCH by a DCI received in a CORESET configured/associated with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESET group index, the UE could use the first or second indicated TCI state - among all the indicated (e.g., M>1 or N>1, or M=2/N=2) TCI states - for PDSCH reception(s) scheduled by DCI(s)/PDCCH candidate(s) received in one or more CORESETs configured/associated with the same value of CORESET group index based on the indicator; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in the first or second indicated TCI states - among all the indicated (e.g., M>1 or N>1, or M=2/N=2) TCI states - according to the indicator; when the UE is scheduled with multiple PDSCHs by a DCI received in a CORESET configured/associated with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESET group index, the UE could use the first and second indicated TCI states or the second and first indicated TCI states - among all the indicated (e.g., M>1 or N>1, or M=2/N=2) TCI states - for receiving the first and second PDSCH indicated by the TDRA information field respectively based on the indicator; i.e., the DM-RS antenna port(s) for receiving the first and second PDSCHs indicated by the TDRA information field could be quasi co-located with the reference signal(s) provided in the first and second indicated TCI states or the second and first indicated TCI states - among all the indicated (e.g., M>1 or N>1, or M=2/N=2) TCI states - respectively according to the indicator; here, the first and second PDSCHs could be scheduled by DCI(s)/PDCCH candidate(s) received in one or more CORESETs configured/associated with the same value of CORESET group index as that associated/configured with their scheduling DCI.

Yet for another example, when the UE is scheduled with multiple (e.g., two) PDSCHs by a DCI received in a CORESET configured/associated with a value of CORESET group index, e.g., a beam indication DCI (e.g., DCI format 1_1 or 1_2 with or without DL assignment having one or more TCI fields to indicate one or more (e.g., M>1 or N>1, or M=2/N=2) TCI states/pairs of TCI states for UE-dedicated reception on PDSCH/PDCCH or dynamic-grant/configured-grant based PUSCH and all of dedicated PUCCH resources) received in a CORESET configured/associated with a value of CORESET group index, the UE could use one or more of the indicated TCI states for PDSCH reception(s) scheduled by DCI(s)/PDCCH candidate(s) received in one or more CORESETs configured/associated with the same value of CORESET group index based on an indicator provided/configured/indicated by the network, e.g., via higher layer RRC signaling and/or MAC CE command and/or dynamic DCI based signaling; i.e., the DM-RS antenna port(s) for the PDSCH reception(s) scheduled by DCI(s)/PDCCH candidate(s) received in one or more CORESETs configured/associated with a value of CORESET group index could be quasi co-located with the reference signal(s) provided in one or more of the indicated TCI states, e.g., by the TCI state codepoint of the TCI field in the DCI according to the indicator; here, the indicator could be defined/specified follow the design examples in the present disclosure).

For instance, the UE could use the first or second indicated TCI state (based on the indicator) - among all the indicated (e.g., M>1 or N>1, or M=2/N=2) TCI states - for receiving the first or second PDSCHs indicated by the TDRA information field; i.e., the DM-RS antenna port(s) for the first or second PDSCHs indicated by the TDRA information field could be quasi co-located with the reference signal(s) provided in the first or second indicated TCI states - among all the indicated (e.g., M>1 or N>1, or M=2/N=2) TCI states - according to the indicator; whether the indicated (e.g., the first or second) TCI state should be used for the first or second PDSCHs indicated by the TDRA information filed could be determined according to: (i) a fixed mapping/association relationship in the system specification(s) or (ii) provided/indicated/configured by the network, e.g., via higher layer RRC signaling and/or MAC CE command and/or dynamic DCI based signaling; alternatively, the UE could use the first and second indicated TCI states or the second and first indicated TCI states - among all the indicated (e.g., M>1 or N>1, or M=2/N=2) TCI states - for receiving the first and second PDSCHs indicated by the TDRA information field respectively based on the indicator; i.e., the DM-RS antenna port(s) for receiving the first and second PDSCHs indicated by the TDRA information field could be quasi co-located with the reference signal(s) provided in the first and second indicated TCI states or the second and first indicated TCI states - among all the indicated (e.g., M>1 or N>1, or M=2/N=2) TCI states - respectively according to the indicator. Here, the first and second PDSCHs could be scheduled by DCI(s)/PDCCH candidate(s) received in one or more CORESETs configured/associated with the same value of CORESET group index as that associated/configured with their scheduling DCI.

In a (sDCI based) multi-TRP system, for transmitting PUCCH resource(s), the UE could be indicated/provided/configured by the network, e.g., via higher layer RRC signaling/parameter and/or MAC CE command and/or dynamic DCI based L1 signaling, one or more indicators to indicate one or more of the indicated TCI states for PUCCH transmission(s) - i.e., the spatial filter(s) for the PUCCH transmission(s) could be spatially related to the reference signal(s) provided in the indicated (e.g., by the RRC/MAC CE/DCI configured/indicated/provided indicator(s)) one or more of the indicated TCI states. The indicator(s) here could be defined/specified follow the design examples in the present disclosure.

For example, a MAC CE command, e.g., the PUCCH spatial relation activation/deactivation MAC CE, the enhanced PUCCH spatial relation activation/deactivation MAC CE, the TCI states activation/deactivation for UE-specific PDSCH MAC CE, the TCI state indication for UE-specific PDCCH MAC CE or the unified TCI states activation/deactivation for UE-specific PDSCH MAC CE, could include/configure/provide/comprise/indicate the indicator. When/if the indicator is set to "enabled" (or "disabled") or "1" (or "0") or "00" (or "01," "10," "11"), e.g., when/if a UE receives the PUCCH spatial relation activation/deactivation MAC CE (for a PUCCH resource) or the enhanced PUCCH spatial relation activation/-deactivation MAC CE (for a PUCCH resource group comprising one or more PUCCH resources) with the indicator provided/indicated/configured therein set to "enabled" (or "disabled") or "1" (or "0") or "00" (or "01," "10," "11"), the first indicated TCI state - among all the indicated (e.g., M>1 or N>1, or M=2/N=2) TCI states - could be used for transmitting the PUCCH resource or the PUCCH resource group; i.e., the spatial filter(s) for transmitting the PUCCH resource or the PUCCH resource group could be spatially related to the reference signal(s) provided in the first indicated TCI state - among all the indicated (e.g., M>1 or N>1, or M=2/N=2) TCI states.

Furthermore, when/if the indicator is set to "disabled" (or "enabled") or "0" (or "1") or "01" (or "00," "10," "11"), e.g., when/if a UE receives the PUCCH spatial relation activation/deactivation MAC CE (for a PUCCH resource) or the enhanced PUCCH spatial relation activation/deactivation MAC CE (for a PUCCH resource group comprising one or more PUCCH resources) with the indicator provided/indicated/configured therein set to "disabled" (or "enabled") or "0" (or "1") or "01" (or "00," "10," "11"), the second indicated TCI state - among all the indicated (e.g., M>1 or N>1, or M=2/N=2) TCI states - could be used for transmitting the PUCCH resource or the PUCCH resource group; i.e., th" spatial filter(s) for transmitting the PUCCH resource or the PUCCH resource group could be spatially related to the reference signal(s) provided in the second indicated TCI state - among all the indicated (e.g., M>1 or N>1, or M=2/N=2) TCI states.

In addition, when/if the indicator is set to "enabled" (or "disabled") or "1" (or "0") or "10" (or "00," "01," "11"), e.g., when/if a UE receives the PUCCH spatial relation activation/deactivation MAC CE (for a PUCCH resource) or the enhanced PUCCH spatial relation activation/deactivation MAC CE (for a PUCCH resource group comprising one or more PUCCH resources) with the indicator provided/indicated/configured therein set to "enabled" (or "disabled") or "1" (or "0") or "10" (or "00," "01," "11"), the first and second indicated TCI states - among all the indicated (e.g., M>1 or N>1, or M=2/N=2) TCI states - could be respectively used for transmitting the PUCCH resource or the PUCCH resource group; i.e., the spatial filter(s) for transmitting the PUCCH resource or the PUCCH resource group could be spatially related to the reference signal(s) provided in the first and second indicated TCI states - among all the indicated (e.g., M>1 or N>1, or M=2/N=2) TCI states - respectively; when/if the indicator is set to "disabled" (or "enabled") or "0" (or "1") or "11" (or "00," "01," "10"), e.g., when/if a UE receives the PUCCH spatial relation activation/deactivation MAC CE (for a PUCCH resource) or the enhanced PUCCH spatial relation activation/deactivation MAC CE (for a PUCCH resource group comprising one or more PUCCH resources) with the indicator provided/indicated/configured therein set to "disabled" (or "enabled") or "0" (or "1") or "11" (or "00," "01," "10"), the second and first indicated TCI states - among all the indicated (e.g., M>1 or N>1, or M=2/N=2) TCI states - could be respectively used for transmitting the PUCCH resource or the PUCCH resource group; i.e., the spatial filter(s) for transmitting the PUCCH resource or the PUCCH resource group could be spatially related to the reference signal(s) provided in the second and first indicated TCI states - among all the indicated (e.g., M>1 or N>1, or M=2/N=2) TCI states - respectively.

In the present disclosure, the indicator could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicator, a multi-bit indicator, a TCI state ID/index or etc. For instance, the indicator could be a CORESETGroupIndex value - in the present disclosure, the UE could be provided by PDCCH-Config/PDSCH-Config multiple (e.g., two or four) CORESETGroupIndex values (e.g., 0 and 1, or 00, 01, 10 and 11). One or more CORESETs could be configured/associated with the same value of CORESETGroupIndex.

In a (sDCI based) multi-TRP system, for transmitting PUSCH resource(s), the UE could be indicated/provided/configured by the network, e.g., via higher layer RRC signaling/parameter and/or MAC CE command and/or dynamic DCI based L1 signaling, one or more indicators to indicate one or more of the indicated TCI states for PUSCH transmission(s) - i.e., the spatial filter(s) for the PUSCH transmission(s) could be spatially related to the reference signal(s) provided in the indicated (e.g., by the RRC/MAC CE/DCI configured/indicated/provided indicator(s)) one or more of the indicated TCI states. The indicator(s) here could be defined/specified follow the design examples in the present disclosure.

For example, a DCI, e.g., an UL DCI with format 0_1 or 0_2, could include/configure/provide/comprise/indicate the indicator; the indicator could correspond to a SRS resource set indicator. When/if a UE is provided/indicated/configured by the network, in an UL DCI (e.g., DCI format 0_1 or 0_2), the SRS resource set indicator set to "00" (or "01," "10," "11"), the first indicated TCI state - among all the indicated (e.g., M>1 or N>1, or M=2/N=2) TCI states - could be used for PUSCH transmission(s); i.e., the spatial filter(s) for transmitting the PUSCH(s) could be spatially related to the reference signal(s) provided in the first indicated TCI state - among all the indicated (e.g., M>1 or N>1, or M=2/N=2) TCI states; when/if a UE is provided/indicated/configured by the network, in an UL DCI (e.g., DCI format 0_1 or 0_2), the SRS resource set indicator set to "01" (or "00," "10," "11"), the second indicated TCI state - among all the indicated (e.g., M>1 or N>1, or M=2/N=2) TCI states - could be used for PUSCH transmission(s); i.e., the spatial filter(s) for transmitting the PUSCH(s) could be spatially related to the reference signal(s) provided in the second indicated TCI state - among all the indicated (e.g., M>1 or N>1, or M=2/N=2) TCI states. Furthermore, when/if a UE is provided/indicated/configured by the network, in an UL DCI (e.g., DCI format 0_1 or 0_2), the SRS resource set indicator set to "10" (or "00," "01," "11"), the first and second indicated TCI states - among all the indicated (e.g., M>1 or N>1, or M=2/N=2) TCI states - could be used for PUSCH transmission(s), respectively; i.e., the spatial filter(s) for transmitting the PUSCH(s) could be spatially related to the reference signal(s) provided in the first and second indicated TCI states - among all the indicated (e.g., M>1 or N>1, or M=2/N=2) TCI states - respectively; when/if a UE is provided/indicated/configured by the network, in an UL DCI (e.g., DCI format 0_1 or 0_2), the SRS resource set indicator set to "11" (or "00," "01," "10"), the second and first indicated TCI states - among all the indicated (e.g., M>1 or N>1, or M=2/N=2) TCI states - could be used for PUSCH transmission(s), respectively; i.e., the spatial filter(s) for transmitting the PUSCH(s) could be spatially related to the reference signal(s) provided in the second and first indicated TCI states - among all the indicated (e.g., M>1 or N>1, or M=2/N=2) TCI states - respectively.

In one embodiment, the UE could be provided/configured/indicated by the network, in a higher layer parameter, e.g., PDSCH-Config, one or more indicators/parameters to indicate the association between one or more of the indicated TCI states and the corresponding PDSCH reception(s).

In one example, the UE could be provided/configured/indicated by the network, in a higher layer parameter, e.g., PDSCH-Config, a single indicator/parameter to indicate the association between one or more of the indicated TCI states and the corresponding PDSCH reception(s).

For example, for N=2 or M=2, the indicator could be a one-bit indicator with "0" (or "1") indicating that the first indicated TCI state/pair of TCI states could be applied/used for receiving first (or second) PDSCH(s), and with "1" (or "0") indicating that the second indicated TCI state/pair of TCI states could be applied/used for receiving second (or first) PDSCH(s).

For another example, for N=2 or M=2, the indicator could be a one-bit indicator with "0" (or "1") indicating that the first indicated TCI state/pair of TCI states could be applied/used for receiving first PDSCH(s) and the second indicated TCI state/pair of TCI states could be applied/used for receiving second PDSCH(s), and with "1" (or "0") indicating that the first indicated TCI state/pair of TCI states could be applied/used for receiving second PDSCH(s) and the second indicated TCI state/pair of TCI states could be applied/used for receiving first PDSCH(s).

Yet for another example, for N=2 or M=2, the indicator could be a one-bit indicator with "0" (or "1") indicating that the first indicated TCI state/pair of TCI states could be applied/used for receiving first (or second) PDSCH DM-RS(s) in the first (or second) DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first (or second) DM-RS antenna port(s) in the first (or second) DM-RS CDM group indicated by the antenna ports field in the DCI for PDSCH reception(s), and "1" (or "0") indicating that the second indicated TCI state/pair of TCI states could be applied/used for receiving second (or first) PDSCH DM-RS(s) in the second (or first) DM-RS CDM group indicated by the antenna ports field in a DCI (e.g., the scheduling DCI or the beam indication DCI with or without DL assignment) - or equivalently, the RS(s) in the RS set(s) provided in the second indicated TCI state/pair of TCI states could be quasi-co-located (QCL'ed) with second (or first) DM-RS antenna port(s) in the second (or first) DM-RS CDM group indicated by the antenna ports field in the DCI for PDSCH reception(s).

Yet for another example, for N=2 or M=2, the indicator could be a one-bit indicator with "0" (or "1") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s) and the second indicated TCI state/pair of TCI states could be applied/used for receiving second PDSCH DM-RS(s) in the second DM-RS CDM group indicated by the antenna ports field in the DCI - or equivalently, the RS(s) in the RS set(s) provided in the second indicated TCI state/pair of TCI states could be quasi-co-located (QCL'ed) with second DM-RS antenna port(s) in the second DM-RS CDM group indicated by the antenna ports field in the DCI for PDSCH reception(s), and with "1" (or "0") indicating that the first indicated TCI state/pair of TCI states could be applied/used for receiving second PDSCH DM-RS(s) in the second DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with second DM-RS antenna port(s) in the second DM-RS CDM group indicated by the antenna ports field in the DCI for PDSCH reception(s) and the second indicated TCI state/pair of TCI states could be applied/used for receiving first PDSCH DM-RS(s) in the first DM-RS CDM group indicated by the antenna ports field in the DCI - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s).

Yet for another example, for N=2 or M=2, the indicator could be a one-bit indicator with "0" (or "1") indicating that the first indicated TCI state/pair of TCI states could be applied/used for receiving first PDSCH DM-RS(s) (or equivalently, the RS(s) in the RS set(s) provided in the first indicated TCI state/pair of TCI states could be quasi-co-located (QCL'ed) with first DM-RS antenna port(s) for PDSCH reception(s)) and the second indicated TCI state/pair of TCI states could be applied/used for receiving second PDSCH DM-RS(s) (or equivalently, the RS(s) in the RS set(s) provided in the second indicated TCI state/pair of TCI states could be QCL'ed with second DM-RS antenna port(s) for PDSCH reception(s)), and with "1" (or "0") indicating that the first indicated TCI state/pair of TCI states could be applied/used for receiving the second PDSCH DM-RS(s) (or equivalently, the RS(s) in the RS set(s) provided in the first indicated TCI state/pair of TCI states could be QCL'ed with the second DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)).

Yet for another example, for N=2 or M=2, the indicator could be a 2-bit indicator with "00" ("01," "10" or "11") indicating that the first indicated TCI state/pair of TCI states could be applied/used for receiving first (or second) PDSCH(s), with "01" ("00," "10" or "11") indicating that the second indicated TCI state/pair of TCI states could be applied/used for receiving second (or first) PDSCH(s), with "10" ("00," "01" or "11") indicating that the first indicated TCI state/pair of TCI states could be applied/used for receiving first PDSCH(s) and the second indicated TCI state/pair of TCI states could be applied/used for receiving second PDSCH(s), and with "11" ("00," "01" or "10") indicating that the first indicated TCI state/pair of TCI states could be applied/used for receiving second PDSCH(s) and the second indicated TCI state/pair of TCI states could be applied/used for receiving first PDSCH(s). The value(s) "00" or "01" or "10" or "11" of the indicator could also be reserved or set to "reserved."

Yet for another example, for N=2 or M=2, the indicator could be a 2-bit indicator with "00" ("01," "10" or "11") indicating that the first indicated TCI state/pair of TCI states could be applied/used for receiving first (or second) PDSCH DM-RS(s) in the first (or second) DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first (or second) DM-RS antenna port(s) in the first (or second) DM-RS CDM group indicated by the antenna ports field in the DCI for PDSCH reception(s), with "01" ("00," "10" or "11") indicating that the second indicated TCI state/pair of TCI states could be applied/used for receiving second (or first) PDSCH DM-RS(s) in the second (or first) DM-RS CDM group indicated by the antenna ports field in a DCI (e.g., the scheduling DCI or the beam indication DCI with or without DL assignment) - or equivalently, the RS(s) in the RS set(s) provided in the second indicated TCI state/pair of TCI states could be quasi-co-located (QCL'ed) with second (or first) DM-RS antenna port(s) in the second (or first) DM-RS CDM group indicated by the antenna ports field in the DCI for PDSCH reception(s), with "10" ("00," "01" or "11") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s) and the second indicated TCI state/pair of TCI states could be applied/used for receiving second PDSCH DM-RS(s) in the second DM-RS CDM group indicated by the antenna ports field in the DCI - or equivalently, the RS(s) in the RS set(s) provided in the second indicated TCI state/pair of TCI states could be quasi-co-located (QCL'ed) with second DM-RS antenna port(s) in the second DM-RS CDM group indicated by the antenna ports field in the DCI for PDSCH reception(s), and with "11" ("00," "01" or "10") indicating that the first indicated TCI state/pair of TCI states could be applied/used for receiving second PDSCH DM-RS(s) in the second DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with second DM-RS antenna port(s) in the second DM-RS CDM group indicated by the antenna ports field in the DCI for PDSCH reception(s) and the second indicated TCI state/pair of TCI states could be applied/used for receiving first PDSCH DM-RS(s) in the first DM-RS CDM group indicated by the antenna ports field in the DCI - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s). The value(s) "00" or "01" or "10" or "11" of the indicator could also be reserved or set to "reserved."

Yet for another example, for N=2 or M=2, the indicator could be a 2-bit indicator with "00" ("01," "10" or "11") indicating that the first indicated TCI state/pair of TCI states could be applied/used for receiving the first (or second) PDSCH(s), with "01" ("00," "10" or "11") indicating that the second indicated TCI state/pair of TCI states could be applied/used for receiving the second (or first) PDSCH(s), with "10" ("00," "01" or "11") indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the second PDSCH DM-RS(s) (or equivalently, the RS(s) in the RS set(s) provided in the second indicated TCI state/pair of TCI states could be QCL'ed with the second DM-RS antenna port(s) for PDSCH reception(s)), and with "11" ("00," "01" or "10") indicating that the first indicated TCI state/pair of TCI states could be applied/used for receiving the second PDSCH DM-RS(s) (or equivalently, the RS(s) in the RS set(s) provided in the first indicated TCI state/pair of TCI states could be QCL'ed with the second DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)). The value(s) "00" or "01" or "10" or "11" of the indicator could also be reserved or set to "reserved."

Yet for another example, for N=2 or M=2, the indicator could be a 2-bit indicator with "00" ("01," "10" or "11") indicating that the first indicated TCI state/pair of TCI states could be applied/used for receiving first (or second) PDSCH DM-RS(s) in the first (or second) DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first (or second) DM-RS antenna port(s) in the first (or second) DM-RS CDM group indicated by the antenna ports field in the DCI for PDSCH reception(s), with "01" ("00," "10" or "11") indicating that the second indicated TCI state/pair of TCI states could be applied/used for receiving second (or first) PDSCH DM-RS(s) in the second (or first) DM-RS CDM group indicated by the antenna ports field in a DCI (e.g., the scheduling DCI or the beam indication DCI with or without DL assignment) - or equivalently, the RS(s) in the RS set(s) provided in the second indicated TCI state/pair of TCI states could be quasi-co-located (QCL'ed) with second (or first) DM-RS antenna port(s) in the second (or first) DM-RS CDM group indicated by the antenna ports field in the DCI for PDSCH reception(s), with "10" ("00," "01" or "11") indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the second PDSCH DM-RS(s) (or equivalently, the RS(s) in the RS set(s) provided in the second indicated TCI state/pair of TCI states could be QCL'ed with the second DM-RS antenna port(s) for PDSCH reception(s)), and with "11" ("00," "01" or "10") indicating that the first indicated TCI state/pair of TCI states could be applied/used for receiving the second PDSCH DM-RS(s) (or equivalently, the RS(s) in the RS set(s) provided in the first indicated TCI state/pair of TCI states could be QCL'ed with the second DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)). The value(s) "00" or "01" or "10" or "11" of the indicator could also be reserved or set to "reserved."

The UE could follow (e.g., according to network's configuration/indication via higher layer RRC signaling/parameter and/or MAC CE command and/or dynamic DCI based L1 siganling) one or more of or combination(s) of one or more of the design examples specified herein in the present disclosure to determine the association between one or more of the indicated TCI states/pairs of TCI states and first (or second) PDSCH(s) and/or first (or second) PDSCH DM-RS(s) in the first (or second) DM-RS CDM group indicated by the antenna ports field in a DCI (e.g., the scheduling DCI or the beam indication DCI with or without DL assignment) and/or first (or second) PDSCH DM-RS(s)/first (or second) DM-RS antenna port(s) for PDSCH reception(s).

In another example, the UE could be provided/configured/indicated by the network, in a higher layer parameter, e.g., PDSCH-Config, more than one (e.g., 2) indicators/parameters - e.g., the first indicator/parameter, the second indicator/parameter and so on - to indicate the association between one or more of the indicated TCI states and the corresponding PDSCH reception(s). For the first (or second) indicator/parameter, following examples can be provided.

For example, for N=2 or M=2, the first (or second) indicator/parameter could be a one-bit indicator and associated to first PDSCH(s) with "0" (or "1") indicating that the first indicated TCI state/pair of TCI states could be applied/used for receiving first PDSCH(s), and with "1" (or "0") indicating that the second indicated TCI state/pair of TCI states could be applied/used for receiving second PDSCH(s).

For another example, for N=2 or M=2, the first (or second) indicator/parameter could be a one-bit indicator and associated to first PDSCH(s) with "0" (or "1") indicating that the first indicated TCI state/pair of TCI states could be applied/used for receiving first PDSCH(s) and the second indicated TCI state/pair of TCI states could be applied/used for receiving first PDSCH(s), and with "1" (or "0") indicating that the first indicated TCI state/pair of TCI states could be applied/used for receiving first PDSCH(s) and the second indicated TCI state/pair of TCI states could be applied/used for receiving first PDSCH(s).

Yet for another example, for N=2 or M=2, the first (or second) indicator/parameter could be a one-bit indicator and associate to first PDSCH DM-RS(s) in the first DM-RS CDM group indicated by the antenna ports field in a DCI (e.g., the scheduling DCI or the beam indication DCI with or without DL assignment) with "0" (or "1") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s), and "1" (or "0") indicating that the second indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH

193

reception(s).

Yet for another example, for N=2 or M=2, the first (or second) indicator/parameter could be a one-bit indicator and associate to first PDSCH DM-RS(s) in the first DM-RS CDM group indicated by the antenna ports field in a DCI (e.g., the scheduling DCI or the beam indication DCI with or without DL assignment) with "0" (or "1") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s) and the second indicated TCI state/pair of TCI states could be applied/used for receiving first PDSCH DM-RS(s) in the first DM-RS CDM group indicated by the antenna ports field in the DCI - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s), and with "1" (or "0") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s) and the second indicated TCI state/pair of TCI states could be applied/used for receiving first PDSCH DM-RS(s) in the first DM-RS CDM group indicated by the antenna ports field in the DCI - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s).

Yet for another example, for N=2 or M=2, the first (or second) indicator/parameter could be a one-bit indicator and associated to first PDSCH DM-RS(s) or first DM-RS antenna port(s) for PDSCH reception(s) with "0" (or "1") indicating that the first indicated TCI state/pair of TCI states could be applied/used for receiving first PDSCH DM-RS(s) (or equivalently, the RS(s) in the RS set(s) provided in the first indicated TCI state/pair of TCI states could be quasi-co-located (QCL'ed) with first DM-RS antenna port(s) for PDSCH reception(s)) and the second indicated TCI state/pair of TCI states could be applied/used for receiving first PDSCH DM-RS(s) (or equivalently, the RS(s) in the RS set(s) provided in the second indicated TCI state/pair of TCI states could be QCL'ed with first DM-RS antenna port(s) for PDSCH reception(s)), and with "1" (or "0") indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)).

Yet for another example, for N=2 or M=2, the first (or second) indicator/parameter could be a 2-bit indicator associated to first PDSCH(s) with "00" ("01," "10," or "11") indicating that the first indicated TCI state/pair of TCI states could be applied/used for receiving first PDSCH(s), with "01" ("00," "10" or "11") indicating that the second indicated TCI state/pair of TCI states could be applied/used for receiving first PDSCH(s), with "10" ("00," "01," or "11") indicating that the first indicated TCI state/pair of TCI states could be applied/used for receiving first PDSCH(s) and the second indicated TCI state/pair of TCI states could be applied/used for receiving first PDSCH(s), and with "11" ("00," "01," or "10") indicating that the first indicated TCI state/pair of TCI states could be applied/used for receiving first PDSCH(s) and the second indicated TCI state/pair of TCI states could be applied/used for receiving first PDSCH(s). The value(s) "00" or "01" or "10" or "11" of the indicator could also be reserved or set to "reserved."

Yet for another example, for N=2 or M=2, the first (or second) indicator/parameter could be a 2-bit indicator associate to first PDSCH DM-RS(s) in the first DM-RS CDM group indicated by the antenna ports field in a DCI (e.g., the scheduling DCI or the beam indication DCI with or without DL assignment) with "00" ("01," "10," or "11") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s), with "01" ("00," "10" or "11") indicating that the second indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s), with "10" ("00," "01" or "11") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s) and the second indicated TCI state/pair of TCI states could be applied/used for receiving first PDSCH DM-RS(s) in the first DM-RS CDM group indicated by the antenna ports field in the DCI - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s), and with "11" ("00," "01" or "10") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s) and the second indicated TCI state/pair of TCI states could be applied/used for receiving first PDSCH DM-RS(s) in the first DM-RS CDM group indicated by the antenna ports field in the DCI - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s). The value(s) "00" or "01" or "10" or "11" of the indicator could also be reserved or set to "reserved."

Yet for another example, for N=2 or M=2, the first (or second) indicator/parameter could be a 2-bit indicator and associated to first PDSCH(s) and/or first PDSCH DM-RS(s) or first DM-RS antenna port(s) for PDSCH reception(s) with "00" ("01," "10," or "11") indicating that the first indicated TCI state/pair of TCI states could be applied/used for receiving the first PDSCH(s), with "01" ("00," "10" or "11") indicating that the second indicated TCI state/pair of TCI states could be applied/used for receiving the first PDSCH(s), with "10" ("00," "01," or "11") indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)), and with "11" ("00," "01," or "10") indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)). The value(s) "00" or "01" or "10" or "11" of the indicator could also be reserved or set to "reserved."

Yet for another example, for N=2 or M=2, the first (or second) indicator could be a 2-bit indicator and associated to first PDSCH DM-RS(s) in the first DM-RS CDM group indicated by the antenna ports field in a DCI (e.g., the scheduling DCI or the beam indication DCI with or without DL assignment) and/or first PDSCH DM-RS(s) or first DM-RS antenna port(s) for PDSCH reception(s) with "0" ("01," "10," or "11") indicating that the first indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the first indicated TCI state/pair of TCI states could be quasi-co-located (QCL'ed) with first DM-RS antenna port(s) in the first DM-RS CDM group indicated by the antenna ports field in the DCI for PDSCH reception(s), with "01" ("00," "10," or "11") indicating that the second indicated TCI state/pair of TCI states could be applied/used for receiving first PDSCH DM-RS(s) in the first DM-RS CDM group indicated by the antenna ports field in a DCI (e.g., the scheduling DCI or the beam indication DCI with or without DL assignment) - or equivalently, the RS(s) in the RS set(s) provided in the second indicated TCI state/pair of TCI states could be quasi-co-located (QCL'ed) with first DM-RS antenna port(s) in the first DM-RS CDM group indicated by the antenna ports field in the DCI for PDSCH reception(s), with "10" ("00," "01" or "11") indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)), and with "11" ("00," "01," or "10") indicating that the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)). The value(s) "00" or "01" or "10" or "11" of the indicator could also be reserved or set to "reserved."

The UE could follow (e.g., according to network's configuration/indication via higher layer RRC signaling/parameter and/or MAC CE command and/or dynamic DCI based L1 siganling) one or more of or combination(s) of one or more of the design examples specified herein in the present disclosure to determine the association between one or more of the indicated TCI states/pairs of TCI states and first PDSCH(s) and/or first PDSCH DM-RS(s) in the first DM-RS CDM group indicated by the antenna ports field in a DCI (e.g., the scheduling DCI or the beam indication DCI with or without DL assignment) and/or first PDSCH DM-RS(s)/first DM-RS antenna port(s) for PDSCH reception(s). Furthermore, the second (or first) indicator/parameter could be associated to second PDSCH(s) and/or second PDSCH DM-RS(s) in the second DM-RS CDM group indicated by the antenna ports field in a DCI (e.g., the scheduling DCI or the beam indication DCI with or without DL assignment) and/or second PDSCH DM-RS(s)/second DM-RS antenna port(s) for PDSCH reception(s) as specified herein in the present disclosure, and so on.

The UE could follow (e.g., according to network's configuration/indication via higher layer RRC signaling/parameter and/or MAC CE command and/or dynamic DCI based L1 siganling) one or more of or combination(s) of one or more of the design examples specified herein in the present disclosure to determine the association between one or more of the indicated TCI states/pairs of TCI states and second PDSCH(s) and/or second PDSCH DM-RS(s) in the second DM-RS CDM group indicated by the antenna ports field in a DCI (e.g., the scheduling DCI or the beam indication DCI with or without DL assignment) and/or second PDSCH DM-RS(s)/second DM-RS antenna port(s) for PDSCH reception(s). The UE could be provided/configured/indicated by the network, e.g., via higher layer RRC signaling/parameter and/or MAC CE command and/or dynamic DCI based L1 signaling, the association/mapping relationship(s) between (i) the first/second indicator/parameter specified herein in the present disclosure and (ii) first/second PDSCH(s) and/or first/second PDSCH DM-RS(s) in the first/second DM-RS CDM group indicated by the antenna ports field in a DCI (e.g., the scheduling DCI or the beam indication DCI with or without DL assignment) and/or first/second PDSCH DM-RS(s) and/or first/second DM-RS antenna port(s) for PDSCH reception(s).

Throughout the present disclosure, unless otherwise specified, the first PDSCH(s) could correspond to all PDSCH(s)/PDSCH reception(s) - e.g., configured by the higher layer parameter PDSCH-Config or the first PDSCH DM-RS(s) or the first DM-RS antenna port(s) for PDSCH reception(s) or the first PDSCH DM-RS CDM group indicated by the antenna ports field in a DCI (e.g., the scheduling DCI or the beam indication DCI with or without DL assignment) or the first DM-RS(s) for PDSCH reception(s) in the first DM-RS CDM group indicated by the antenna ports field in a DCI (e.g., the scheduling DCI or the beam indication DCI with or without DL assignment), and the second PDSCH(s) could correspond to all PDSCH(s)/PDSCH reception(s) - e.g., configured by the higher layer parameter PDSCH-Config or the second PDSCH DM-RS(s) or the second DM-RS antenna port(s) for PDSCH reception(s) or the second PDSCH DM-RS CDM group indicated by the antenna ports field in a DCI (e.g., the scheduling DCI or the beam indication DCI with or without DL assignment) or the second DM-RS(s) for PDSCH reception(s) in the second DM-RS CDM group indicated by the antenna ports field in a DCI (e.g., the scheduling DCI or the beam indication DCI with or without DL assignment).

The UE could be provided/configured/indicated by the network, via an indicator field in a DCI (e.g., the scheduling DCI or the beam indication DCI with or without DL assignment), the association between one or more of the indicated TCI states and PDSCH reception(s). For example, the indicator field could be an existing DCI field in the corresponding DCI and repurposed to indicate/provide/configure the association between the indicated TCI state(s) and the PDSCH reception(s). For another example, the indicator field could be a new DCI field introduced in the corresponding DCI dedicated for indicating/configuring/providing the association between the indicated TCI state(s) and the PDSCH reception(s).

In one example, when/if the DCI indicator/indicator field discussed above is absent or disabled or not provided/configured/indicated/specified/defined in the corresponding DCI (e.g., the scheduling DCI or the beam indication DCI with or without DL assignment), the UE could follow the indicator/parameter provided/indicated/configured in PDSCH-Config described herein in the present disclosure to determine the association between the indicated TCI state(s) and the PDSCH reception(s).

In another example, if the indicator in the DCI (e.g., the scheduling DCI or the beam indication DCI with or without DL assignment) is set to "0," the first indicated TCI state/pair of TCI states could be applied/used for all PDSCH receptions before or after a beam association application time, and if the indicator in the DCI (e.g., the scheduling DCI or the beam indication DCI with or without DL assignment) is set to "1," the second indicated TCI state/pair of TCI states could be applied/used for all PDSCH receptions before or after a beam association application time.

In yet another example, if the indicator in the DCI (e.g., the scheduling DCI or the beam indication DCI with or without DL assignment) is set to "0," the second indicated TCI state/pair of TCI states could be applied/used for all PDSCH receptions before or after a beam association application time, and if the indicator in the DCI (e.g., the scheduling DCI or the beam indication DCI with or without DL assignment) is set to "1," the first indicated TCI state/pair of TCI states could be applied/used for all PDSCH receptions before or after a beam association application time.

In yet another example, if the indicator in the DCI (e.g., the scheduling DCI or the beam indication DCI with or without DL assignment) is set to "0" (or "1"), the first indicated TCI state/pair of TCI states could be applied/used for receiving the first PDSCH(s), and the second indicated TCI state/pair of TCI states could be applied/used for receiving the second PDSCH(s), before or after a beam association application time. If the indicator in the DCI (e.g., the scheduling DCI or the beam indication DCI with or without DL assignment) is set to "1" (or "0"), the first indicated TCI state/pair of TCI states could be applied/used for receiving the second PDSCH(s), and the second indicated TCI state/pair of TCI states could be applied/used for receiving the first PDSCH(s), before or after a beam association application time. The UE could be configured/indicated/provided by the network, e.g., via higher layer RRC signaling/parameter and/or MAC CE command and/or dynamic DCI based L1 signaling, the first and/or second PDSCHs and their corresponding/respective configuration information.

In yet another example, if the indicator in the DCI (e.g., the scheduling DCI or the beam indication DCI with or without DL assignment) is set to "0" (or "1"), the first indicated TCI state/pair of TCI states could be applied/used for all PDSCH receptions before or after a beam association application time, and if the indicator in the DCI (e.g., the scheduling DCI or the beam indication DCI with or without DL assignment) is set to "1" (or "0"), the first indicated TCI state/pair of TCI states could be applied/used for receiving the first (or second) PDSCH(s), and the second indicated TCI state/pair of TCI states could be applied/used for receiving the second (or first) PDSCH(s), before or after a beam association application time. The UE could be configured/indicated/provided by the network, e.g., via higher layer RRC signaling/parameter and/or MAC CE command and/or dynamic DCI based L1 signaling, the first and/or second PDSCHs and their corresponding/respective configuration information.

In yet another example, if the indicator in the DCI (e.g., the scheduling DCI or the beam indication DCI with or without DL assignment) is set to "0" (or "1"), the second indicated TCI state/pair of TCI states could be applied/used for all PDSCH receptions before or after a beam association application time, and if the indicator in the DCI (e.g., the scheduling DCI or the beam indication DCI with or without DL assignment) is set to "1" (or "0"), the first indicated TCI state/pair of TCI states could be applied/used for receiving the first (or second) PDSCH(s), and the second indicated TCI state/pair of TCI states could be applied/used for receiving the second (or first) PDSCH(s), before or after a beam association application time. The UE could be configured/indicated/provided by the network, e.g., via higher layer RRC signaling/parameter and/or MAC CE command and/or dynamic DCI based L1 signaling, the first and/or second PDSCHs and their corresponding/respective configuration information.

In yet another example, if the indicator in the DCI (e.g., the scheduling DCI or the beam indication DCI with or without DL assignment) is set to "0" (or "1"), the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)) before or after a beam association application time, and the second indicated TCI state/pair of TCI states could be applied/used for receiving the second PDSCH DM-RS(s) (or equivalently, the RS(s) in the RS set(s) provided in the second indicated TCI state/pair of TCI states could be QCL'ed with the second DM-RS antenna port(s) for PDSCH reception(s)) before or after a beam association application time. If the indicator in the DCI (e.g., the scheduling DCI or the beam indication DCI with or without DL assignment) is set to "1" (or "0"), the first indicated TCI state/pair of TCI states could be applied/used for receiving the second PDSCH DM-RS(s) (or equivalently, the RS(s) in the RS set(s) provided in the second indicated TCI state/pair of TCI states could be QCL'ed with the second DM-RS antenna port(s) for PDSCH reception(s)) before or after a beam association application time, and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)) before or after a beam association application time.

In yet another example, if the indicator in the DCI (e.g., the scheduling DCI or the beam indication DCI with or without DL assignment) is set to "00" ("01," "10" or "11"), the first indicated TCI state/pair of TCI states could still be applied/used for all PDSCH receptions before or after a beam association application time, if the indicator in the DCI (e.g., the scheduling DCI or the beam indication DCI with or without DL assignment) is set to "01" ("00," "10" or "11"), the second indicated TCI state/pair of TCI states could be applied/used for all PDSCH receptions before or after a beam association application time, if the indicator in the DCI (e.g., the scheduling DCI or the beam indication DCI with or without DL assignment) is set to "10" ("00," "01" or "11"), the first indicated TCI state/pair of TCI states could be applied/used for receiving the first PDSCH(s), and the second indicated TCI state/pair of TCI states could be applied/used for receiving the second PDSCH(s), before or after a beam association application time, and if the indicator in the DCI (e.g., the scheduling DCI or the beam indication DCI with or without DL assignment) is set to "11" ("00," "01" or "10"), the first indicated TCI state/pair of TCI states could be applied/used for receiving the second PDSCH(s), and the second indicated TCI state/pair of TCI states could be applied/used for receiving the first PDSCH(s), before or after a beam association application time.

In yet another example, if the indicator in the DCI (e.g., the scheduling DCI or the beam indication DCI with or without DL assignment) is set to "00" ("01," "10," or "11"), the first indicated TCI state/pair of TCI states could still be applied/used for all PDSCH receptions before or after a beam association application time, if the indicator in the DCI (e.g., the scheduling DCI or the beam indication DCI with or without DL assignment) is set to "01" ("00," "10," or "11"), the second indicated TCI state/pair of TCI states could be applied/used for all PDSCH receptions before or after a beam association application time, if the indicator in the DCI (e.g., the scheduling DCI or the beam indication DCI with or without DL assignment) is set to "10" ("00," "01," or "11"), the first indicated TCI state/pair of TCI states could be applied/used for receiving the first PDSCH DM-RS(s) (or equivalently, the RS(s) in the RS set(s) provided in the first indicated TCI state/pair of TCI states could be QCL'ed with the first DM-RS antenna port(s) for PDSCH reception(s)), and the second indicated TCI state/pair of TCI states could be applied/used for receiving the second PDSCH DM-RS(s) (or equivalently, the RS(s) in the RS set(s) provided in the second indicated TCI state/pair of TCI states could be QCL'ed with the second DM-RS antenna port(s) for PDSCH reception(s)), before or after a beam association application time, and if the indicator in the DCI (e.g., the scheduling DCI or the beam indication DCI with or without DL assignment) is set to "11" ("00," "01" or "10"), the first indicated TCI state/pair of TCI states could be applied/used for receiving the second PDSCH DM-RS(s) (or equivalently, the RS(s) in the RS set(s) provided in the second indicated TCI state/pair of TCI states could be QCL'ed with the second DM-RS antenna port(s) for PDSCH reception(s)), and the second indicated TCI state/pair of TCI states could be applied/used for receiving the first PDSCH DM-RS(s) (or equivalently, the RS(s) in the RS set(s) provided in the second indicated TCI state/pair of TCI states could be QCL'ed with the first DM-RS antenna port(s) for PDSCH reception(s)), before or after a beam association application time.

The UE could follow (e.g., according to network's configuration/indication via higher layer RRC signaling/parameter and/or MAC CE command and/or dynamic DCI based L1 siganling) one or more of or combination(s) of one or more of the design examples specified herein in the present disclosure to determine the association between one or more of the indicated TCI states/pairs of TCI states and first (or second) PDSCH(s) and/or first (or second) PDSCH DM-RS(s) in the first (or second) DM-RS CDM group indicated by the antenna ports field in a DCI (e.g., the scheduling DCI or the beam indication DCI with or without DL assignment) and/or first (or second) PDSCH DM-RS(s)/first (or second) DM-RS antenna port(s) for PDSCH reception(s).

In one example, when/if the DCI field indicator in a DCI (e.g., the scheduling DCI or the beam indication DCI with or without DL assignment) specified herein in the present disclosure is absent/not configured, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., examples and sub-examples in the present disclosure.

In one example, when/if the DCI field indicator in a DCI (e.g., the scheduling DCI or the beam indication DCI with or without DL assignment) specified herein in the present disclosure is set to "disabled" or "off" or "not enabled" or invalid value(s) by the network via higher layer RRC signaling/parameter and/or MAC CE command and/or dynamic DCI based L1 signaling, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., examples and the sub-examples provided therein in the present disclosure.

In one example, when/if the DCI field indicator in a DCI (e.g., the scheduling DCI or the beam indication DCI with or without DL assignment) specified herein in the present disclosure is set to a particular value such as "0," "1," "00," "01," "10," "11," or "reserved," the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., the design examples and the sub-examples provided therein in the present disclosure. The UE could be provided/indicated/configured by the network, e.g., via higher layer RRC signaling and/or MAC CE command and/or dynamic DCI based L1 signaling, the particular value(s) of the DCI field indicator.

In one example, the UE could be provided/configured/indicated by the network, e.g., via higher layer RRC signaling/parameter and/or MAC CE command and/or dynamic DCI based signaling, one or more indicator(s)/parameter(s) to turn on/off the DCI signaling based beam(s) association method(s) as specified herein in the present disclosure and/or the RRC signaling based beam(s) association method(s) as specified herein in the present disclosure (e.g., examples and the sub-examples provided therein in the present disclosure). For example, a higher layer parameter 'dynamicBeamSwitchingPDSCH' could be provided in a higher layer RRC parameter, e.g., PDSCH-Config/PDCCH-Config/ControlResourceSet; when/if 'dynamicBeamSwitchingPDSCH' is set to "enabled" or 'on', the UE could follow the DCI field indicator in the DCI (e.g., the scheduling DCI or the beam indication DCI with or without DL assignment) as specified herein in the present disclosure to determine the association between one or more of the indicated TCI states/pairs of TCI states and the PDSCH reception(s) - e.g., following those specified in the design examples and the sub-examples provided therein in the present disclosure. Otherwise, e.g., when/if "dynamicBeamSwitchingPDSCH" is set to "disabled" or "off," the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., following those specified in the design examples and the sub-examples provided therein in the present disclosure.

In one example, the UE can be configured with a first list of *DLorJointTCIState* configurations, within the higher layer parameter *PDSCH-Config* for providing a reference signal for the quasi co-location for DM-RS of PDSCH and DM-RS of PDCCH in a CC, for CSI-RS, and to provide a reference, if applicable, for determining UL TX spatial filter for dynamic-grant and configured-grant based PUSCH and PUCCH resource in a CC, and SRS. The UE can also be configured with a second list of *UL-TCIState* configurations, to provide a reference, if applicable, for determining UL TX spatial filter for dynamic-grant and configured-grant based PUSCH and PUCCH resource in a CC, and SRS.

When/if the number of TCI states or configurations configured/provided in the first list or second list is smaller/lower than a threshold, the UE could follow the DCI field indicator in the DCI (e.g., the scheduling DCI or the beam indication DCI with or without DL assignment) as specified herein in the present disclosure to determine the association between one or more of the indicated TCI states/pairs of TCI states and the PDSCH reception(s) - e.g., following those specified in the design examples and the sub-examples provided therein in the present disclosure. Otherwise, e.g., when/if the number of TCI states or configurations configured/provided in the first list or second list is greater/larger than the threshold, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., following those specified in the design examples and the sub-examples provided therein in the present disclosure. The UE could be provided/configured/indicated by the network, e.g., via higher layer RRC signaling/parameter and/or MAC CE command and/or dynamic DCI based L1 signaling, the threshold.

In one example, when/if the number of TCI codepoints activated by a beam indication/activation MAC CE, e.g., the Unified TCI States Activation/Deactivation MAC CE, is smaller/lower than a threshold, the UE could follow the DCI field indicator in the DCI (e.g., the scheduling DCI or the beam indication DCI with or without DL assignment) as specified herein in the present disclosure to determine the association between one or more of the indicated TCI states/pairs of TCI states and the PDSCH reception(s) - e.g., following those specified in the design example and the sub-examples provided therein in the present disclosure. Otherwise, e.g., when/if the number of TCI codepoints activated by a beam indication/activation MAC CE, e.g., the Unified TCI States Activation/Deactivation MAC CE, is greater/larger than the threshold, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., following those specified in the design examples and the sub-examples provided therein in the present disclosure. The UE could be provided/configured/indicated by the network, e.g., via higher layer RRC signaling/parameter and/or MAC CE command and/or dynamic DCI based L1 signaling, the threshold.

In one example, when/if the beam application time (BAT) provided by, e.g., *BeamAppTime_r*17, is greater/larger than a threshold, the UE could follow the DCI field indicator in the DCI (e.g., the scheduling DCI or the beam indication DCI with or without DL assignment) as specified herein in the present disclosure to determine the association between one or more of the indicated TCI states/pairs of TCI states and the PDSCH reception(s) - e.g., following those specified in the design example and the sub-examples provided therein in the present disclosure. Otherwise, e.g., when/if the beam application time (BAT) provided by, e.g., *BeamAppTime_r*17, is lower/smaller than the threshold, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., following those specified in the design examples and the sub-examples provided therein in the present disclosure.

The UE could be provided/configured/indicated by the network, e.g., via higher layer RRC signaling/parameter and/or MAC CE command and/or dynamic DCI based L1 signaling, the threshold. Furthermore, the beam application time is defined as follows: when the UE would transmit the last symbol of a PUCCH with HARQ-ACK information corresponding to the DCI carrying the TCI State indication and without DL assignment, or corresponding to the PDSCH scheduling by the DCI carrying the TCI State indication, and if the indicated TCI State is different from the previously indicated one, the indicated *DLorJointTCIState* or *UL-TCIstate* should be applied starting from the first slot that is at least *BeamAppTime_r*17 symbols after the last symbol of the PUCCH. The first slot and the *BeamAppTime_r*17 symbols are both determined on the carrier with the smallest SCS among the carrier(s) applying the beam indication.

In one example, a UE could report a capability signaling/value, e.g., dynamicDCIswitchingPDSCH, to indicate to the network that the UE is capable of or able to support the dynamic DCI signaling based beam association(s) method(s) - e.g., following those specified in the design example and the sub-examples provided therein in the present disclosure. After the UE has reported to the network the capability signaling/value dynamicDCIswitchingPDSCH, the UE could follow the DCI field indicator in the DCI (e.g., the scheduling DCI or the beam indication DCI with or without DL assignment) as specified herein in the present disclosure to determine the association between one or more of the indicated TCI states/pairs of TCI states and the PDSCH reception(s) - e.g., following those specified in the design example and the sub-examples provided therein in the present disclosure. Otherwise, e.g., the UE does not report to the network the capability signaling/value dynamicDCIswitchingPDSCH, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., following those specified in the design examples and the sub-examples provided therein in the present disclosure.

In one example, when/if a DCI (e.g., the scheduling DCI or the beam indication DCI with or without DL assignment) is received in a first CORESET, the UE could follow the DCI field indicator in the DCI (e.g., the scheduling DCI or the beam indication DCI with or without DL assignment) as specified herein in the present disclosure to determine the association between one or more of the indicated TCI states/pairs of TCI states and the PDSCH reception(s) - e.g., following those specified in the design example and the sub-examples provided therein in the present disclosure. Otherwise, e.g., when/if the DCI (e.g., the scheduling DCI or the beam indication DCI with or without DL assignment) is received in a second CORESET, the UE could follow the indicator/parameter provided in the higher layer parameter, e.g., PDSCH-Config, as specified herein in the present disclosure to determine the association between one or more of the indicated TCI states/pairs of TCI states and the PDSCH reception(s) - e.g., following those specified in the design examples and sub-examples provided therein in the present disclosure.

The UE could be provided/configured/indicated by the network, e.g., via higher layer RRC signaling/parameter and/or MAC CE command and/or dynamic DCI based L1 signaling, configuration information of the first and/or second CORESETs. For example, the first CORESET could correspond to a CORESET with UE specific search space (USS), while the second CORESET could correspond to a CORESET with common search space (CSS). For another example, the first CORESET could be configured/associated with an indicator set to "0" (or "1") in the corresponding ControlResourceSet that configures the first CORESET, while the second CORESET could be configured/associated with the indicator set to "1" (or "0") in the corresponding ControlResourceSet that configures the second CORESET. Yet for another example, the first CORESET could be comprised/included/contained in a CORESET group/pool with the corresponding CORESET group/pool index value set to "0" (or "1"), while the second CORESET could be comprised/included/contained in a CORESET group/pool with the corresponding CORESET group/pool index value set to "1" (or "0").

The above flowcharts illustrate example methods that can be implemented in accordance with the principles of the present disclosure and various changes could be made to the methods illustrated in the flowcharts herein. For example, while shown as a series of steps, various steps in each figure could overlap, occur in parallel, occur in a different order, or occur multiple times. In another example, steps may be omitted or replaced by other steps.

Although the present disclosure has been described with exemplary embodiments, various changes and modifications may be suggested to one skilled in the art. It is intended that the present disclosure encompass such changes and modifications as fall within the scope of the appended claims. None of the description in this application should be read as implying that any particular element, step, or function is an essential element that must be included in the claims scope. The scope of patented subject matter is defined by the claims.

Certain subject matter is disclosed in the following clauses.

Clause 1 discloses a user equipment (UE) in a wireless communication system, the UE comprising: a transceiver; and a processor operably coupled with the transceiver and configured to: receive, in downlink control information (DCI), first information indicating a plurality of transmission configuration indication (TCI) states, wherein at least one of the TCI states is for at least one of a plurality of physical downlink control channels (PDCCHs), and wherein the plurality of TCI states includes joint or downlink TCI states, and receive second information in a configuration for a control resource set (CORESET) indicating one or more of the plurality of TCI states for receiving one or more of the plurality of PDCCHs in the CORESET, determine, based on the second information, the one or more of the plurality of TCI states for receiving the one or more of the plurality of PDCCHs in the CORESET, and receive the one or more PDCCHs using the one or more TCI states.

Clause 2 discloses the UE of clause 1, wherein: the second information is a two-bit indicator received via a higher layer radio resource control (RRC) parameter that configures the CORESET, the first information indicates two joint or downlink TCI states for the UE for reception of two PDCCH candidates in the CORESET, and the two-bit indicator indicates one or both of the two TCI states for receiving one or both of the two PDCCH candidates.

Clause 3 discloses the UE of clause 1, wherein the processor is further configured to: determine, based on the second information, one or more of the plurality of TCI states for reception of one or more of a plurality of physical downlink shared channels (PDSCHs), receive, in DCI that provides a downlink assignment for the one or more PDSCHs, an indicator indicating the one or more TCI states for reception of the one or more PDSCHs, and determine, based on the indicator, the one or more TCI states reception of the one or more PDSCHs.

Clause 4 discloses the UE of clause 1, wherein the processor is further configured to: receive a higher layer radio resource control (RRC) signaling including a first indicator, determine, based on the first indicator, whether a second indicator for indicating one or more of the plurality of TCI states for reception of one or more of a plurality of physical downlink shared channels (PDSCHs) is present in DCI that provides a downlink assignment for the one or more PDSCHs, and receive, based on the first indicator indicating that the second indicator is not present in the DCI, the one or more of the plurality of PDSCHs using one or more default TCI states from the plurality of TCI states, receive, via a higher layer RRC signaling for the one or more PDSCHs from the plurality of PDSCHs, an indicator indicating the one or more default TCI states for reception of the one or more PDSCHs, and determine, based on the indicator, to use the one or more default TCI states for reception of the one or more PDSCHs.

Clause 5 discloses the UE of clause 1, wherein the processor is further configured to: determine whether the UE supports use of a two-bit indicator in DCI that provides a downlink assignment for one or more of a plurality of physical downlink shared channels (PDSCHs) to indicate one or more of the plurality of TCI states for reception of the one or more PDSCHs, transmit a capability value indicating whether the UE supports use of the two-bit indicator in the DCI, receive a media access control-control element (MAC CE) indicating the subset of TCI states that are activated for the UE and including a CORESET pool index, receive, in a CORESET associated with the CORESET pool index, DCI indicating at least one of the subset of TCI states, and determine, based on the DCI being received in the CORESET associated with the CORESET pool index, to use the at least one indicated TCI state, wherein the plurality of TCI states is a subset of a set of configured TCI states.

Clause 6 discloses the UE of clause 1, wherein the processor is further configured to: receive a media access control-control element (MAC CE) that includes a CORESET pool index, receive, in a first CORESET associated with the CORESET pool index, DCI indicating a TCI state, identify that a PDCCH to receive in a second CORESET associated with the CORESET pool index follows the indicated TCI state, identify that a physical downlink shared channel (PDSCH) scheduled by the PDCCH received in the second CORESET associated with the CORESET pool index follows the indicated TCI state, identify that a physical uplink control channel (PUCCH) resource indicated by the PDCCH received in the second CORESET associated with the CORESET pool index follows the indicated TCI state, and identify that a physical uplink shared channel (PUSCH) scheduled by the PDCCH received in the second CORESET associated with the CORESET pool index follows the indicated TCI state.

Clause 7 discloses a base station (BS) in a wireless communication system, the BS comprising: a transceiver; and a processor operably coupled to the transceiver and configured to: transmit, in downlink control information (DCI), first information indicating a plurality of transmission configuration indication (TCI) states, wherein at least one of the TCI states is for at least one of a plurality of physical downlink control channels (PDCCHs), respectively, and wherein the plurality of TCI states includes joint or downlink TCI states, transmit, second information in a configuration for a control resource set (CORESET) indicating one or more of the plurality of TCI states to use for reception of one or more of the plurality of PDCCHs in the CORESET, and transmit the one or more PDCCHs for reception based on the one or more TCI states.

Clause 8 discloses the BS of clause 7, wherein: the second information is a two-bit indicator transmitted a higher layer radio resource control (RRC) parameter that configures the CORESET, the first information indicates two joint or downlink TCI states for reception of two PDCCH candidates in the CORESET, and the two-bit indicator indicates one or both of the two TCI states for reception of one or both of the two PDCCH candidates.

Clause 9 discloses the BS of clause 7, wherein: the second information indicates one or more of the plurality of TCI states to use for reception of one or more of a plurality of physical downlink shared channels (PDSCHs), and the processor is further configured to transmit, in DCI that provides a downlink assignment for the one or more PDSCHs, an indicator indicating the one or more TCI states for reception of the one or more PDSCHs.

Clause 10 discloses the BS of clause 7, wherein the processor is further configured to: transmit a higher layer radio resource control (RRC) signaling including a first indicator indicating whether a second indicator for indicating one or more of the plurality of TCI states for reception of one or more of a plurality of physical downlink shared channels (PDSCHs) is present in DCI that provides a downlink assignment for the one or more PDSCHs, and transmit, based on the first indicator indicating that the second indicator is not present in the DCI, the one or more of the plurality of PDSCHs for reception based on one or more default TCI states from the plurality of TCI states; transmit, via a higher layer RRC signaling for the one or more PDSCHs from the plurality of PDSCHs, an indicator indicating the one or more default TCI states to use for reception of the one or more PDSCHs.

Clause 11 discloses the BS of clause 7, wherein the processor is further configured to receive a capability value indicating whether a user equipment (UE) supports use of a two-bit indicator in DCI that provides a downlink assignment for one or more of a plurality of physical downlink shared channels (PDSCHs) to indicate one or more of the plurality of TCI states for reception of the one or more PDSCHs, transmit a media access control-control element (MAC CE) indicating the subset of TCI states that are activated and including a CORESET pool index, and transmit, in a CORESET associated with the CORESET pool index, DCI indicating at least one of the subset of TCI states, wherein the plurality of TCI states is a subset of a set of configured TCI states.

Clause 12 discloses the BS of clause 7, wherein: the processor is further configured to: transmit a media access control-control element (MAC CE) that includes a CORESET pool index, transmit, in a first CORESET associated with the CORESET pool index, DCI indicating a TCI state, identify that a PDCCH in a second CORESET associated with the CORESET pool index follows the indicated TCI state, identify that a physical downlink shared channel (PDSCH) scheduled by the PDCCH in the second CORESET associated with the CORESET pool index follows the indicated TCI state, identify that a physical uplink control channel (PUCCH) resource indicated by the PDCCH in the second CORESET associated with the CORESET pool index follows the indicated TCI state, and identify that a physical uplink shared channel (PUSCH) scheduled by the PDCCH in the second CORESET associated with the CORESET pool index follows the indicated TCI state.

Clause 13 discloses a method performed by a user equipment (UE) in a wireless communication system, the method comprising: receiving, in downlink control information (DCI), first information indicating a plurality of transmission configuration indication (TCI) states, wherein at least one of the TCI states is for at least one of a plurality of physical downlink control channels (PDCCHs), and wherein the plurality of TCI states includes joint or downlink TCI states; receiving second information in a configuration for a control resource set (CORESET) indicating one or more of the plurality of TCI states for receiving one or more of the plurality of PDCCHs in the CORESET; determining, based on the second information, the one or more of the plurality of TCI states for receiving the one or more of the plurality of PDCCHs in the CORESET; and receiving the one or more PDCCHs using the one or more TCI states.

Clause 14 discloses the method of clause 17, wherein: the second information is a two-bit indicator received via a higher layer radio resource control (RRC) parameter that configures the CORESET; the first information indicates two joint or downlink TCI states for the UE for reception of two PDCCH candidates in the CORESET; and the two-bit indicator indicates one or both of the two TCI states for receiving one or both of the two PDCCH candidates.

Clause 15 discloses a method performed by a base station (BS) in a wireless communication system, the method comprising: transmitting, in downlink control information (DCI), first information indicating a plurality of transmission configuration indication (TCI) states, wherein at least one of the TCI states is for at least one of a plurality of physical downlink control channels (PDCCHs), respectively, and wherein the plurality of TCI states includes joint or downlink TCI states; transmitting, second information in a configuration for a control resource set (CORESET) indicating one or more of the plurality of TCI states to use for reception of one or more of the plurality of PDCCHs in the CORESET; and transmitting the one or more PDCCHs for reception based on the one or more TCI states.

**Claims**

1. A method performed by a user equipment, UE, in a wireless communication system, the method comprising:

   receiving, from a base station, configuration information associated with a first TCI state and second TCI state;
   receiving, from the base station, downlink control information, DCI, including an indicator for TCI selection;
   selecting at least one of the first TCI state and the second TCI state based on the indicator; and
   receiving, from the base station, physical downlink shared channel, PDSCH, based on selected TCI state.

2. The method of claim 1,
   wherein the indicator consists of 2 bits and indicates one of a first TCI state, a second TCI state, or both the first and second TCI states.

3. The method of claim 1,
   wherein a format of the DCI is one of DCI format 1_1 or DCI format 1_2.

4. The method of claim 1, further comprising:
   receiving, from the base station, a parameter indicating enable or disable of the indicator.

5. The method of claim 1, further comprising:
   in case that the indicator is not configured in the DCI, selecting both of the first TCI state and the second TCI state.

6. A method performed by a base station in a wireless communication system, the method comprising:

   transmitting, to a user equipment, UE, configuration information associated with a first TCI state and second TCI state;
   transmitting, to the UE, downlink control information, DCI, including an indicator for TCI selection; and
   transmitting, to the UE, physical downlink shared channel, PDSCH, based on at least one of the first TCI state and second TCI state selected by the indicator.

7. The method of claim 6,
   wherein the indicator consists of 2 bits and indicates one of a first TCI state, a second TCI state, or both the first and second TCI states.

8. The method of claim 6, further comprising:
   transmitting, to the UE, a parameter indicating enable or disable of the indicator.

9. A user equipment, UE, in a wireless communication system, the UE comprising:

   a transceiver; and

a controller coupled with the transceiver and configured to:

receive, from a base station, configuration information associated with a first TCI state and second TCI state,
receive, from the base station, downlink control information, DCI, including an indicator for TCI selection,
select at least one of the first TCI state and the second TCI state based on the indicator, and
receive, from the base station, physical downlink shared channel, PDSCH, based on selected TCI state.

10. The UE of claim 9,
wherein the indicator consists of 2 bits and indicates one of a first TCI state, a second TCI state, or both the first and second TCI states.

11. The UE of claim 9,
wherein a format of the DCI is one of DCI format 1_1 or DCI format 1_2.

12. The UE of claim 9,
wherein the controller is further configured to:
receive, from the base station, a parameter indicating enable or disable of the indicator.

13. The UE of claim 9,
wherein the controller is further configured to:
in case that the indicator is not configured in the DCI, select both of the first TCI state and the second TCI state.

14. A base station in a wireless communication system, the base station comprising:

a transceiver; and
a controller coupled with the transceiver and configured to:

transmit, to a user equipment, UE, configuration information associated with a first TCI state and second TCI state,
transmit, to the UE, downlink control information, DCI, including an indicator for TCI selection, and
transmit, to the UE, physical downlink shared channel, PDSCH, based on at least one of the first TCI state and second TCI state selected by the indicator.

15. The base station of claim 14,
wherein the indicator consists of 2 bits and indicates one of a first TCI state, a second TCI state, or both the first and second TCI states.

# FIG. 1

# FIG. 2

FIG. 3

FIG. 4

EP 4 614 835 A2

400

Data
In → | Channel Coding & Mod. | 405 → | S-to-P | 410 → | Size N IFFT | 415 → | P-to-S | 420 → | Add Cyclic Prefix | 425 → | UC | 430 → To Channel

EP 4 614 835 A2

# FIG. 5

500

| 555 | 560 | 565 | 570 | 575 | 580 |
|-----|-----|-----|-----|-----|-----|

From Channel → DC → Remove Cyclic Prefix → S-to-P → Size N FFT → P-to-S → Channel Decod. & Demod. → Data Out

FIG. 6A

# FIG. 6B

650

Beam Width

Beam Direction

# FIG. 7

Hybrid BF

Digital BF

Analog BF

Baseband Digital Precoder

$N_{CSI\text{-}PORT}$ RF chains

IFFT

P/S

DAC

Mixer

Analog phase shifters

PA

Antenna array

710

705

700

701

720

# FIG. 8

# FIG. 9

**900**

RRC configured list/ set/ pool of TCI states

| TCI #1 | TCI #2 | TCI #3 | TCI #4 | TCI #5 | · · · | TCI #N_tci |

MAC CE based TCI state/ beam indication

TCI State IDs (TCI #3, TCI #5)

# FIG. 10

1000

EP 4 614 835 A2

**RRC configured list/ set/ pool of TCI states**

| TCI #1 | TCI #2 | TCI #3 | TCI #4 | TCI #5 | ⋯ | TCI #N_tci |

**DCI based TCI state/ beam indication**

TCI State IDs (TCI #3, TCI #5)

# FIG. 11

1100

RRC configured list/ set/ pool of TCI states

| TCI #1 | TCI #2 | TCI #3 | TCI #4 | TCI #5 | ... | TCI #N_tci |

Candidate TCI states activated via MAC-CE activation command

| TCI #1 | TCI #3 | TCI #5 | ... | TCI #63 |

DCI based TCI state/ beam indication

TCI State IDs (TCI #3, TCI #5)

EP 4 614 835 A2

## FIG. 12

1200

**Part 1 of beam report**

| A0 |
| A1 |
| A2 |

⋮

**Part 1 of UCI**

Multiplexing → Channel coding → Modulation mapper

**Part 2 of beam report**

| B0 |
| B1 |

**Part 2 of UCI**

Multiplexing → Channel coding → Modulation mapper

Multiplexing

# FIG. 13

1300

| CORESET Pool ID | Servung Cell ID | | | | | DL BWP ID | | OCt 1 |
|---|---|---|---|---|---|---|---|---|
| R | R | R | R | R | R | UL BWP ID | | OCt 2 |
| $P_1$ | $P_2$ | $P_3$ | $P_4$ | $P_5$ | $P_6$ | $P_7$ | $P_8$ | OCt 3 |
| D/U | TCI state ID 1 | | | | | | | OCt 4 |
| D/U | TCI state ID 2 | | | | | | | OCt 5 |

. . .

| D/U | TCI state ID N | OCt N+3 |
|---|---|---|

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 584239

- US 646104

### Non-patent literature cited in the description

- NR; Physical channels and modulation. *3GPP TS 38.211*
- NR; Multiplexing and Channel coding. *3GPP TS 38.212*
- NR; Physical Layer Procedures for Control. *3GPP TS 38.213*
- NR; Physical Layer Procedures for Data. *3GPP TS 38.214*
- NR; Medium Access Control (MAC) protocol specification. *3GPP TS 38.321*
- NR; Radio Resource Control (RRC) Protocol Specification.. *3GPP TS 38.331*